# EUROPÄISCHE PATENTANMELDUNG

(11) **EP 4 458 916 A1**
(43) Veröffentlichungstag der Anmeldung: **06.11.2024**
(21) Anmeldenummer: 23171718.2
(22) Anmeldetag: 04.05.2023
(51) Int. Cl.: C09D 183/04, C09D 183/06

(54) **PHOTOKATALYTISCH-AKTIVE BESCHICHTUNGS-ZUSAMMENSETZUNG, EIN VERFAHREN ZU DEREN HERSTELLUNG SOWIE DEREN VERWENDUNG**

(71) Anmelder: TriOptoTec GmbH, 93053 Regensburg (DE)
(72) Erfinder: SPÄTH, Andreas, 93055 Regensburg (DE); PETERANDERL, Marco, 93053 Regensburg (DE); EICHNER, Anja, 93053 Regensburg (DE)
(74) Vertreter: Louis Pöhlau Lohrentz

(57) **Zusammenfassung**

Die vorliegende Erfindung betrifft eine photokatalytisch-aktive BeschichtungsZusammensetzung, ein Verfahren zu deren Herstellung sowie deren Verwendung, einen beschichteten Gegenstand und ein Porphycen-Derivat.

## Beschreibung

Die vorliegende Erfindung betrifft eine photokatalytisch-aktive Beschichtungs-Zusammensetzung, ein Verfahren zu deren Herstellung sowie deren Verwendung, einen beschichteten Gegenstand und ein Porphycen-Derivat.

Das aktive oder passive Eindringen, Anhaften und Vermehren von Krankheitserregern in einen Wirt wird als Infektion bezeichnet. Quellen für infektiöse Partikel treten überall auf. So wird beispielsweise der menschliche Körper von einer großen Anzahl von Mikroorganismen besiedelt, die im Regelfall durch den normalen Metabolismus und ein intaktes Immunsystem unter Kontrolle gehalten werden. Allerdings kann es, beispielsweise bei einer Schwächung des Immunsystems, zu einer starken Vermehrung der Krankheiterreger kommen und je nach Art des Erregers zu unterschiedlichen Krankheitssymptomen. Die Medizin hält für viele Erregerbedingte Krankheiten spezifische Gegenmittel bereit, beispielsweise Antibiotika gegen Bakterien oder Antimikotika gegen Pilze oder Virustatika gegen Viren. Allerdings ist bei der Verwendung dieser Gegenmittel vermehrt das Auftreten von resistenten Krankheitserregern zu beobachten, die teilweise gleichzeitig gegen mehrere Gegenmittel Resistenzen aufweisen. Durch das Auftreten dieser resistenten oder multiresistenten Krankheitserreger hat sich die Therapie von Infektionserkrankungen zunehmend erschwert. Die klinische Konsequenz der Resistenz zeigt sich durch ein Versagen der Behandlung, vor allem bei immunsupprimierten Patienten.

Neue Ansatzpunkt zur Bekämpfung von resistenten bzw. multiresistenten Krankheitskeimen sind daher einerseits die Suche nach neuen Gegenmitteln, beispielsweise Antibiotika oder Antimikotika, und andererseits die Suche nach alternativen Inaktivierungsmöglichkeiten.

Als alternatives Verfahren hat sich die photodynamische Inaktivierung von Mikroorganismen bewährt. Bei der photodynamischen Inaktivierung von Mikroorganismen spielen zwei verschiedene photooxidative Prozesse eine entscheidende Rolle. Voraussetzung für den Ablauf einer photooxidativen Inaktivierung ist einerseits das Vorhandensein einer ausreichenden Menge Sauerstoff und andererseits die Lokalisierung eines so genannten Photosensibilisators, welcher durch Licht einer entsprechenden Wellenlänge angeregt wird. Der angeregte Photosensibilisator kann die Bildung von reaktiven Sauerstoffspezies (ROS) bewirken, wobei einerseits Radikale, beispielsweise Superoxidanionen, Wasserstoffperoxid oder Hydroxylradikale, und/oder andererseits angeregter molekularer Sauerstoff, beispielsweise Singulett-Sauerstoff, gebildet werden können.

Bei beiden Reaktionen steht die Photooxidation von spezifischen Biomolekülen, die sich in direkter Nachbarschaft zu den reaktiven Sauerstoffspezies (ROS) befindet, im Vordergrund. Dabei findet insbesondere eine Oxidation von Lipiden und Proteinen statt, die beispielsweise als Bestandteile der Zellmembran von Mikroorganismen vorkommen. Durch die Zerstörung der Zellmembran wiederum kommt es zur Inaktivierung der betreffenden Mikroorganismen. Für Viren und Pilze wird ein ähnlicher Eliminationsprozess angenommen.

Beispielsweise werden durch Singulett-Sauerstoff alle Moleküle angegriffen. Besonders anfällig für eine Schädigung sind allerdings ungesättigte Fettsäuren in den Membranen von Bakterien. Gesunde, körpereigene Zellen verfügen über eine zelluläre Abwehr gegen Angriffe von freien Radikalen, die so genannten Katalasen oder Superoxiddismutasen. Daher können gesunde, körpereigene Zellen eine Schädigung durch reaktive Sauerstoffspezies (ROS), beispielsweise Radikale oder Singulett-Sauerstoff, entgegenwirken.

Die WO 00/78854 A1 betrifft ein Verfahren zum Bereitstellen einer antimikrobiellen Oberfläche, wobei das Verfahren das Kombinieren von einem oder mehreren Polymeren mit einem oder mehreren Photosensibilisatoren umfasst, um eine Oberfläche zu bilden, die eine gehärtete Polymerzusammensetzung aufweist, die ein oder mehrere Polymere und einen oder mehrere nicht-kovalent und nicht-ionisch gebundene Photosensibilisatoren aufweist, wobei mindestens einer davon ein Xanthen-Photosensibilisator ist.

Nachteilig dabei ist, dass der Photosensibilisator aus der Polymermatrix ausläuft und somit die antimikrobielle Wirksamkeit bei längerer Lagerung abnimmt.

Die US 5,830,526 A offenbart ein Substrat, an das ein lichtaktivierbarer Farbstoff allein oder in Kombination mit zusätzlichen herkömmlichen antimikrobiellen und/oder antiviralen Mitteln gebunden ist. Das Substrat wird mit einem lichtaktivierbaren Farbstoff mit antimikrobiellen und/oder antiviralen Eigenschaften imprägniert, wobei ein kationisches oder anionisches wasserlösliches Polymer den Farbstoff an das Substrat bindet.

Die WO 2018/167264 A1 offenbart eine Photosensibilisatorzusammensetzung umfassend (a) wenigstens eine Phenalen-1-on-Verbindung und (b) wenigstens eine polymere Komponente und/oder Vorläufer davon sowie einen Gegenstand, beispielsweise in Form einer Beschichtung, umfassend (a) die wenigstens eine Phenalen-1-on-Verbindung und (b) wenigstens eine ausgehärtete polymere Komponente, wobei die wenigstens eine Phenalen-1-on-Verbindung kovalent und/oder elektrostatisch an die wenigstens eine ausgehärtete polymere Komponente gebunden ist.

Nachteilig bei den in der US 5,830,526 A und der WO 2018/167264 A1 offenbarten Beschichtungen ist jedoch, dass die den Photosensibilisator enthaltende Beschichtung nur in einer Spritzkabine aufgebracht werden können bzw. auch bei höheren Temperaturen forciert getrocknet werden müssen. Dazu müssen die zu behandelten Gegenstände gegebenenfalls auch abmontiert werden.

Aufgabe der vorliegenden Erfindung ist es, eine Beschichtung auf zumindest einem Teilbereich einer Oberfläche eines Gegenstandes oder eines Raumes bereitzustellen, die einen oder mehrere Photosensibilisatoren aufweist und somit nach Belichtung mit elektromagnetischer Strahlung geeigneter Wellenlänge und Intensität reaktive Sauerstoffspezies (ROS) bilden kann, um beispielsweise eine lokale antimikrobielle Wirkung gegenüber verschiedensten Mikroorganismen zu entfalten.

Die Fähigkeit, nach Belichtung mit elektromagnetischer Strahlung geeigneter Wellenlänge und Intensität reaktive Sauerstoffspezies (ROS) bilden zu können, soll dabei über ein möglichst einfaches und kostengünstiges Verfahren erfolgen, dass insbesondere auch eine nachträgliche Ausstattung bereits bestehender Oberflächen oder Teilbereiche davon ermöglicht.

Dabei sollen vorzugsweise verschiedene Arten von Oberflächen mit der Fähigkeit ausgestattet werden können, nach Belichtung mit elektromagnetischer Strahlung geeigneter Wellenlänge und Intensität reaktive Sauerstoffspezies (ROS) zu bilden, wobei vorzugsweise zugleich eine gute antimikrobielle Wirksamkeit nach Belichtung mit elektromagnetischer Strahlung geeigneter Wellenlänge und Intensität gewährleistet werden soll. Weiterhin soll eine möglichst dünne, kaum wahrnehmbare Beschichtung bereitgestellt werden, die den Farbeindruck einer behandelten Oberfläche im Wesentlichen nicht beeinträchtigt, vorzugsweise lange auf der entsprechenden Oberfläche haften soll und ggf. beliebig oft aufgefrischt werden kann.

Eine mit dem erfindungsgemäßen Verfahren hergestellte Beschichtung soll dabei im Wesentlichen nicht die Anregung der in der Beschichtung enthaltenen Photosensibilisator-Moleküle durch Licht einer bestimmten Wellenlänge sowie die nachfolgende Bildung von reaktiven Sauerstoffspezies behindern.

Weiterhin soll die Photosensibilisator-haltige Beschichtung nach dem Auftragen auf eine Oberfläche, vorzugsweise eine verbesserte Adhäsion des Photosensibilisators gewährleisten, so dass ein Ausbluten des Photosensibilisators vorzugsweise vermieden wird.

Das verwendete Verfahren soll eine einfache Aufbringung der Beschichtung auf verschiedenste Materialien ermöglichen und vorzugsweise die mechanischen und/oder chemischen Eigenschaften der behandelten Oberflächen oder Teilbereiche davon, beispielsweise Reißfestigkeit, Elastizität und/oder Beständigkeit, beispielsweise gegenüber Umwelteinflüssen, nicht wesentlich verändern.

Weiterhin soll eine in dem verwendeten Verfahren eingesetzte Zusammensetzung über einen längeren Zeitraum stabil bleiben, ohne dass es vorzugsweise zu einer Trennung der Einzelkomponenten der Zusammensetzung kommt.

Die Aufgabe der vorliegenden Erfindung wird gelöst durch die Bereitstellung einer photokatalytisch-aktiven Beschichtungs-Zusammensetzung gemäß Anspruch 1, die:
(i.) wenigstens ein nichtmetallisches, anorganisches Sol und/oder wenigstens ein hybridpolymeres Sol jeweils hergestellt aus der Umsetzung mindestens zweier Alkoxysilane und wenigstens einer Säure als Hydrolysekatalysator, vorzugsweise wenigstens ein hybridpolymeres Sol hergestellt aus der Umsetzung mindestens zweier Alkoxysilane und wenigstens einer Säure als Hydrolysekatalysator, vorzugsweise in einem Anteil von 0,5 Gew.-% bis 25 Gew.-%, vorzugsweise in einem Anteil von 1 Gew.-% bis 20 Gew.-%, jeweils bezogen auf das Gesamtgewicht der Beschichtungs-Zusammensetzung, und
(ii.) wenigstens einen organischen Photosensensibilisator, der aus der Gruppe, die aus substituierten Phenalen-1-on-Derivaten, substituierten Curcumin-Derivaten, substituierten Porphycen-Derivaten und Mischungen davon besteht, vorzugsweise substituierten Phenalen-1-on-Derivaten, substituierten Curcumin-Derivaten und Mischungen davon, weiter bevorzugt substituierten Phenalen-1-on-Derivaten, ausgewählt wird, und
(iii.) wenigstens ein gradkettig oder verzweigtes Alkanol mit 1 bis 6 C-Atomen und wenigstens einer OH-Gruppe in einem Anteil von wenigstens 50 Gew.-%, jeweils bezogen auf das Gesamtgewicht der Beschichtungs-Zusammensetzung umfasst.

Bevorzugte Ausführungsformen der erfindungsgemäßen photokatalytisch-aktiven Beschichtungs-Zusammensetzung sind jeweils in den Ansprüchen 2 bis 7, 9 und 10 angegeben.

Die Aufgabe der vorliegenden Erfindung wird ebenfalls gelöst durch die Bereitstellung eines Porphycen-Derivats gemäß Anspruch 8, wobei das Porphycen-Derivat die allgemeine Formel (3): 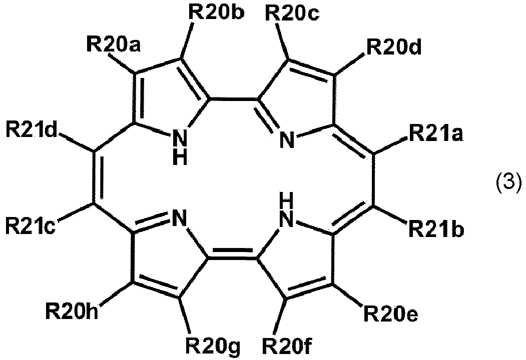 aufweist
wobei die Reste R20a, R20b, R20c, R20d, R20e, R20f, R20g, und R20h, die jeweils unabhängig voneinander gleich oder voneinander verschieden sein können, jeweils Wasserstoff, Halogen, vorzugsweise Chlor, Brom, oder lod, Alkyl, das gradkettig oder verzweigt sein kann, mit 1 bis 4 C-Atomen, vorzugsweise Methyl, Ethyl, n-Propyl oder iso-Propyl, die jeweils unsubstituiert oder mit einem oder mehrerer Reste, die aus der Gruppe, die aus Hydroxy, Chlor, Brom, Fluor, und Kombinationen davon, besteht, ausgewählt werden, substituiert sein können, Alkoxy, das gradkettig oder verzweigt sein kann, mit 1 bis 4 C-Atomen, vorzugsweise Methoxy oder Ethoxy, die jeweils unsubstituiert oder mit einem oder mehrerer Reste, die aus der Gruppe, die aus Hydroxy, Chlor, Brom, Fluor, und Kombinationen davon, besteht, ausgewählt werden, substituiert sein können, Alkylalkyloxy, das gradkettig oder verzweigt sein kann, mit 2 bis 8 C-Atomen, vorzugsweise Methylmethoxy, Methylethoxy, Ethylmethoxy, oder Ethylethoxy, die jeweils unsubstituiert oder mit einem oder mehrerer Reste, die aus der Gruppe, die aus Hydroxy, Chlor, Brom, und Kombinationen davon, besteht, ausgewählt werden, substituiert sein können, Alkylcarboxylester, das gradkettig oder verzweigt sein kann, mit 2 bis 8 C-Atomen, vorzugsweise Methylacetat, Ethyl-2-acetat, Propyl-3-acetat, Methylpropionat, Ethyl-2-proponat, Propyl-3-butyrat, Methylbutyrat, Ethyl-2-butyrat, oder Propyl-3-butyrat, Aryl mit 6 bis 10 Kohlenstoffatomen, vorzugsweise Phenyl oder Benzyl, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, oder Aryloxy mit 6 bis 10 Kohlenstoffatomen, vorzugsweise Phenoxy oder Benzyloxy, die jeweils unsubstituiert oder mit einem oder mehrerer Reste, die aus der Gruppe, die aus Hydroxy, Chlor, Brom, Fluor, Methyl, Ethyl, n-Propyl, iso-Propyl, Methoxy, Ethoxy, und Kombinationen davon, besteht, ausgewählt werden, substituiert sein können, bedeuten,
wobei die Reste R21a, R21b, R21c, und R21d, die jeweils unabhängig voneinander gleich oder voneinander verschieden sein können, jeweils Wasserstoff, Nitro, Halogen, vorzugsweise Chlor, Brom, oder lod, Alkyl, das gradkettig oder verzweigt sein kann, mit 1 bis 4 C-Atomen, vorzugsweise Methyl, Ethyl, n-Propyl oder iso-Propyl, *-O-Alkyl, das gradkettig oder verzweigt sein kann, mit 1 bis 4 C-Atomen, vorzugsweise Methoxy oder Ethoxy, * - NH - S(=O)z - Aryl mit 5 bis 15 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, * - NH - C(=O) - Alkyl mit 1 bis 15 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, Aryloxy mit 5 bis 10 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, Alkylaryl mit 6 bis 10 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, *-O-Alkylaryl mit 6 bis 10 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, oder einen organischen Rest W1 bedeuten, mit der Maßgabe, dass wenigstens einer der Reste R21a, R21b, R21c, oder R21d ein organischer Rest W1 bedeutet
wobei der organische Rest W1 jeweils unabhängig voneinander ein Rest mit der allgemeinen Formel (22b), (23b), oder (24b), bevorzugt (22b) oder (24b), weiter bevorzugt (22b), bedeutet:

   * - Q - [(C(D)(E))_{b} - A]ₐ - (C(D)(E))ₘ - X (22b)

   * - Q - (C(D)(E))_{d} - Ar - [B - (C(D)(E)_{b}]ₐ - (C(D)(E))ₙ - X (23b)

   * - Q - [(C(D)(E))_{b} - A]_{c} - (C(D)(E))_{g} - Ar - (C(D)(E))ₙ - X (24b)
wobei Rest Q jeweils unabhängig voneinander Sauerstoff, ein Rest der allgemeinen Formel * - C(=O)O - *, oder ein Rest der allgemeinen Formel * - OC(=O) - *, vorzugsweise Sauerstoff, bedeutet, und
wobei die Reste A, und B jeweils unabhängig voneinander Sauerstoff, ein Rest der allgemeinen Formel * - C(=O) - *, ein Rest der Formel * - C(=O)O - *, ein Rest der Formel * - OC(=O) - *, oder ein Rest mit der allgemeinen Formel (12) bis (14): 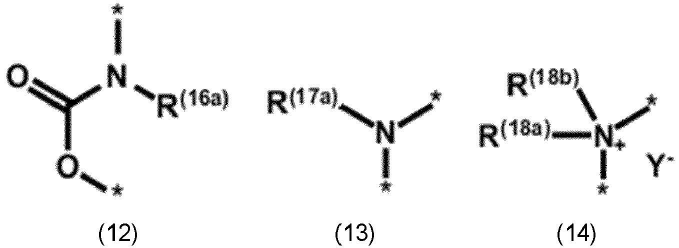 bedeutet, und
wobei die Reste R^{(16a)}, R^{(17a)}, R^{(18a)} und R^{(18b)}, jeweils unabhängig voneinander Wasserstoff, Alkyl-Rest, der geradkettig oder verzweigt ist, mit 1 bis 5 Kohlenstoffatomen, vorzugsweise Methyl, Ethyl, n-Propyl, iso-Propyl, n-Butyl, sec-Butyl, iso-Butyl, oder n-Pentyl, der unsubstituiert oder mit einem oder mehrerer Reste, die jeweils unabhängig voneinander Chlor, Brom, Fluor, *- OH, *- Si(OR^{(VIII)}) _{[3 - p]}(R^{(IX)})ₚ, oder *- O - Si(OR^{(VIII)})_{[3 - p]}(R^{(IX)})ₚ, bedeuten, substituiert ist, Phenyl oder Benzyl bedeuten, und wobei Phenyl und Benzyl, jeweils unabhängig voneinander, unsubstituiert oder mit einem oder mehrerer Reste, die aus der Gruppe, die aus Halogen, *- OH, *- C(=O)OH, *- S(=O)₂OH, *- B(OH)₂, *- Si(OR^{(VIII)})_{[3 - p]}(R^{(IX)})ₚ, Alkyl-Rest, der gradkettig oder verzweigt ist, mit 1 bis 4 Kohlenstoffatomen, oder *- O - Si(OR^{(VIII)}) _{[3 - p]}(R^{(IX)})ₚ besteht, ausgewählt ist, substituiert ist, und
wobei die Reste D und E jeweils unabhängig voneinander Wasserstoff, *- OH, *- O - Si(OR^{(VIII)})_{[3 - p]}(R^{(IX)})ₚ, Halogen, Alkyl, das gradkettig oder verzweigt sein kann, mit 1 bis 15 Kohlenstoffatomen, Alkoxy, das gradkettig oder verzweigt sein kann, mit 1 bis 15 Kohlenstoffatomen, Aryloxy mit 6 bis 10 Kohlenstoffatomen, vorzugsweise Phenoxy oder Benzyloxy, Hydroxylalkyl, das gradkettig oder verzweigt sein kann, mit 1 bis 5 Kohlenstoffatomen und 1 bis 5 OH-Gruppen, Halogenalkyl, das gradkettig oder verzweigt sein kann, mit 1 bis 5 Kohlenstoffatomen und 1 bis 5 Halogen-Gruppen, Phenyl, oder Benzyl, wobei Phenyl und Benzyl jeweils unabhängig voneinander unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sind, bedeuten,
wobei der Index a jeweils unabhängig voneinander eine ganze Zahl von 1 bis 5, vorzugsweise von 1 bis 4, vorzugsweise 1 bis 3, bedeutet, und
wobei der Index b jeweils unabhängig voneinander eine ganze Zahl von 1 bis 4, vorzugsweise von 2 bis 3, weiter bevorzugt 2, bedeuten, und
wobei der Index c jeweils unabhängig voneinander eine ganze Zahl von 0 bis 5, vorzugsweise von 0 bis 4, vorzugsweise 1 bis 3, bedeutet, und
wobei die Indices d, und m jeweils unabhängig voneinander eine ganze Zahl von 1 bis 18, vorzugsweise 1 bis 15, vorzugsweise von 1 bis 4, vorzugsweise 1 bis 3, bedeuten, und
wobei der Index m jeweils unabhängig voneinander eine ganze Zahl von 1 bis 18, vorzugsweise 1 bis 15, vorzugsweise von 2 bis 4, bedeuten, und
wobei die Indices g, und n jeweils unabhängig voneinander eine ganze Zahl von 0 bis 18, vorzugsweise 0 bis 15, vorzugsweise von 1 bis 3, bedeuten, und
wobei der Index p jeweils unabhängig voneinander eine ganze Zahl von 1 bis 3 bedeutet, und
wobei der Rest X jeweils unabhängig voneinander *- NH(R^{(I)}), *- OH, *- C(=O)OH, *- S(=O)₂OH, *- B(OH)₂, *- Si(OR^{(VIII)})_{3 - p}(R^{(IX)})ₚ, *- O - Si(OR^{(VIII)})_{3 - p}(R^{(IX)})ₚ, oder ein Rest mit der allgemeinen Formel (15) oder (16): 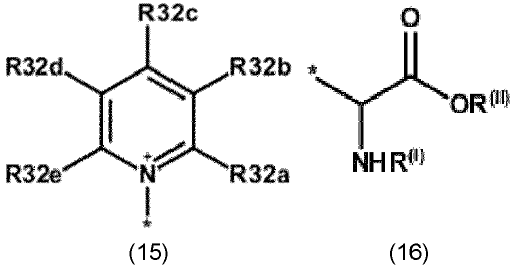
wobei die Reste R32a bis R32e jeweils unabhängig voneinander, Wasserstoff, Alkyl, das gradkettig oder verzweigt sein kann, mit 1 bis 4 Kohlenstoffatomen, oder Alkenyl, das gradkettig oder verzweigt sein kann, mit 2 bis 4 Kohlenstoffatomen, bedeuten, und
wobei der Rest Ar ein Rest der allgemeinen Formel (25a) bis (31), weiter bevorzugt ein Rest der allgemeinen Formel (25a) bis (28b), bedeutet: 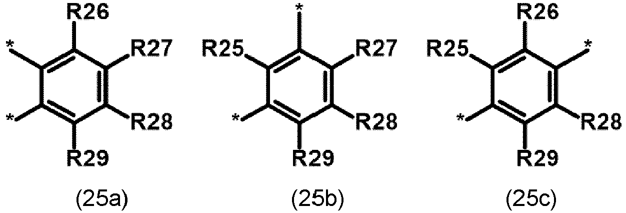 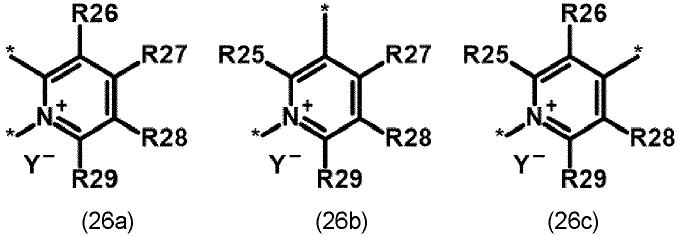 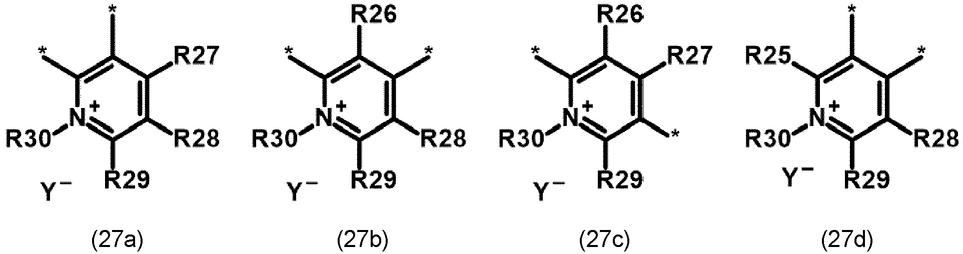 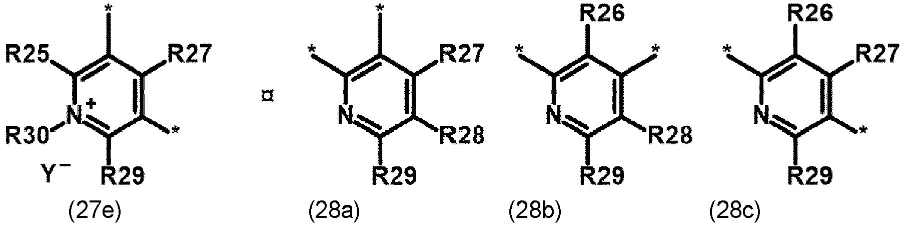 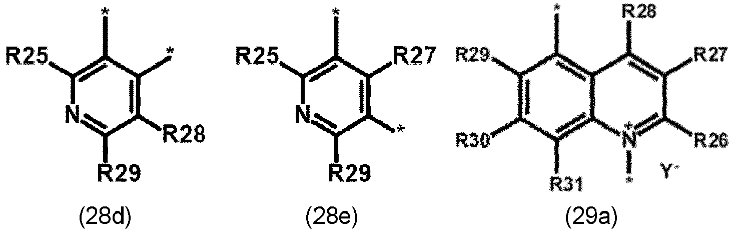 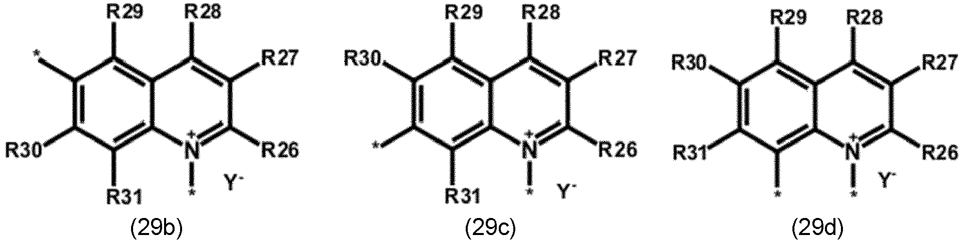 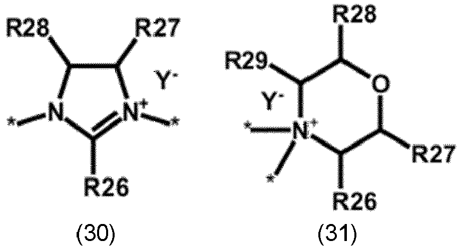 wobei die Reste R26, R27, R28, R29, R30, und R31 jeweils unabhängig voneinander Wasserstoff, Alkyl-Rest, der geradkettig oder verzweigt ist, mit 1 bis 5 Kohlenstoffatomen, vorzugsweise Methyl, Ethyl, n-Propyl, iso-Propyl, n-Butyl, sec-Butyl, iso-Butyl, oder n-Pentyl, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})ₚ, oder *- O - Si(OR^{(VIII)}) _{[3 - p]}(R^{(IX)})ₚ, bedeuten, substituiert ist, Phenyl oder Benzyl bedeuten, und wobei Phenyl und Benzyl, jeweils unabhängig voneinander, unsubstituiert oder mit einem oder mehrerer Reste, die aus der Gruppe, die aus Halogen, *- OH, *- C(=O)OH, *- S(=O)₂OH, *- B(OH)₂, *- Si(OR^{(VIII)}) _{[3 - p]}(R^{(IX)})ₚ, Alkyl-Rest, der gradkettig oder verzweigt ist, mit 1 bis 4 Kohlenstoffatomen, vorzugsweise Methyl, Ethyl, n-Propyl, oder iso-Propyl, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})ₚ, oder *- O - Si(OR^{(VIII)})_{[3-p]}(R^{(IX)})ₚ, bedeuten, substituiert ist, *- O - Alkyl-Rest, der gradkettig oder verzweigt ist, mit 1 bis 4 Kohlenstoffatomen, vorzugsweise Methoxy, Ethoxy, n-Propoxy, oder iso-Propoxy, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})ₚ, oder *- O - Si(OR^{(VIII)})_{[3 - p]}(R^{(IX)})ₚ, bedeuten, substituiert ist, Carboxyalkyl-Rest, der gradkettig oder verzweigt ist, mit 2 bis 4 Kohlenstoffatomen, vorzugsweise Carboxymethyl, Carboxyethyl, Carboxy-n-propyl, oder Carboxy-iso-propyl, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})ₚ, oder *- O - Si(OR^{(VIII)})_{[3 - p]}(R^{(IX)})ₚ, bedeuten, substituiert ist, oder Alkenyl-Rest der gradkettig oder verzweigt ist, mit 2 bis 3 C-Atomen, vorzugasweise Vinyl oder Allyl, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})ₚ, oder *- O - Si(OR^{(VIII)})_{[3 - p]}(R^{(IX)})ₚ, bedeuten, substituiert ist, und
wobei die Reste R^{(I)}, R^{(II)}, R^{(VIII)} und R^{(IX)}, jeweils unabhängig voneinander, Alkyl, das gradkettig oder verzweigt sein kann, mit 1 bis 4 Kohlenstoffatomen, oder Alkenyl, das gradkettig oder verzweigt sein kann, mit 2 bis 4 Kohlenstoffatomen,
und wobei Y- ein Anion ist, das jeweils unabhängig voneinander Fluorid, Chlorid, Bromid, lodid, Sulfat, Hydrogensulfat, Phosphat, Hydrogenphosphat, Dihydrogenphosphat, wenigstens ein Carboxylat-Anion einer Carbonsäure mit 1 bis 15 Kohlenstoffatomen, wenigstens ein Sulfonat-Anion einer Sulfonsäure mit 1 bis 12 C-Atomen oder eine Kombination davon bedeutet, und
wobei das substituierte Porphycen-Derivat der allgemeinen Formel (3) höchstens zwei neutrale protonierbare Stickstoffatome, oder zwei permanent positiv geladene Stickstoffatome und/oder zwei Säuregruppen aufweist, vorzugsweise höchstens zwei Reste, die ausgewählt sind aus *- NH(R^{(I)}), *- C(=O)OH, *- S(=O)₂OH, *- B(OH)₂, einem Rest der allgemeinen Formel (13) bis (16), (26a) bis (31) oder Kombinationen davon.

Die Aufgabe der vorliegenden Erfindung wird weiterhin gelöst durch die Bereitstellung eines Verfahrens gemäß Anspruch 11 zur Herstellung einer erfindungsgemäßen photokatalytisch-aktiven Beschichtungs-Zusammensetzung nach einem der Ansprüche 1 bis 7, 9 oder 10, wobei das Verfahren folgende Schritte umfasst:
1.) Bereitstellen einer ersten Zusammensetzung umfassend
   1a) wenigstens ein gradkettig oder verzweigtes Alkanol mit 1 bis 6 C-Atomen und wenigstens einer OH-Gruppe in einem Anteil von 0 Gew.-% bis 50 Gew.-%, vorzugsweise von 5 Gew.-% bis 45 Gew.-%, vorzugsweise von 10 Gew.-% bis 40 Gew.-%, weiter bevorzugt von 15 Gew.-% bis 37 Gew.-%, weiter bevorzugt von 20 Gew.-% bis 35 Gew.-%, jeweils bezogen auf das Gesamtgewicht der ersten Zusammensetzung,
   1b) wenigstens ein Tetraalkoxysilan, das 4 unverzweigte oder verzweigte Alkoxy-Reste mit 1 bis 4 C-Atomen aufweist, vorzugsweise Tetramethoxysilan (TMOS), Tetraethoxysilan (TEOS) und Mischungen davon, und
   1c) weiterhin wenigstens ein modifiziertes Silan, das 3 unverzweigte oder verzweigte Alkoxy-Reste mit jeweils unabhängig voneinander 1 bis 4 C-Atomen, vorzugsweise ausgewählt aus Methoxy, Ethoxy, Propoxy und Kombinationen davon, und einen (Zahl = 1) organischen Rest, der aus der Gruppe, die aus unverzweigten oder verzweigten Alkyl-Resten mit 1 bis 10 C-Atomen, vorzugsweise 1 bis 8 C-Atomen, die jeweils unsubstituiert oder mit wenigstens einer OH-Gruppe, wenigstens einer Alkoxy-Gruppe mit 1 - 8 C-Atomen, vorzugsweise ausgewählt aus Methoxy, Ethoxy, Propoxy und Kombinationen davon, wenigstens einer Epoxyalkoxy-Gruppe mit 2 - 8 C-Atomen, vorzugsweise 3 - 6 C-Atomen, und wenigstens einer Epoxygruppe, vorzugsweise Epoxypropoxy-Gruppe, wenigstens einer Carbonsäureester-Gruppe mit 1 - 8 C-Atomen, wenigstens einer Carbonsäureanhydrid-Gruppe mit 4 - 8 C-Atomen, die offenkettig oder cyclisch sein können, wenigstens einer Fluoridgruppe, wenigstens einer Phenylgruppe, wenigstens einer Aryloxygruppe mit 6 - 8 C-Atomen, vorzugsweise Benzyloxy-Gruppe, wenigstens einer Amino-Gruppe, oder Kombinationen davon substituiert sind, unverzweigten oder verzweigten Alkenyl-Resten mit 2 bis 10 C-Atomen, vorzugsweise 2 bis 8 C-Atomen, die jeweils unsubstituiert oder mit wenigstens einer OH-Gruppe, wenigstens einer Alkoxy-Gruppe mit 1 - 8 C-Atomen, vorzugsweise ausgewählt aus Methoxy, Ethoxy, Propoxy und Kombinationen davon, wenigstens einer Epoxyalkoxy-Gruppe mit 2 - 8 C-Atomen, vorzugsweise 3 - 6 C-Atomen, und wenigstens einer Epoxygruppe, vorzugsweise Epoxypropoxy-Gruppe, wenigstens einer Carbonsäureester-Gruppe mit 1 - 8 C-Atomen, wenigstens einer Carbonsäureanhydrid-Gruppe mit 4 - 8 C-Atomen, die offenkettig oder cyclisch sein können, wenigstens einer Fluoridgruppe, wenigstens einer Phenylgruppe, wenigstens einer Aryloxygruppe mit 6 - 8 C-Atomen, vorzugsweise Benzyloxy-Gruppe, wenigstens einer Amino-Gruppe, oder Kombinationen davon substituiert sind, und Aryl-Resten mit 6 bis 13 C-Atomen, vorzugsweise 6 bis 10 C-Atomen, vorzugsweise 6 C-Atomen, die jeweils unsubstituiert oder mit wenigstens einer OH-Gruppe, wenigstens einer Alkoxy-Gruppe mit 1 - 8 C-Atomen, vorzugsweise ausgewählt aus Methoxy, Ethoxy, Propoxy und Kombinationen davon, wenigstens einer Epoxyalkoxy-Gruppe mit 2 - 8 C-Atomen, vorzugsweise 3 - 6 C-Atomen, und wenigstens einer Epoxygruppe, vorzugsweise Epoxypropoxy-Gruppe, wenigstens einer Carbonsäureester-Gruppe mit 1 - 8 C-Atomen, wenigstens einer Carbonsäureanhydrid-Gruppe mit 4 - 8 C-Atomen, die offenkettig oder cyclisch sein können, wenigstens einer Fluoridgruppe, wenigstens einer Phenylgruppe, wenigstens einer Aryloxygruppe mit 6 - 8 C-Atomen, vorzugsweise Benzyloxy-Gruppe, wenigstens einer Amino-Gruppe, oder Kombinationen davon substituiert sind, besteht, ausgewählt ist, aufweist, und
2.) Kontaktieren der in Schritt 1) bereitgestellten ersten Zusammensetzung mit einer zweiten Zusammensetzung mit einem pH-Wert von < 7.0, vorzugsweise pH 2 bis pH 6 umfassend
   2a) Wasser, und
   2b) wenigstens eine Säure,
   unter Erhalt einer dritten Zusammensetzung umfassend wenigstens ein nichtmetallisches, anorganisches Sol und/oder wenigstens ein hybridpolymeres Sol, vorzugsweise wenigstens ein hybridpolymeres Sol, wobei die dritte Zusammensetzung vorzugsweise einen Wassergehalt von höchstens 50 Gew.-%, weiter bevorzugt höchstens 35 Gew.-%, jeweils bezogen auf das Gesamtgewicht der dritten Zusammensetzung aufweist, und
3.) Zugeben wenigstens eines organisches Photosensensibiliators, der aus der Gruppe, die aus substituierten und Phenalen-1-onen, substituierten und Curcuminen, substituierten Porphycen-Derivaten und Mischungen davon besteht, ausgewählt wird, zu der in Schritt 2) erhaltenen dritten Zusammensetzung und, optional Einstellen des Feststoffgehaltes durch Zugabe eines Co-Solvens.

Die Aufgabe der vorliegenden Erfindung wird ebenfalls gelöst durch die Bereitstellung eines Verfahrens gemäß Anspruch 12 zur Herstellung einer photokatalytisch-aktiven Beschichtung auf wenigstens einem Teilbereich wenigstens einer Oberfläche eines Gegenstandes oder eines Raumes, wobei das Verfahren folgende Schritte umfasst,
(A) Aufbringen einer Beschichtungs-Zusammensetzung nach einem der Ansprüche 1 bis 7, 9 oder 10 auf wenigstens einen Teilbereich einer zu behandelnden Oberfläche, vorzugsweise bei einer Temperatur von höchstens 50 °C, vorzugsweise bei einer Temperatur aus einem Bereich von 5 °C bis 50 °C, weiter bevorzugt von 10 °C bis 40 °C, weiter bevorzugt von 15 °C bis 30°C, und
(B) Trocknen der in Schritt (A) aufgebrachten Beschichtungs-Zusammensetzung, bevorzugt bei einer Temperatur aus einem Bereich von 5°C bis 150°C, bevorzugt von 10°C bis 120°C, weiter bevorzugt von 15°C bis 80°C, unter Erhalt wenigstens einer ersten, Photosensibilisator-haltigen Beschichtung, und
(C) optional, Bestrahlen der in Schritt (B) erhaltenen ersten, Photosensibilisator-haltigen Beschichtung mit elektromagnetischer Strahlung geeigneter Wellenlänge, vorzugsweise von 300 nm bis 600 nm, und Energiedichte, vorzugsweise von 0,1 J / cm² bis 1 kJ/cm², vorzugsweise von 0,5 J / cm² bis 500 J/cm², weiter bevorzugt 1 J/cm² bis 100 J/cm², vorzugsweise in Gegenwart von Sauerstoff und/oder wenigstens einer Sauerstoff-abgebenden Verbindung.

Bevorzugte Ausführungsformen des erfindungsgemäßen Verfahrens zur Herstellung einer photokatalytisch-aktiven Beschichtung ist in den abhängigen Ansprüchen 13 bis 14 angegeben.

Die Aufgabe der vorliegenden Erfindung wird ebenfalls gelöst durch die Bereitstellung eines beschichteten Gegenstandes gemäß Anspruch 15, wobei der beschichtete Gegenstand wenigstens eine, auf zumindest einem Teilbereich einer Oberfläche des Gegenstandes angeordnete photokatalytisch-aktive Beschichtung, die wenigstens ein nichtmetallisches, anorganisches Gel, vorzugsweise Xerogel, und/oder wenigstens ein hybridpolymeres Gel, vorzugsweise Xerogel, und wenigstens einen in, an oder auf dem Gel angeordneten wenigstens einen organischen Photosensibilisator aufweist, wobei der wenigstens eine organische Photosensibilisator aus der Gruppe, die aus substituierten Phenalen-1-on-Derivaten, substituierten Curcumin-Derivaten, substituierten Porphycen-Derivaten und Mischungen davon, vorzugsweise substituierten Phenalen-1-on-Derivaten, substituierten Porphycen-Derivaten und Mischungen davon, weiter bevorzugt Porphycen-Derivaten gemäß Anspruch 8 und Mischungen davon mit substituierten Phenalen-1-on-Derivaten, weiter bevorzugt substituierten Phenalen-1-on-Derivaten, besteht, ausgewählt wird.

Die Aufgabe der vorliegenden Erfindung wird weiterhin gelöst durch die Bereitstellung einer Verwendung nach Anspruch 16 einer photokatalytisch-aktiven Beschichtungs-Zusammensetzung nach einem der Ansprüche 1 bis 7, 9 oder 10 oder eines beschichteten Gegenstandes nach Anspruch 15 zur photodynamischen Inaktivierung von Mikroorganismen, die vorzugsweise aus der Gruppe, die aus Viren, Archäeen, Bakterien, Bakteriensporen, Pilzen, Pilzsporen, Protozoen, Algen und blutübertragbaren Parasiten besteht, ausgewählt werden und/oder zur photokatalytischen Inaktivierung oxidierbarer organischer oder anorganischer Moleküle.

Bevorzugte Ausführungsformen der erfindungsgemäßen Verwendung sind in den abhängigen Ansprüchen 17 bis 18 angegeben.

Die Aufgabe der vorliegenden Erfindung wird weiterhin gelöst durch die Bereitstellung eines Kit-of-Parts nach Anspruch 19 zur gleichzeitigen, getrennten oder zeitlich abgestuften Beschichtung wenigstens eines Teilbereichs einer Oberfläche eines Gegenstandes oder eines Raumes, umfassend
(I.) Komponente (A) umfassend wenigstens ein nichtmetallisches, anorganisches Sol und/oder wenigstens ein hybridpolymeres Sol jeweils hergestellt aus der Umsetzung mindestens zweier Alkoxysilane und wenigstens einer Säure als Hydrolysekatalysator und/oder jeweils wenigstens eine Vorläuferverbindung davon, und wenigstens ein gradkettig oder verzweigtes Alkanol mit 1 bis 6 C-Atomen und wenigstens einer OH-Gruppe in einem Anteil von wenigstens 50 Gew.-%, jeweils bezogen auf das Gesamtgewicht der Komponente (A),
(II.) Komponente (B) umfassend wenigstens einen organischen Photosensensibiliator, der aus der Gruppe, die aus substituierten Phenalen-1-on-Derivaten, substituierten Curcumin-Derivaten, substituierten Porphycen-Derivaten und Mischungen davon, vorzugsweise substituierten Phenalen-1-on-Derivaten, substituierten Porphycen-Derivaten und Mischungen davon, weiter bevorzugt Porphycen-Derivaten gemäß Anspruch 8 und Mischungen davon mit substituierten Phenalen-1-on-Derivaten, weiter bevorzugt substituierten Phenalen-1-on-Derivaten, besteht, ausgewählt wird, und
(III) optional, Komponente (C) umfassend wenigstens einen Haftvermittler.

Unter dem Begriff "photokatalytisch-aktiv" bzw. "photokatalytisch-aktive Beschichtung" wird vorzugsweise eine Erzeugung von reaktiven Sauerstoffspezies (ROS), vorzugsweise freien Radikalen und/oder Singulett-Sauerstoff, aus Triplett-Sauerstoff nach Bestrahlung mit elektromagnetischer Strahlung, vorzugsweise sichtbares Licht, UV-Licht und/oder Infrarotlicht, in Gegenwart von Sauerstoff und/oder einer Sauerstoff-abgebenden Verbindung verstanden. Bestrahlung eines "photokatalytisch-aktiven Teilbereichs" oder einer "photokatalytisch-aktiven Beschichtung" mit elektromagnetischer Strahlung, vorzugsweise sichtbares Licht, UV-Licht und/oder Infrarotlicht, in Gegenwart von Sauerstoff und/oder einer Sauerstoff-abgebenden Verbindung führt somit zur, vorzugsweise lokalen, Erzeugung von reaktiven Sauerstoffspezies (ROS), vorzugsweise freien Radikalen und/oder Singulett-Sauerstoff, aus Triplett-Sauerstoff.

Unter dem Begriff "photodynamisch-aktiv" bzw. "photodynamisch-aktive Beschichtung" wird vorzugsweise die lichtinduzierte Inaktivierung von Zellen oder Mikroorganismen und/oder einem Biofilm verstanden. Bestrahlung eines "photodynamisch-aktiven Teilbereichs" oder einer "photokatalytisch-aktiven Beschichtung" mit elektromagnetischer Strahlung, vorzugsweise sichtbares Licht, UV-Licht und/oder Infrarotlicht, in Gegenwart von Sauerstoff und/oder einer Sauerstoff-abgebenden Verbindung führt dabei zur, vorzugsweise lokalen, Erzeugung von reaktiven Sauerstoffspezies (ROS), vorzugsweise freien Radikalen und/oder Singulett-Sauerstoff, aus Triplett-Sauerstoff, welche nachfolgend zu einer Photooxidation von Biomolekülen, insbesondere Lipiden und Proteinen, die sich in direkter Nachbarschaft zu den reaktiven Sauerstoffspezies (ROS) befinden, bewirken. Beispielsweise bewirkt eine Photooxidation von Lipiden der Zellmembran die Zerstörung der Zellmembran, wodurch es vorzugsweise wiederum zur Inaktivierung der betreffenden Mikroorganismen kommt.

Unter dem Begriff "Biofilm" wird vorzugsweise eine Matrix aus extrazellulären polymeren Substanzen (EPS), die vorzugsweise von Mikroorganismen gebildet und von ihnen in ihre unmittelbare, der Zelle angrenzenden, Umgebung abgegeben werden, verstanden, in der Mikroorganismen, vorzugsweise Bakterien, Algen, Pilze, Protozoen oder Kombinationen davon, zumindest teilweise angeordnet oder eingebettet sind.

Nach Bestrahlung erzeugte reaktiven Sauerstoffspezies (ROS), vorzugsweise freien Radikalen und/oder Singulett-Sauerstoff, können ebenfalls oxidierbare organische oder anorganische Moleküle, beispielsweise verschiedenste, vorzugsweise oxidierbare, Geruchsstoffe, inaktiviert werden.

Unter dem Begriff "Geruchsstoff" werden vorzugsweise Moleküle verstanden, die olfaktorisch wahrgenommen einen Geruch entwickeln können. Geeignete Moleküle sind vorzugsweise organische oder anorganische Moleküle, die eine Molekülmasse von vorzugsweise kleiner als 350 Da aufweisen. Weiter bevorzugt weist ein oxidierbarer Geruchsstoff wenigstens eine oxidierbare funktionelle Gruppe, die weiter bevorzugt ausgewählt ist aus OH-Gruppe, SH-Gruppe, -SAlkyl-Reste, exocyclische Doppelbindungen, elektronenreiche Amine, Polyphenole, Terpene, Monoterpenalkohole, Metallsulfide, organische Disulfide.

Als "Photosensibilisator" werden vorzugsweise Verbindungen verstanden, die elektromagnetische Strahlung, vorzugsweise sichtbares Licht, UV-Licht und/oder Infrarotlicht, absorbieren und sodann reaktive Sauerstoffspezies (ROS), vorzugsweise freie Radikale und/oder Singulett-Sauerstoff, aus Triplett-Sauerstoff erzeugen. Erfindungsgemäße Photosensibilisatoren werden aus der Gruppe ausgewählt, die aus substituierten Phenalen-1-on-Derivaten, substituierten Curcumin-Derivaten, substituierten Porphycen-Derivaten und Mischungen davon, vorzugsweise substituierten Phenalen-1-on-Derivaten, substituierten Porphycen-Derivaten und Mischungen davon, weiter bevorzugt Porphycen-Derivaten gemäß Anspruch 8 und Mischungen davon mit substituierten Phenalen-1-on-Derivaten, weiter bevorzugt substituierten Phenalen-1-on-Derivaten, besteht.

Ein photokatalytisch-aktive, vorzugsweise photodynamisch-aktive, Beschichtung, die mit dem erfindungsgemäßen Verfahren hergestellt wurde, weist wenigstens ein Photosensibilisator-Molekül, das aus der Gruppe, die aus substituierten Phenalen-1-on-Derivaten, substituierten Curcumin-Derivaten, substituierten Porphycen-Derivaten und Mischungen davon, vorzugsweise substituierten Phenalen-1-on-Derivaten, substituierten Porphycen-Derivaten und Mischungen davon, weiter bevorzugt Porphycen-Derivaten gemäß Anspruch 8 und Mischungen davon mit substituierten Phenalen-1-on-Derivaten, weiter bevorzugt substituierten Phenalen-1-on-Derivaten, besteht, ausgewählt ist, auf, das zumindest oberflächennah und vorzugsweise bis zu einer bestimmten Tiefe im Material der Beschichtung angeordnet ist.

Ein photokatalytisch-aktive, vorzugsweise photodynamisch-aktive, Beschichtungs-Zusammensetzung, weist Photosensibilisator-Moleküle weist wenigstens ein Photosensibilisator-Molekül, das aus der Gruppe, die aus substituierten Phenalen-1-on-Derivaten, substituierten Curcumin-Derivaten, substituierten Porphycen-Derivaten und Mischungen davon, vorzugsweise substituierten Phenalen-1-on-Derivaten, substituierten Porphycen-Derivaten und Mischungen davon, weiter bevorzugt Porphycen-Derivaten gemäß Anspruch 8 und Mischungen davon mit substituierten Phenalen-1-on-Derivaten, weiter bevorzugt substituierten Phenalen-1-on-Derivaten, besteht, ausgewählt ist, auf.

Nach Bestrahlung einer photokatalytisch-aktiven, vorzugsweise photodynamisch-aktiven, Beschichtung oder Beschichtungs-Zusammensetzung mit elektromagnetischer Strahlung, vorzugsweise sichtbares Licht, UV-Licht und/oder Infrarotlicht, in Gegenwart von Sauerstoff und/oder einer Sauerstoff-abgebenden Verbindung katalysieren die in der Beschichtung oder Beschichtungs-Zusammensetzung enthaltenen Photosensibilisator-Moleküle die Bildung von reaktive Sauerstoffspezies (ROS), vorzugsweise freie Radikale und/oder Singulett-Sauerstoff, aus Triplett-Sauerstoff. Gebildete reaktive Sauerstoffspezies (ROS), vorzugsweise freie Radikale und/oder Singulett-Sauerstoff, diffundieren vorzugsweise aus der Beschichtung oder Beschichtungs-Zusammensetzung heraus und bewirken nachfolgend eine Inaktivierung von Zellen oder Mikroorganismen und/oder einem Biofilm davon und/oder sonstigen oxidierbaren organischen oder anorganischen Molekülen, beispielsweise verschiedensten Geruchsstoffen.

Unter dem Begriff "Inaktivierung" wird erfindungsgemäß die Reduzierung der Lebensfähigkeit oder die Zerstörung eines Mikroorganismus, vorzugsweise dessen Zerstörung, verstanden. Eine lichtinduzierte Inaktivierung kann beispielsweise durch Verringerung der Anzahl von Mikroorganismen nach Bestrahlung einer definierten Ausgangsmenge dieser Mikroorganismen in Gegenwart wenigstens einer erfindungsgemäßen Verbindung mit der Formel (3) und/oder wenigstens einer erfindungsgemäß verwendeten Verbindung mit der Formel (1), (2a), (2b) oder (3) und/oder wenigstens eines, mit dem erfindungsgemäßen Verfahren hergestellten Gegenstandes bestimmt werden.

Vorzugsweise kann eine Reduzierung der Lebensfähigkeit oder die Zerstörung von Mikroorganismen eines Biofilms, vorzugsweise dessen Zerstörung, eine Abgabe von extrazellulären polymeren Substanzen, die die Matrix eines Biofilms bilden, verringern bzw. verhindern. Dadurch wird vorzugsweise die Bildung eines Biofilms verlangsamt oder unterdrückt.

Erfindungsgemäß wird unter einer Reduzierung der Lebensfähigkeit verstanden, dass die Anzahl der Mikroorganismen, beispielsweise in einem Biofilm, um wenigstens 90,0 %, vorzugsweise wenigstens 95,0 %, vorzugsweise wenigstens 99,9 %, weiter bevorzugt um wenigstens 99,99 %, weiter bevorzugt um wenigstens 99,999 %, noch weiter bevorzugt um wenigstens 99,9999 %, verringert wird. Äußerst bevorzugt wird die Anzahl der Mikroorganismen um mehr als 99,9 bis 100 %, vorzugsweise um mehr als 99,99 bis 100 % verringert wird.

Vorzugsweise wird die Reduzierung der Anzahl der Mikroorganismen gemäß Boyce, J. M. und Pittet, D. ("Guidelines for hand hygiene in healthcare settings. Recommendations of the Healthcare Infection Control Practices Advisory Committee and the HIPAC/SHEA/APIC/IDSA Hand Hygiene Task Force", Am.J.lnfect.Control 30 (8), 2002, Seite 1 - 46) als log10-Reduktionsfaktor angegeben.

Erfindungsgemäß wird unter dem Begriff "log10-Reduktionsfaktor" die Differenz zwischen dem dekadischen Logarithmus der Anzahl der Mikroorganismen vor und dem dekadischen Logarithmus der Anzahl der Mikroorganismen nach einer Bestrahlung dieser Mikroorganismen mit elektromagnetischer Strahlung in Gegenwart wenigstens erfindungsgemäßen Verbindung mit der Formel (3) und/oder wenigstens einer erfindungsgemäß verwendeten Verbindung mit der Formel (1), (2a), (2b) oder (3) und/oder wenigstens eines, mit dem erfindungsgemäßen Verfahren hergestellten Gegenstandes verstanden. Beispielsweise können die Mikroorganismen in einem Biofilm enthalten sein.

Geeignete Methoden zur Bestimmung des Iog10-Reduktionsfaktors sind beispielsweise in der DIN EN 14885:2007-01 "Chemische Desinfektionsmittel und Antiseptika -Anwendung Europäischer Normen für chemische Desinfektionsmittel und Antiseptika" oder in Rabenau, H. F. und Schwebke, I. ("Leitlinie der Deutschen Vereinigung zur Bekämpfung der Viruskrankheiten (DVV) e. V. und der Robert Koch-Instituts (RKI) zur Prüfung von chemischen Desinfektionsmitteln auf Wirksamkeit gegen Viren in der Humanmedizin" Bundesgesundheitsblatt, Gesundheitsforschung, Gesundheitsschutz 51(8), (2008), Seiten 937 - 945) beschrieben.

Vorzugsweise beträgt der Iog10-Reduktionsfaktor nach einer Bestrahlung von Mikroorganismen und/oder eines Biofilms davon mit elektromagnetischer Strahlung in Gegenwart wenigstens einer erfindungsgemäßen Verbindung mit der Formel (3) und/oder wenigstens einer erfindungsgemäß verwendeten Verbindung mit der Formel (1), (2a), (2b) oder (3) und/oder wenigstens eines, mit dem erfindungsgemäßen Verfahren hergestellten Gegenstandes mindestens 1 log10, vorzugsweise mindestens 2 log10, vorzugsweise mindestens 3 log10, weiter bevorzugt mindestens 4 log10, weiter bevorzugt mindestens 4,5 log10, weiter bevorzugt mindestens 5 log10, weiter bevorzugt mindestens 6 log10, noch weiter bevorzugt mindestens 7 log10.

Erfindungsgemäß wird unter einem Halogen jeweils unabhängig voneinander Fluor, Chlor, Brom oder lod verstanden. Erfindungsgemäß wird unter einem Halogenid jeweils unabhängig von einandervoneinander Fluorid, Chlorid, Bromid oder lodid verstanden.

Chiralitätszentren können, wenn nicht anders angegeben, in der R- oder in der S-Konfiguration vorliegen. Die Erfindung betrifft sowohl die optisch reinen Verbindungen als auch Stereoisomerengemische, wie Enantiomerengemische und Diasteromerengemische, in jedem Verhältnis.

Die Erfindung betrifft vorzugsweise auch Mesomere und/oder Tautomere der Verbindung mit der Formel (1), (2a), (2b) und/oder (3), sowohl die reinen Verbindungen als auch die Isomerengemische in jedem Verhältnis.

Soweit nichts anderes angegeben ist, wird der pH-Wert bei einer Temperatur von 25°C und einem Druck von 1013 mbar bestimmt.

Falls nichts anderes angegeben, bezeichnet ein * in einer Formel einen Verknüpfungspunkt zwischen zwei Resten.

Eine erfindungsgemäße photokatalytisch-aktive Beschichtungs-Zusammensetzung umfasst:
(i.) wenigstens ein nichtmetallisches, anorganisches Sol und/oder wenigstens ein hybridpolymeres Sol, jeweils hergestellt aus der Umsetzung mindestens zweier Alkoxysilane und wenigstens einer Säure als Hydrolysekatalysator, vorzugsweise wenigstens ein hybridpolymeres Sol hergestellt aus der Umsetzung mindestens zweier Alkoxysilane und wenigstens einer Säure als Hydrolysekatalysator, vorzugsweise in einem Anteil von 0,5 Gew.-% bis 25 Gew.-%, vorzugsweise in einem Anteil von 1 Gew.-% bis 20 Gew.-%, jeweils bezogen auf das Gesamtgewicht der Beschichtungs-Zusammensetzung, und
(ii.) wenigstens einen organischen Photosensensibiliator, der aus der Gruppe, die aus substituierten Phenalen-1-on-Derivaten, substituierten Curcumin-Derivaten, substituierten Porphycen-Derivaten und Mischungen davon besteht, vorzugsweise substituierten Phenalen-1-on-Derivaten, substituierten Porphycen-Derivaten und Mischungen davon, weiter bevorzugt substituierten Phenalen-1-on-Derivaten, ausgewählt wird, und
(iii.) wenigstens ein gradkettig oder verzweigtes Alkanol mit 1 bis 6 C-Atomen und wenigstens einer OH-Gruppe in einem Anteil von wenigstens 50 Gew.-%, jeweils bezogen auf das Gesamtgewicht der Beschichtungs-Zusammensetzung.

Unter dem Begriff "nichtmetallisches, anorganisches Sol" wird vorzugsweise eine kolloidale Dispersion verstanden, die aus der Umsetzung mindestens zweier Alkoxysilane und wenigstens einer Säure als Hydrolysekatalysator erhalten wurde, wobei das Sol vorzugsweise keine organischen Reste, die direkt an wenigstens einem Siliziumatom der anorganischen Siliziumoxid-haltigen Partikel des Sols angeordnet ist, aufweist.

Unter dem Begriff "hybridpolymeres Sol" wird vorzugsweise eine kolloidale Dispersion verstanden, die aus der Umsetzung mindestens zweier Alkoxysilane und wenigstens einer Säure als Hydrolysekatalysator erhalten wurde, wobei die Dispersion vorzugsweise anorganische Siliziumoxid-haltige Partikel und wenigstens einen organische Rest, der direkt an wenigstens einem Siliziumatom der anorganischen Siliziumoxid-haltigen Partikel des Sols angeordnet ist, aufweist.

Durch Verwendung eines nichtmetallischen, anorganischen Sols hergestellt aus der Umsetzung mindestens zweier Alkoxysilane und wenigstens einer Säure als Hydrolysekatalysator und/oder wenigstens ein hybridpolymeres Sol hergestellt aus der Umsetzung mindestens zweier Alkoxysilane und wenigstens einer Säure als Hydrolysekatalysator, vorzugsweise wenigstens ein hybridpolymeres Sol hergestellt aus der Umsetzung mindestens zweier Alkoxysilane und wenigstens einer Säure als Hydrolysekatalysator, in der erfindungsgemäßen photokatalytisch-aktive Beschichtungs-Zusammensetzung ist es möglich, eine, vorzugsweise durchgehende, Beschichtung bereitzustellen, wenn weiter bevorzugt eine erfindungsgemäße photokatalytisch-aktive Beschichtungs-Zusammensetzung in dem erfindungsgemäßen Verfahren zur Herstellung einer photokatalytisch-aktiven Beschichtung auf wenigstens einem Teilbereich wenigstens einer Oberfläche eines Gegenstandes oder eines Raumes verwendet wird.

Die Erfinder haben festgestellt, dass durch Verwendung wenigstens eines nichtmetallischen, anorganischen Sols und/oder wenigstens eines hybridpolymeren Sols jeweils hergestellt aus der Umsetzung mindestens zweier Alkoxysilane und wenigstens einer Säure als Hydrolysekatalysator, vorzugsweise wenigstens ein hybridpolymeren Sols hergestellt aus der Umsetzung mindestens zweier Alkoxysilane und wenigstens einer Säure als Hydrolysekatalysator in der erfindungsgemäßen Beschichtungs-Zusammensetzung eine photokatalytisch-aktive Beschichtung erhalten wird, in der der verwendete wenigstens eine organische Photosensensibiliator fest eingebunden ist, vorzugsweise durch Ausbildung wenigstens einer elektrostatischen und/oder kovalenten Bindung zwischen dem wenigstens einen organischen Photosensensibiliator und wenigstensens einem Silizium-Atom oder wenigstens eine funktionelle Seitenkette eines der verwendeten Alkoxysilane .

Dadurch wird vorzugsweise ein Austreten der wenigstens erfindungsgemäßen Verbindung mit der Formel (3) und/oder der wenigstens einen erfindungsgemäß zu verwendenden Verbindung mit der Formel (1), (2a), (2b) oder (3) aus der getrockneten, vorzugsweise ausgehärteten, photokatalytisch-aktiven Beschichtung zumindest teilweise, vorzugsweise vollständig, verhindert.

Weiter bevorzugt umfasst eine getrocknete, vorzugsweise ausgehärtete, photokatalytisch-aktiven Beschichtung, die mit dem erfindungsgemäßen Verfahren unter Verwendung einer erfindungsgemäßen photokatalytisch-aktiven Beschichtungs-Zusammensetzung bereitgestellt wurde, wenigstens ein nichtmetallisches, anorganisches Gel, vorzugsweise Xerogel, und/oder wenigstens ein hybridpolymeres Gel, vorzugsweise Xerogel, und wenigstens einen in, an oder auf dem Gel angeordneten wenigstens einen organischen Photosensibilisator aufweist, wobei der wenigstens eine organische Photosensibilisator vorzugsweise aus der Gruppe, die aus substituierten Phenalen-1-on-Derivaten, substituierten Curcumin-Derivaten, substituierten Porphycen-Derivaten und Mischungen davon, vorzugsweise substituierten Phenalen-1-on-Derivaten, substituierten Porphycen-Derivaten und Mischungen davon, weiter bevorzugt substituierten Porphycen-Derivaten gemäß Anspruch 8 und Mischungen davon mit substituierten Phenalen-1-on-Derivaten, weiter bevorzugt substituierten Phenalen-1-on-Derivaten, besteht, ausgewählt wird.

Unter dem Begriff "nichtmetallisches, anorganisches Gel, vorzugsweise Xerogel" wird vorzugsweise ein Netzwerk aus nichtmetallischen, anorganischen Solpartikeln verstanden, die kovalent miteinander verbunden sind. Unter dem Begriff "hybridpolymeres Gel, vorzugsweise Xerogel" wird vorzugsweise ein Netzwerk aus nichtmetallischen, anorganischen Solpartikeln verstanden, die kovalent miteinander verbunden sind und die weiterhin wenigstens einen organische Rest, der direkt an wenigstens einem Siliziumatom der anorganischen Solpartikeln angeordnet ist, aufweist.

Während der Trocknung einer mit der erfindungsgemäßen Beschichtungs-Zusammensetzung hergestellten Photosensibilisator-haltigen Beschichtung kondensieren vorzugsweise reaktive Gruppen sich berührender Solpartikeln des in der erfindungsgemäßen Beschichtungs-Zusammensetzung enthaltenen nichtmetallisches, anorganischen Sols und/oder hybridpolymeren Sols miteinander.

Weiter bevorzugt umfasst eine mit der erfindungsgemäßen Beschichtungs-Zusammensetzung hergestellte Photosensibilisator-haltige Beschichtung nach Abschluss der Trocknung ein hybridpolymeres Xerogel auf, wobei das hybridpolymeres Xerogel vorzugsweise eine poröse netzartige Struktur aufweist in dem weiter bevorzugt der verwendete wenigstens eine organische Photosensibilisator, der aus der Gruppe ausgewählt wird, die aus substituierten Phenalen-1-on-Derivaten, substituierten Curcumin-Derivaten, substituierten Porphycen-Derivaten und Mischungen davon, vorzugsweise substituierten Phenalen-1-on-Derivaten, substituierten Porphycen-Derivaten und Mischungen davon, weiter bevorzugt Porphycen-Derivaten gemäß Anspruch 8 und Mischungen davon mit substituierten Phenalen-1-on-Derivaten, weiter bevorzugt substituierten Phenalen-1-on-Derivaten, besteht, angeordnet ist. Weiter bevorzugt ist der verwendete wenigstens eine organische Photosensibilisator kovalent und/oder elektrostatisch, vorzugsweise kovalent, an das wenigstens eine hybridpolymere Xerogel gebunden.

Eine mit der erfindungsgemäßen Beschichtungs-Zusammensetzung hergestellte Photosensibilisator-haltige Beschichtung, die vorzugsweise ein hybridpolymeres Xerogel umfasst, zeichnet sich durch eine hohe Kratzfestigkeit und weiterhin durch ein geringes Ausbluten des verwendeten wenigstens einen organischen Photosensibilisators aus.

Daher weist eine mit der erfindungsgemäßen Beschichtungs-Zusammensetzung hergestellte Photosensibilisator-haltige Beschichtung, die vorzugsweise ein hybridpolymeres Xerogel umfasst in das wenigstens ein organischer Photosensibilisator, der aus der Gruppe ausgewählt wird, die aus substituierten Phenalen-1-on-Derivaten, substituierten Curcumin-Derivaten, substituierten Porphycen-Derivaten und Mischungen davon, vorzugsweise substituierten Phenalen-1-on-Derivaten, substituierten Porphycen-Derivaten und Mischungen davon, weiter bevorzugt Porphycen-Derivaten gemäß Anspruch 8 und Mischungen davon mit substituierten Phenalen-1-on-Derivaten, weiter bevorzugt substituierten Phenalen-1-on-Derivaten, besteht, kovalent und/oder elektrostatisch, vorzugsweise kovalent, an das wenigstens eine hybridpolymere Xerogel gebunden vorliegt, nach Bestrahlung mit elektromagnetischer Strahlung geeigneter Wellenlänge, vorzugsweise 300 nm bis 600 nm, und Energiedichte, vorzugsweise von 0,1 J / cm² bis 1 kJ/cm², vorzugsweise von 0,5 J / cm² bis 500 J/cm², weiter bevorzugt von 1 J/cm² bis 100 J/cm², vorzugsweise in Gegenwart von Sauerstoff und/oder wenigstens einer Sauerstoff-abgebenden Verbindung eine ausreichende photokatalytische Aktivität auf, um in ausreichender Menge reaktive Sauerstoffspezies (ROS), vorzugsweise freien Radikalen und/oder Singulett-Sauerstoff, aus Triplett-Sauerstoff zu bilden, welche nachfolgend zu einer Photooxidation von Biomolekülen, insbesondere Lipiden und Proteinen, und/oder oxidierbare organische oder anorganische Moleküle, beispielsweise verschiedenste, vorzugsweise oxidierbare, Geruchsstoffe, die sich in direkter Nachbarschaft zu den reaktiven Sauerstoffspezies (ROS) befinden, bewirken.

Um eine ausreichende biozide Wirkung zu entfalten, d.h. um verschiedenste Mikroorganismen, die vorzugsweise aus Viren, Archäeen, Bakterien, Bakteriensporen, Pilzen, Pilzsporen, Protozoen, Algen, blutübertragbaren Parasiten oder Kombinationen ausgewählt werden, sicher zu inaktivieren, ist es daher nicht notwendig zusätzliche anorganische biozide Partikel, wie beispielsweise biozide Metall-Partikel, wie beispielsweise Ag-haltige, Cu-haltige, Mg-haltige, Sn-haltige, Fe-haltige, Co-haltige, und/oder Ni-haltige Partikel, bioaktive Glas-Partikel, beispielsweise Silberphosphat-Glas, oder photokatalytisch-aktiven Metalloxide, vorzugsweise TiOz, oder Metallsulfide, wie beispielsweise ZnS, oder andere biozide organische Verbindungen, wie beispielsweise quartären Ammoniumverbindungen, Triclosan, organische nicht-Silan Amine, wie beispielsweise Triethanolamin, in einer mit dem erfindungsgemäßen Verfahren hergestellten photokatalytisch-aktiven Beschichtung zu verwenden.

Eine erfindungsgemäße photokatalytisch-aktive Beschichtungs-Zusammensetzung umfasst daher ebenfalls vorzugsweise keine Metall-Partikel, wie beispielsweise Ag-haltige, Cu-haltige, Mg-haltige, Sn-haltige, Fe-haltige, Co-haltige, und/oder Ni-haltige Partikel, keine bioaktiven Glas-Partikel, keine photokatalytisch-aktiven Metalloxide, vorzugsweise TiOz, keine photokatalytisch-aktiven Metallsulfide, wie beispielsweise ZnS, keine quartären Ammoniumverbindungen, kein Triclosan, keine organischen nicht-Silan Amine, wie beispielsweise Triethanolamin, keine Silikone und keine Silikonöle.

Vorzugsweise umfasst eine erfindungsgemäße photokatalytisch-aktive Beschichtungs-Zusammensetzung ebenfalls keine Alkoxyaluminate, wie beispielsweise Aluminium-(2-propylat) und/oder Aluminium-(2-butylat), keine Alkoxyzirconate, wie beispielsweise Zirconiumpropylat. und keine Alkoxytitanate, wie beispielsweise Titanethylat und/oder Titan-(2-propylat).

Bei einer bevorzugten Ausführungsform umfasst das wenigstens eine, aus der Umsetzung mindestens zweier Alkoxysilane und wenigstens einer Säure als Hydrolysekatalysator hergestellte hybridpolymere Sol weiterhin wenigstens einen substituierten oder unsubstituierten organischen Rest, der jeweils direkt an wenigstens ein Siliziumatom des Sols gebunden ist, wobei der wenigstens eine substituierte oder unsubstituierte organische Rest jeweils unabhängig voneinander aus der Gruppe, die aus unverzweigten oder verzweigten Alkyl-Rest mit 1 bis 10 C-Atomen, unverzweigten oder verzweigten Alkenyl-Rest mit 2 bis 10 C-Atomen, unverzweigten oder verzweigten Hydroxyalkyl-Rest mit 1 bis 10 C-Atomen und wenigstens einer Hydroxygruppe, unverzweigten oder verzweigten Hydroxyalkenyl-Rest mit 2 bis 10 C-Atomen und wenigstens einer Hydroxygruppe, unverzweigten oder verzweigten Epoxyyalkyl-Rest mit 2 bis 10 C-Atomen und wenigstens einer Epoxidgruppe, unverzweigten oder verzweigten Aminoalkyl-Rest mit 1 bis 10 C-Atomen und wenigstens einer Aminogruppe, die jeweils unabhängig voneinander substituiert oder unsubstituiert sein kann, unverzweigten oder verzweigten Aminoalkenyl-Rest mit 2 bis 10 C-Atomen und wenigstens einer Aminogruppe, die jeweils unabhängig voneinander substituiert oder unsubstituiert sein kann, unverzweigten oder verzweigten Ether-Rest mit 2 bis 10 C-Atomen und wenigstens einer Ethergruppe, unverzweigten oder verzweigten Hydroxy-substituierten Ether-Rest mit 2 bis 10 C-Atomen, wenigstens einer Ethergruppe und wenigstens einer OH-Gruppe, unverzweigten oder verzweigten Epoxid-substituierten Ether-Rest mit 4 bis 10 C-Atomen, wenigstens einer Ethergruppe und wenigstens einer Epoxid-Gruppe, unverzweigten oder verzweigten Carbonsäureester-Rest mit 2 bis 10 C-Atomen und wenigstens einer Carbonsäureester-Gruppe, unverzweigten oder verzweigten Carbonsäureamid-Rest mit 1 bis 10 C-Atomen und wenigstens einer Carbonsäureamid-Gruppe, und Aryl-Rest mit 5 bis 12 C-Atomen, der jeweils unabhängig voneinander unsubstituiert oder mit einer unverzweigten oder verzweigten Alkyl-Rest mit 1 bis 10 C-Atomen, unverzweigten oder verzweigten Alkenyl-Rest mit 2 bis 10 C-Atomen, unverzweigten oder verzweigten Hydroxyalkyl mit 1 bis 10 C-Atomen und wenigstens einer Hydroxygruppe, unverzweigten oder verzweigten Hydroxyalkenyl-Rest mit 2 bis 10 C-Atomen und wenigstens einer Hydroxygruppe, unverzweigten oder verzweigten Epoxyyalkyl-Rest mit 2 bis 10 C-Atomen und wenigstens einer Epoxidgruppe, unverzweigten oder verzweigten Aminoalkyl-Rest mit 1 bis 10 C-Atomen und wenigstens einer Aminogruppe, die jeweils unabhängig voneinander substituiert oder unsubstituiert sein kann, unverzweigten oder verzweigten Aminoalkenyl-Rest mit 2 bis 10 C-Atomen und wenigstens einer Aminogruppe, die jeweils unabhängig voneinander substituiert oder unsubstituiert sein kann, unverzweigten oder verzweigten Ether-Rest mit 2 bis 10 C-Atomen und wenigstens einer Ethergruppe, unverzweigten oder verzweigten Hydroxy-substituierten Ether-Rest mit 2 bis 10 C-Atomen, wenigstens einer Ethergruppe und wenigstens einer OH-Gruppe, unverzweigten oder verzweigten Epoxid-substituierten Ether-Rest mit 4 bis 10 C-Atomen, wenigstens einer Ethergruppe und wenigstens einer Epoxid-Gruppe, unverzweigten oder verzweigten Carbonsäureester-Rest mit 2 bis 10 C-Atomen und wenigstens einer Carbonsäureester-Gruppe, unverzweigten oder verzweigten Carbonsäureamid-Rest mit 1 bis 10 C-Atomen und wenigstens einer Carbonsäureamid-Gruppe substituiert sein können, und Mischungen davon besteht, ausgewählt ist.

Weiter bevorzugt werden die zur Umsetzung in Gegenwart wenigstens einer Säure als Hydrolysekatalysator verwendeten mindestens zwei Alkoxysilane aus einer Kombination ausgewählt, die
(a) wenigstens ein Tetraalkoxysilan, das 4 unverzweigte oder verzweigte Alkoxy-Reste mit 1 bis 4 C-Atomen aufweist, vorzugsweise Tetramethoxysilan (TMOS), Tetraethoxysilan (TEOS), Tetraisopropoxysilan, und Mischungen davon, und
(b) weiterhin wenigstens ein modifiziertes Silan, das 3 unverzweigte oder verzweigte Alkoxy-Reste mit jeweils unabhängig voneinander 1 bis 4 C-Atomen, vorzugsweise ausgewählt aus Methoxy, Ethoxy, Propoxy und Kombinationen davon, und einen (Zahl = 1) organischen Rest, der aus der Gruppe, die aus
   unverzweigtem oder verzweigtem Alkyl-Rest mit 1 bis 10 C-Atomen, vorzugsweise 1 bis 8 C-Atomen, die jeweils unsubstituiert oder mit wenigstens einer OH-Gruppe, wenigstens einer Alkoxy-Gruppe mit 1 - 8 C-Atomen, vorzugsweise ausgewählt aus Methoxy, Ethoxy, Propoxy und Kombinationen davon, wenigstens einer Epoxyalkoxy-Gruppe mit 2 - 8 C-Atomen, vorzugsweise 3 - 6 C-Atomen, und wenigstens einer Epoxygruppe, vorzugsweise Epoxypropoxy-Gruppe, wenigstens einer Carbonsäureester-Gruppe mit 1 - 8 C-Atomen, wenigstens einer Carbonsäureanhydrid-Gruppe mit 4 - 8 C-Atomen, die offenkettig oder cyclisch sein können, wenigstens einer Fluoridgruppe, wenigstens einer Phenylgruppe, wenigstens einer Aryloxygruppe mit 6 - 8 C-Atomen, vorzugsweise Benzyloxy-Gruppe, wenigstens einer Amino-Gruppe, oder Kombinationen davon substituiert sind,
   unverzweigtem oder verzweigtem Alkenyl-Rest mit 2 bis 10 C-Atomen, vorzugsweise 2 bis 8 C-Atomen, die jeweils unsubstituiert oder mit wenigstens einer OH-Gruppe, wenigstens einer Alkoxy-Gruppe mit 1 - 8 C-Atomen, vorzugsweise ausgewählt aus Methoxy, Ethoxy, Propoxy und Kombinationen davon, wenigstens einer Epoxyalkoxy-Gruppe mit 2 - 8 C-Atomen, vorzugsweise 3 - 6 C-Atomen, und wenigstens einer Epoxygruppe, vorzugsweise Epoxypropoxy-Gruppe, wenigstens einer Carbonsäureester-Gruppe mit 1 - 8 C-Atomen, wenigstens einer Carbonsäureanhydrid-Gruppe mit 4 - 8 C-Atomen, die offenkettig oder cyclisch sein können, wenigstens einer Fluoridgruppe, wenigstens einer Phenylgruppe, wenigstens einer Aryloxygruppe mit 6 - 8 C-Atomen, vorzugsweise Benzyloxy-Gruppe, wenigstens einer Amino-Gruppe, oder Kombinationen davon substituiert sind, und
   Aryl-Rest mit 6 bis 13 C-Atomen, vorzugsweise 6 bis 10 C-Atomen, vorzugsweise 6 C-Atomen, die jeweils unsubstituiert oder mit wenigstens einer OH-Gruppe, wenigstens einer Alkoxy-Gruppe mit 1 - 8 C-Atomen, vorzugsweise ausgewählt aus Methoxy, Ethoxy, Propoxy und Kombinationen davon, wenigstens einer Epoxyalkoxy-Gruppe mit 2 - 8 C-Atomen, vorzugsweise 3 - 6 C-Atomen, und wenigstens einer Epoxygruppe, vorzugsweise Epoxypropoxy-Gruppe, wenigstens einer Carbonsäureester-Gruppe mit 1 - 8 C-Atomen, wenigstens einer Carbonsäureanhydrid-Gruppe mit 4 - 8 C-Atomen, die offenkettig oder cyclisch sein können, wenigstens einer Fluoridgruppe, wenigstens einer Phenylgruppe, wenigstens einer Aryloxygruppe mit 6 - 8 C-Atomen, vorzugsweise Benzyloxy-Gruppe, wenigstens einer Amino-Gruppe, oder Kombinationen davon substituiert sind, ausgewählt ist, umfasst oder daraus besteht.

Weiter bevorzugt ist das wenigstens eine modifizierte Silan, das 3 unverzweigte oder verzweigte Alkoxy-Reste mit jeweils unabhängig voneinander 1 bis 4 C-Atomen, vorzugsweise ausgewählt aus Methoxy, Ethoxy, Propoxy und Kombinationen davon, und weiterhin einen (Zahl = 1) organischen Rest aufweist, ein Alkyltrialkoxysilan, das weiter bevorzugt ausgewählt ist aus der Gruppe, die aus Methyltriethoxysilan (MTES), Ethyltriethoxysilan (ETES), Propyltriethoxysilan (PrTES), Isopropropylltriethoxysilan, Butyltriethoxysilan (BuTES), n-Hexyltrimethoxysilan, Octyltrimethoxysilan, Isobutyl-triethoxysilan (iBTES), Isooctyl-triethoxysilan (iOTES), Cyclopentyltrimethoxysilan, Cyclohexyltrimethoxysilan und Mischungen davon besteht, und/oder ein Alkyltrialkoxysilan mit einer Hydroxy-substituierten Alkylgruppe, das weiter bevorzugt ausgewählt ist aus der Gruppe, die aus Hydroxymethyl-triethoxysilan (HMTES), Hydroxypropyl-triethoxysilan und Mischungen davon besteht, und/oder ein Alkyltrialkoxysilan mit einer Epoxy-substituierten Alkylgruppe, das weiter bevorzugt ausgewählt ist aus der Gruppe, die aus (3-Glycidyloxypropyl)-trimethoxysilan (GLYMO), [2-(3,4-Epoxycyclohexyl)ethyl]trimethoxysilan und Mischungen davon besteht, und/oder ein Alkyltrialkoxysilan mit einer Carbonsäureester-substituierten Alkylgruppe, das weiter bevorzugt ausgewählt ist aus der Gruppe, die aus 3-Trimethoxysilyl-propylmethacrylat (MEMO), 3-Acetoxypropyl-trimethoxysilan (APTMS) und Mischungen davon besteht, und/oder ein Alkyltrialkoxysilan mit einer Carbonsäureanhydrid-substituierte Alkylgruppe, vorzugsweise [3-(Trimethoxysilyl)propyl]-succinanhydrid (SATES), und/oder ein Alkyltrialkoxysilan mit einer Cyanogruppe-substituierte Alkylgruppe, das weiter bevorzugt ausgewählt ist aus der Gruppe, die aus 2-Cyanoethyltrimethoxysilan, (3-Cyanopropyl)trimethoxysilan und Mischungen davon besteht, und/oder ein Alkyltrialkoxysilan mit einer Harstoffgruppe-substituierte Alkylgruppe, vorzugsweise Ureidopropyltrimethoxysilan, und/oder ein Alkyltrialkoxysilan mit einer Fluoridsubstituierten Alkylgruppe, 1H,1H,2H,2H-Perfluoroctyl-triethoxysilan (FOTES), und/oder ein Alkyltrialkoxysilan mit einer Aryloxygruppe substituierte Alkylgruppe, vorzugsweise Benzyloxypropyl-trimethoxysilan (BPTMS), und/oder ein Alkyltrialkoxysilan mit einer Alkoxysubstituierte Alkylgruppe, vorzugsweise Methoxypropyl-trimethoxysilan (MPTMS), und/oder ein Alkyltrialkoxysilan mit einer Amino-Gruppe substituierte Alkylgruppe, das weiter bevorzugt ausgewählt ist aus der Gruppe, die aus 3-Aminopropyl-triethoxysilan, (N-Phenylaminopropyl)trimethoxysilan, [3-(2-Aminoethylamino)-propyl]-trimethoxysilan und Mischungen davon besteht, und/oder ein Alkenyltrialkoxysilan, das weiter bevorzugt ausgewählt ist aus der Gruppe, die aus Vinyltrialkoxysilan, (4-Vinylphenyl)trimethoxysilan und Mischungen davon besteht, und/oder ein Aryltrialkoxysilan, das weiter bevorzugt ausgewählt ist aus der Gruppe, die aus Phenyltriethoxysilan (PTES), Benzyltrimethoxysilan (BzTMS), Phenethyltrimethoxysilan und Mischungen davon, besteht.

Weiter bevorzugt werden die zur Umsetzung in Gegenwart wenigstens einer Säure als Hydrolysekatalysator verwendeten mindestens zwei Alkoxysilane aus einer Kombination ausgewählt, die
(a) wenigstens Tetraethoxysilan (TEOS), und
(b) weiterhin wenigstens ein modifiziertes Silan, umfasst oder daraus besteht, wobei das wenigstens ein modifiziertes Silan aus der Gruppe, die aus Methyltrimethoxysilan, Methyltriethoxysilan (MTES), Isobutyl-trimethoxysilan, Isobutyl-triethoxysilan (iBTES), Hydroxymethyl-trimethoxysilan, Hydroxymethyl-triethoxysilan (HMTES), Phenyltrimethoxysilan, Phenyltriethoxysilan (PTES), (3-Glycidyloxypropyl)-trimethoxysilan (GLYMO), (3-Glycidyloxypropyl)-triethoxysilan, 3-Trimethoxysilyl-propylmethacrylat (MEMO), 3-Triethoxysilylpropylmethacrylat, Vinyltrimethoxysilan, Vinyltriethoxysilan, 1H,1H,2H,2H-Perfluoroctyl-triethoxysilan, Methoxypropyltrimethoxysilan, Methoxypropyltriethoxysilan, Acetoxypropyltrimethoxysilan, Acetoxypropyltriethoxysilan, Tris-[3-(trimethoxysilyl)propyl]-isocyanurat (CPTMS), Isooctyl-triethoxysilan (iOTES), [3-(Trimethoxysilyl)propyl]-succinanhydrid und Mischungen davon besteht, ausgewählt ist, umfasst oder daraus besteht.

Weiter bevorzugt werden die zur Umsetzung in Gegenwart wenigstens einer Säure als Hydrolysekatalysator verwendeten mindestens zwei Alkoxysilane aus einer Kombination ausgewählt, die
(a) Tetraethoxysilan (TEOS), vorzugsweise in einem Anteil von 4,5 Mol-% bis 80 Mol-%, weiter bevorzugt von 5 Mol-% bis 65 Mol-%, weiter bevorzugt von 7 Mol-% bis 50 Mol-%, jeweils bezogen auf die Gesamtstoffmenge des in Schritt 1.) eingesetzten Tetraalkoxysilans und modifizierten Silans vor der Hydrolyse, und
(b) weiterhin wenigstens 0,1 Mol-%, bezogen auf die Gesamtstoffmenge des in Schritt 1.) eingesetzten Tetraalkoxysilans und modifizierten Silans vor der Hydrolyse, eines modifizierten Silans, das aus der Gruppe, die aus:
   Methyltriethoxysilan (MTES), vorzugsweise in einem Anteil von bis zu 80 Mol-%, vorzugsweise von 5 Mol-% bis 45 Mol-%, jeweils bezogen auf die Gesamtstoffmenge des in Schritt 1.) eingesetzten Tetraalkoxysilans und modifizierten Silans vor der Hydrolyse, und/oder Phenyltriethoxysilan (PTES), vorzugsweise in einem Anteil von bis zu 50 Mol-%, vorzugsweise von 5 Mol-% bis 45 Mol-%, jeweils bezogen auf die Gesamtstoffmenge des in Schritt 1.) eingesetzten Tetraalkoxysilans und modifizierten Silans vor der Hydrolyse, und/oder (3-Glycidyloxypropyl)-trimethoxysilan (GLYMO), vorzugsweise in einem Anteil von bis zu 50 Mol-%, vorzugsweise von 1 Mol-% bis 20 Mol-%, vorzugsweise von 2 Mol-% bis 5 Mol-%, jeweils bezogen auf die Gesamtstoffmenge des in Schritt 1.) eingesetzten Tetraalkoxysilans und modifizierten Silans vor der Hydrolyse, und/oder
   Acetoxypropyltriethoxysilan (AcOPrTMS), vorzugsweise in einem Anteil von bis zu 30 Mol-%, vorzugsweise von 0 Mol-% bis 25 Mol-%, jeweils bezogen auf die Gesamtstoffmenge des in Schritt 1.) eingesetzten Tetraalkoxysilans und modifizierten Silans vor der Hydrolyse, und/oder 1H,1H,2H,2H-Perfluoroctyl-triethoxysilan (FOTES), vorzugsweise in einem Anteil von bis zu 10 Mol-%, vorzugsweise von 0 Mol-% bis 8 Mol-%, jeweils bezogen auf die Gesamtstoffmenge des in Schritt 1.) eingesetzten Tetraalkoxysilans und modifizierten Silans vor der Hydrolyse, und/oder
   Tris-[3-(trimethoxysilyl)propyl]-isocyanurat (CPTMS), vorzugsweise in einem Anteil von bis zu 5 Mol-%, vorzugsweise von 0 Mol-% bis 4 Mol-%, jeweils bezogen auf die Gesamtstoffmenge des in Schritt 1.) eingesetzten Tetraalkoxysilans und modifizierten Silans vor der Hydrolyse, und/oder
   Isooctyl-triethoxysilan (iOTES), vorzugsweise in einem Anteil von bis zu 10 Mol-%, vorzugsweise von 0 Mol-% bis 8 Mol-%, jeweils bezogen auf die Gesamtstoffmenge des in Schritt 1.) eingesetzten Tetraalkoxysilans und modifizierten Silans vor der Hydrolyse, und/oder Isobutyl-triethoxysilan (iBTES), vorzugsweise in einem Anteil von bis zu 10 Mol-%, vorzugsweise von 0 Mol-% bis 8 Mol-%, jeweils bezogen auf die Gesamtstoffmenge des in Schritt 1.) eingesetzten Tetraalkoxysilans und modifizierten Silans vor der Hydrolyse, und/oder 3-Trimethoxysilyl-propylmethacrylat (MEMO), vorzugsweise in einem Anteil von bis zu 30 Mol-%, vorzugsweise von 0 Mol-% bis 25 Mol-%, jeweils bezogen auf die Gesamtstoffmenge des in Schritt 1.) eingesetzten Tetraalkoxysilans und modifizierten Silans vor der Hydrolyse, und/oder Hydroxymethyl-triethoxysilan (HMTES), vorzugsweise in einem Anteil von bis zu 30 Mol-%, vorzugsweise von 0 Mol-% bis 25 Mol-%, jeweils bezogen auf die Gesamtstoffmenge des in Schritt 1.) eingesetzten Tetraalkoxysilans und modifizierten Silans vor der Hydrolyse, und/oder Methoxypropyltrimethoxysilan (MeOPrTMS), vorzugsweise in einem Anteil von bis zu 30 Mol-%, vorzugsweise von 0 Mol-% bis 25 Mol-%, jeweils bezogen auf die Gesamtstoffmenge des in Schritt 1.) eingesetzten Tetraalkoxysilans und modifizierten Silans vor der Hydrolyse, und/oder [3-(Trimethoxysilyl)propyl]-succinanhydrid (SATES), vorzugsweise in einem Anteil von bis zu 20 Mol-%, vorzugsweise von 0 Mol-% bis 15 Mol-%, jeweils bezogen auf die Gesamtstoffmenge des in Schritt 1.) eingesetzten Tetraalkoxysilans und modifizierten Silans vor der Hydrolyse, und/oder
   Vinyltrimethoxysilan (VTMS), vorzugsweise in einem Anteil von bis zu 45 Mol-%, vorzugsweise von 0 Mol-% bis 40 Mol-%, jeweils bezogen auf die Gesamtstoffmenge des in Schritt 1.) eingesetzten Tetraalkoxysilans und modifizierten Silans vor der Hydrolyse, davon besteht, ausgewählt ist.

Vorzugsweise wird eine als Hydrolysekatalysator geeignete Säure ausgewählt aus Carbonsäuren mit 1 bis 10 C-Atomen, die gradkettig oder verzweigt sein können, und ein oder mehrere Carboxyl-Gruppen, Carbonsäureester mit 1 bis 20 C-Atomen, die gradkettig oder verzweigt sein können, und wenigstens einen freien Carboxyl-Gruppen, Phosphorsäureester mit ein oder zwei organischen Resten mit 1 bis 10 C-Atomen, die gradkettig oder verzweigt sein können, anorganischen Säuren sowie Salze davon und Kombinationen davon, vorzugsweise Carbonsäuren mit 1 bis 10 C-Atomen, die gradkettig oder verzweigt sein können, und ein oder mehrere Carboxyl-Gruppen, Phosphorsäureester mit ein oder zwei organischen Resten mit 1 bis 10 C-Atomen, die gradkettig oder verzweigt sein können, anorganischen Säuren sowie Salze davon und Kombinationen davon.

Weiter bevorzugt wird eine als Hydrolysekatalysator geeignete Säure ausgewählt aus der Gruppe, die aus Essigsäure, Propionsäure, Milchsäure, Salicylsäure, Borsäure, Salzsäure, Salpetersäure, Schwefelsäure, Phosphorsäure, Bis(2-ethylhexyl)phosphat, Mono(2-ethylhexyl)phosphat und Kombinationen davon besteht

Weiter bevorzugt wird der wenigstens eine Hydrolysekatalysator in einer Konzentration aus einem Bereich von 0,0001 mol/L bis 0,2 mol/L, bevorzugt von 0,001 mol/L bis 0,1 mol/L, weiter bevorzugt von 0,005 mol/L bis 0,05 mol/L, verwendet.

Eine erfindungsgemäße photokatalytisch-aktive Beschichtungs-Zusammensetzung umfasst weiterhin (ii.) wenigstens einen organischen Photosensensibiliator, der aus der Gruppe, die aus substituierten Phenalen-1-on-Derivaten, substituierten Curcumin-Derivaten, substituierten Porphycen-Derivaten und Mischungen davon besteht, vorzugsweise substituierten Phenalen-1-on-Derivaten, substituierten Porphycen-Derivaten und Mischungen davon, weiter bevorzugt substituierten Phenalen-1-on-Derivaten, ausgewählt wird.

Vorzugsweise weist ein in der erfindungsgemäßen photokatalytisch-aktiven Beschichtungs-Zusammensetzung verwendetes wenigstens eine substituierte Phenalen-1-on-Derivat die allgemeine Formel (1) auf: 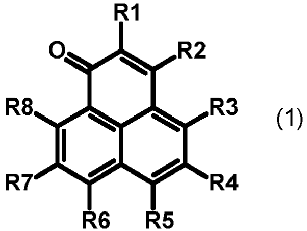 wobei die Reste R1 bis R8, die jeweils unabhängig voneinander gleich oder voneinander verschieden sein können, jeweils Wasserstoff, *- OH, *- C(=O)OH, *- S(=O)₂OH, *- O - Si(OR^{(VIII)})_{3 - p}(R^{(IX)})ₚ, Halogen, vorzugsweise Chlor, Brom, oder lod, Alkyl, das gradkettig oder verzweigt sein kann, mit 1 bis 4 C-Atomen, vorzugsweise Methyl, Ethyl, n-Propyl oder iso-Propyl, *-O-Alkyl, das gradkettig oder verzweigt sein kann, mit 1 bis 4 C-Atomen, vorzugsweise Methoxy oder Ethoxy, Aryl mit 5 bis 10 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, Aryloxy mit 5 bis 10 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, Alkylaryl mit 6 bis 10 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, *-O-Alkylaryl mit 6 bis 10 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, oder einen organischen Rest W, vorzugsweise Wasserstoff, *- OH, *-C(=O)OH, *- S(=O)zOH, , *- O - Si(OR^{(VIII)})_{3 - p}(R^{(IX)})ₚ, Halogen, vorzugsweise Chlor, Brom, oder lod, Alkyl, das gradkettig oder verzweigt sein kann, mit 1 bis 4C-Atomen, vorzugsweise Methyl, Ethyl, n-Propyl oder iso-Propyl, *-O-Alkyl, das gradkettig oder verzweigt sein kann, mit 1 bis 4 C-Atomen, vorzugsweise Methoxy oder Ethoxy, Aryl mit 5 bis 10 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, oder einen organischen Rest W1 bedeuten,
mit der Maßgabe, dass wenigstens einer der Reste R1 bis R8, vorzugsweise wenigstens einer der Reste R1, R2, R4, R6, oder R8, weiter bevorzugt wenigstens einer der Reste R1, R2, R4, oder R6, weiter bevorzugt wenigstens einer der Reste R1 oder R2, ein organischer Rest W1 ist, wobei der organische Rest W1 jeweils unabhängig voneinander ein Rest mit der allgemeinen Formel (2a) bis (4b) bedeutet:

   * - [(C(D)(E))_{b} - A]ₐ - (C(D)(E))ₘ - X (2a)

   * - Q - [(C(D)(E))_{b} - A]ₐ - (C(D)(E))ₘ - X (2b)

   * - (C(D)(E))_{d} - Ar - [B - (C(D)(E)_{b}]ₐ - (C(D)(E))ₙ - X (3a)

   * - Q - (C(D)(E))_{d} - Ar - [B - (C(D)(E)_{b}]ₐ - (C(D)(E))ₙ - X (3b)

   * - [(C(D)(E))_{b} - A]_{c} - (C(D)(E))_{g} - Ar - (C(D)(E))ₙ - X (4a)

   * - Q - [(C(D)(E))_{b} - A]_{c} - (C(D)(E))_{g} - Ar - (C(D)(E))ₙ - X (4b)
wobei Rest Q jeweils unabhängig voneinander Sauerstoff, ein Rest der allgemeinen Formel * - C(=O) - *, ein Rest der Formel * - C(=O)O - *, oder ein Rest der Formel * - OC(=O) - *, vorzugsweise Sauerstoff, bedeutet, und
wobei Rest A jeweils unabhängig voneinander Sauerstoff, ein Rest der allgemeinen Formel * - C(=O) - *, ein Rest der Formel * - C(=O)O - *, ein Rest der Formel * - OC(=O) - *, oder ein Rest mit der allgemeinen Formel (13) bis (14): 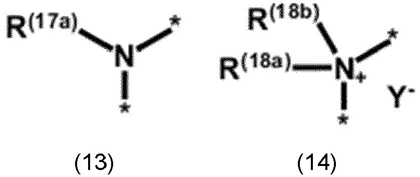 bedeutet, vorzugsweise Sauerstoff; oder ein Rest mit der allgemeinen Formel (13) bis (14), und
wobei Rest B jeweils unabhängig voneinander Sauerstoff, ein Rest der allgemeinen Formel * - C(=O) - *, ein Rest der Formel * - C(=O)O - *, ein Rest der Formel * - OC(=O) - *, oder ein Rest mit der allgemeinen Formel (12) bis (14): 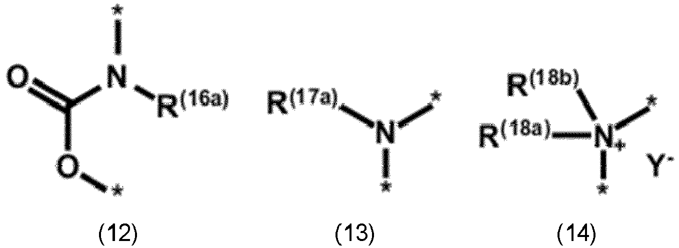 bedeutet, und
wobei die Reste R^{(16a)}, R^{(17a)}, R^{(18a)} und jeweils unabhängig voneinander Wasserstoff, Alkyl-Rest, der geradkettig oder verzweigt ist, mit 1 bis 5 Kohlenstoffatomen, vorzugsweise Methyl, Ethyl, n-Propyl, iso-Propyl, n-Butyl, sec-Butyl, iso-Butyl, oder n-Pentyl, der unsubstituiert oder mit einem oder mehrerer Reste, die jeweils unabhängig voneinander Chlor, Brom, Fluor, *- OH, *- Si(OR^{(VIII)}) _{[3-p]}(R(^{IX)})ₚ, oder *- O - Si(OR^{(VIII)}) _{[3-p]}(R(^{IX)})ₚ, bedeuten, substituiert ist, Phenyl oder Benzyl bedeuten, und wobei Phenyl und Benzyl, jeweils unabhängig voneinander, unsubstituiert oder mit einem oder mehrerer Reste, die aus der Gruppe, die aus Halogen, *- OH, *- C(=O)OH, *- S(=O)₂OH, *- B(OH)₂, *- Si(OR^{(VIII)}) _{[ 3- p]}(R^{(IX)})ₚ, Alkyl-Rest, der gradkettig oder verzweigt ist, mit 1 bis 4 Kohlenstoffatomen, oder *- O - Si(OR^{(VIII)}) _{[3 - p]}(R^{(IX)})ₚ besteht, ausgewählt ist, substituiert ist, und
wobei die Reste D und E jeweils unabhängig voneinander Wasserstoff, *- OH, *- O - Si(OR^{(VIII)})_{[3 - p]}(R^{(IX)})ₚ, Halogen, Alkyl, das gradkettig oder verzweigt sein kann, mit 1 bis 15 Kohlenstoffatomen, Alkoxy, das gradkettig oder verzweigt sein kann, mit 1 bis 15 Kohlenstoffatomen, Aryloxy mit 6 bis 10 Kohlenstoffatomen, vorzugsweise Phenoxy oder Benzyloxy, Hydroxylalkyl, das gradkettig oder verzweigt sein kann, mit 1 bis 5 Kohlenstoffatomen und 1 bis 5 OH-Gruppen, Halogenalkyl, das gradkettig oder verzweigt sein kann, mit 1 bis 5 Kohlenstoffatomen und 1 bis 5 Halogen-Gruppen, Phenyl, oder Benzyl, wobei Phenyl und Benzyl jeweils unabhängig voneinander unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sind, bedeuten,
wobei der Index a jeweils unabhängig voneinander eine ganze Zahl von 1 bis 5, vorzugsweise von 1 bis 4, vorzugsweise 1 bis 2, bedeutet, und
wobei der Index b jeweils unabhängig voneinander eine ganze Zahl von 1 bis 4, vorzugsweise von 2 bis 3, weiter bevorzugt 2, bedeuten, und
wobei der Index c jeweils unabhängig voneinander eine ganze Zahl von 0 bis 5, vorzugsweise von 0 bis 4, vorzugsweise 1 bis 3, bedeutet, und
wobei die Indices d, und m jeweils unabhängig voneinander eine ganze Zahl von 1 bis 12, vorzugsweise 1 bis 8, vorzugsweise von 1 bis 4, bedeuten, und
wobei die Indices g, und n jeweils unabhängig voneinander eine ganze Zahl von 0 bis 12, vorzugsweise 0 bis 8, vorzugsweise von 2 bis 4, bedeuten, und
wobei der Index p jeweils unabhängig voneinander eine ganze Zahl von 1 bis 3 bedeutet, und
wobei der Rest X jeweils unabhängig voneinander *- NH(R^{(I)}), *- OH, *- C(=O)OH, *- S(=O)₂OH, *- B(OH)₂, *- Si(OR^{(VIII)})_{3 - p}(R^{(IX)})ₚ, *- O - Si(OR^{(VIII)})_{3 - p}(R^{(IX)})ₚ, oder ein Rest mit der allgemeinen Formel (15): 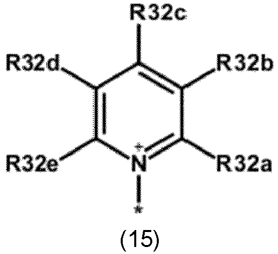
bedeutet, wobei die Reste R32a bis R32e jeweils unabhängig voneinander, Wasserstoff, Alkyl, das gradkettig oder verzweigt sein kann, mit 1 bis 4 Kohlenstoffatomen, oder Alkenyl, das gradkettig oder verzweigt sein kann, mit 2 bis 4 Kohlenstoffatomen, bedeuten, und
wobei der Rest Ar ein Rest der allgemeinen Formel (25a) bis (31), weiter bevorzugt ein Rest der allgemeinen Formel (25a) bis (28b), bedeutet: 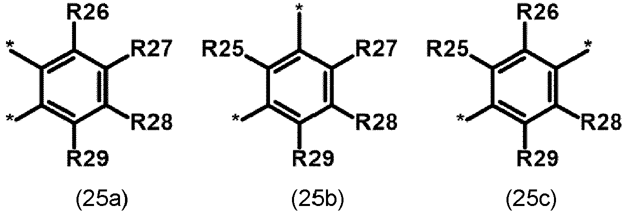 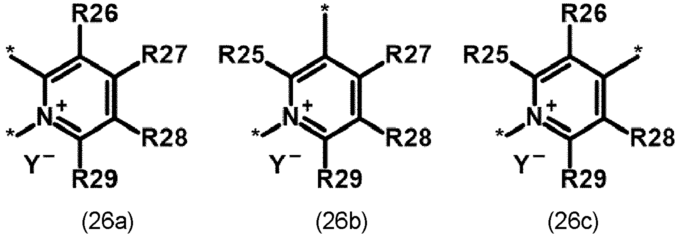 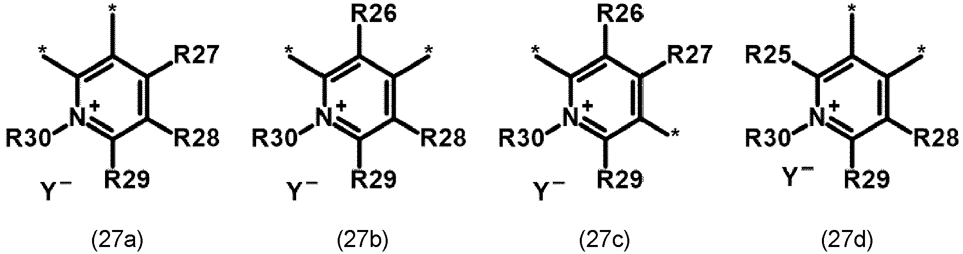 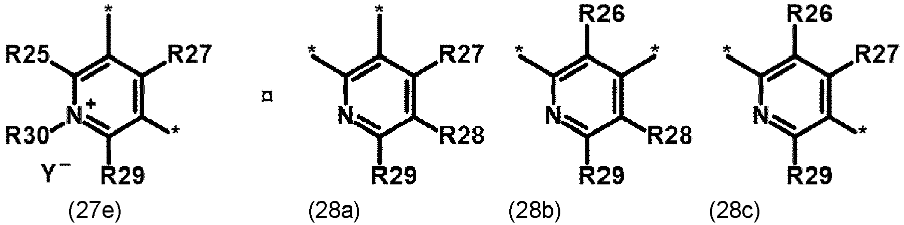 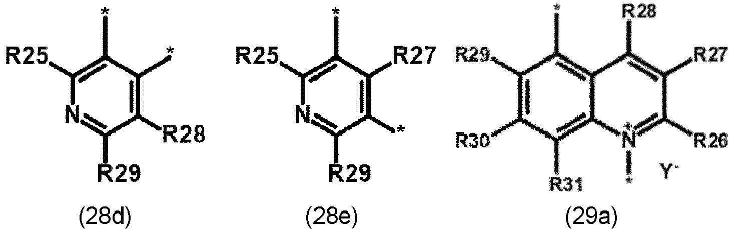 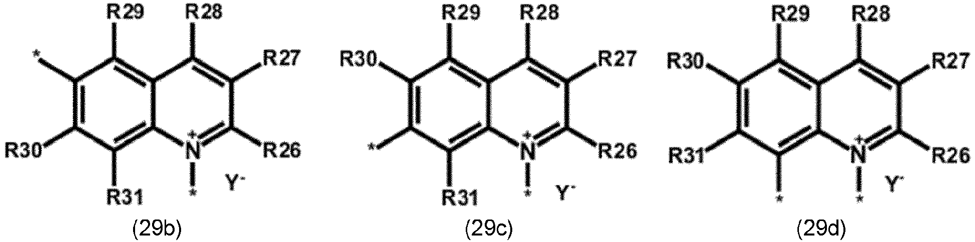 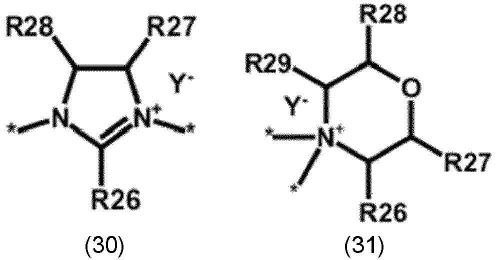
wobei die Reste R26, R27, R28, R29, R30, und R31 jeweils unabhängig voneinander Wasserstoff, Alkyl-Rest, der geradkettig oder verzweigt ist, mit 1 bis 5 Kohlenstoffatomen, vorzugsweise Methyl, Ethyl, n-Propyl, iso-Propyl, n-Butyl, sec-Butyl, iso-Butyl, oder n-Pentyl, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})ₚ, oder *- O - Si(OR^{(VIII)}) _{[3 - p]}(R^{(IX)})ₚ, bedeuten, substituiert ist, Phenyl oder Benzyl bedeuten, und wobei Phenyl und Benzyl, jeweils unabhängig voneinander, unsubstituiert oder mit einem oder mehrerer Reste, die aus der Gruppe, die aus Halogen, *- OH, *- C(=O)OH, *- S(=O)₂OH, *- B(OH)₂, *- Si(OR^{(VIII)}) _{[3 - p]}(R^{(IX)})ₚ, Alkyl-Rest, der gradkettig oder verzweigt ist, mit 1 bis 4 Kohlenstoffatomen, vorzugsweise Methyl, Ethyl, n-Propyl, oder iso-Propyl, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)}) _{[ 3- p]}(R^{(IX)})ₚ, oder *- O - Si(OR^{(VIII)})_{[3-p]}(R^{(IX)})ₚ, bedeuten, substituiert ist, *- O - Alkyl-Rest, der gradkettig oder verzweigt ist, mit 1 bis 4 Kohlenstoffatomen, vorzugsweise Methoxy, Ethoxy, n-Propoxy, oder iso-Propoxy, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})ₚ, oder *- O - Si(OR^{(VIII)})_{[3 - p]}(R^{(IX)})ₚ, bedeuten, substituiert ist, Carboxyalkyl-Rest, der gradkettig oder verzweigt ist, mit 2 bis 4 Kohlenstoffatomen, vorzugsweise Carboxymethyl, Carboxyethyl, Carboxy-n-propyl, oder Carboxy-iso-propyl, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})ₚ, oder *- O - Si(OR^{(VIII)})_{[3 - p]}(R^{(IX)})ₚ, bedeuten, substituiert ist, oder Alkenyl-Rest der gradkettig oder verzweigt ist, mit 2 bis 3 C-Atomen, vorzugasweise Vinyl oder Allyl, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})ₚ, oder *- O - Si(OR^{(VIII)})_{[3 - p]}(R^{(IX)})ₚ, bedeuten, substituiert ist, und
wobei die Reste R^{(I)}, R^{(VIII)} und R^{(IX)}, jeweils unabhängig voneinander, Alkyl, das gradkettig oder verzweigt sein kann, mit 1 bis 4 Kohlenstoffatomen, oder Alkenyl, das gradkettig oder verzweigt sein kann, mit 2 bis 4 Kohlenstoffatomen,
und wobei Y⁻ ein Anion ist, das jeweils unabhängig voneinander Fluorid, Chlorid, Bromid, lodid, Sulfat, Hydrogensulfat, Phosphat, Hydrogenphosphat, Dihydrogenphosphat, wenigstens ein Carboxylat-Anion einer Carbonsäure mit 1 bis 15 Kohlenstoffatomen, wenigstens ein Sulfonat-Anion einer Sulfonsäure mit 1 bis 12 C-Atomen oder eine Kombination davon bedeutet, und
wobei das substituierte Phenalen-1-on-Derivat der allgemeinen Formel (1) höchstens zwei neutrale protonierbare Stickstoffatome, und/oder zwei permanent positiv geladene Stickstoffatome und/oder zwei Säuregruppen aufweist, vorzugsweise höchstens zwei Reste, die ausgewählt sind aus *- NH(R^{(I)}), *- C(=O)OH, *- S(=O)₂OH, *- B(OH)₂, einem Rest der allgemeinen Formel (13) bis (15), (26a) bis (31) oder Kombinationen davon.

Vorzugsweise können die Reste *- C(=O)OH, *- S(=O)₂OH, und B(OH)₂ auch deprotoniert vorliegen, vorzugsweise als Carboxylat-Anion, Sulfat-Anion, und Borat-Anion, in Gegenwart vorzugsweise eines entsprechendes Gegenions in Form eines Alkalimetall-Kations, weiter bevorzugt Natrium-Kations oder Kalium-Kations.

Weiter bevorzugt ist das wenigstens eine substituierte Phenalen-1-on-Derivat ein erfindungsgemäß verwendetes Phenalen-1-on-Derivat der allgemeinen Formel (1), wobei einer der Reste R1 bis R8, vorzugsweise einer der Reste R1 bis R6, vorzugsweise einer der Reste R1, R2, R4, R6 oder R8, weiter bevorzugt einer der Reste R1, R2, R4 oder R6, weiter bevorzugt einer der Reste R1 oder R2, weiter bevorzugt der Rest R1, einen organischen Rest W1 bedeutet, der ausgewählt ist aus der Gruppe, die aus den Resten mit der Formel (400) bis (484) besteht:

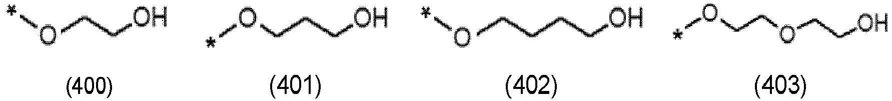

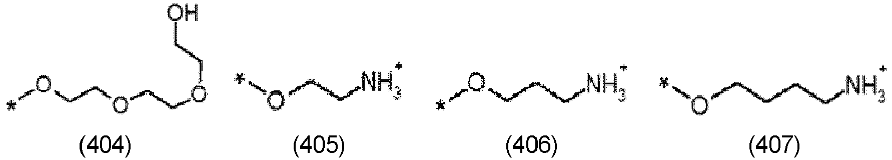

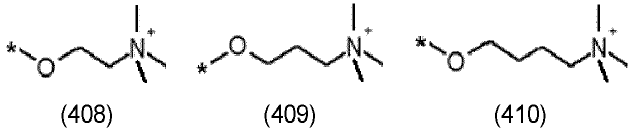

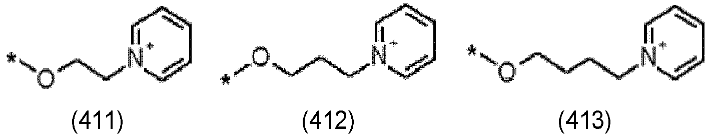

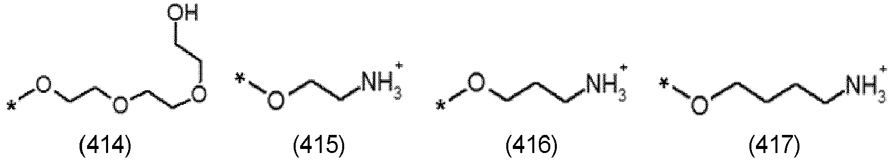

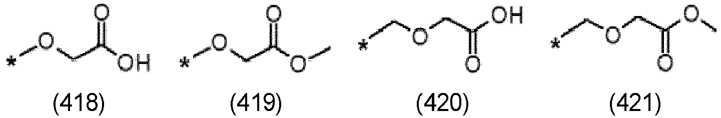

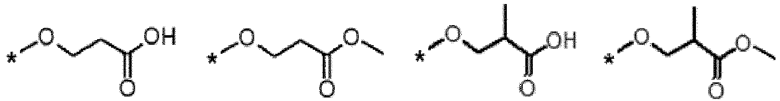

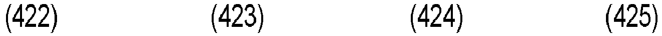

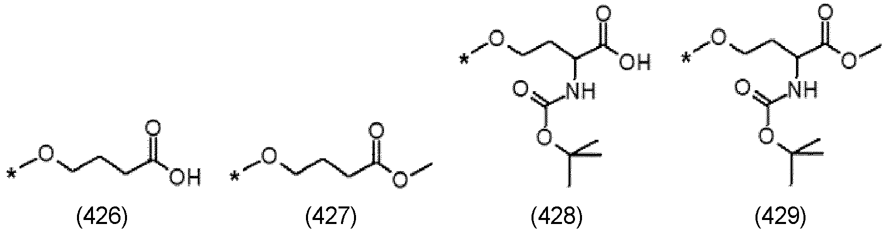

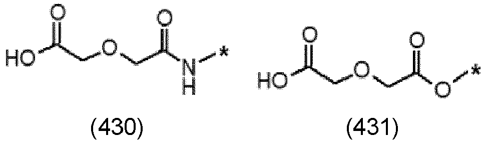

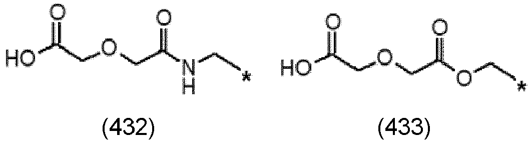

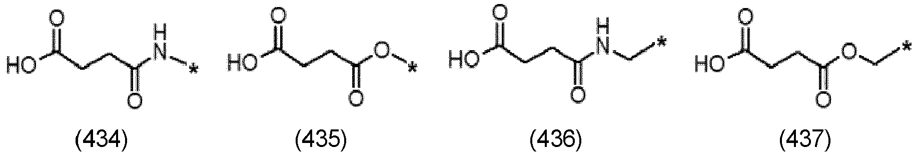

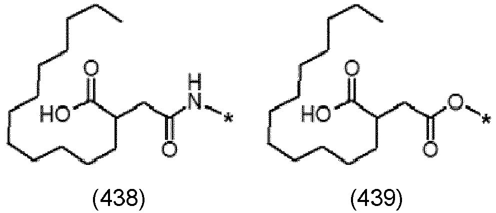

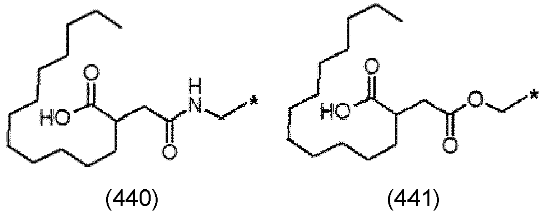

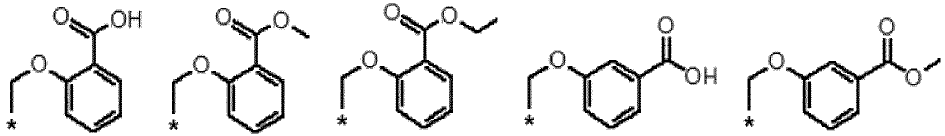

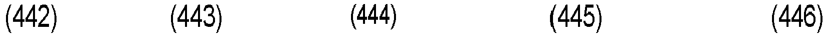

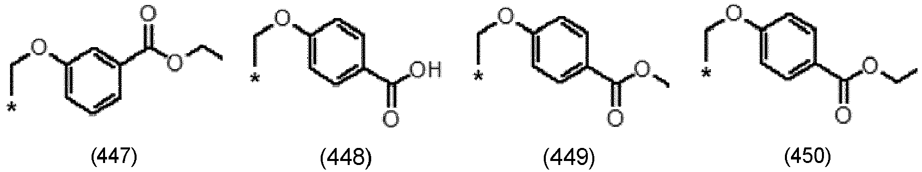

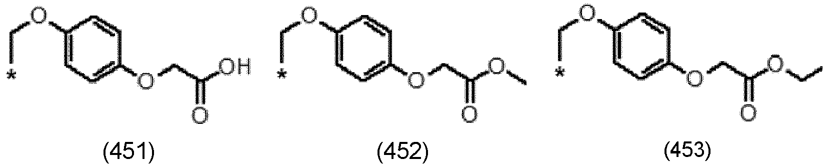

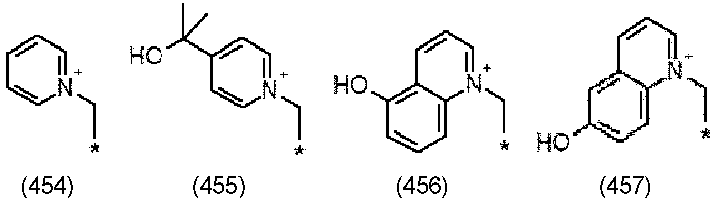

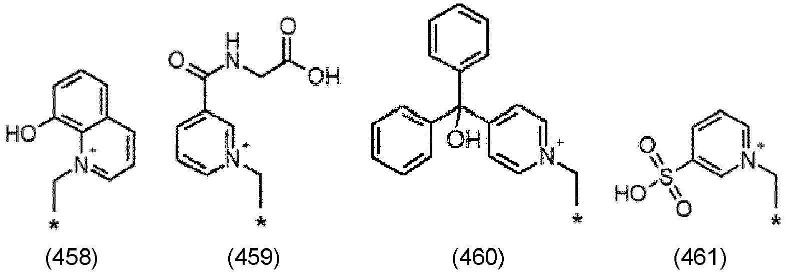

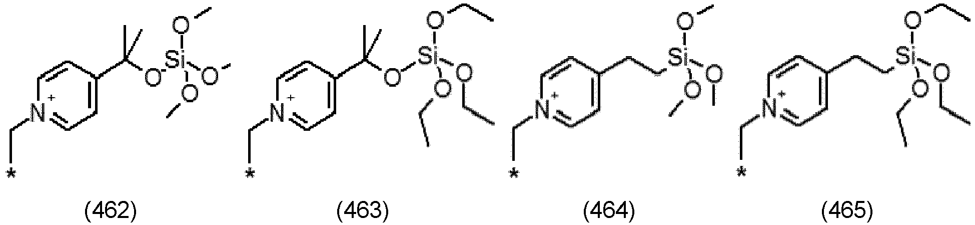

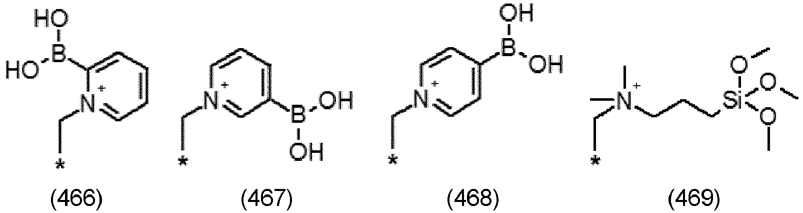

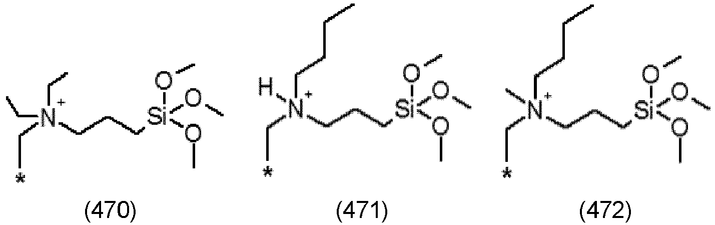

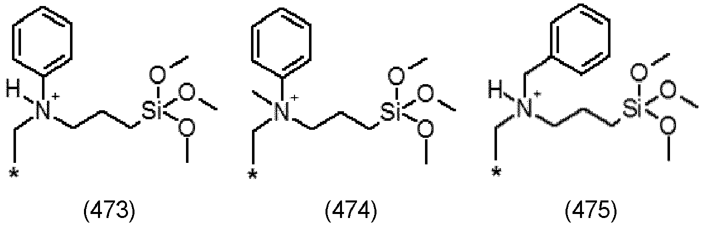

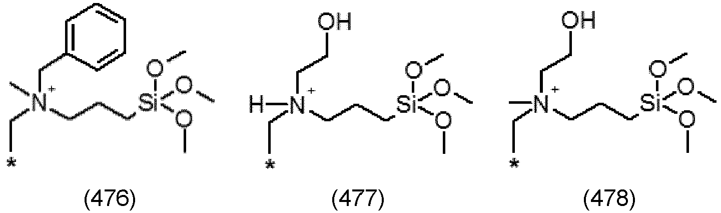

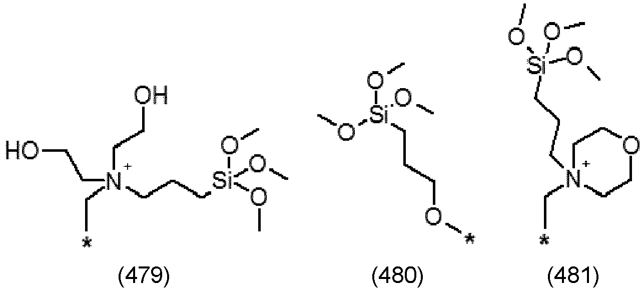

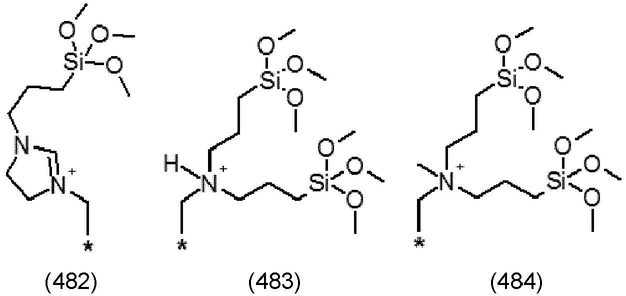

Weiter bevorzugt wird das wenigstens eine substituierte Phenalen-1-on-Derivat ausgewählt aus der Gruppe, die aus den Verbindungen mit der Formel (101a) bis (161d) und Mischungen davon, vorzugsweise Verbindungen mit der Formel (101a) bis (132) und Mischungen davon, besteht:

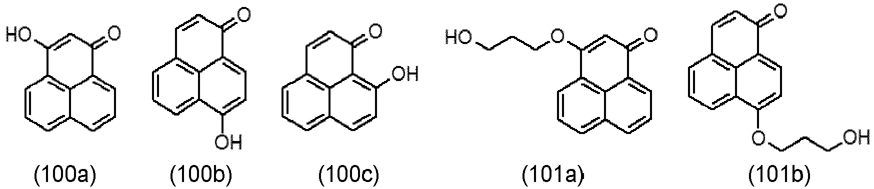

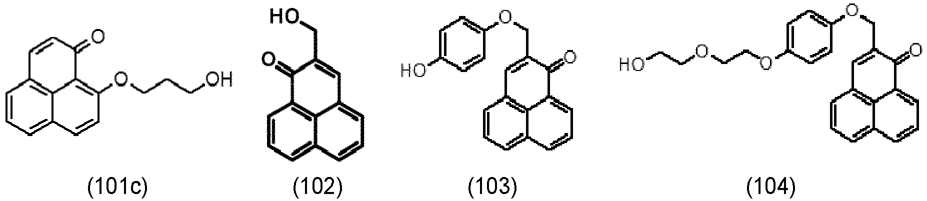

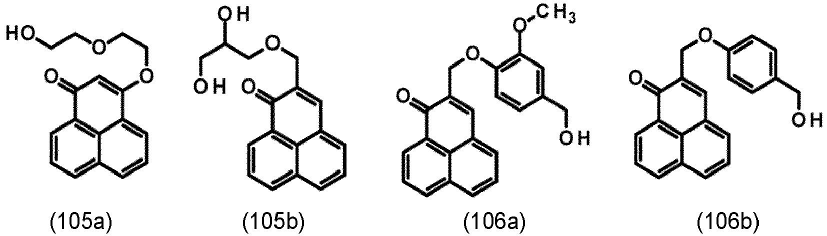

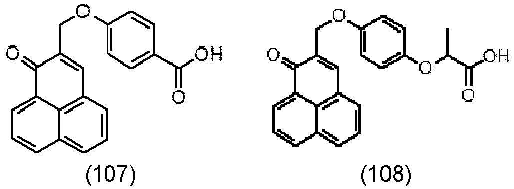

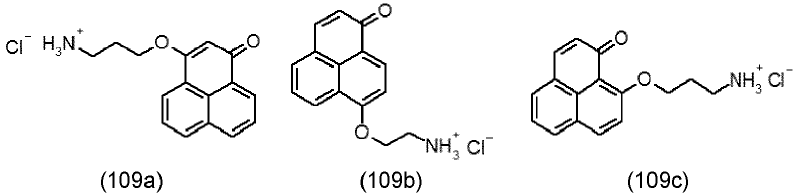

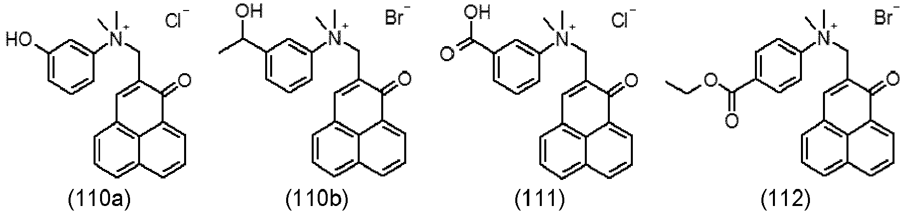

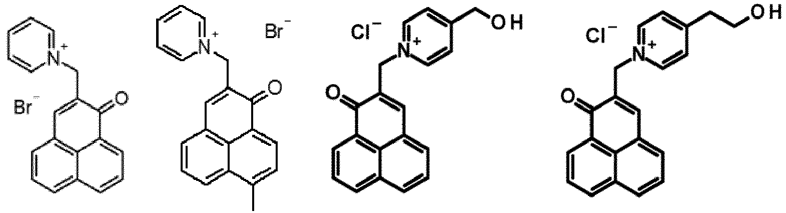

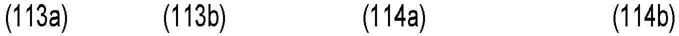

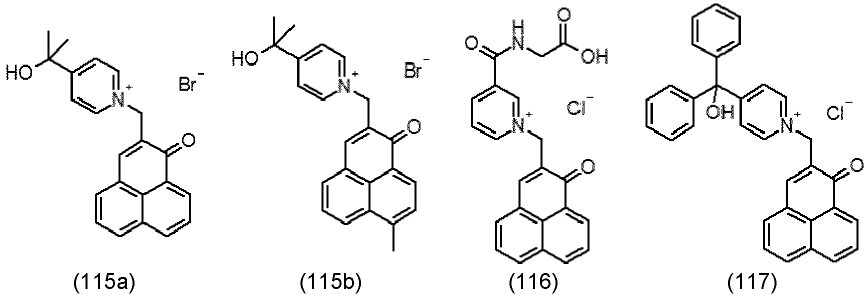

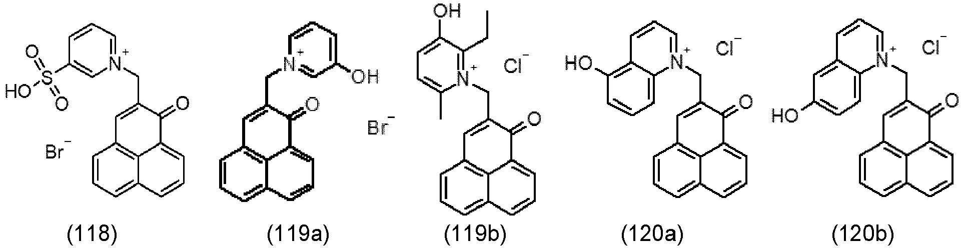

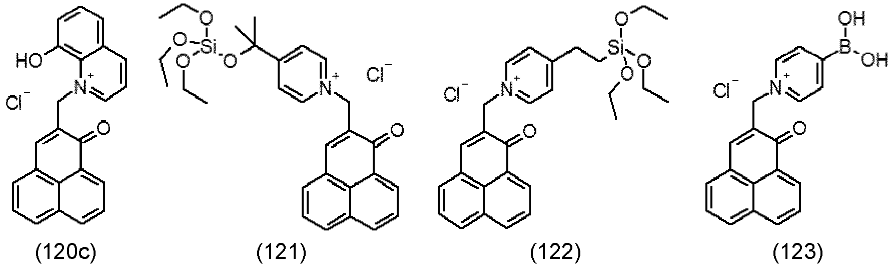

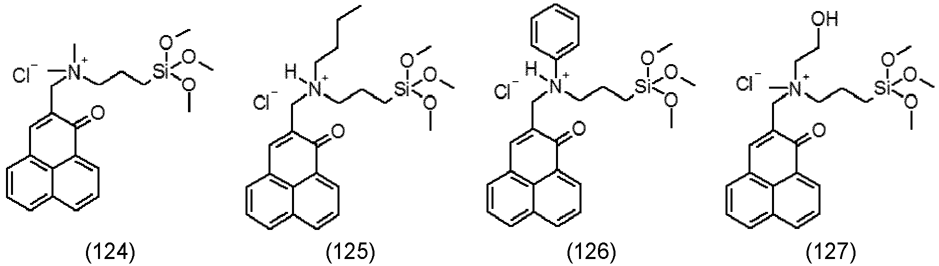

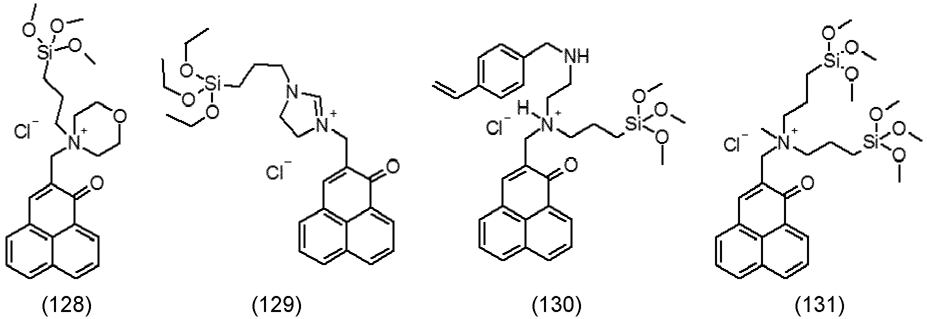

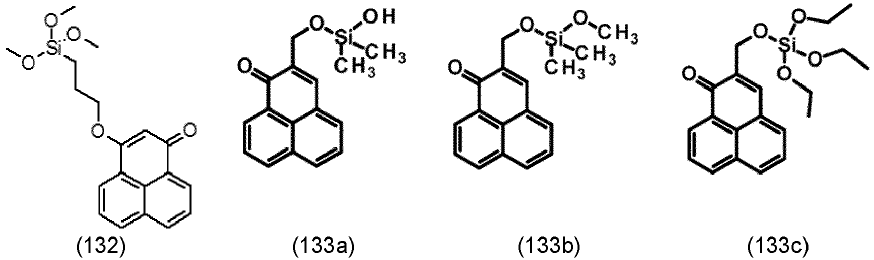

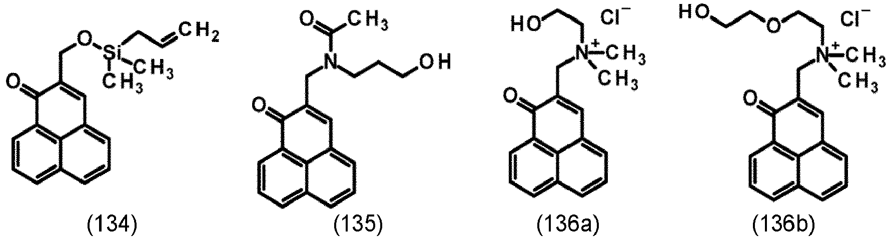

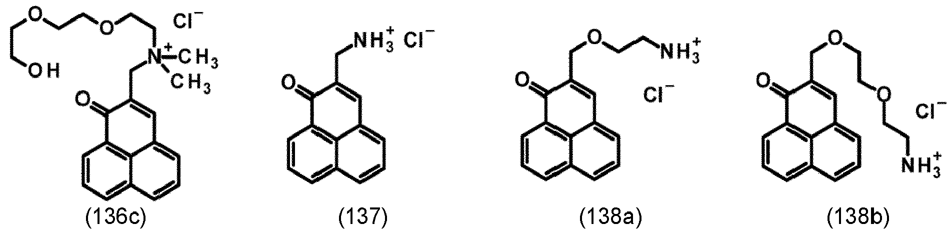

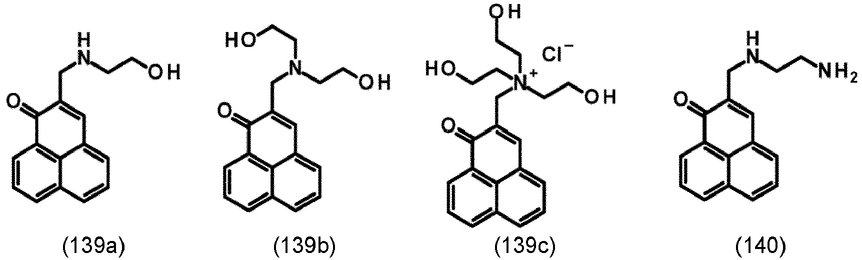

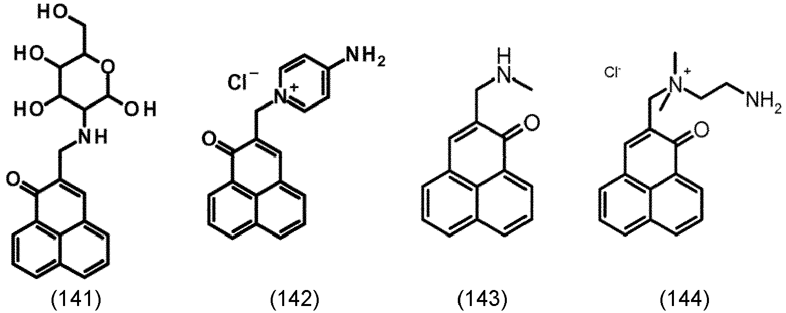

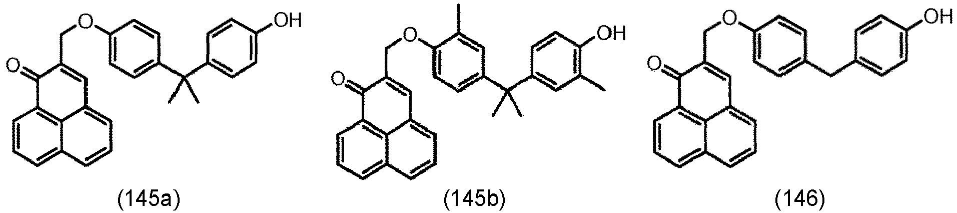

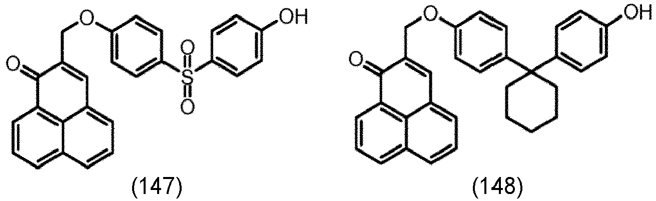

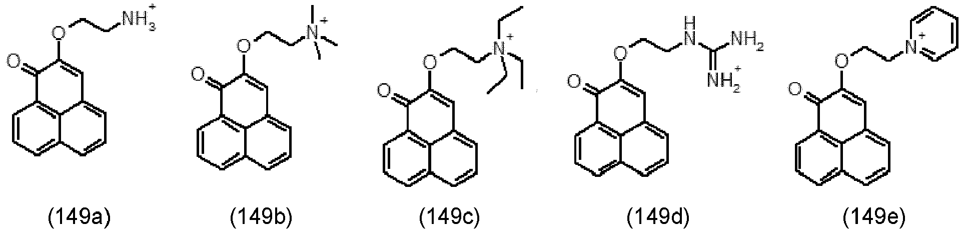

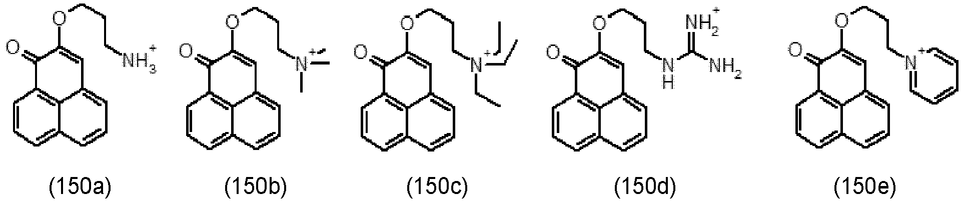

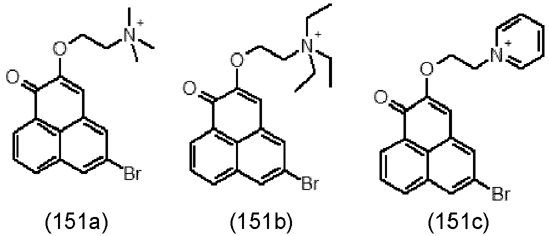

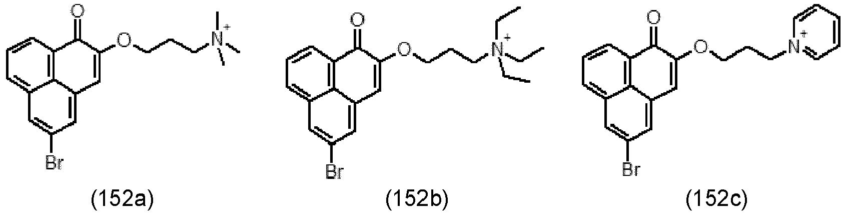

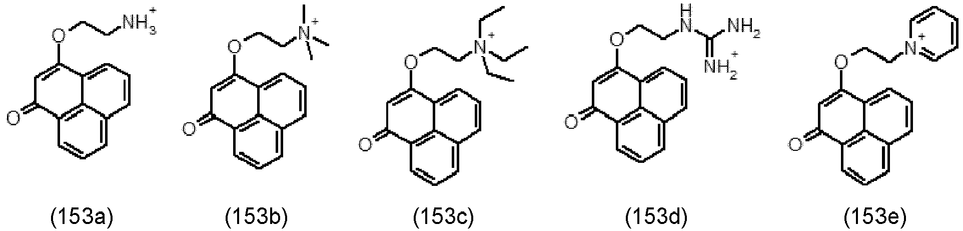

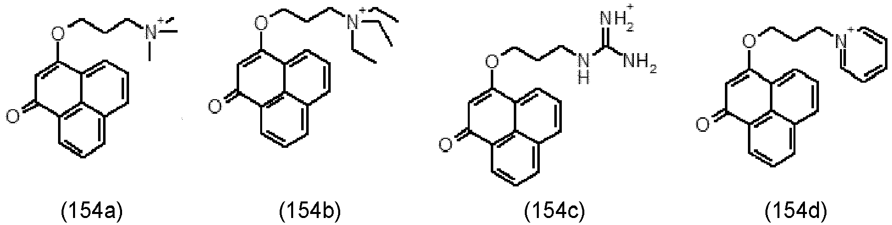

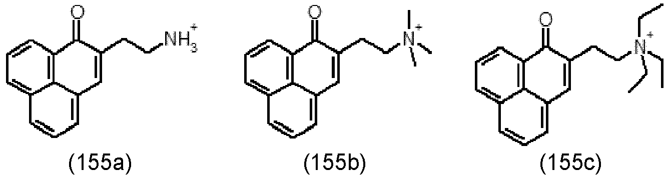

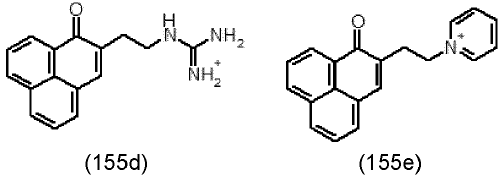

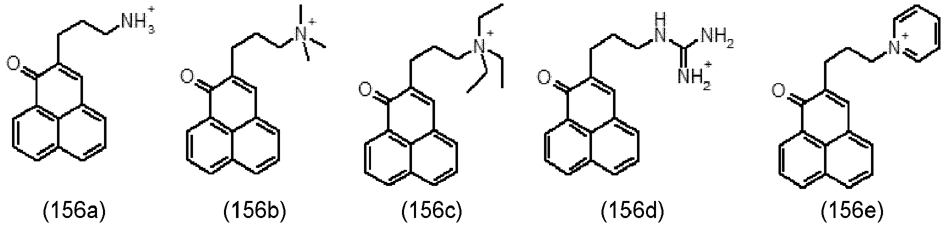

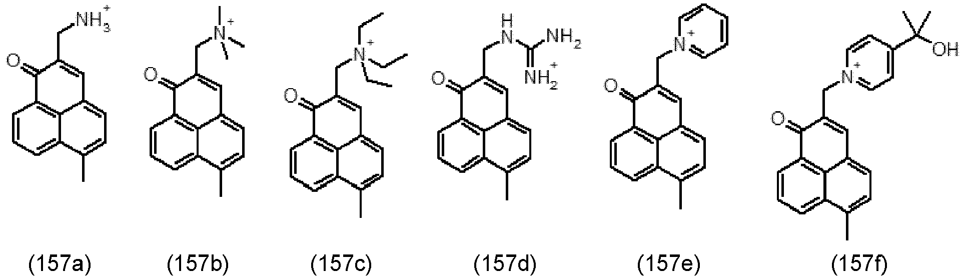

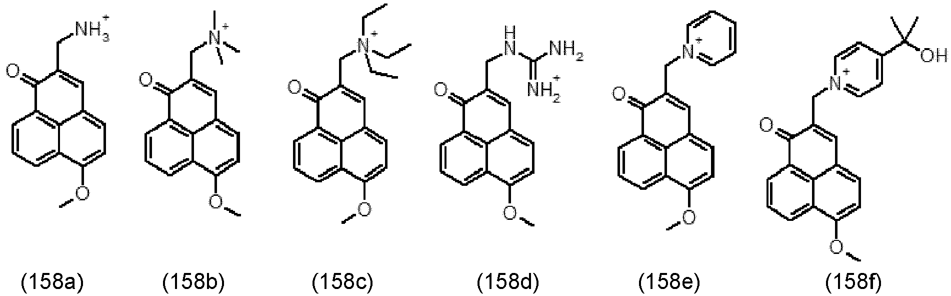

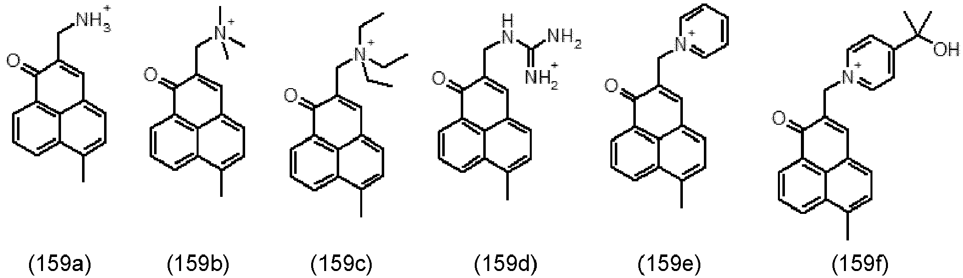

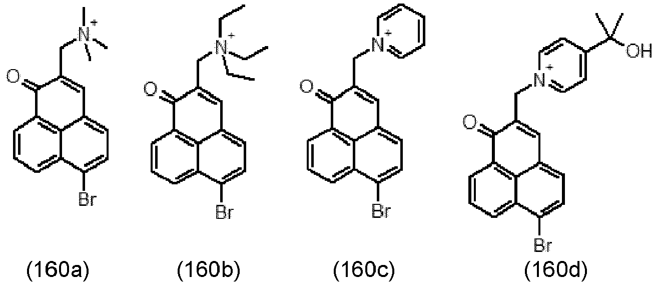

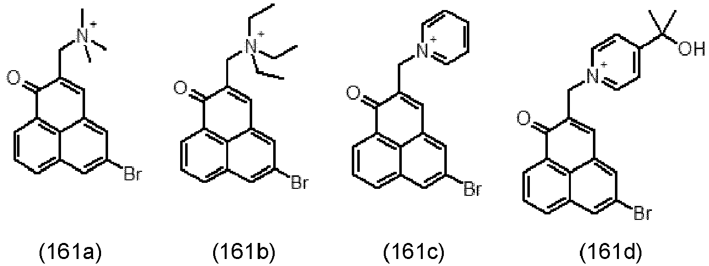

Vorzugsweise weist ein in der erfindungsgemäßen photokatalytisch-aktiven Beschichtungs-Zusammensetzung verwendetes wenigstens eine substituierte Curcumin-Derivat die allgemeine Formel (2a) oder Formel (2b), vorzugsweise die allgemeine Formel (2a), auf: 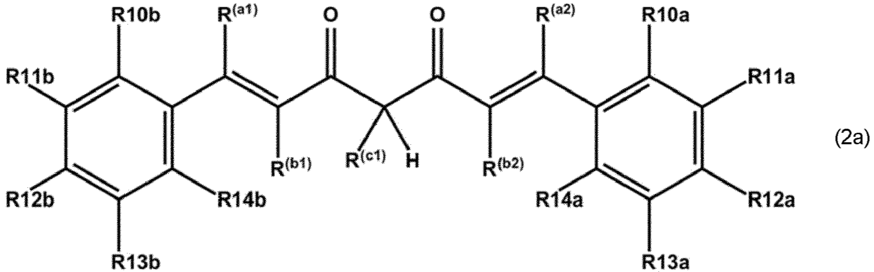 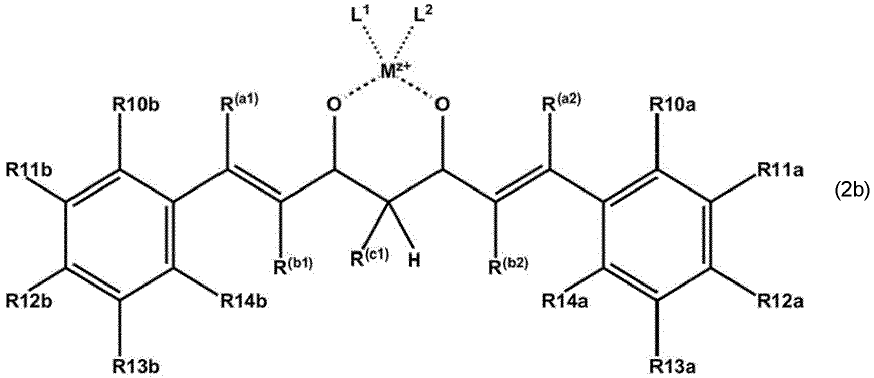
wobei M^{z+} das Kation eines Metalls oder Halbmetalls M, das vorzugsweise ausgewählt ist aus Bor, Zink und Eisen, bedeutet, wobei z die formale Oxidationszahl des Metalls oder Halbmetalls M ist und wobei z eine ganze Zahl von 1 bis 7, vorzugsweise von 2 bis 3, ist, und wobei die Reste L¹ und L² jeweils unabhängig voneinander Wasser, Fluorid, Chlorid, Bromid, lodid, Phosphat, Hydrogenphosphat, Dihydrogenphosphat, Sulfat, Hydrogensulfat, Tosylat, Mesylat oder wenigstens ein Carboxylat-Ion einer Carbonsäure mit 1 bis 15 Kohlenstoffatomen und/oder Mischungen davon bedeuten, wobei die Reste L¹ und L² jeweils zusammen einen verbrückten Liganden mit zwei oder mehr Koordinationsstellen bilden können, der ausgewählt ist Polyketonen mit 5 bis 15 C-Atomen und zwei oder mehr Ketogruppen,
wobei die Reste R^{(a1)}, R^{(a2)}, R^{(b1)} und R^{(b2)}, die jeweils unabhängig voneinander gleich oder voneinander verschieden sein können, jeweils Wasserstoff, Alkyl, das gradkettig oder verzweigt sein kann, mit 1 bis 4 C-Atomen, vorzugsweise Methyl, Ethyl, n-Propyl oder iso-Propyl, *-O-Alkyl, das gradkettig oder verzweigt sein kann, mit 1 bis 4 C-Atomen, vorzugsweise Methoxy oder Ethoxy, Phenyl oder Benzyl bedeuten, wobei Phenyl und Benzyl jeweils unabhängig voneinander unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können,
wobei der Rest R^{(c1)} jeweils Wasserstoff, Halogen, Alkyl, das gradkettig oder verzweigt sein kann, mit 1 bis 4 C-Atomen, vorzugsweise Methyl, Ethyl, n-Propyl oder iso-Propyl, *-O-Alkyl, das gradkettig oder verzweigt sein kann, mit 1 bis 4 C-Atomen, vorzugsweise Methoxy oder Ethoxy, Phenyl, Benzyl, wobei Phenyl und Benzyl jeweils unabhängig voneinander unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können,
und wobei die Reste R10a bis R14b, die jeweils unabhängig voneinander gleich oder voneinander verschieden sein können, jeweils Wasserstoff, *- OH, *- C(=O)OH, *- S(=O)₂OH,, *- O - Si(OR^{(VIII)})_{3 - p}(R^{(IX)})ₚ, Halogen, vorzugsweise Chlor, Brom, oder lod, Alkyl, das gradkettig oder verzweigt sein kann, mit 1 bis 4 C-Atomen, vorzugsweise Methyl, Ethyl, n-Propyl oder iso-Propyl, *-O-Alkyl, das gradkettig oder verzweigt sein kann, mit 1 bis 4 C-Atomen, vorzugsweise Methoxy oder Ethoxy, Aryl mit 5 bis 10 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, Aryloxy mit 5 bis 10 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, Alkylaryl mit 6 bis 10 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, *-O-Alkylaryl mit 6 bis 10 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, oder einen organischen Rest W1, vorzugsweise jeweils Wasserstoff, *- C(=O)OH, *- S(=O)₂OH,, *- O - Si(OR^{(VIII)})_{3 - p}(R^{(IX)})ₚ, Halogen, vorzugsweise Chlor, Brom, oder lod, Alkyl, das gradkettig oder verzweigt sein kann, mit 1 bis 4 C-Atomen, vorzugsweise Methyl, Ethyl, n-Propyl oder iso-Propyl, *-O-Alkyl, das gradkettig oder verzweigt sein kann, mit 1 bis 4 C-Atomen, vorzugsweise Methoxy oder Ethoxy, Aryl mit 5 bis 10 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, Aryloxy mit 5 bis 10 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, Alkylaryl mit 6 bis 10 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, *-O-Alkylaryl mit 6 bis 10 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, oder einen organischen Rest W1, bedeuten,
mit der Maßgabe, dass einer der Reste R10a bis R14a und einer der Reste R10b bis R14b, vorzugsweise die Reste R10a und R10b oder die Reste R11a und R11b oder die Reste R12a und R12b oder die Reste R13a und R13b oder die Reste R14a und R14b, ein organischer Rest W1 bedeuten, und wobei optional wenigstens einer der Reste R10a bis R14a und wenigstens einer der Reste R10b bis R14b, vorzugsweise mindestens 2 oder höchstens 4 der Reste R10a und R10b oder R11a und R11b oder R12a und R12b oder R13a und R13b oder R14a und R14b, die nicht ein Rest W1b bedeuten, weiterhin Chlor, Brom oder lod, vorzugsweise Brom bedeutet,
wobei der organische Rest W1 jeweils unabhängig voneinander ein Rest mit der allgemeinen Formel (12a) bis (14b), vorzugsweise ein Rest mit der allgemeinen Formel (12a) oder (12b), bedeutet:

   * - [(C(D)(E))_{b} - A]ₐ - (C(D)(E))ₘ - X (12a)

   * - Q - [(C(D)(E))_{b} - A]ₐ - (C(D)(E))ₘ - X (12b)

   * - (C(D)(E))_{d} - Ar - [B - (C(D)(E)_{b}]ₐ - (C(D)(E))ₙ - X (13a)

   * - Q - (C(D)(E))_{d} - Ar - [B - (C(D)(E)_{b}]ₐ - (C(D)(E))ₙ - X (13b)

   * - [(C(D)(E))_{b} - A]_{c} - (C(D)(E))_{g} - Ar - (C(D)(E))ₙ - X (14a)

   * - Q - [(C(D)(E))_{b} - A]_{c} - (C(D)(E))_{g} - Ar - (C(D)(E))ₙ - X (14b)
wobei Rest Q jeweils unabhängig voneinander Sauerstoff, ein Rest der allgemeinen Formel * - C(=O) - *, ein Rest der Formel * - C(=O)O - *, oder ein Rest der Formel * - OC(=O) - *, vorzugsweise Sauerstoff, bedeutet, und
wobei Rest A jeweils unabhängig voneinander Sauerstoff, ein Rest der allgemeinen Formel * - C(=O) - *, ein Rest der Formel * - C(=O)O - *, ein Rest der Formel * - OC(=O) - *, oder ein Rest mit der allgemeinen Formel (13) bis (14): 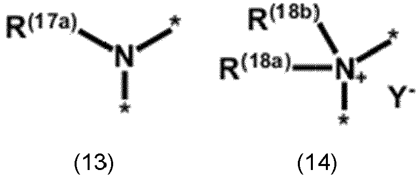 , vorzugsweise Sauerstoff, bedeutet, und
wobei Rest B jeweils unabhängig voneinander Sauerstoff, ein Rest der allgemeinen Formel * - C(=O) - *, ein Rest der Formel * - C(=O)O - *, ein Rest der Formel * - OC(=O) - *, oder ein Rest mit der allgemeinen Formel (12) bis (14): 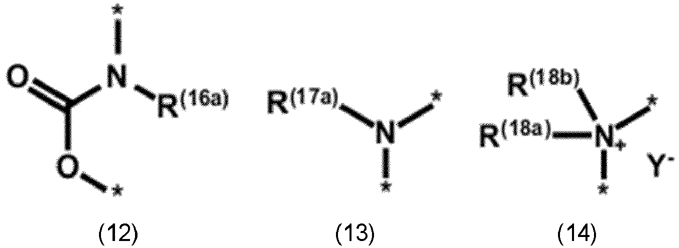 bedeutet, und
wobei die Reste R^{(16a)}, R^{(17a)}, R^{(18a)} und jeweils unabhängig voneinander Wasserstoff, Alkyl-Rest, der geradkettig oder verzweigt ist, mit 1 bis 5 Kohlenstoffatomen, vorzugsweise Methyl, Ethyl, n-Propyl, iso-Propyl, n-Butyl, sec-Butyl, iso-Butyl, oder n-Pentyl, der unsubstituiert oder mit einem oder mehrerer Reste, die jeweils unabhängig voneinander Chlor, Brom, Fluor, *- OH, *- Si(OR^{(VIII)}) _{[3-p]}(R(^{IX)})ₚ, oder *- O - Si(OR^{(VIII)}) _{[3-p]}(R(^{IX)})ₚ, bedeuten, substituiert ist, Phenyl oder Benzyl bedeuten, und wobei Phenyl und Benzyl, jeweils unabhängig voneinander, unsubstituiert oder mit einem oder mehrerer Reste, die aus der Gruppe, die aus Halogen, *- OH, *- C(=O)OH, *- S(=O)₂OH, *- B(OH)₂, *- Si(OR^{(VIII)})_{[3 - p]}(R^{(IX)})ₚ, Alkyl-Rest, der gradkettig oder verzweigt ist, mit 1 bis 4 Kohlenstoffatomen, oder *- O - Si(OR^{(VIII)}) _{[3 - p]}(R^{(IX)})ₚ besteht, ausgewählt ist, substituiert ist, und
wobei die Reste D und E jeweils unabhängig voneinander Wasserstoff, *- OH, *- O - Si(OR^{(VIII)})_{[3 - p]}(R^{(IX)})ₚ, Halogen, Alkyl, das gradkettig oder verzweigt sein kann, mit 1 bis 15 Kohlenstoffatomen, Alkoxy, das gradkettig oder verzweigt sein kann, mit 1 bis 15 Kohlenstoffatomen, Aryloxy mit 6 bis 10 Kohlenstoffatomen, vorzugsweise Phenoxy oder Benzyloxy, Hydroxylalkyl, das gradkettig oder verzweigt sein kann, mit 1 bis 5 Kohlenstoffatomen und 1 bis 5 OH-Gruppen, Halogenalkyl, das gradkettig oder verzweigt sein kann, mit 1 bis 5 Kohlenstoffatomen und 1 bis 5 Halogen-Gruppen, Phenyl, oder Benzyl, wobei Phenyl und Benzyl jeweils unabhängig voneinander unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sind, bedeuten,
wobei der Index a jeweils unabhängig voneinander eine ganze Zahl von 1 bis 5, vorzugsweise von 1 bis 4, vorzugsweise 1 bis 2, bedeutet, und
wobei der Index b jeweils unabhängig voneinander eine ganze Zahl von 1 bis 4, vorzugsweise von 2 bis 3, weiter bevorzugt 2, bedeuten, und
wobei der Index c jeweils unabhängig voneinander eine ganze Zahl von 0 bis 5, vorzugsweise von 0 bis 4, vorzugsweise 1 bis 3, bedeutet, und
wobei die Indices d, und m jeweils unabhängig voneinander eine ganze Zahl von 1 bis 12, vorzugsweise 1 bis 8, vorzugsweise von 2 bis 4, bedeuten, und
wobei die Indices g, und n jeweils unabhängig voneinander eine ganze Zahl von 0 bis 12, vorzugsweise 0 bis 8, vorzugsweise von 2 bis 4, bedeuten, und
wobei der Index p jeweils unabhängig voneinander eine ganze Zahl von 1 bis 3 bedeutet, und
wobei der Rest X jeweils unabhängig voneinander *- NH(R^{(I)}), *- OH, *- C(=O)OH, *- S(=O)₂OH, *- B(OH)₂, *- Si(OR^{(VIII)})_{3 - p}(R^{(IX)})ₚ, *- O - Si(OR^{(VIII)})_{3 - p}(R^{(IX)})ₚ, oder ein Rest mit der allgemeinen Formel (15): 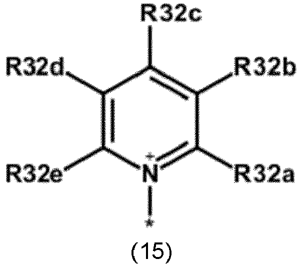
wobei die Reste R32a bis R32e jeweils unabhängig voneinander, Wasserstoff, Alkyl, das gradkettig oder verzweigt sein kann, mit 1 bis 4 Kohlenstoffatomen, oder Alkenyl, das gradkettig oder verzweigt sein kann, mit 2 bis 4 Kohlenstoffatomen, bedeuten, und
wobei der Rest Ar ein Rest der allgemeinen Formel (25a) bis (31), vorzugsweise ein Rest der allgemeinen Formel (25a) bis (28b), weiter bevorzugt ein Rest der allgemeinen Formel (25a) bis (25c), bedeutet: 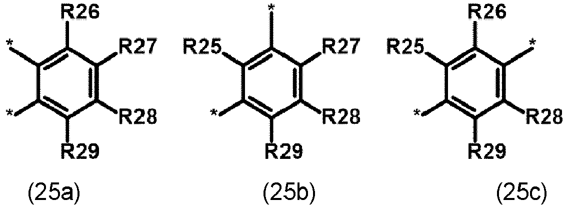 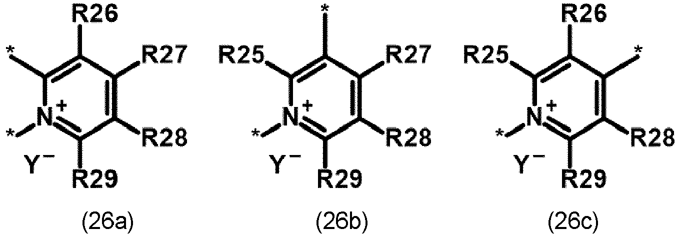 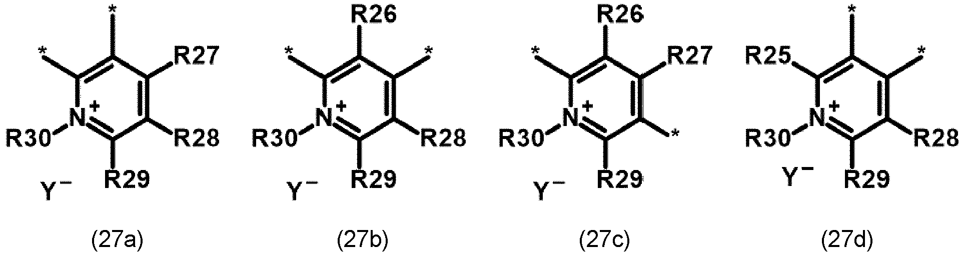 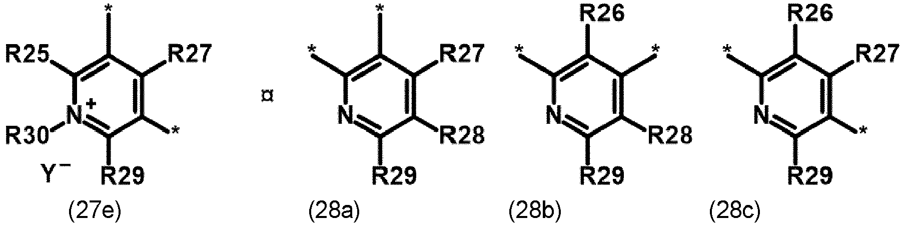 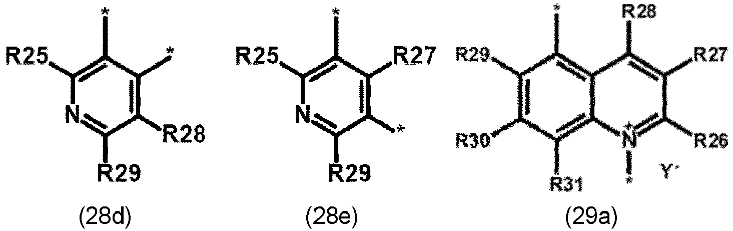 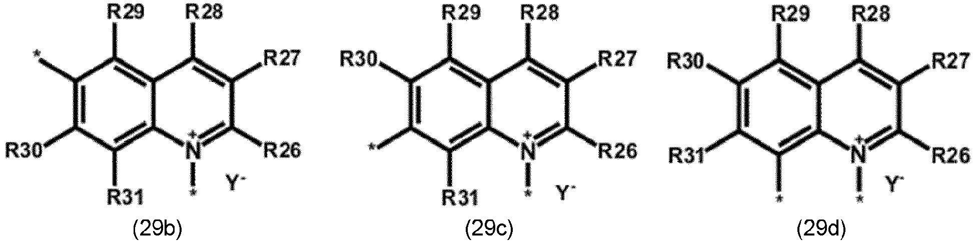 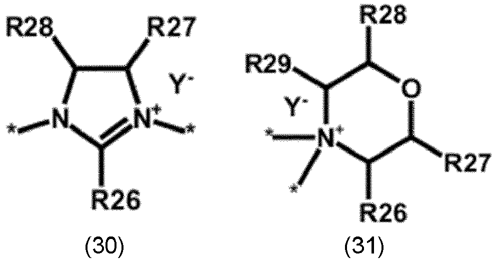
wobei die Reste R26, R27, R28, R29, R30, und R31 jeweils unabhängig voneinander Wasserstoff, Alkyl-Rest, der geradkettig oder verzweigt ist, mit 1 bis 5 Kohlenstoffatomen, vorzugsweise Methyl, Ethyl, n-Propyl, iso-Propyl, n-Butyl, sec-Butyl, iso-Butyl, oder n-Pentyl, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})ₚ, oder *- O - Si(OR^{(VIII)}) _{[3 - p]}(R^{(IX)})ₚ, bedeuten, substituiert ist, Phenyl oder Benzyl bedeuten, und wobei Phenyl und Benzyl, jeweils unabhängig voneinander, unsubstituiert oder mit einem oder mehrerer Reste, die aus der Gruppe, die aus Halogen, *- OH, *- C(=O)OH, *- S(=O)₂OH, *- B(OH)₂, *- Si(OR^{(VIII)}) _{[3 - p]}(R^{(IX)})ₚ, Alkyl-Rest, der gradkettig oder verzweigt ist, mit 1 bis 4 Kohlenstoffatomen, vorzugsweise Methyl, Ethyl, n-Propyl, oder iso-Propyl, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})ₚ, oder *- O - Si(OR^{(VIII)})_{[3-p]}(R^{(IX)})ₚ, bedeuten, substituiert ist, *- O - Alkyl-Rest, der gradkettig oder verzweigt ist, mit 1 bis 4 Kohlenstoffatomen, vorzugsweise Methoxy, Ethoxy, n-Propoxy, oder iso-Propoxy, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})ₚ, oder *- O - Si(OR^{(VIII)})_{[3 - p]}(R^{(IX)})ₚ, bedeuten, substituiert ist, Carboxyalkyl-Rest, der gradkettig oder verzweigt ist, mit 2 bis 4 Kohlenstoffatomen, vorzugsweise Carboxymethyl, Carboxyethyl, Carboxy-n-propyl, oder Carboxy-iso-propyl, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})ₚ, oder *- O - Si(OR^{(VIII)})_{[3 - p]}(R^{(IX)})ₚ, bedeuten, substituiert ist, oder Alkenyl-Rest der gradkettig oder verzweigt ist, mit 2 bis 3 C-Atomen, vorzugasweise Vinyl oder Allyl, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})ₚ, oder *- O - Si(OR^{(VIII)})_{[3 - p]}(R^{(IX)})ₚ bedeuten, substituiert ist, und
wobei die Reste R^{(I)}, R^{(VIII)} und R^{(IX)}, jeweils unabhängig voneinander, Alkyl, das gradkettig oder verzweigt sein kann, mit 1 bis 4 Kohlenstoffatomen, oder Alkenyl, das gradkettig oder verzweigt sein kann, mit 2 bis 4 Kohlenstoffatomen,
und wobei Y- ein Anion ist, das jeweils unabhängig voneinander Fluorid, Chlorid, Bromid, lodid, Sulfat, Hydrogensulfat, Phosphat, Hydrogenphosphat, Dihydrogenphosphat, wenigstens ein Carboxylat-Anion einer Carbonsäure mit 1 bis 15 Kohlenstoffatomen, wenigstens ein Sulfonat-Anion einer Sulfonsäure mit 1 bis 12 C-Atomen oder eine Kombination davon bedeutet, und
wobei das substituierte Curcumin-Derivat der allgemeinen Formel (2a) oder Formel (2b) höchstens zwei neutrale protonierbare Stickstoffatome, oder zwei permanent positiv geladene Stickstoffatome und/oder zwei Säuregruppen aufweist, vorzugsweise höchstens zwei Reste, die ausgewählt sind aus *- NH(R^{(I)}), *- C(=O)OH, *- S(=O)₂OH, *- B(OH)₂, einem Rest der allgemeinen Formel (13) bis (15), (26a) bis (31) oder Kombinationen davon.

Vorzugsweise können die Reste *- C(=O)OH, *- S(=O)₂OH, und B(OH)₂ auch deprotoniert vorliegen, vorzugsweise als Carboxylat-Anion, Sulfat-Anion, und Borat-Anion, in Gegenwart vorzugsweise eines entsprechendes Gegenions in Form eines Alkalimetall-Kations, weiter bevorzugt Natrium-Kations oder Kalium-Kations.

Vorzugsweise bedeuten die Reste R10a und R10b oder die Reste R11a und R11b oder die Reste R12a und R12b oder die Reste R13a und R13b oder die Reste R14a und R14b, jeweils einen organischen Rest W1b, wobei die Reste R10a und R10b oder die Reste R11a und R11b oder die Reste R12a und R12b oder die Reste R13a und R13b oder die Reste R14a und R14b, die nicht ein organischer Rest W1b bedeuten, jeweils unabhängig voneinander Halogen, das ausgewählt ist aus Chlor, Brom und lod, bevorzugt Brom, Wasserstoff, Alkyl, das gradkettig oder verzweigt sein kann, mit 1 bis 4 C-Atomen, vorzugsweise Methyl, Ethyl, n-Propyl oder iso-Propyl, *-O-Alkyl, das gradkettig oder verzweigt sein kann, mit 1 bis 4 C-Atomen, vorzugsweise Methoxy oder Ethoxy, Aryl mit 5 bis 10 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, Alkylaryl mit 5 bis 10 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, bedeuten, wobei mindestens 2 und höchstens 4 der Reste R10a und R10b oder R11a und R11b oder R12a und R12b oder R13a und R13b oder R14a und R14b Chlor, Brom oder lod, bevorzugt Brom, bedeuten

Weiter bevorzugt ist das wenigstens eine substituierte Curcumin-Derivat ein erfindungsgemäß verwendetes Curcumin-Derivat der allgemeinen Formel (2a) oder Formel (2b), vorzugsweise der allgemeine Formel (2a), wobei wenigstens einer der Reste R10a bis R14a und/oder wenigstens einer der Reste R10b bis R14b, vorzugsweise die Reste R10a und R10b oder die Reste R11a und R11b oder die Reste R12a und R12b oder die Reste R13a und R13b oder die Reste R14a und R14b, ein organischer Rest W1 bedeutet, der ausgewählt ist aus der Gruppe, die aus den Resten mit der Formel (400) bis (419), (422) bis (431), (434), (435), (438), und (439) besteht.

Weiter bevorzugt wird das wenigstens eine substituierte Curcumin-Derivat ausgewählt aus der Gruppe, die aus den Verbindungen mit der Formel (200a) bis (223) und Mischungen davon besteht.

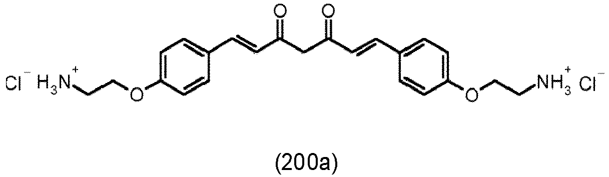

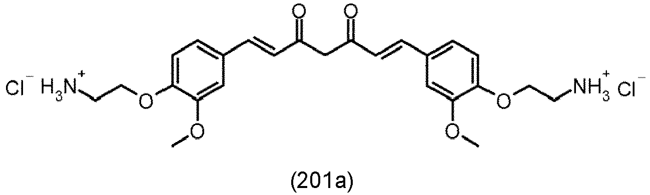

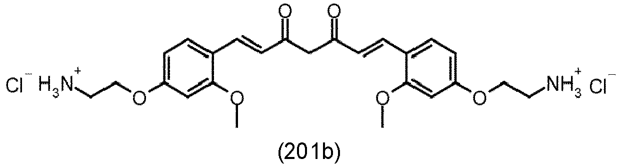

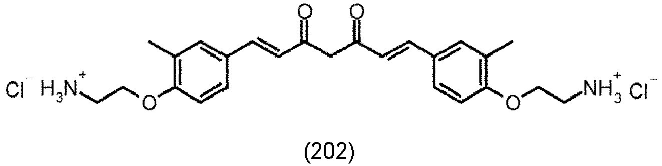

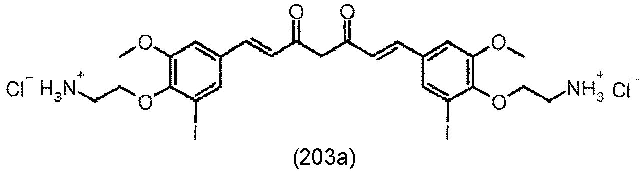

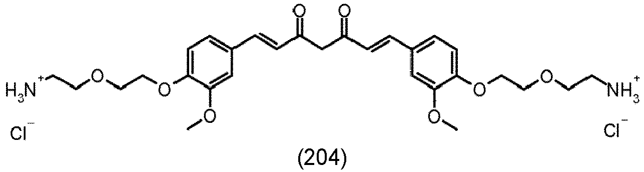

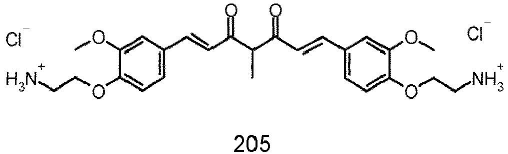

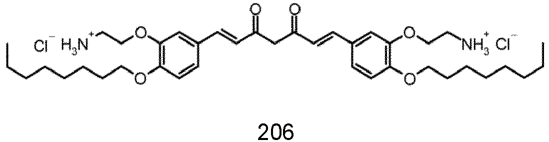

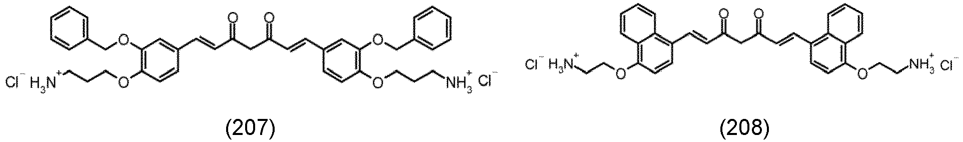

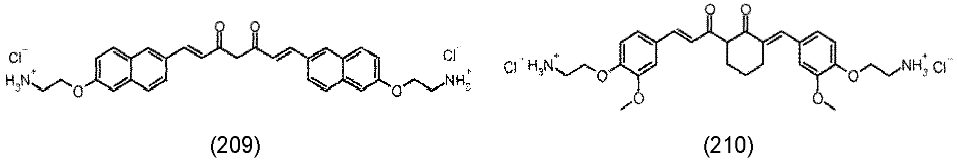

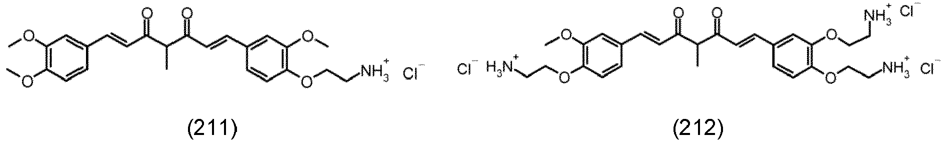

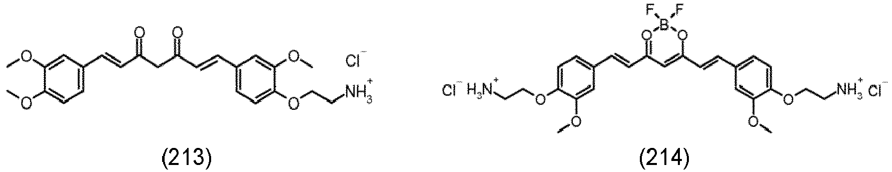

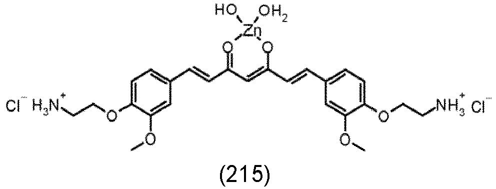

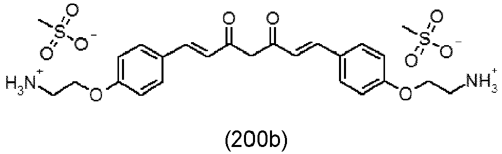

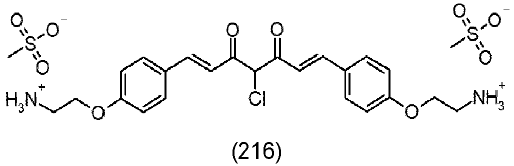

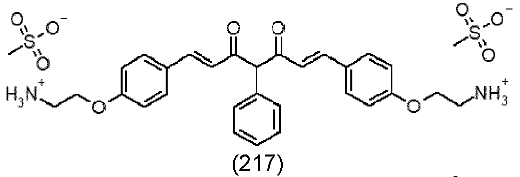

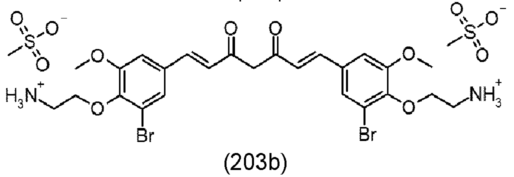

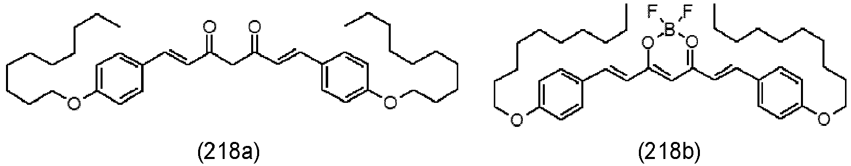

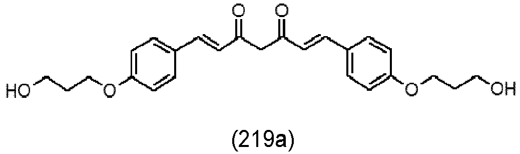

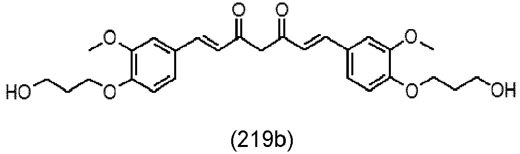

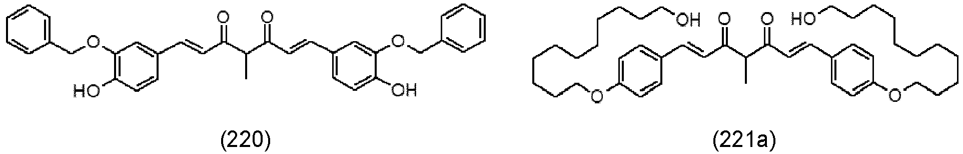

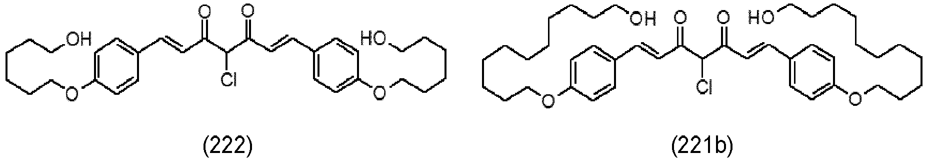

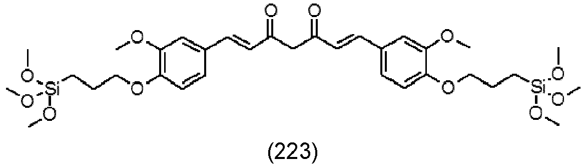

Vorzugsweise weist ein in der erfindungsgemäßen photokatalytisch-aktiven Beschichtungs-Zusammensetzung verwendetes wenigstens eine substituierte Porphycen-Derivat die allgemeine Formel (3): 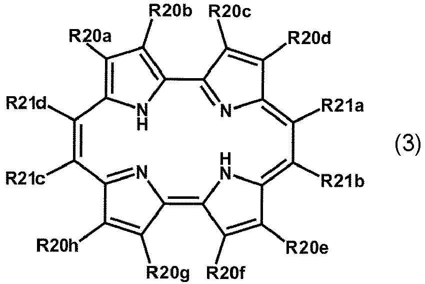 auf, und
wobei die Reste R20a, R20b, R20c, R20d, R20e, R20f, R20g, und R20h, die jeweils unabhängig voneinander gleich oder voneinander verschieden sein können, jeweils Wasserstoff, Halogen, vorzugsweise Chlor, Brom, oder lod, Alkyl, das gradkettig oder verzweigt sein kann, mit 1 bis 4 C-Atomen, vorzugsweise Methyl, Ethyl, n-Propyl oder iso-Propyl, die jeweils unsubstituiert oder mit einem oder mehrerer Reste, die aus der Gruppe, die aus Hydroxy, Chlor, Brom, Fluor, und Kombinationen davon, besteht, ausgewählt werden, substituiert sein können, Alkoxy, das gradkettig oder verzweigt sein kann, mit 1 bis 4 C-Atomen, vorzugsweise Methoxy oder Ethoxy, die jeweils unsubstituiert oder mit einem oder mehrerer Reste, die aus der Gruppe, die aus Hydroxy, Chlor, Brom, Fluor, und Kombinationen davon, besteht, ausgewählt werden, substituiert sein können, Alkylalkyloxy, das gradkettig oder verzweigt sein kann, mit 2 bis 8 C-Atomen, vorzugsweise Methylmethoxy, Methylethoxy, Ethylmethoxy, oder Ethylethoxy, die jeweils unsubstituiert oder mit einem oder mehrerer Reste, die aus der Gruppe, die aus Hydroxy, Chlor, Brom, und Kombinationen davon, besteht, ausgewählt werden, substituiert sein können, Alkylcarboxylester, das gradkettig oder verzweigt sein kann, mit 2 bis 8 C-Atomen, vorzugsweise Methylacetat, Ethyl-2-acetat, Propyl-3-acetat, Methylpropionat, Ethyl-2-proponat, Propyl-3-butyrat, Methylbutyrat, Ethyl-2-butyrat, oder Propyl-3-butyrat, Aryl mit 6 bis 10 Kohlenstoffatomen, vorzugsweise Phenyl oder Benzyl, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, oder Aryloxy mit 6 bis 10 Kohlenstoffatomen, vorzugsweise Phenoxy oder Benzyloxy, die jeweils unsubstituiert oder mit einem oder mehrerer Reste, die aus der Gruppe, die aus Hydroxy, Chlor, Brom, Fluor, Methyl, Ethyl, n-Propyl, iso-Propyl, Methoxy, Ethoxy, und Kombinationen davon, besteht, ausgewählt werden, substituiert sein können, bedeuten,
wobei die Reste R21a, R21b, R21c, und R21d, die jeweils unabhängig voneinander gleich oder voneinander verschieden sein können, jeweils Wasserstoff, Nitro, Halogen, vorzugsweise Chlor, Brom, oder lod, Alkyl, das gradkettig oder verzweigt sein kann, mit 1 bis 4 C-Atomen, vorzugsweise Methyl, Ethyl, n-Propyl oder iso-Propyl, *-O-Alkyl, das gradkettig oder verzweigt sein kann, mit 1 bis 4 C-Atomen, vorzugsweise Methoxy oder Ethoxy, * - NH - S(=O)₂ - Aryl mit 5 bis 15 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, * - NH - C(=O) - Alkyl mit 1 bis 15 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, Aryloxy mit 5 bis 10 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, Alkylaryl mit 6 bis 10 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, *-O-Alkylaryl mit 6 bis 10 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, oder einen organischen Rest W1 bedeuten, mit der Maßgabe, dass wenigstens einer der Reste R21a, R21b, R21c, oder R21d ein organischer Rest W1 bedeutet
wobei der organische Rest W1 jeweils unabhängig voneinander ein Rest mit der allgemeinen Formel (21a) bis (24b), vorzugsweise ein Rest mit der allgemeinen Formel (21a), (21b), (22a) oder (22b), bedeutet:

   - X (21a)

   * - Q - (C(D)(E))ₘ - X (21b)

   * - [(C(D)(E))_{b} - A]ₐ - (C(D)(E))ₘ - X (22a)

   * - Q - [(C(D)(E))_{b} - A]ₐ - (C(D)(E))ₘ - X (22b)

   * - (C(D)(E))_{d} - Ar - [B - (C(D)(E)_{b}]ₐ - (C(D)(E))ₙ - X (23a)

   * - Q - (C(D)(E))_{d} - Ar - [B - (C(D)(E)_{b}]ₐ - (C(D)(E))ₙ - X (23b)

   * - [(C(D)(E))_{b} - A]_{c} - (C(D)(E))_{g} - Ar - (C(D)(E))ₙ - X (24a)

   * - Q - [(C(D)(E))_{b} - A]_{c} - (C(D)(E))_{g} - Ar - (C(D)(E))ₙ - X (24b)
wobei Reste Q, A, und B jeweils unabhängig voneinander Sauerstoff, ein Rest der allgemeinen Formel * - C(=O) - *, ein Rest der Formel * - C(=O)O - *, ein Rest der Formel * - OC(=O) - *, oder ein Rest mit der allgemeinen Formel (12) bis (14): 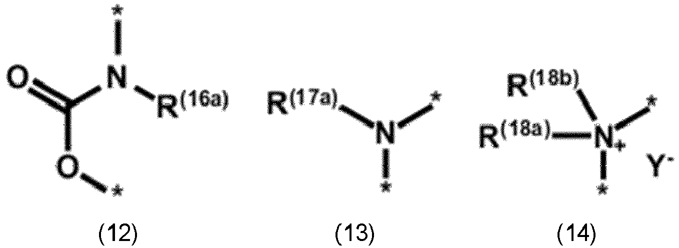 bedeutet, und
wobei die Reste R^{(16a)}, R^{(17a)}, R^{(18a)} und jeweils unabhängig voneinander Wasserstoff, Alkyl-Rest, der geradkettig oder verzweigt ist, mit 1 bis 5 Kohlenstoffatomen, vorzugsweise Methyl, Ethyl, n-Propyl, iso-Propyl, n-Butyl, sec-Butyl, iso-Butyl, oder n-Pentyl, der unsubstituiert oder mit einem oder mehrerer Reste, die jeweils unabhängig voneinander Chlor, Brom, Fluor, *- OH, *- Si(OR^{(VIII)})_{[3 - p]}(R^{(IX)})ₚ, oder *- O - Si(OR^{(VIII)})_{[3 - p]}(R^{(IX)})ₚ, bedeuten, substituiert ist, Phenyl oder Benzyl bedeuten, und wobei Phenyl und Benzyl, jeweils unabhängig voneinander, unsubstituiert oder mit einem oder mehrerer Reste, die aus der Gruppe, die aus Halogen, *- OH, *- C(=O)OH, *- S(=O)₂OH, *- B(OH)₂, *- Si(OR^{(VIII)})_{[3 - p]}(R^{(IX)})ₚ, Alkyl-Rest, der gradkettig oder verzweigt ist, mit 1 bis 4 Kohlenstoffatomen, oder *- O - Si(OR^{(VIII)}) _{[3 - p]}(R^{(IX)})ₚ besteht, ausgewählt ist, substituiert ist, und
wobei die Reste D und E jeweils unabhängig voneinander Wasserstoff, *- OH, *- O - Si(OR^{(VIII)})_{[3 - p]}(R^{(IX)})ₚ, Halogen, Alkyl, das gradkettig oder verzweigt sein kann, mit 1 bis 15 Kohlenstoffatomen, Alkoxy, das gradkettig oder verzweigt sein kann, mit 1 bis 15 Kohlenstoffatomen, Aryloxy mit 6 bis 10 Kohlenstoffatomen, vorzugsweise Phenoxy oder Benzyloxy, Hydroxylalkyl, das gradkettig oder verzweigt sein kann, mit 1 bis 5 Kohlenstoffatomen und 1 bis 5 OH-Gruppen, Halogenalkyl, das gradkettig oder verzweigt sein kann, mit 1 bis 5 Kohlenstoffatomen und 1 bis 5 Halogen-Gruppen, Phenyl, oder Benzyl, wobei Phenyl und Benzyl jeweils unabhängig voneinander unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sind, bedeuten,
wobei der Index a jeweils unabhängig voneinander eine ganze Zahl von 1 bis 5, vorzugsweise von 1 bis 4, vorzugsweise 1 bis 2, bedeutet, und
wobei der Index b jeweils unabhängig voneinander eine ganze Zahl von 1 bis 4, vorzugsweise von 2 bis 3, weiter bevorzugt 2, bedeuten, und
wobei der Index c jeweils unabhängig voneinander eine ganze Zahl von 0 bis 5, vorzugsweise von 0 bis 4, vorzugsweise 1 bis 3, bedeutet, und
wobei die Index d jeweils unabhängig voneinander eine ganze Zahl von 1 bis 18, vorzugsweise 1 bis 15, vorzugsweise von 1 bis 4, vorzugsweise 1 bis 3, bedeuten, und
wobei die Index m jeweils unabhängig voneinander eine ganze Zahl von 1 bis 18, vorzugsweise 1 bis 15, vorzugsweise von 2 bis 4, bedeuten, und
wobei die Indices g, und n jeweils unabhängig voneinander eine ganze Zahl von 0 bis 18, vorzugsweise 0 bis 15, vorzugsweise von 2 bis 4, bedeuten, und
wobei der Index p jeweils unabhängig voneinander eine ganze Zahl von 1 bis 3 bedeutet, und
wobei der Rest X jeweils unabhängig voneinander *- NH(R^{(I)}), *- OH, *- C(=O)OH, *- S(=O)₂OH, *- B(OH)₂, *- Si(OR^{(VIII)})_{3 - p}(R^{(IX)})ₚ, *- O - Si(OR^{(VIII)})_{3 - p}(R^{(IX)})ₚ, oder ein Rest mit der allgemeinen Formel (15) oder (16): 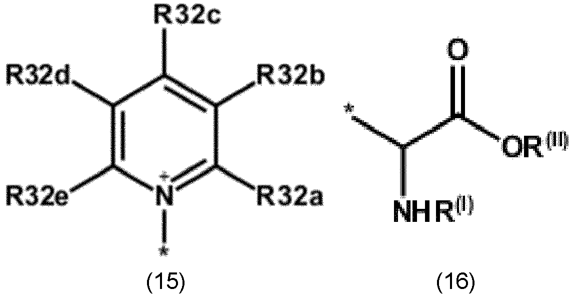
wobei die Reste R32a bis R32e jeweils unabhängig voneinander, Wasserstoff, Alkyl, das gradkettig oder verzweigt sein kann, mit 1 bis 4 Kohlenstoffatomen, oder Alkenyl, das gradkettig oder verzweigt sein kann, mit 2 bis 4 Kohlenstoffatomen, bedeuten, und
wobei der Rest Ar ein Rest der allgemeinen Formel (25a) bis (31), weiter bevorzugt ein Rest der allgemeinen Formel (25a) bis (28b), bedeutet: 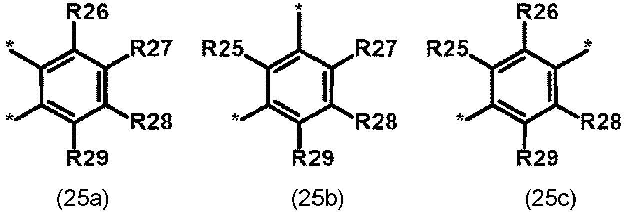 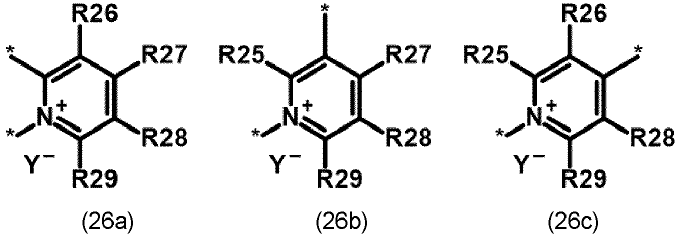 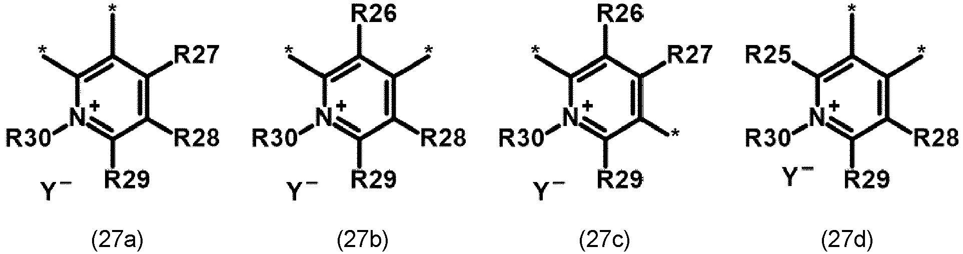 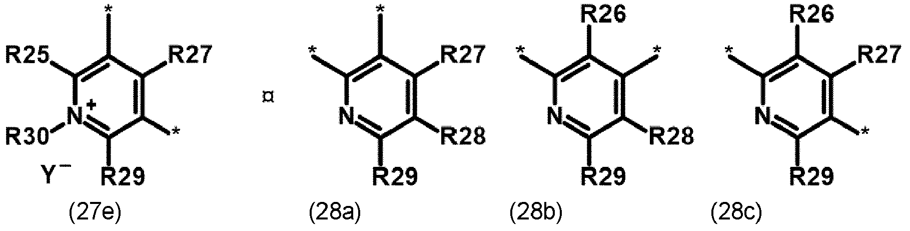 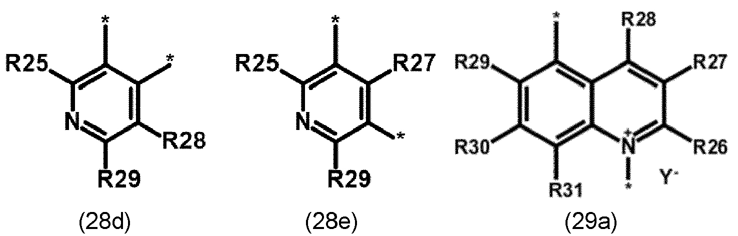 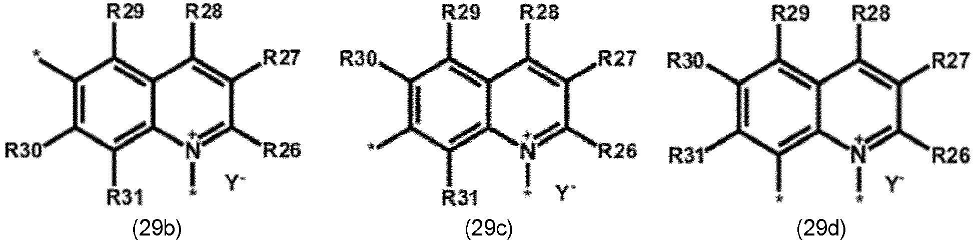 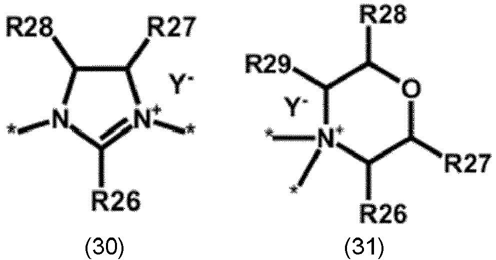
wobei die Reste R26, R27, R28, R29, R30, und R31 jeweils unabhängig voneinander Wasserstoff, Alkyl-Rest, der geradkettig oder verzweigt ist, mit 1 bis 5 Kohlenstoffatomen, vorzugsweise Methyl, Ethyl, n-Propyl, iso-Propyl, n-Butyl, sec-Butyl, iso-Butyl, oder n-Pentyl, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})ₚ, oder *- O - Si(OR^{(VIII)}) _{[3 - p]}(R^{(IX)})ₚ, bedeuten, substituiert ist, Phenyl oder Benzyl bedeuten, und wobei Phenyl und Benzyl, jeweils unabhängig voneinander, unsubstituiert oder mit einem oder mehrerer Reste, die aus der Gruppe, die aus Halogen, *- OH, *- C(=O)OH, *- S(=O)₂OH, *- B(OH)₂, *- Si(OR^{(VIII)}) _{[3 - p]}(R^{(IX)})ₚ, Alkyl-Rest, der gradkettig oder verzweigt ist, mit 1 bis 4 Kohlenstoffatomen, vorzugsweise Methyl, Ethyl, n-Propyl, oder iso-Propyl, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})ₚ, oder *- O - Si(OR^{(VIII)})_{[3-p]}(R^{(IX)})ₚ, bedeuten, substituiert ist, *- O - Alkyl-Rest, der gradkettig oder verzweigt ist, mit 1 bis 4 Kohlenstoffatomen, vorzugsweise Methoxy, Ethoxy, n-Propoxy, oder iso-Propoxy, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})ₚ, oder *- O - Si(OR^{(VIII)})_{[3 - p]}(R^{(IX)})ₚ, bedeuten, substituiert ist, Carboxyalkyl-Rest, der gradkettig oder verzweigt ist, mit 2 bis 4 Kohlenstoffatomen, vorzugsweise Carboxymethyl, Carboxyethyl, Carboxy-n-propyl, oder Carboxy-iso-propyl, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})ₚ, oder *- O - Si(OR^{(VIII)})_{[3 - p]}(R^{(IX)})ₚ, bedeuten, substituiert ist, oder Alkenyl-Rest der gradkettig oder verzweigt ist, mit 2 bis 3 C-Atomen, vorzugasweise Vinyl oder Allyl, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})ₚ, oder *- O - Si(OR^{(VIII)})_{[3 - p]}(R^{(IX)})ₚ, bedeuten, substituiert ist, und
wobei die Reste R^{(I)}, R^{(II)}, R^{(VIII)} und R^{(IX)}, jeweils unabhängig voneinander, Alkyl, das gradkettig oder verzweigt sein kann, mit 1 bis 4 Kohlenstoffatomen, oder Alkenyl, das gradkettig oder verzweigt sein kann, mit 2 bis 4 Kohlenstoffatomen,
und wobei Y- ein Anion ist, das jeweils unabhängig voneinander Fluorid, Chlorid, Bromid, lodid, Sulfat, Hydrogensulfat, Phosphat, Hydrogenphosphat, Dihydrogenphosphat, wenigstens ein Carboxylat-Anion einer Carbonsäure mit 1 bis 15 Kohlenstoffatomen, wenigstens ein Sulfonat-Anion einer Sulfonsäure mit 1 bis 12 C-Atomen oder eine Kombination davon bedeutet, und
wobei das substituierte Porphycen-Derivat der allgemeinen Formel (3) höchstens zwei neutrale protonierbare Stickstoffatome, oder zwei permanent positiv geladene Stickstoffatome oder zwei Säuregruppen aufweist, vorzugsweise höchstens zwei Reste, die ausgewählt sind aus *-NH(R^{(I)}), *- C(=O)OH, *- S(=O)₂OH, *- B(OH)₂, einem Rest der allgemeinen Formel (13) bis (16), (26a) bis (31) oder Kombinationen davon.

Vorzugsweise können die Reste *- C(=O)OH, *- S(=O)₂OH, und B(OH)₂ auch deprotoniert vorliegen, vorzugsweise als Carboxylat-Anion, Sulfat-Anion, und Borat-Anion, in Gegenwart vorzugsweise eines entsprechendes Gegenions in Form eines Alkalimetall-Kations, weiter bevorzugt Natrium-Kations oder Kalium-Kations.

Weiter bevorzugt weist ein in der erfindungsgemäßen photokatalytisch-aktiven Beschichtungs-Zusammensetzung verwendetes wenigstens eine substituierte Porphycen-Derivat die allgemeine Formel (3) auf, wobei die Reste R20a, R20d, R20h, und R20e jeweils gleich sind und wobei die Reste R20b, R20c, R20g, und R20f jeweils gleich sind und wobei die Reste jeweils unabhängig voneinander Wasserstoff, Halogen, vorzugsweise Chlor, Brom, oder lod, Alkyl, das gradkettig oder verzweigt sein kann, mit 1 bis 4 C-Atomen, vorzugsweise Methyl, Ethyl, n-Propyl oder iso-Propyl, die jeweils unsubstituiert oder mit einem oder mehrerer Reste, die aus der Gruppe, die aus Hydroxy, Chlor, Brom, Fluor, und Kombinationen davon, besteht, ausgewählt werden, substituiert sein können, Alkoxy, das gradkettig oder verzweigt sein kann, mit 1 bis 4 C-Atomen, vorzugsweise Methoxy oder Ethoxy, die jeweils unsubstituiert oder mit einem oder mehrerer Reste, die aus der Gruppe, die aus Hydroxy, Chlor, Brom, Fluor, und Kombinationen davon, besteht, ausgewählt werden, substituiert sein können, Alkylalkyloxy, das gradkettig oder verzweigt sein kann, mit 2 bis 8 C-Atomen, vorzugsweise Methylmethoxy, Methylethoxy, Ethylmethoxy, oder Ethylethoxy, die jeweils unsubstituiert oder mit einem oder mehrerer Reste, die aus der Gruppe, die aus Hydroxy, Chlor, Brom, und Kombinationen davon, besteht, ausgewählt werden, substituiert sein können, Alkylcarboxylester, das gradkettig oder verzweigt sein kann, mit 2 bis 8 C-Atomen, vorzugsweise Methylacetat, Ethyl-2-acetat, Propyl-3-acetat, Methylpropionat, Ethyl-2-proponat, Propyl-3-butyrat, Methylbutyrat, Ethyl-2-butyrat, oder Propyl-3-butyrat, Aryl mit 6 bis 10 Kohlenstoffatomen, vorzugsweise Phenyl oder Benzyl, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, oder Aryloxy mit 6 bis 10 Kohlenstoffatomen, vorzugsweise Phenoxy oder Benzyloxy, die jeweils unsubstituiert oder mit einem oder mehrerer Reste, die aus der Gruppe, die aus Hydroxy, Chlor, Brom, Fluor, Methyl, Ethyl, n-Propyl, iso-Propyl, Methoxy, Ethoxy, und Kombinationen davon, besteht, ausgewählt werden, substituiert sein können, bedeuten.

Weiter bevorzugt bedeuten höchstens 3 der Reste R20a, R20d, R20h, oder R20e oder höchstens 3 der Reste R20b, R20c, R20g, oder R20f jeweils Halogen, vorzugsweise Chlor, Brom, oder lod, wobei die Reste R20a, R20b, R20c, R20d, R20e, R20f, R20g, und R20h die nicht Halogen bedeuten, jeweils unabhängig voneinander Wasserstoff, Alkyl, das gradkettig oder verzweigt sein kann, mit 1 bis 4 C-Atomen, vorzugsweise Methyl, Ethyl, n-Propyl oder iso-Propyl, die jeweils unsubstituiert oder mit einem oder mehrerer Reste, die aus der Gruppe, die aus Hydroxy, Chlor, Brom, Fluor, und Kombinationen davon, besteht, ausgewählt werden, substituiert sein können, Alkoxy, das gradkettig oder verzweigt sein kann, mit 1 bis 4 C-Atomen, vorzugsweise Methoxy oder Ethoxy, die jeweils unsubstituiert oder mit einem oder mehrerer Reste, die aus der Gruppe, die aus Hydroxy, Chlor, Brom, Fluor, und Kombinationen davon, besteht, ausgewählt werden, substituiert sein können, Alkylalkyloxy, das gradkettig oder verzweigt sein kann, mit 2 bis 8 C-Atomen, vorzugsweise Methylmethoxy, Methylethoxy, Ethylmethoxy, oder Ethylethoxy, die jeweils unsubstituiert oder mit einem oder mehrerer Reste, die aus der Gruppe, die aus Hydroxy, Chlor, Brom, und Kombinationen davon, besteht, ausgewählt werden, substituiert sein können, Alkylcarboxylester, das gradkettig oder verzweigt sein kann, mit 2 bis 8 C-Atomen, vorzugsweise Methylacetat, Ethyl-2-acetat, Propyl-3-acetat, Methylpropionat, Ethyl-2-proponat, Propyl-3-butyrat, Methylbutyrat, Ethyl-2-butyrat, oder Propyl-3-butyrat, Aryl mit 6 bis 10 Kohlenstoffatomen, vorzugsweise Phenyl oder Benzyl, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, oder Aryloxy mit 6 bis 10 Kohlenstoffatomen, vorzugsweise Phenoxy oder Benzyloxy, die jeweils unsubstituiert oder mit einem oder mehrerer Reste, die aus der Gruppe, die aus Hydroxy, Chlor, Brom, Fluor, Methyl, Ethyl, n-Propyl, iso-Propyl, Methoxy, Ethoxy, und Kombinationen davon, besteht, ausgewählt werden, substituiert sein können, bedeuten.

Weiter bevorzugt ist das wenigstens eine substituierte Porphycen-Derivat ein erfindungsgemäß verwendetes Porphycen-Derivat der allgemeinen Formel (3), wenigstens einer der Reste R21a, R21b, R21c, oder R21d ein organischer Rest W1 bedeutet, der ausgewählt ist aus der Gruppe, die aus den Resten mit der Formel (400) bis (419), (422) bis (431), (434), (435), (438), und (439) besteht.

Weiter bevorzugt wird das wenigstens eine substituierte Porphycen-Derivat ausgewählt aus der Gruppe, die aus den Verbindungen mit der Formel (300) bis (399e) und Mischungen davon, vorzugsweise mit der Formel (300) bis (321) und Mischungen davon, besteht:

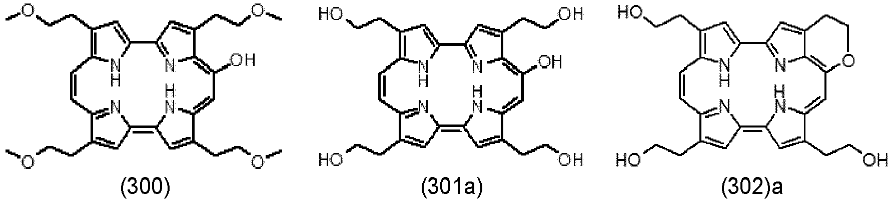

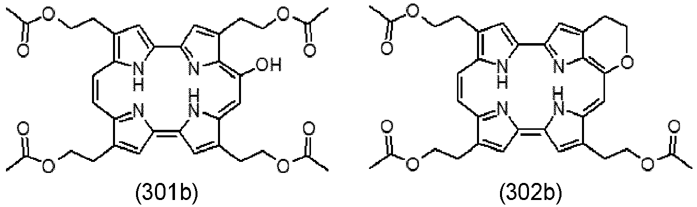

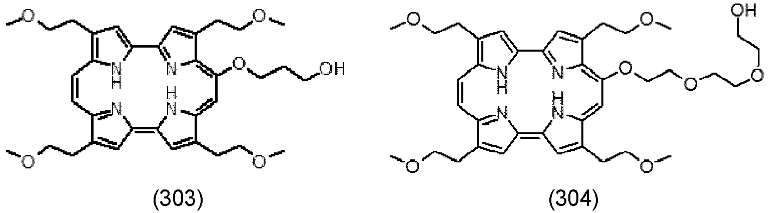

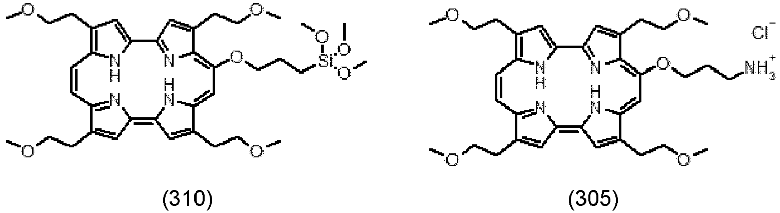

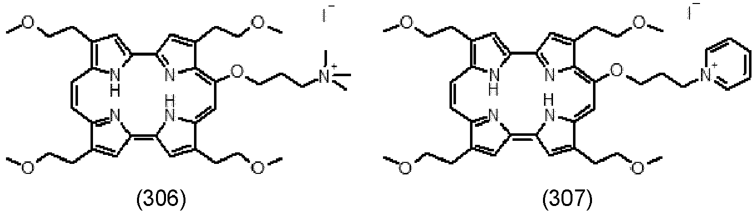

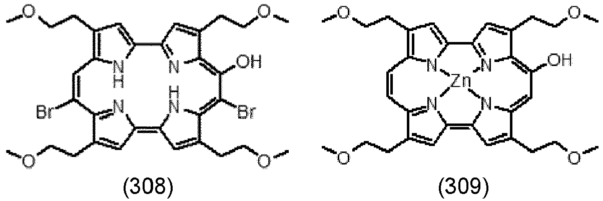

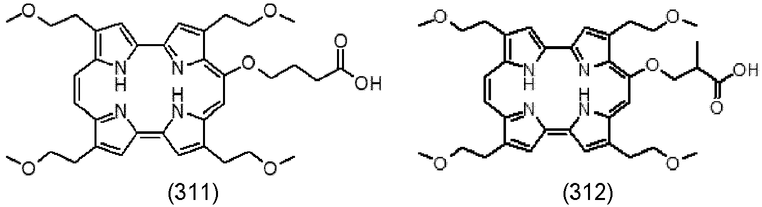

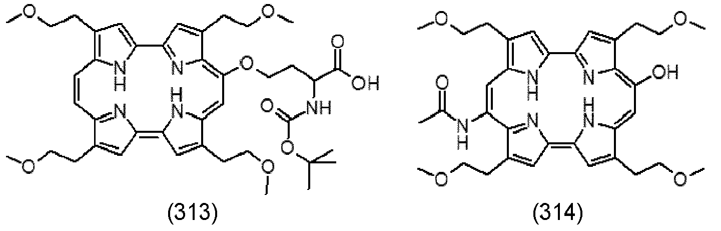

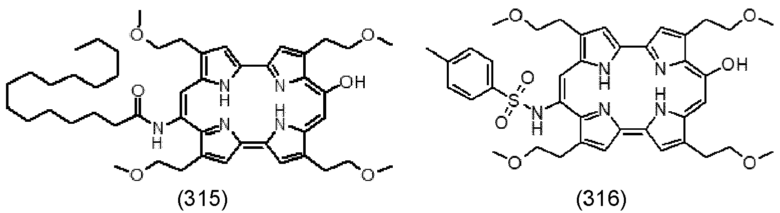

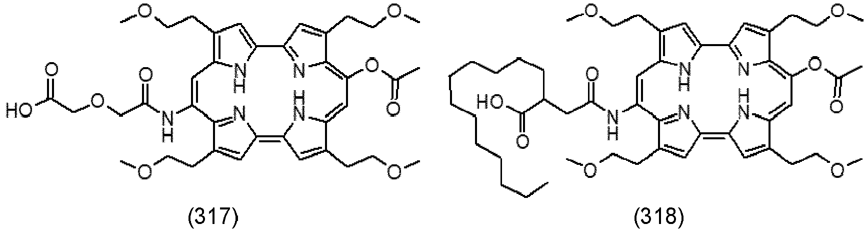

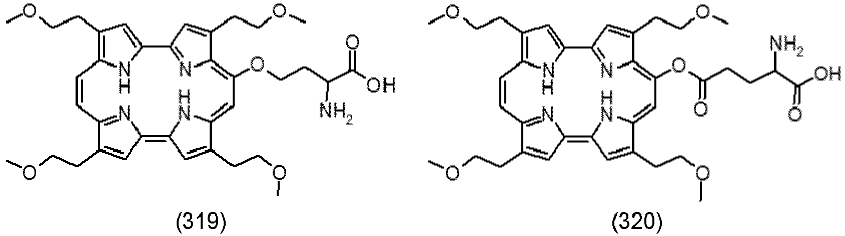

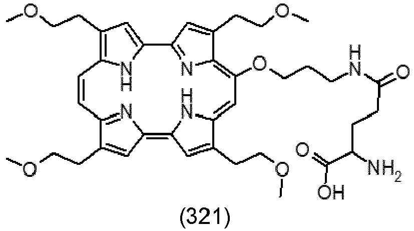

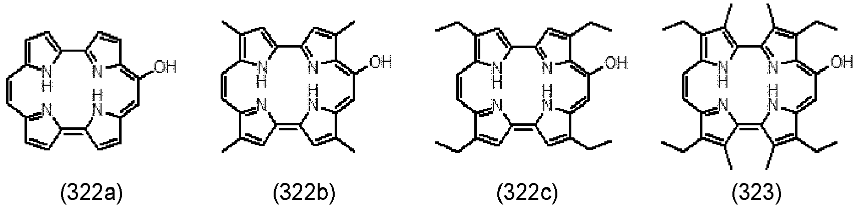

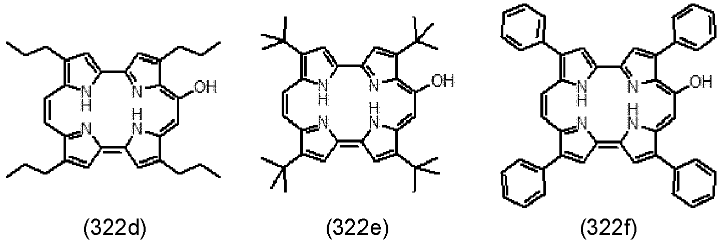

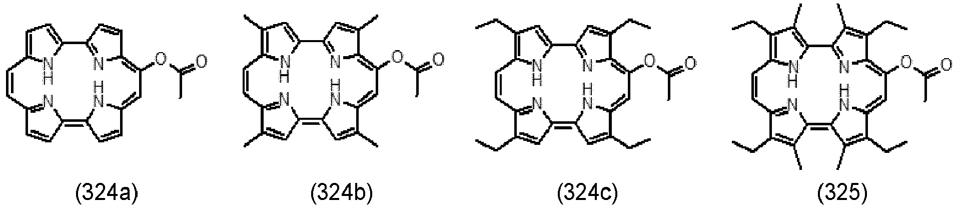

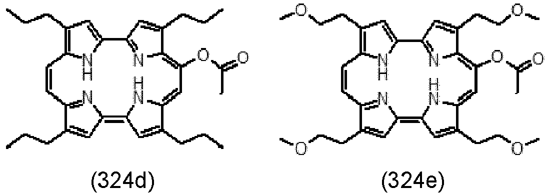

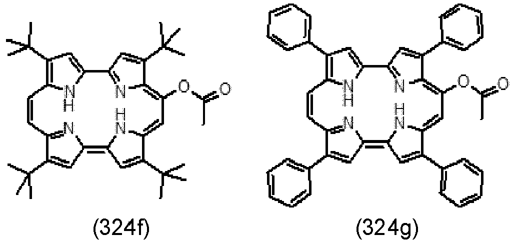

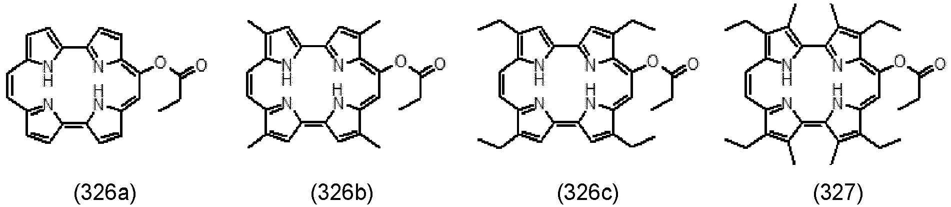

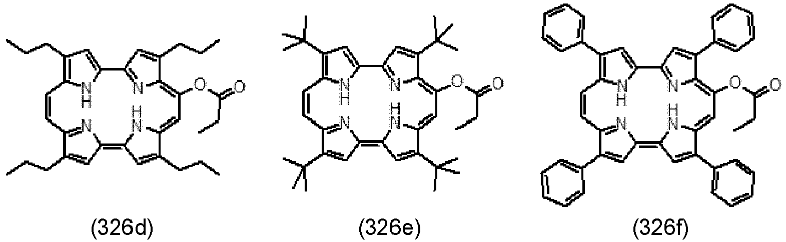

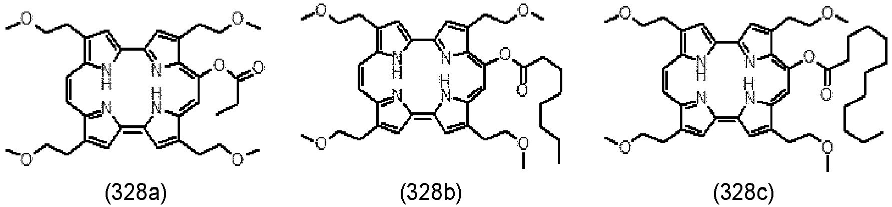

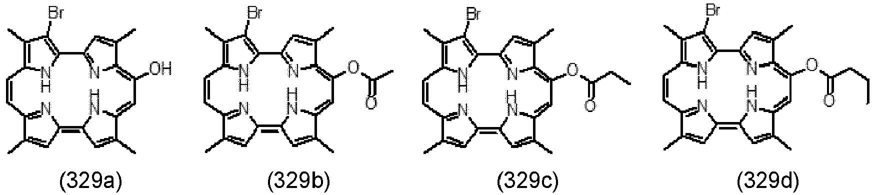

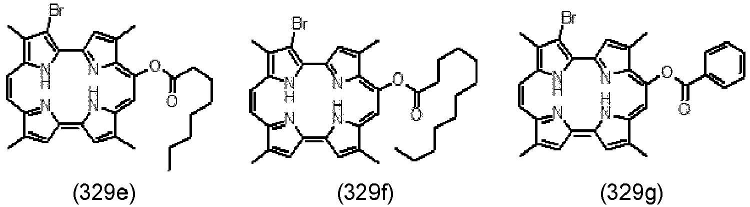

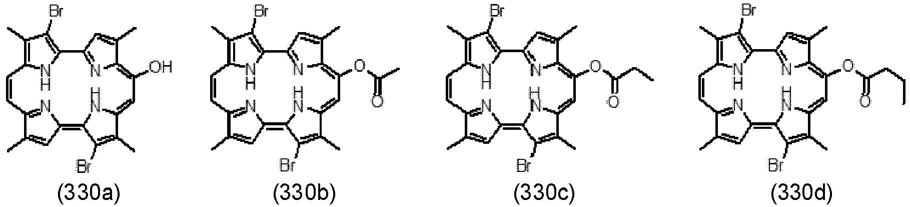

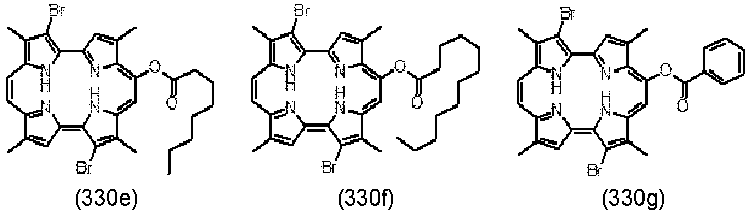

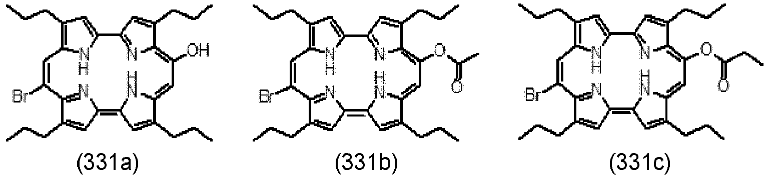

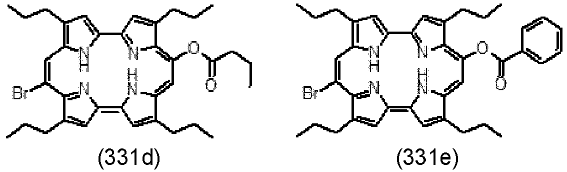

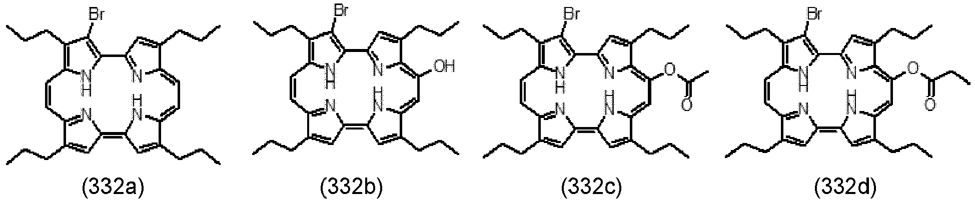

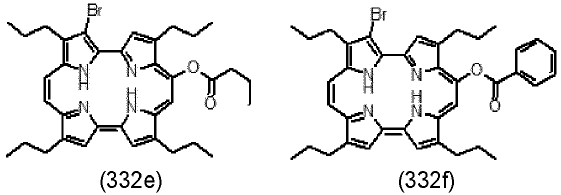

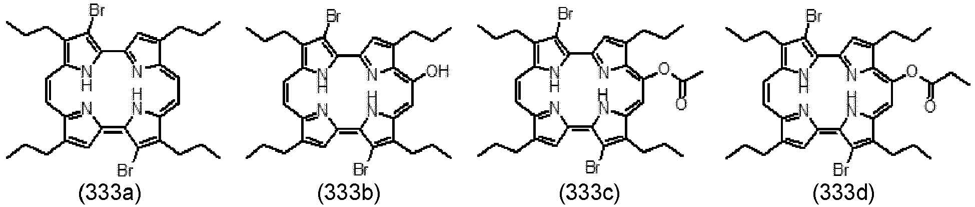

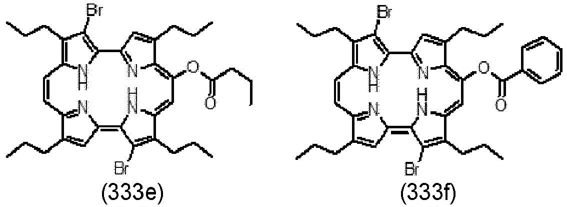

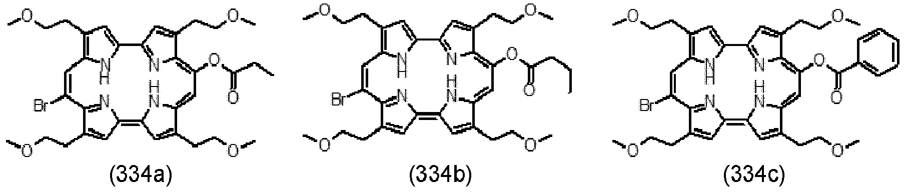

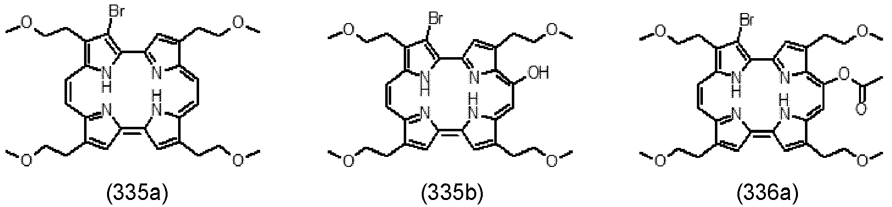

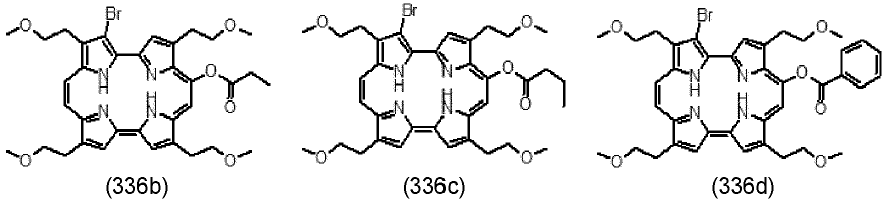

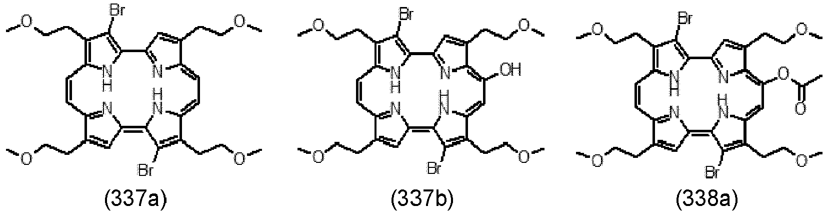

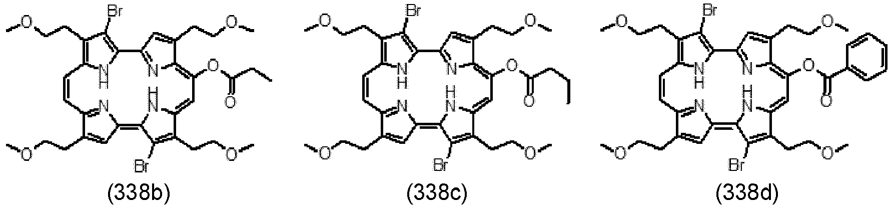

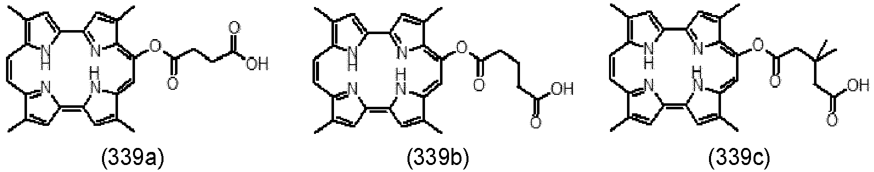

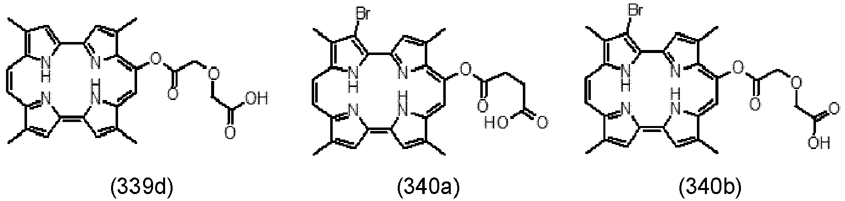

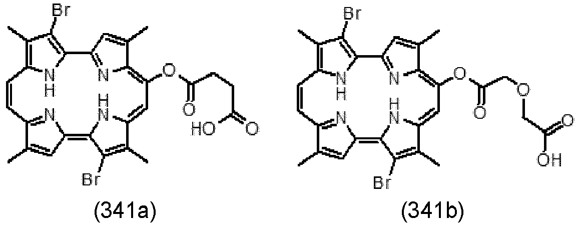

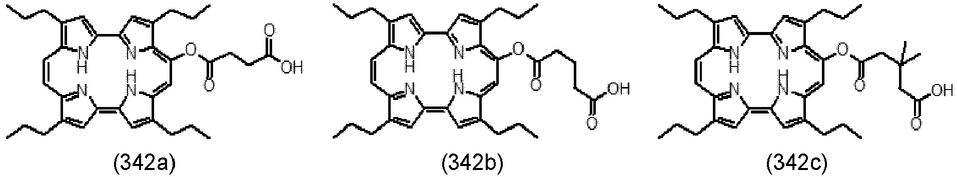

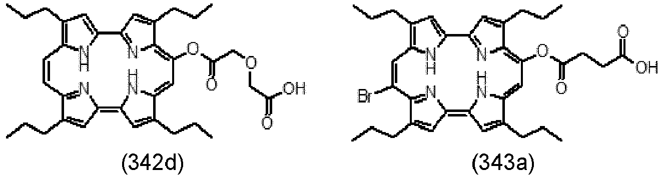

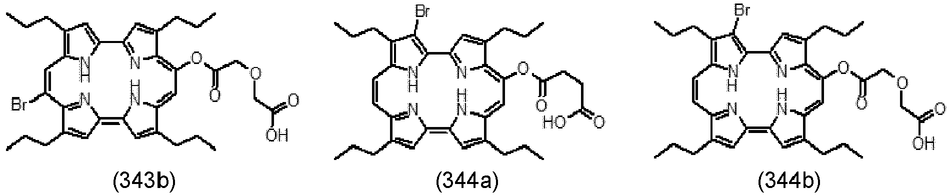

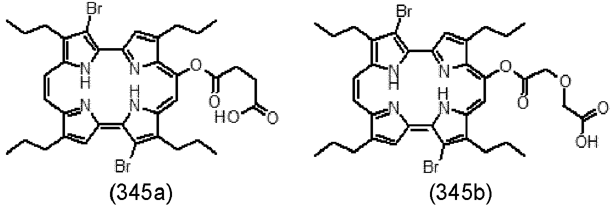

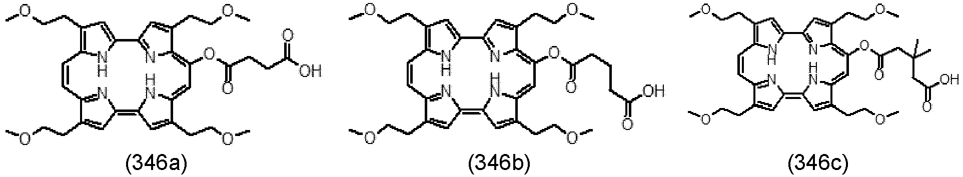

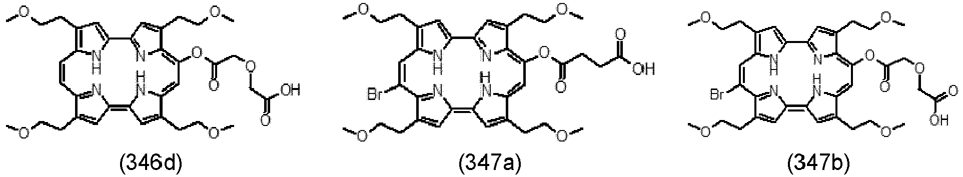

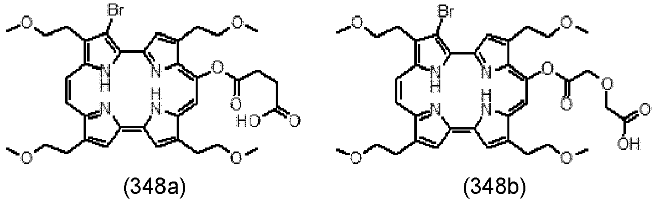

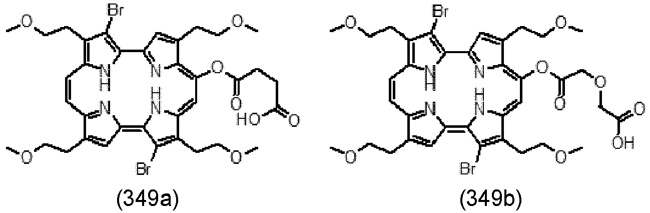

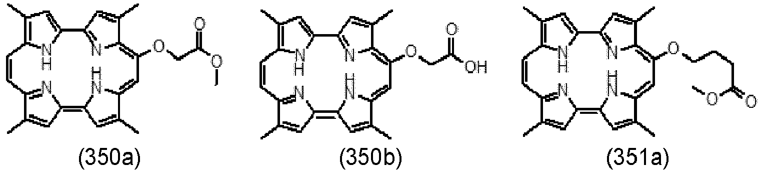

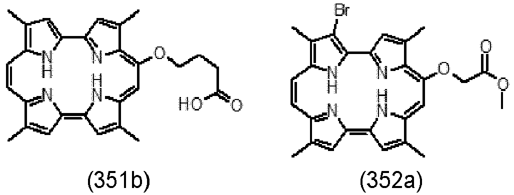

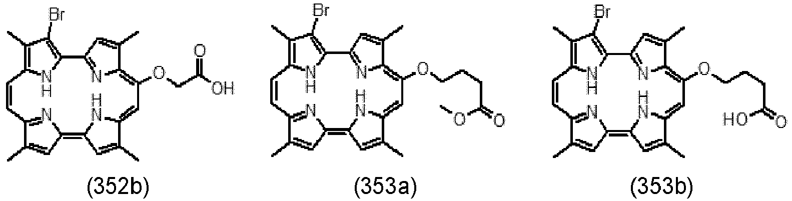

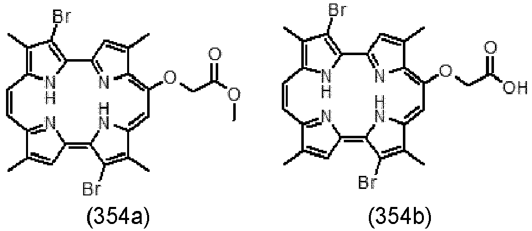

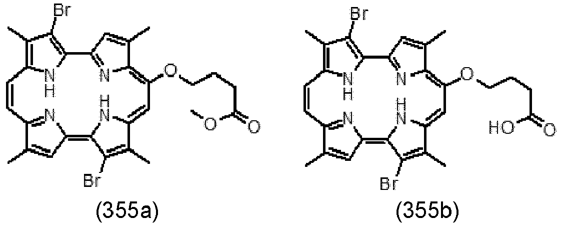

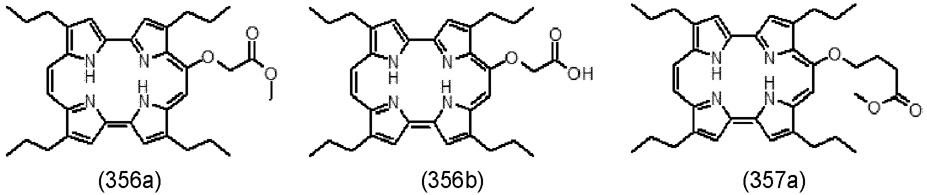

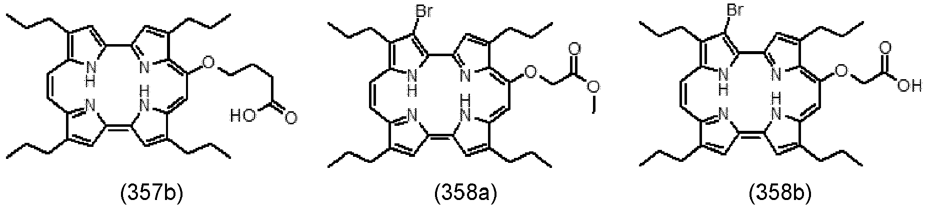

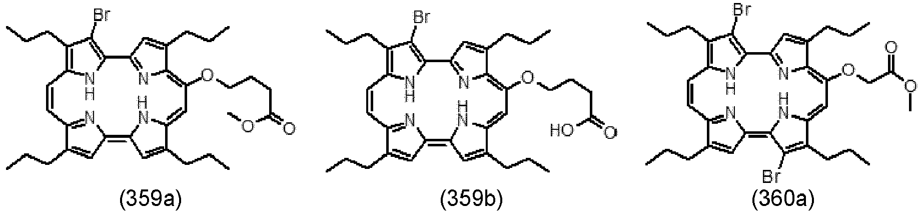

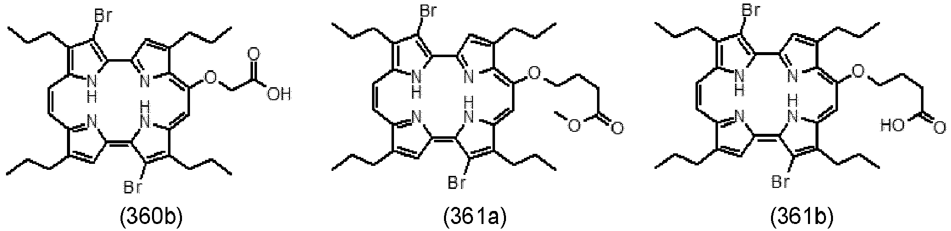

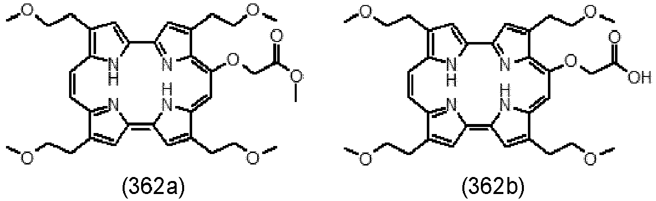

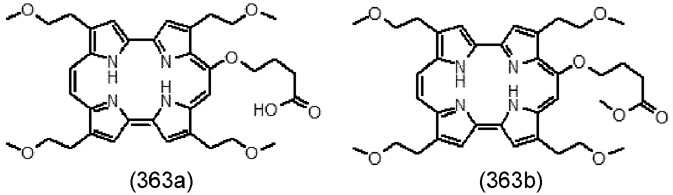

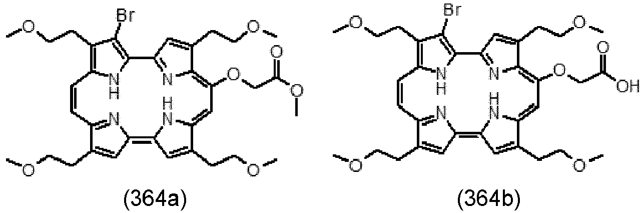

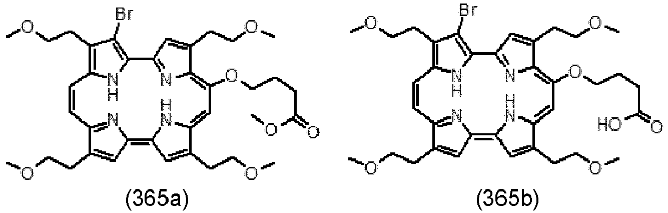

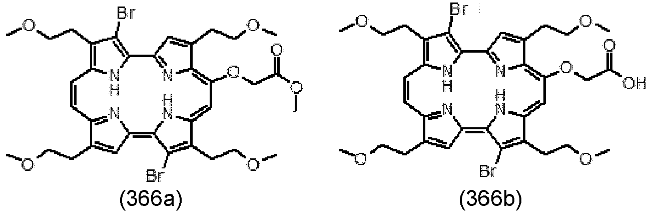

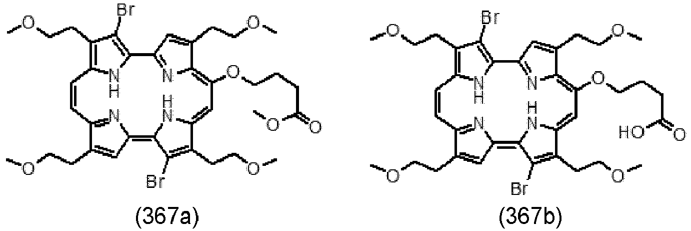

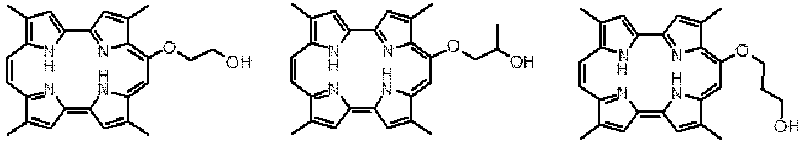

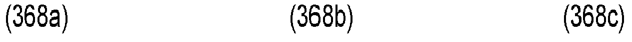

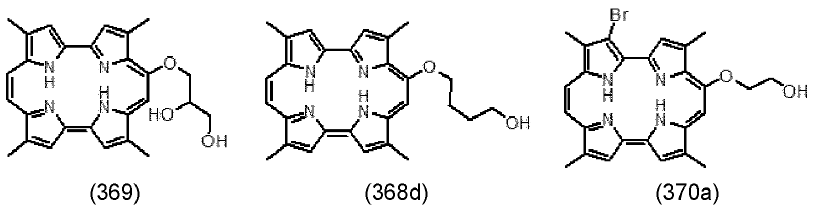

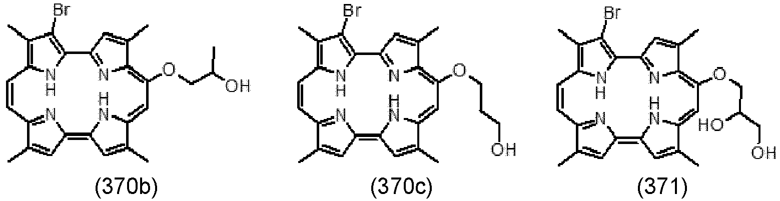

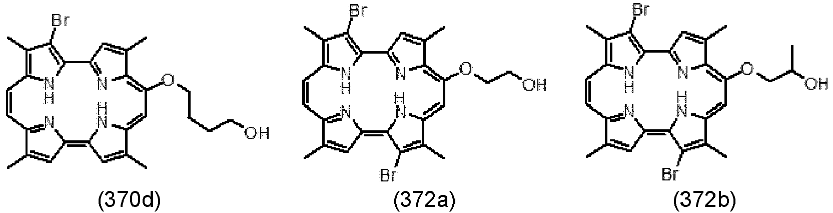

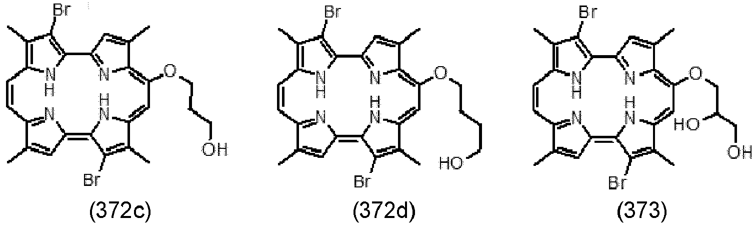

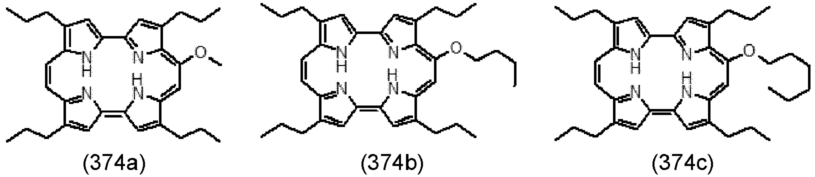

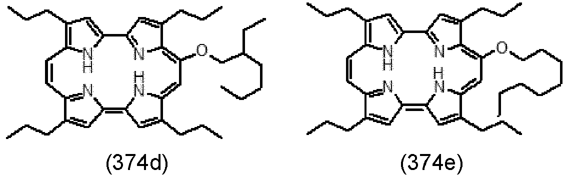

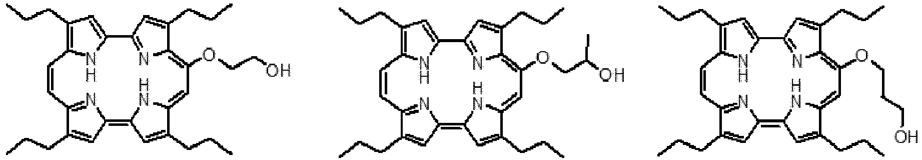

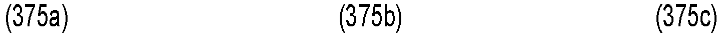

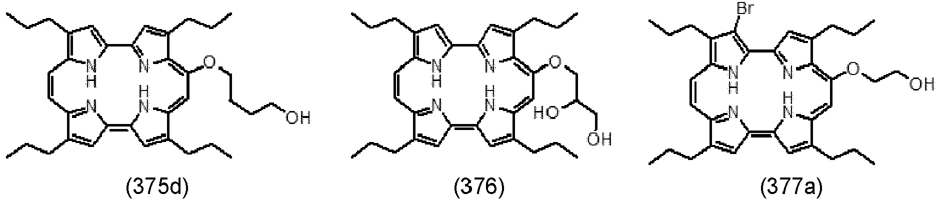

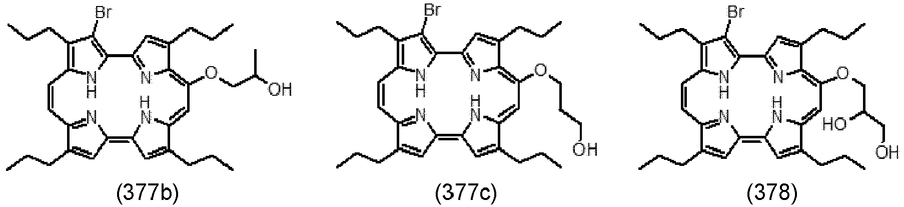

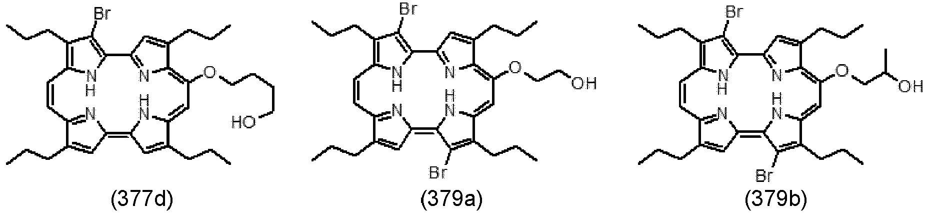

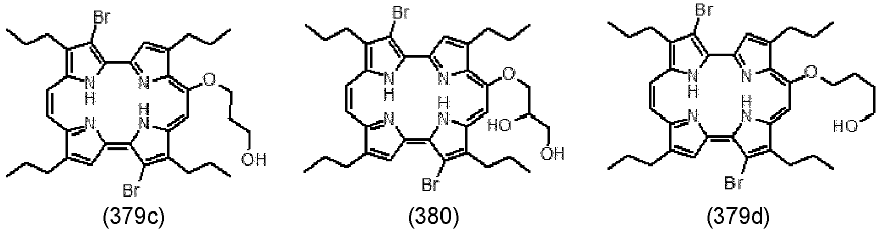

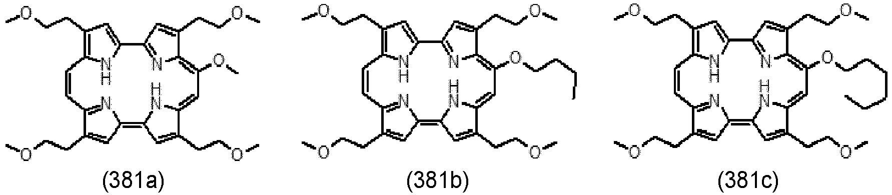

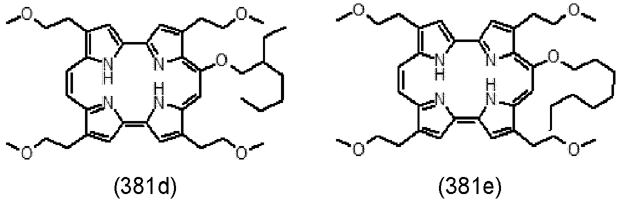

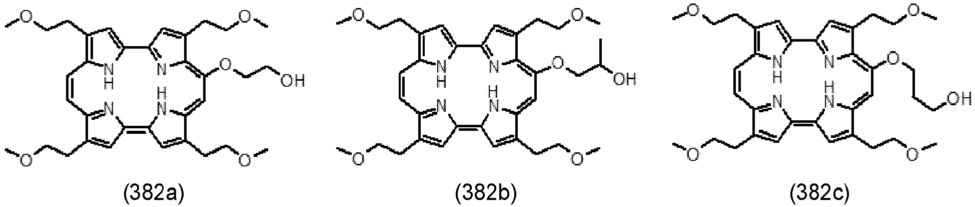

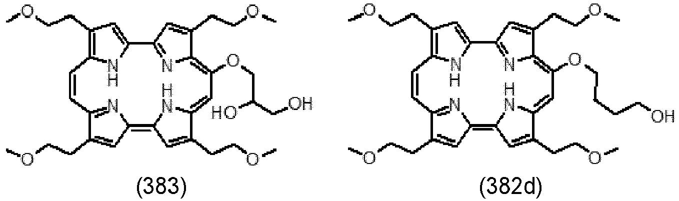

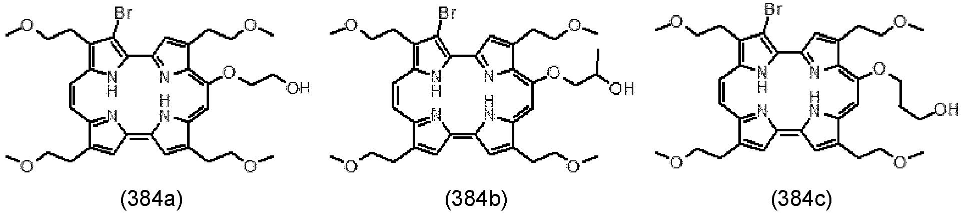

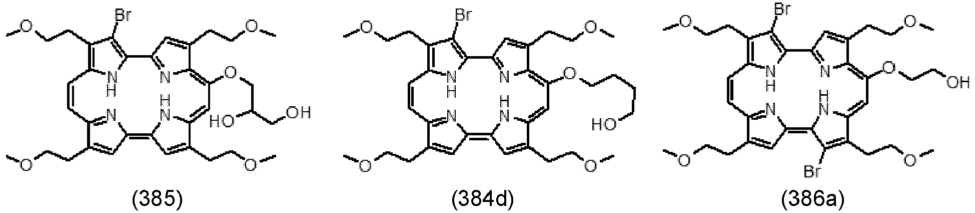

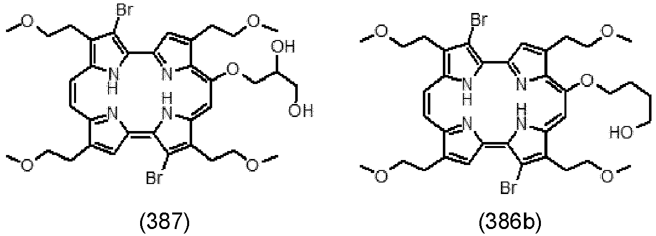

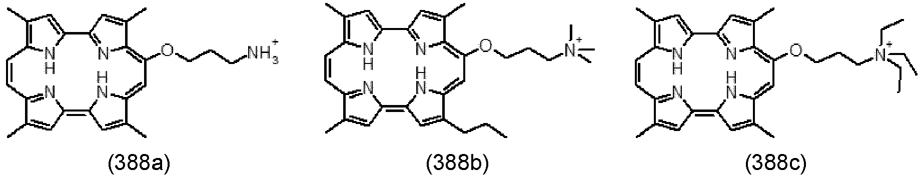

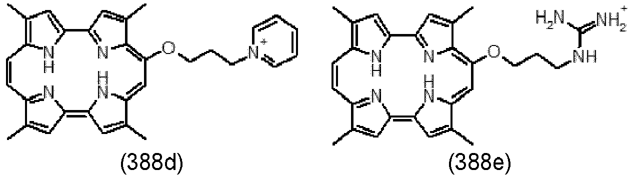

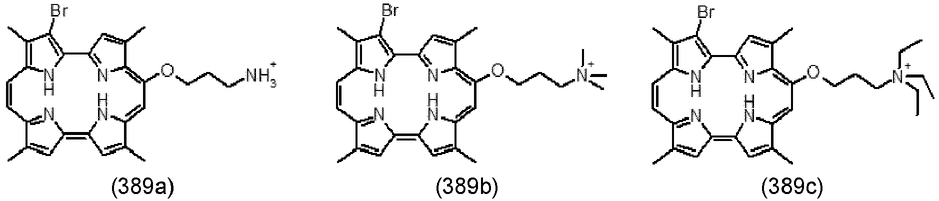

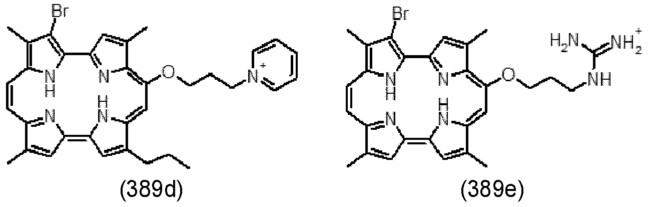

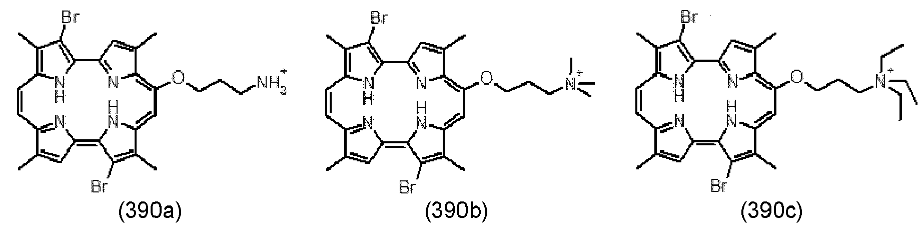

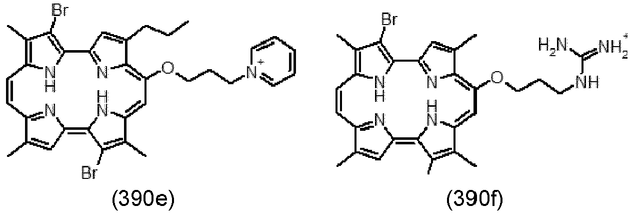

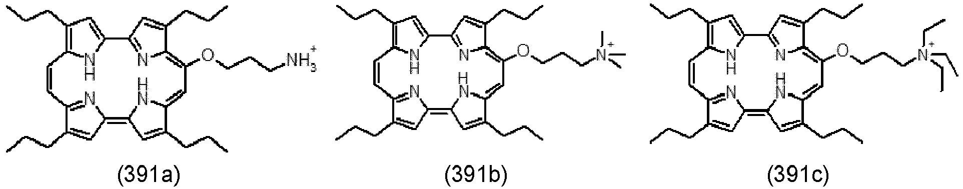

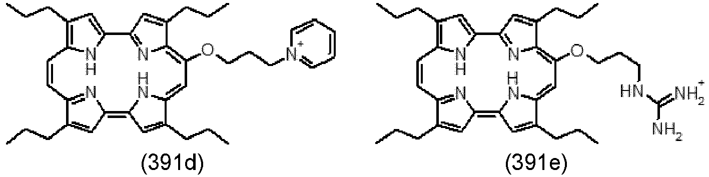

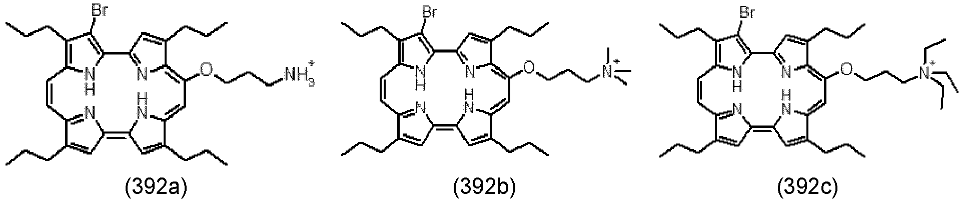

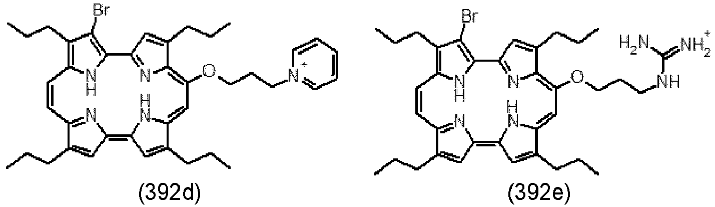

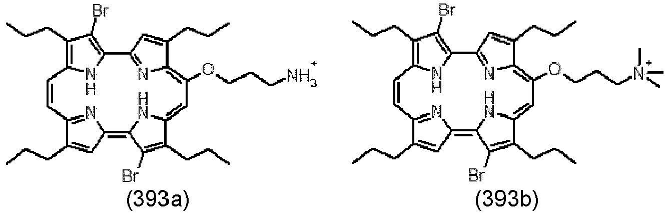

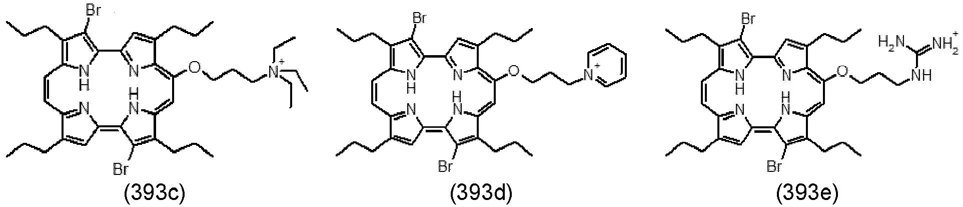

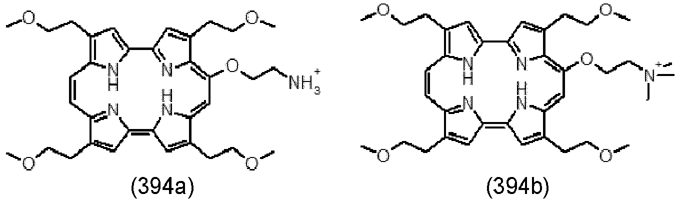

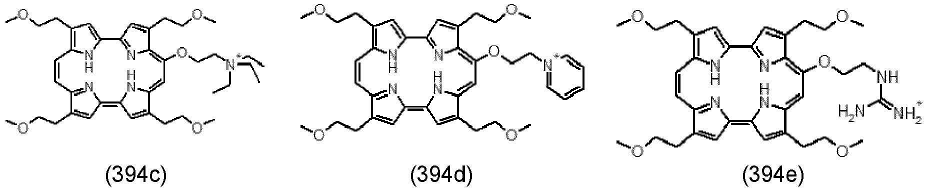

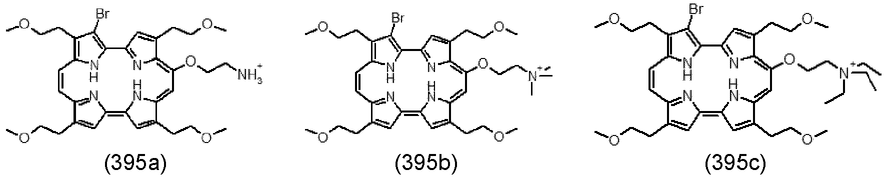

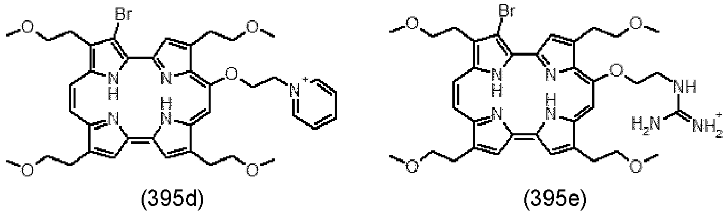

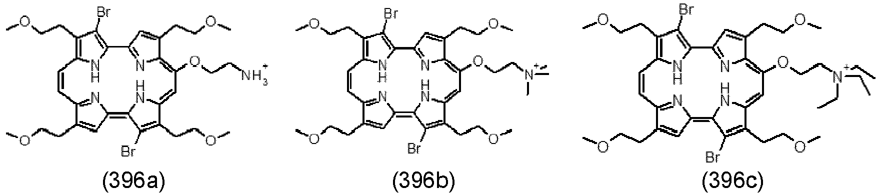

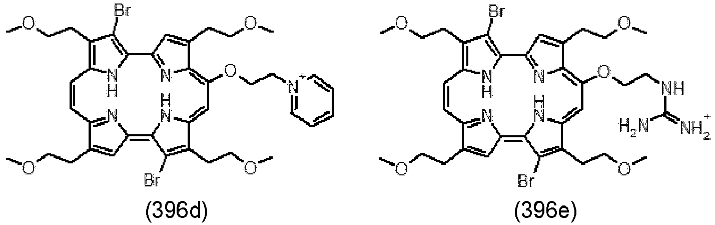

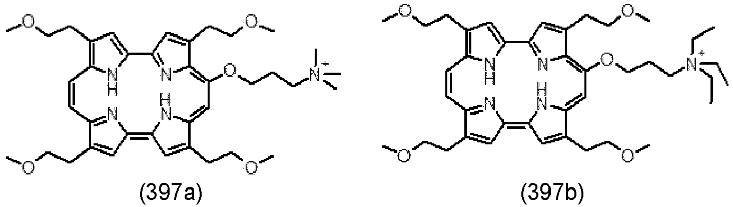

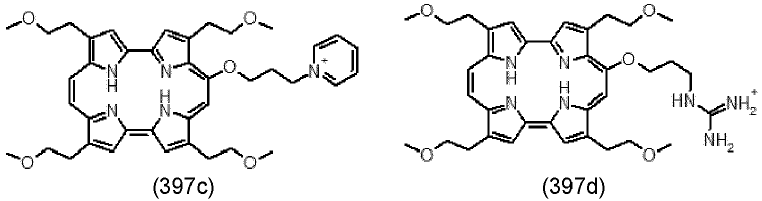

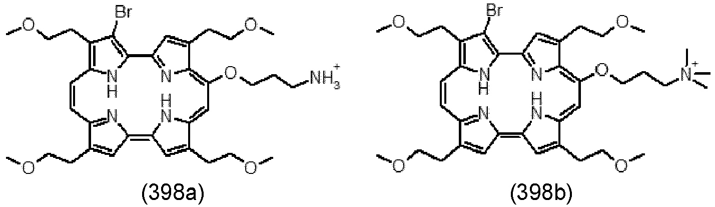

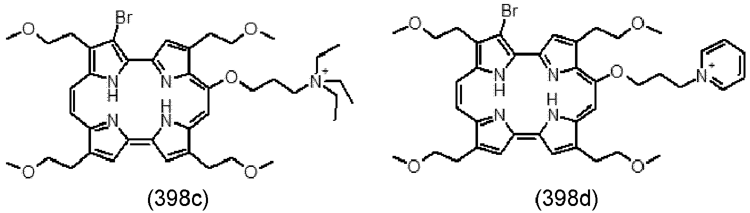

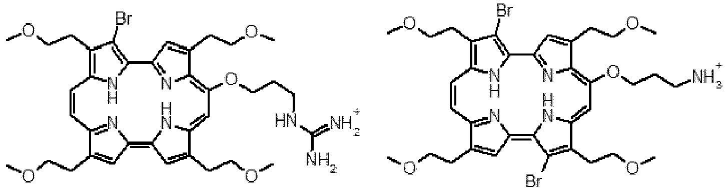

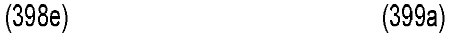

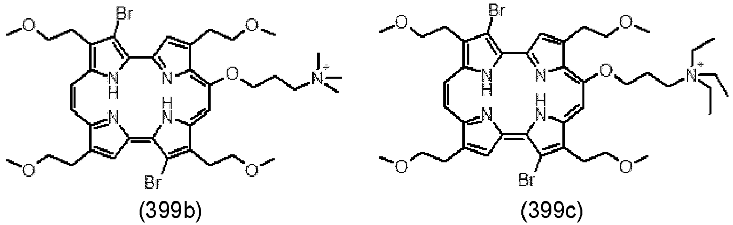

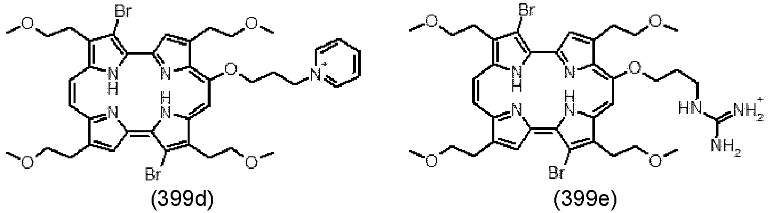

Weiter bevorzugt ist ein in der erfindungsgemäßen photokatalytisch-aktiven Beschichtungs-Zusammensetzung verwendetes wenigstens eine substituierte Porphycen-Derivat ein erfindungsgemäßes Porphycen-Derivat der allgemeine Formel (3): 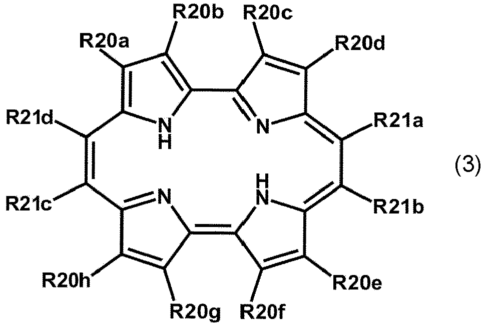
wobei die Reste R20a, R20b, R20c, R20d, R20e, R20f, R20g, und R20h, die jeweils unabhängig voneinander gleich oder voneinander verschieden sein können, jeweils Wasserstoff, Halogen, vorzugsweise Chlor, Brom, oder lod, Alkyl, das gradkettig oder verzweigt sein kann, mit 1 bis 4 C-Atomen, vorzugsweise Methyl, Ethyl, n-Propyl oder iso-Propyl, die jeweils unsubstituiert oder mit einem oder mehrerer Reste, die aus der Gruppe, die aus Hydroxy, Chlor, Brom, Fluor, und Kombinationen davon, besteht, ausgewählt werden, substituiert sein können, Alkoxy, das gradkettig oder verzweigt sein kann, mit 1 bis 4 C-Atomen, vorzugsweise Methoxy oder Ethoxy, die jeweils unsubstituiert oder mit einem oder mehrerer Reste, die aus der Gruppe, die aus Hydroxy, Chlor, Brom, Fluor, und Kombinationen davon, besteht, ausgewählt werden, substituiert sein können, Alkylalkyloxy, das gradkettig oder verzweigt sein kann, mit 2 bis 8 C-Atomen, vorzugsweise Methylmethoxy, Methylethoxy, Ethylmethoxy, oder Ethylethoxy, die jeweils unsubstituiert oder mit einem oder mehrerer Reste, die aus der Gruppe, die aus Hydroxy, Chlor, Brom, und Kombinationen davon, besteht, ausgewählt werden, substituiert sein können, Alkylcarboxylester, das gradkettig oder verzweigt sein kann, mit 2 bis 8 C-Atomen, vorzugsweise Methylacetat, Ethyl-2-acetat, Propyl-3-acetat, Methylpropionat, Ethyl-2-proponat, Propyl-3-butyrat, Methylbutyrat, Ethyl-2-butyrat, oder Propyl-3-butyrat, Aryl mit 6 bis 10 Kohlenstoffatomen, vorzugsweise Phenyl oder Benzyl, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, oder Aryloxy mit 6 bis 10 Kohlenstoffatomen, vorzugsweise Phenoxy oder Benzyloxy, die jeweils unsubstituiert oder mit einem oder mehrerer Reste, die aus der Gruppe, die aus Hydroxy, Chlor, Brom, Fluor, Methyl, Ethyl, n-Propyl, iso-Propyl, Methoxy, Ethoxy, und Kombinationen davon, besteht, ausgewählt werden, substituiert sein können, bedeuten,
wobei die Reste R21a, R21b, R21c, und R21d, die jeweils unabhängig voneinander gleich oder voneinander verschieden sein können, jeweils Wasserstoff, Nitro, Halogen, vorzugsweise Chlor, Brom, oder lod, Alkyl, das gradkettig oder verzweigt sein kann, mit 1 bis 4 C-Atomen, vorzugsweise Methyl, Ethyl, n-Propyl oder iso-Propyl, *-O-Alkyl, das gradkettig oder verzweigt sein kann, mit 1 bis 4 C-Atomen, vorzugsweise Methoxy oder Ethoxy, * - NH - S(=O)₂ - Aryl mit 5 bis 15 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, * - NH - C(=O) - Alkyl mit 1 bis 15 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, Aryloxy mit 5 bis 10 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, Alkylaryl mit 6 bis 10 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, *-O-Alkylaryl mit 6 bis 10 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, oder einen organischen Rest W1 bedeuten, mit der Maßgabe, dass wenigstens einer der Reste R21a, R21b, R21c, oder R21d ein organischer Rest W1 bedeutet
wobei der organische Rest W1 jeweils unabhängig voneinander ein Rest mit der allgemeinen Formel (22b), (23b), oder (24b) bedeutet:

   * - Q - [(C(D)(E))_{b} - A]ₐ - (C(D)(E))ₘ - X (22b)

   * - Q - (C(D)(E))_{d} - Ar - [B - (C(D)(E)_{b}]ₐ - (C(D)(E))ₙ - X (23b)

   * - Q - [(C(D)(E))_{b} - A]_{c} - (C(D)(E))_{g} - Ar - (C(D)(E))ₙ - X (24b)
wobei Rest Q jeweils unabhängig voneinander Sauerstoff, ein Rest der allgemeinen Formel * - C(=O)O - *, oder ein Rest der allgemeinen Formel * - OC(=O) - *, vorzugsweise Sauerstoff, bedeutet, und
wobei die Reste A, und B jeweils unabhängig voneinander Sauerstoff, ein Rest der allgemeinen Formel * - C(=O) - *, ein Rest der Formel * - C(=O)O - *, ein Rest der Formel * - OC(=O) - *, oder ein Rest mit der allgemeinen Formel (12) bis (14): 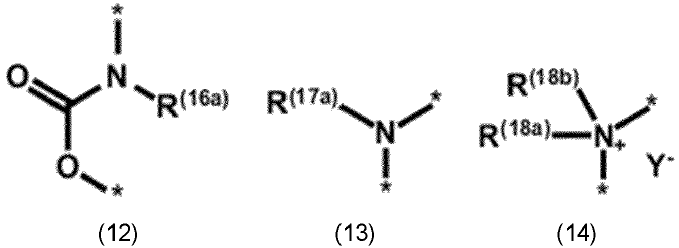 bedeutet, und
wobei die Reste R^{(16a)}, R^{(17a)}, R^{(18a)} und jeweils unabhängig voneinander Wasserstoff, Alkyl-Rest, der geradkettig oder verzweigt ist, mit 1 bis 5 Kohlenstoffatomen, vorzugsweise Methyl, Ethyl, n-Propyl, iso-Propyl, n-Butyl, sec-Butyl, iso-Butyl, oder n-Pentyl, der unsubstituiert oder mit einem oder mehrerer Reste, die jeweils unabhängig voneinander Chlor, Brom, Fluor, *- OH, *- Si(OR^{(VIII)})_{[3 - p]}(R^{(IX)})ₚ, oder *- O - Si(OR^{(VIII)})_{[3 - p]}(R^{(IX)})ₚ, bedeuten, substituiert ist, Phenyl oder Benzyl bedeuten, und wobei Phenyl und Benzyl, jeweils unabhängig voneinander, unsubstituiert oder mit einem oder mehrerer Reste, die aus der Gruppe, die aus Halogen, *- OH, *- C(=O)OH, *- S(=O)₂OH, *- B(OH)₂, *- Si(OR^{(VIII)})_{[3 - p]}(R^{(IX)})ₚ, Alkyl-Rest, der gradkettig oder verzweigt ist, mit 1 bis 4 Kohlenstoffatomen, oder *- O - Si(OR^{(VIII)}) _{[3 - p]}(R^{(IX)})ₚ besteht, ausgewählt ist, substituiert ist, und
wobei die Reste D und E jeweils unabhängig voneinander Wasserstoff, *- OH, *- O - Si(OR^{(VIII)})_{[3 - p]}(R^{(IX)})ₚ, Halogen, Alkyl, das gradkettig oder verzweigt sein kann, mit 1 bis 15 Kohlenstoffatomen, Alkoxy, das gradkettig oder verzweigt sein kann, mit 1 bis 15 Kohlenstoffatomen, Aryloxy mit 6 bis 10 Kohlenstoffatomen, vorzugsweise Phenoxy oder Benzyloxy, Hydroxylalkyl, das gradkettig oder verzweigt sein kann, mit 1 bis 5 Kohlenstoffatomen und 1 bis 5 OH-Gruppen, Halogenalkyl, das gradkettig oder verzweigt sein kann, mit 1 bis 5 Kohlenstoffatomen und 1 bis 5 Halogen-Gruppen, Phenyl, oder Benzyl, wobei Phenyl und Benzyl jeweils unabhängig voneinander unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sind, bedeuten,
wobei der Index a jeweils unabhängig voneinander eine ganze Zahl von 1 bis 5, vorzugsweise von 1 bis 4, vorzugsweise 1 bis 2, bedeutet, und
wobei der Index b jeweils unabhängig voneinander eine ganze Zahl von 1 bis 4, vorzugsweise von 2 bis 3, weiter bevorzugt 2, bedeuten, und
wobei der Index c jeweils unabhängig voneinander eine ganze Zahl von 0 bis 5, vorzugsweise von 0 bis 4, vorzugsweise 1 bis 3, bedeutet, und
wobei die Index d jeweils unabhängig voneinander eine ganze Zahl von 1 bis 18, vorzugsweise 1 bis 15, vorzugsweise von 1 bis 4, vorzugsweise 1 bis 3, bedeuten, und
wobei die Index m jeweils unabhängig voneinander eine ganze Zahl von 1 bis 18, vorzugsweise 1 bis 15, vorzugsweise von 2 bis 4, bedeuten, und
wobei die Indices g, und n jeweils unabhängig voneinander eine ganze Zahl von 0 bis 18, vorzugsweise 0 bis 15, vorzugsweise von 2 bis 4, bedeuten, und
wobei der Index p jeweils unabhängig voneinander eine ganze Zahl von 1 bis 3 bedeutet, und
wobei der Rest X jeweils unabhängig voneinander *- NH(R^{(I)}), *- OH, *- C(=O)OH, *- S(=O)₂OH, *- B(OH)₂, *- Si(OR^{(VIII)})_{3 - p}(R^{(IX)})ₚ, *- O - Si(OR^{(VIII)})_{3 - p}(R^{(IX)})ₚ, oder ein Rest mit der allgemeinen Formel (15) oder (16): 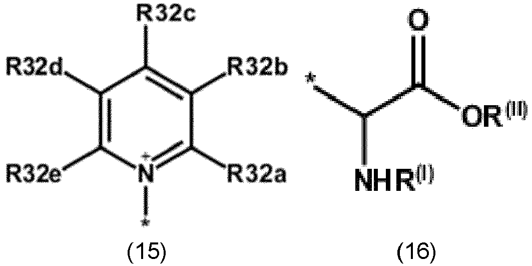
wobei die Reste R32a bis R32e jeweils unabhängig voneinander, Wasserstoff, Alkyl, das gradkettig oder verzweigt sein kann, mit 1 bis 4 Kohlenstoffatomen, oder Alkenyl, das gradkettig oder verzweigt sein kann, mit 2 bis 4 Kohlenstoffatomen, bedeuten, und
wobei der Rest Ar ein Rest der allgemeinen Formel (25a) bis (31), weiter bevorzugt ein Rest der allgemeinen Formel (25a) bis (28b), bedeutet: 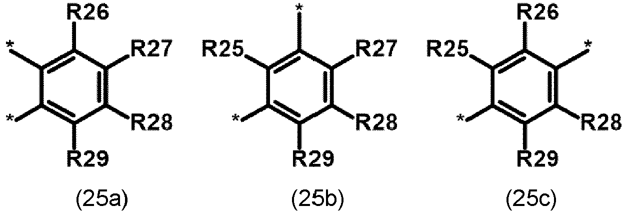 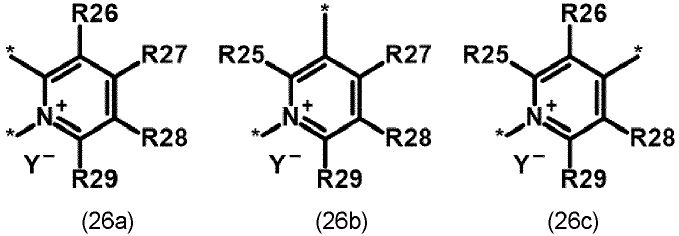 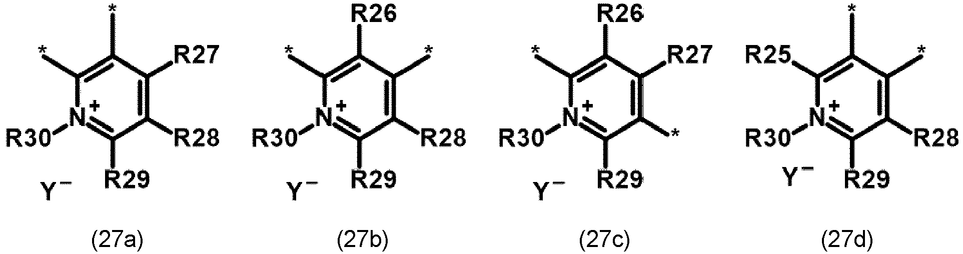 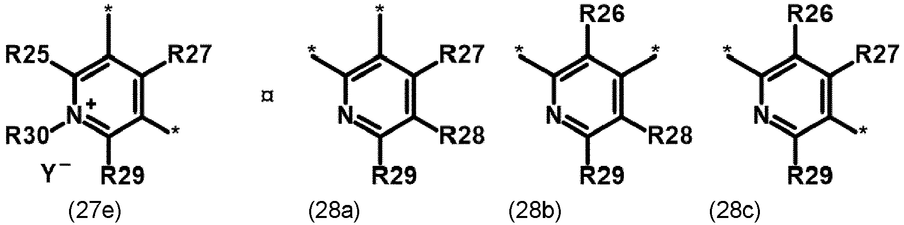 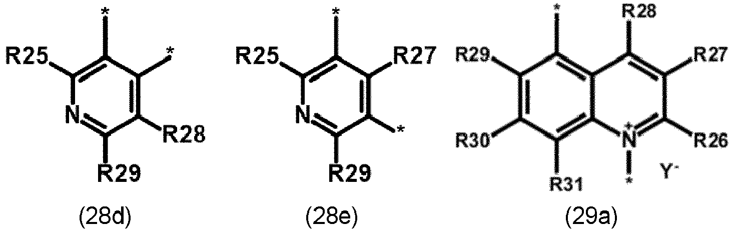 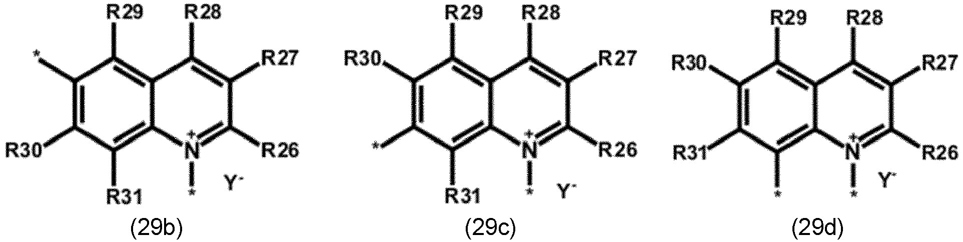 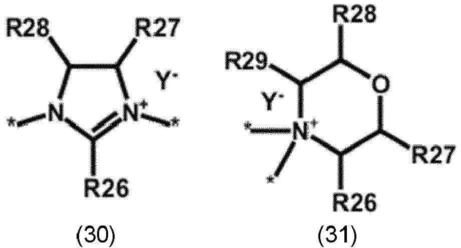
wobei die Reste R26, R27, R28, R29, R30, und R31 jeweils unabhängig voneinander Wasserstoff, Alkyl-Rest, der geradkettig oder verzweigt ist, mit 1 bis 5 Kohlenstoffatomen, vorzugsweise Methyl, Ethyl, n-Propyl, iso-Propyl, n-Butyl, sec-Butyl, iso-Butyl, oder n-Pentyl, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)}) _{[ 3- p]}(R^{(IX)})ₚ, oder *- O - Si(OR^{(VIII)}) _{[3 - p]}(R^{(IX)})ₚ, bedeuten, substituiert ist, Phenyl oder Benzyl bedeuten, und wobei Phenyl und Benzyl, jeweils unabhängig voneinander, unsubstituiert oder mit einem oder mehrerer Reste, die aus der Gruppe, die aus Halogen, *- OH, *- C(=O)OH, *- S(=O)₂OH, *- B(OH)₂, *- Si(OR^{(VIII)}) _{[3 - p]}(R^{(IX)})ₚ, Alkyl-Rest, der gradkettig oder verzweigt ist, mit 1 bis 4 Kohlenstoffatomen, vorzugsweise Methyl, Ethyl, n-Propyl, oder iso-Propyl, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})ₚ, oder *- O - Si(OR^{(VIII)})_{[3-p]}(R^{(IX)})ₚ, bedeuten, substituiert ist, *- O - Alkyl-Rest, der gradkettig oder verzweigt ist, mit 1 bis 4 Kohlenstoffatomen, vorzugsweise Methoxy, Ethoxy, n-Propoxy, oder iso-Propoxy, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})ₚ, oder *- O - Si(OR^{(VIII)})_{[3 - p]}(R^{(IX)})ₚ, bedeuten, substituiert ist, Carboxyalkyl-Rest, der gradkettig oder verzweigt ist, mit 2 bis 4 Kohlenstoffatomen, vorzugsweise Carboxymethyl, Carboxyethyl, Carboxy-n-propyl, oder Carboxy-iso-propyl, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})ₚ, oder *- O - Si(OR^{(VIII)})_{[3 - p]}(R^{(IX)})ₚ, bedeuten, substituiert ist, oder Alkenyl-Rest der gradkettig oder verzweigt ist, mit 2 bis 3 C-Atomen, vorzugasweise Vinyl oder Allyl, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})ₚ, oder *- O - Si(OR^{(VIII)})_{[3 - p]}(R^{(IX)})ₚ, bedeuten, substituiert ist, und
wobei die Reste R^{(I)}, R^{(II)}, R^{(VIII)} und R^{(IX)}, jeweils unabhängig voneinander, Alkyl, das gradkettig oder verzweigt sein kann, mit 1 bis 4 Kohlenstoffatomen, oder Alkenyl, das gradkettig oder verzweigt sein kann, mit 2 bis 4 Kohlenstoffatomen,
und wobei Y- ein Anion ist, das jeweils unabhängig voneinander Fluorid, Chlorid, Bromid, lodid, Sulfat, Hydrogensulfat, Phosphat, Hydrogenphosphat, Dihydrogenphosphat, wenigstens ein Carboxylat-Anion einer Carbonsäure mit 1 bis 15 Kohlenstoffatomen, wenigstens ein Sulfonat-Anion einer Sulfonsäure mit 1 bis 12 C-Atomen oder eine Kombination davon bedeutet, und
wobei das substituierte Porphycen-Derivat der allgemeinen Formel (3) höchstens zwei neutrale protonierbare Stickstoffatome, oder zwei permanent positiv geladene Stickstoffatome oder zwei Säuregruppen aufweist, vorzugsweise höchstens zwei Reste, die ausgewählt sind aus *- NH(R^{(I)}), *- C(=O)OH, *- S(=O)₂OH, *- B(OH)₂, einem Rest der allgemeinen Formel (13) bis (16), (26a) bis (31) oder Kombinationen davon.

Vorzugsweise können die Reste *- C(=O)OH, *- S(=O)₂OH, und B(OH)₂ auch deprotoniert vorliegen, vorzugsweise als Carboxylat-Anion, Sulfat-Anion, und Borat-Anion, in Gegenwart vorzugsweise eines entsprechendes Gegenions in Form eines Alkalimetall-Kations, weiter bevorzugt Natrium-Kations oder Kalium-Kations.

Weiter bevorzugt sind die Reste R20a, R20d, R20h, und R20e sowie die Reste R20b, R20c, R20g, und R20f jeweils gleich und werden jeweils ausgewählt aus Wasserstoff, Halogen, vorzugsweise Chlor, Brom, oder lod, Alkyl, das gradkettig oder verzweigt sein kann, mit 1 bis 4 C-Atomen, vorzugsweise Methyl, Ethyl, n-Propyl oder iso-Propyl, die jeweils unsubstituiert oder mit einem oder mehrerer Reste, die aus der Gruppe, die aus Hydroxy, Chlor, Brom, Fluor, und Kombinationen davon, besteht, ausgewählt werden, substituiert sein können, Alkoxy, das gradkettig oder verzweigt sein kann, mit 1 bis 4 C-Atomen, vorzugsweise Methoxy oder Ethoxy, die jeweils unsubstituiert oder mit einem oder mehrerer Reste, die aus der Gruppe, die aus Hydroxy, Chlor, Brom, Fluor, und Kombinationen davon, besteht, ausgewählt werden, substituiert sein können, Alkylalkyloxy, das gradkettig oder verzweigt sein kann, mit 2 bis 8 C-Atomen, vorzugsweise Methylmethoxy, Methylethoxy, Ethylmethoxy, oder Ethylethoxy, die jeweils unsubstituiert oder mit einem oder mehrerer Reste, die aus der Gruppe, die aus Hydroxy, Chlor, Brom, und Kombinationen davon, besteht, ausgewählt werden, substituiert sein können, Alkylcarboxylester, das gradkettig oder verzweigt sein kann, mit 2 bis 8 C-Atomen, vorzugsweise Methylacetat, Ethyl-2-acetat, Propyl-3-acetat, Methylpropionat, Ethyl-2-proponat, Propyl-3-butyrat, Methylbutyrat, Ethyl-2-butyrat, oder Propyl-3-butyrat, Aryl mit 6 bis 10 Kohlenstoffatomen, vorzugsweise Phenyl oder Benzyl, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, oder Aryloxy mit 6 bis 10 Kohlenstoffatomen, vorzugsweise Phenoxy oder Benzyloxy, die jeweils unsubstituiert oder mit einem oder mehrerer Reste, die aus der Gruppe, die aus Hydroxy, Chlor, Brom, Fluor, Methyl, Ethyl, n-Propyl, iso-Propyl, Methoxy, Ethoxy, und Kombinationen davon, besteht, ausgewählt werden, substituiert sein können.

Bei einer bevorzugten Ausführungsform umfasst eine erfindungsgemäße photokatalytisch-aktive Beschichtungs-Zusammensetzung ein substituiertes Porphycen-Derivat der allgemeinen Formel (3) gemäß Anspruch 8.

Eine erfindungsgemäße photokatalytisch-aktive Beschichtungs-Zusammensetzung umfasst weiterhin (iii.) wenigstens ein gradkettig oder verzweigtes Alkanol mit 1 bis 6 C-Atomen und wenigstens einer OH-Gruppe, vorzugsweise Ethanol, Isopropanol, n-Propanol, n-Butanol, Isobutanol, oder Mischungen davon, in einem Anteil von wenigstens 50 Gew.-%, vorzugsweise von wenigstens 65 Gew.-%, weiter bevorzugt von wenigstens 74 Gew.-%, weiter bevorzugt von wenigstens 82 Gew.-%, jeweils bezogen auf das Gesamtgewicht der Beschichtungs-Zusammensetzung.

Eine erfindungsgemäße photokatalytisch-aktive Beschichtungs-Zusammensetzung umfasst vorzugsweise weiterhin Wasser in einem Anteil von höchstens 15 Gew.-%, vorzugsweise höchstens 12 Gew.-%, weiter bevorzugt höchstens 10 Gew.-%, weiter bevorzugt höchstens 7 Gew.-%, jeweils bezogen auf das Gesamtgewicht der Beschichtungs-Zusammensetzung.

Die Erfinder haben festgestellt, dass durch Verwendung wenigstens eines gradkettig oder verzweigtes Alkanol mit 1 bis 6 C-Atomen und wenigstens einer OH-Gruppe, vorzugsweise von Ethanol, Isopropanol, n-Propanol, n-Butanol, Isobutanol, oder Mischungen davon, in einem Anteil von wenigstens 50 Gew.-%, vorzugsweise wenigstens 65 Gew.-%, weiter bevorzugt von wenigstens 74 Gew.-%, weiter bevorzugt von wenigstens 82 Gew.-%, und optional Wasser in einem Anteil von höchstens 15 Gew.-%, vorzugsweise höchstens 12 Gew.-%, weiter bevorzugt höchstens 10 Gew.-%, weiter bevorzugt höchstens 7 Gew.-%, jeweils bezogen auf das Gesamtgewicht der Beschichtungs-Zusammensetzung, eine stabile photokatalytisch-aktive Beschichtungs-Zusammensetzung bereitgestellt wird, die vorzugsweise eine ausreichende Homogenität aufweist, um weiter bevorzugt durch geeignete, dem Fachmann bekannte nasschemische Beschichtungsverfahren wie Tauch- und Rotationsbeschichtung sowie Rakeln, Walzen, Wischen oder Sprühen auf wenigstens einem Teilbereich wenigstens einer Oberfläche eines Gegenstandes oder eines Raumes, vorzugsweise gleichmäßig und in ausreichender Schichtdicke, weiter bevorzugt unter Verwendung des erfindungsgemäßen Verfahrens zur Herstellung einer photokatalytisch-aktiven Beschichtung, aufgebracht zu werden.

Weiterhin weist eine erfindungsgemäße photokatalytisch-aktiven Beschichtungs-Zusammensetzung eine ausreichende Lagerstabilität auf, um bevorzugt auch nach längerer Standzeit durch geeignete, dem Fachmann bekannte nasschemische Beschichtungsverfahren wie Tauch- und Rotationsbeschichtung sowie Rakeln, Walzen, Wischen oder Sprühen auf wenigstens einem Teilbereich wenigstens einer Oberfläche eines Gegenstandes oder eines Raumes, vorzugsweise gleichmäßig und in ausreichender Schichtdicke, weiter bevorzugt unter Verwendung des erfindungsgemäßen Verfahrens zur Herstellung einer photokatalytisch-aktiven Beschichtung, aufgebracht zu werden.

Eine erfindungsgemäße photokatalytisch-aktive Beschichtungs-Zusammensetzung weist vorzugsweise weiterhin geeignete Hilfsstoffe, wie beispielsweise Verlaufsadditive, wie beispielsweise Glycerolmonostearat (GMS), oder 1-Ethoxy-2-propanol, Dispergierhilfsmittel, wie beispielsweise Methylethylketon (MEK), Cosolventien, Farbstoffe, Mattierungsmittel, wie beispielsweise Kieselsäuren und Silikaten auch Wachse, Polyethylen, Polypropylen oder Copolymerisate, Vernetzungsmittel, wie beispielsweise Sulfonyldiphenol, oder Methylimidazol, und Mischungen davon, auf.

Eine erfindungsgemäße photokatalytisch-aktive Beschichtungs-Zusammensetzung weist weiter bevorzugt einen Feststoffgehalt von höchstens 20 Gew.-%, vorzugsweise höchstens 15 Gew.-%, weiter bevorzugt höchstens 10 Gew.-%, bezogen jeweils auf das Gesamtgewicht der Beschichtungs-Zusammensetzung, auf.

Die Erfinder haben festgestellt, dass ein Feststoffgehalt von höchstens 20 Gew.-%, vorzugsweise höchstens 15 Gew.-%, weiter bevorzugt höchstens 10 Gew.-%, bezogen jeweils auf das Gesamtgewicht der Beschichtungs-Zusammensetzung, die Lagerstabilität einer erfindungsgemäßen photokatalytisch-aktiven Beschichtungs-Zusammensetzung signifikant erhöht werden kann.

Vorzugsweise umfasst der Feststoff-Gehallt der erfindungsgemäßen photokatalytisch-aktiven Beschichtungs-Zusammensetzung die nicht-flüchtigen Bestandteile der Zusammensetzung, vorzugsweise das wenigstens eine nichtmetallische, anorganische Sol und/oder hybridpolymeres Sol, jeweils hergestellt aus der Umsetzung mindestens zweier Alkoxysilane und wenigstens einer Säure als Hydrolysekatalysator, vorzugsweise wenigstens ein hybridpolymeres Sol hergestellt aus der Umsetzung mindestens zweier Alkoxysilane und wenigstens einer Säure als Hydrolysekatalysator, den wenigstens einen organischen Photosensensibiliator, der aus der Gruppe, die aus substituierten Phenalen-1-on-Derivaten, substituierten Curcumin-Derivaten, substituierten Porphycen-Derivaten und Mischungen davon besteht, vorzugsweise substituierten Phenalen-1-on-Derivaten, substituierten Porphycen-Derivaten und Mischungen davon, weiter bevorzugt substituierten Phenalen-1-on-Derivaten, ausgewählt wird, sowie entsprechende bei Standardbedingungen (Druck: 1013 mbar, Temperatur: 25°C) feste Hilfsstoffe.

Eine erfindungsgemäße photokatalytisch-aktiven Beschichtungs-Zusammensetzung wird vorzugsweise durch folgendes Verfahren hergestellt, wobei das Verfahren folgende Schritte umfasst:
1.) Bereitstellen einer ersten Zusammensetzung umfassend
   1a) wenigstens ein gradkettig oder verzweigtes Alkanol mit 1 bis 6 C-Atomen und wenigstens einer OH-Gruppe in einem Anteil von 0 Gew.-% bis 50 Gew.-%, vorzugsweise von 5 Gew.-% bis 45 Gew.-%, vorzugsweise von 10 Gew.-% bis 40 Gew.-%, weiter bevorzugt von 15 Gew.-% bis 37 Gew.-%, weiter bevorzugt von 20 Gew.-% bis 35 Gew.-%, jeweils bezogen auf das Gesamtgewicht der ersten Zusammensetzung,
      1b) wenigstens ein Tetraalkoxysilan, das 4 unverzweigte oder verzweigte Alkoxy-Reste mit 1 bis 4 C-Atomen aufweist, vorzugsweise Tetramethoxysilan (TMOS), Tetraethoxysilan (TEOS) und Mischungen davon, und
   1c) weiterhin wenigstens ein modifiziertes Silan, das 3 unverzweigte oder verzweigte Alkoxy-Reste mit jeweils unabhängig voneinander 1 bis 4 C-Atomen, vorzugsweise ausgewählt aus Methoxy, Ethoxy, Propoxy und Kombinationen davon, und einen (Zahl = 1) organischen Rest, der aus der Gruppe, die aus
   unverzweigten oder verzweigten Alkyl-Resten mit 1 bis 10 C-Atomen, vorzugsweise 1 bis 8 C-Atomen, die jeweils unsubstituiert oder mit wenigstens einer OH-Gruppe, wenigstens einer Alkoxy-Gruppe mit 1 - 8 C-Atomen, vorzugsweise ausgewählt aus Methoxy, Ethoxy, Propoxy und Kombinationen davon, wenigstens einer Epoxyalkoxy-Gruppe mit 2 - 8 C-Atomen, vorzugsweise 3 - 6 C-Atomen, und wenigstens einer Epoxygruppe, vorzugsweise Epoxypropoxy-Gruppe, wenigstens einer Carbonsäureester-Gruppe mit 1 - 8 C-Atomen, wenigstens einer Carbonsäureanhydrid-Gruppe mit 4 - 8 C-Atomen, die offenkettig oder cyclisch sein können, wenigstens einer Fluoridgruppe, wenigstens einer Phenylgruppe, wenigstens einer Aryloxygruppe mit 6 - 8 C-Atomen, vorzugsweise Benzyloxy-Gruppe, wenigstens einer Amino-Gruppe, oder Kombinationen davon substituiert sind,
   unverzweigten oder verzweigten Alkenyl-Resten mit 2 bis 10 C-Atomen, vorzugsweise 2 bis 8 C-Atomen, die jeweils unsubstituiert oder mit wenigstens einer OH-Gruppe, wenigstens einer Alkoxy-Gruppe mit 1 - 8 C-Atomen, vorzugsweise ausgewählt aus Methoxy, Ethoxy, Propoxy und Kombinationen davon, wenigstens einer Epoxyalkoxy-Gruppe mit 2 - 8 C-Atomen, vorzugsweise 3 - 6 C-Atomen, und wenigstens einer Epoxygruppe, vorzugsweise Epoxypropoxy-Gruppe, wenigstens einer Carbonsäureester-Gruppe mit 1 - 8 C-Atomen, wenigstens einer Carbonsäureanhydrid-Gruppe mit 4 - 8 C-Atomen, die offenkettig oder cyclisch sein können, wenigstens einer Fluoridgruppe, wenigstens einer Phenylgruppe, wenigstens einer Aryloxygruppe mit 6 - 8 C-Atomen, vorzugsweise Benzyloxy-Gruppe, wenigstens einer Amino-Gruppe, oder Kombinationen davon substituiert sind, und
   Aryl-Resten mit 6 bis 13 C-Atomen, vorzugsweise 6 bis 10 C-Atomen, vorzugsweise 6 C-Atomen, die jeweils unsubstituiert oder mit wenigstens einer OH-Gruppe, wenigstens einer Alkoxy-Gruppe mit 1 - 8 C-Atomen, vorzugsweise ausgewählt aus Methoxy, Ethoxy, Propoxy und Kombinationen davon, wenigstens einer Epoxyalkoxy-Gruppe mit 2 - 8 C-Atomen, vorzugsweise 3 - 6 C-Atomen, und wenigstens einer Epoxygruppe, vorzugsweise Epoxypropoxy-Gruppe, wenigstens einer Carbonsäureester-Gruppe mit 1 - 8 C-Atomen, wenigstens einer Carbonsäureanhydrid-Gruppe mit 4 - 8 C-Atomen, die offenkettig oder cyclisch sein können, wenigstens einer Fluoridgruppe, wenigstens einer Phenylgruppe, wenigstens einer Aryloxygruppe mit 6 - 8 C-Atomen, vorzugsweise Benzyloxy-Gruppe, wenigstens einer Amino-Gruppe, oder Kombinationen davon substituiert sind, besteht, ausgewählt ist, und
2.) Kontaktieren der in Schritt 1) bereitgestellten ersten Zusammensetzung mit einer zweiten Zusammensetzung mit einem pH-Wert von < 7.0, vorzugsweise pH 2 bis pH 6, umfassend
   2a) Wasser, und
   2b) wenigstens eine Säure,
   unter Erhalt einer dritten Zusammensetzung umfassend wenigstens ein nichtmetallisches, anorganisches Sol und/oder wenigstens ein hybridpolymeres Sol, vorzugsweise wenigstens ein hybridpolymeres Sol, wobei die dritte Zusammensetzung vorzugsweise einen Wassergehalt von höchstens 50 Gew.-%, weiter bevorzugt höchstens 35 Gew.-%, jeweils bezogen auf das Gesamtgewicht der dritten Zusammensetzung aufweist, und
3.) Zugeben wenigstens eines organisches Photosensensibiliators, der aus der Gruppe, die aus substituierten Phenalen-1-on-Derivaten, substituierten Curcumin-Derivaten, substituierten Porphycen-Derivaten und Mischungen davon besteht, ausgewählt wird, zu der in Schritt 2) erhaltenen dritten Zusammensetzung.

Weiter bevorzugt umfasst die dritte Zusammensetzung das wenigstens eine nichtmetallische, anorganische Sol und/oder wenigstens eine hybridpolymere Sol, vorzugsweise wenigstens eine hybridpolymere Sol, in einem Anteil von 0,5 Gew.-% bis 25 Gew.-%, vorzugsweise in einem Anteil von 1 Gew.-% bis 20 Gew.-%, jeweils bezogen auf das Gesamtgewicht der dritten Zusammensetzung.

Durch Verwendung des erfindungsgemäßen Herstellungsverfahrens ist vorzugsweise sichergestellt, dass eine ausreichend stabile photokatalytisch-aktiven Beschichtungs-Zusammensetzung erhalten wird, in der der verwendete wenigstens eine organische Photosensensibiliator vorzugsweise gleichmäßig und vollständig dispergiert und/oder gelöst ist.

Vorzugsweise wird in Schritt 1.) des erfindungsgemäßen Herstellungsverfahrens ebenfalls eine homogene Mischung der verwendeten Silane 1b) und 1c) bereitgestellt, in die der wenigstens eine Alkohol 1a) zugemischt wird.

Weiter bevorzugt wird nach Erhalt der ersten Zusammensetzung in Schritt 2.) der Säurekatalysator als Bestandteil der zweiten Zusammensetzung hinzugegeben, wobei nachfolgend vorzugsweise gemischt und/oder gerührt wird bis die in Schritt 2.) erhaltene dritte Zusammensetzung vorzugsweise nicht mehr zweiphasig erscheint, weiter bevorzugt für einen Zeitraum von wenigstens 10 Min., vorzugsweise für einen Zeitraum von 15 Min bis 2 Stunden. Danach wird die in Schritt 2.) erhaltene dritte Zusammensetzung vorzugsweise bei Raumtemperatur (25°C) für wenigstens 1 Stunde, vorzugsweise für wenigstens 10 Stunden, weiter bevorzugt für einen Zeitraum von 12 Stunden bis 96 Stunden, weiter bevorzugt für einen Zeitraum von 24 Stunden bis 48 Stunden, inkubiert. Dadurch wird vorzugsweise sichergestellt, dass eine fast vollständige Hydrolyse des wenigstens einen Tetraalkoxysilans, das 4 unverzweigte oder verzweigte Alkoxy-Reste mit 1 bis 4 C-Atomen aufweist, vorzugsweise Tetramethoxysilan (TMOS), Tetraethoxysilan (TEOS) und Mischungen davon, und des wenigstens einen modifizierten Silans in der dritten Zusammensetzung erreicht wird.

Bei der Hydrolyse des wenigstens einen Tetraalkoxysilans, das 4 unverzweigte oder verzweigte Alkoxy-Reste mit 1 bis 4 C-Atomen aufweist, vorzugsweise Tetramethoxysilan (TMOS), Tetraethoxysilan (TEOS) und Mischungen davon, und des wenigstens einen modifizierten Silans in der dritten Zusammensetzung wird vorzugsweise weiterhin ein Alkanol mit 1 bis 4 C-Atomen freigesetzt, so dass die dritte Zusammensetzung vorzugsweise einen Anteil des wenigstens ein gradkettig oder verzweigtes Alkanol mit 1 bis 6 C-Atomen und wenigstens einer OH-Gruppe von wenigstens 50 Gew.-%, jeweils bezogen auf das Gesamtgewicht der dritten Zusammensetzung aufweist.

Das in der ersten Zusammensetzung erhaltene Alkanol 1a) und der in Schritt 2) bei der Hydrolyse des wenigstens einen Tetraalkoxysilans, das 4 unverzweigte oder verzweigte Alkoxy-Reste mit 1 bis 4 C-Atomen aufweist, und des wenigstens einen modifizierten Silans freigesetzte Alkanol mit 1 bis 4 C-Atomen ergänzen somit vorzugsweise den Gehalt an in der dritten Zusammensetzung enthaltenen Alkanolen, weiter bevorzugt auf einen Gehalt von wenigstens 50 Gew.-%, jeweils bezogen auf das Gesamtgewicht der dritten Zusammensetzung.

Erst danach wird vorzugsweise der wenigstens eine organische Photosensensibiliator zu der in Schritt 2) erhaltenen dritten Zusammensetzung zugegeben und weiter bevorzugt durch Zugabe von weiterem gradkettig oder verzweigtem Alkanol mit 1 bis 6 C-Atomen und wenigstens einer OH-Gruppe auf den gewünschten Feststoffgehalt aufgefüllt.

Ein erfindungsgemäßes Verfahren zur Herstellung einer photokatalytisch-aktiven Beschichtung auf wenigstens einem Teilbereich wenigstens einer Oberfläche eines Gegenstandes oder eines Raumes umfasst folgende Schritte,
(A) Aufbringen einer erfindungsgemäßen Beschichtungs-Zusammensetzung auf wenigstens einen Teilbereich einer zu behandelnden Oberfläche, und
(B) Trocknen der in Schritt (A) aufgebrachten Beschichtungs-Zusammensetzung, bevorzugt bei einer Temperatur aus einem Bereich von 5°C bis 150°C, bevorzugt von 10°C bis 120°C, weiter bevorzugt von 15°C bis 80°C, unter Erhalt wenigstens einer ersten, Photosensibilisator-haltigen Beschichtung,
wobei vorzugsweise die in Schritt (B) erhaltene wenigstens eine erste Photosensibilisator-haltige Beschichtung wenigstens ein nichtmetallisches, anorganisches Gel, vorzugsweise Xerogel, und/oder wenigstens ein hybridpolymeres Gel, vorzugsweise Xerogel, und wenigstens einen zumindest in dem Gel, vorzugsweise Xerogel, angeordneten wenigstens einen organischen Photosensibilisator umfasst.

Das erfindungsgemäße Verfahren zur Herstellung einer photokatalytisch-aktiven Beschichtung auf wenigstens einem Teilbereich wenigstens einer Oberfläche eines Gegenstandes oder eines Raumes erlaubt insbesondere die nachträgliche Beschichtung einer Vielzahl von unterschiedlichen Oberflächen, wobei die Applikation der photokatalytisch-aktiven Beschichtung vorzugsweise durch einfache nasschemische Verfahren unter Verwendung der erfindungsgemäßen photokatalytisch-aktiven Beschichtungs-Zusammensetzung möglich ist.

Mit dem erfindungsgemäßen Verfahren kann insbesondere wenigstens ein Oberflächenteilbereich eines bereits bestehenden Gegenstandes mit einer photokatalytischen Aktivität, vorzugsweise photodynamischen Aktivität, versehen werden, ohne das vorzugsweise das gesamte Volumen des entsprechenden Gegenstandes mit dem verwendete Photosensibilisators dotiert werden muss.

Vorzugsweise liegt ein geeigneter Gegenstand für das erfinderische Verfahren in Form eines selbsttragenden Films, eines Verbunds aus Fasern oder eines Formgegenstandes vor, weiter bevorzugt in Form einer Folie, weiter bevorzugt Schutzfolie, Schutzhülle, oder Vorhang, eines Transportbandes, einer flächigen Unterlage, eines Gewebes, eines Filters, eines Bezugs, eines Schlauchs, eines Beutels, eines Gefäßes, einer Schale, einer Displayabdeckung, eines Tasters, eines Griffs, eines Handlaufs, einer Oberfläche eines Möbels, beispielsweise Tischoberfläche oder Armlehne, einer Tastatur, eines Gerätegehäuses, oder einer Computer-Maus.

Geeignete Oberflächen werden verzugsweise ausgewählt aus Glas, Metall, Kunststoff, lackiertem Holz, pulverlackiertem Metall, mineralisch-organischen Verbundwerkstoffen, wie beispielsweise ein mineralisch-organischer Verbundwerkstoff auf Basis von Polymethylmethacrylatund Aluminiumoxid.

Weiter bevorzugt kann vor Schritt (A) auf den zumindest einen Teilbereich der zu behandelnden Oberfläche wenigstens ein Haftvermittler aufgebracht und, optional nachfolgend getrocknet werden.

Vorzugsweise können geeignete Haftvermittler beispielsweise in Form einer Komponente (C) des erfindungsgemäßen Mehrkomponentensystems bereitgestellt werden, wobei vorzugsweise Komponente (C) wenigstens einen Haftvermittler in einem Anteil von wenigstens 0,1 Gew.-%, weiter bevorzugt von 0,2 Gew.-% bis 4 Gew.-%, weiter bevorzugt von 0,5 Gew.-% bis3 Gew.-%, jeweils bezogen auf das Gesamtgewicht der Komponente (C). Vorzugsweise umfasst Komponente (C) weiterhin wenigstens ein Alkanol mit 1 bis 6 C-Atomen.

Geeignete Haftvermittler werden insbesondere ausgewählt aus Aminoalkyltrialkoxysilan, Diamine mit alkyltrialkoxysilan Gruppen, Mercaptoalkyltrialkoxysilan, Vinyltrialkoxysilan, Methacryloxyalkyltrialkoxysilan, Hydroxyalkyltrialkoxysilan, (3-Glycidyloxypropyl)-trimethoxysilan (GLYMO) und Mischungen davon.

Vorzugsweise wird bei Anwendung des erfindungsgemäßen Beschichtungsverfahrens auf Polyamid, Polyimid, Melamin-Werkstoffen (Schichtwerkstoff), Polyether/Polyurethan/Polyester Pulverlackbeschichtungen, lackiertem Holz, Acrylnitril-Butadien-Styrol (ABS), Polyvinylchlorid (PVC),Polycarbonat, Polyethylenterephthalat (PET), Polystyrol (PS), Hart-Polyethylen (High Density Polyethyle HDPE), biaxial orientiertem Polypropylene (BOPP) bzw. Polypropylene (PP), zunächst vor Schritt (A) auf zumindest einen Teilbereich der zu behandelnden Oberfläche wenigstens ein Haftvermittler aufgebracht und nachfolgend getrocknet.

Bei einer alternativen Ausführungsform wird die erfindungsgemäße photokatalytisch-aktiven Beschichtungs-Zusammensetzung in Form eines Kit-of-Parts Zusammensetzung zur gleichzeitigen, getrennten oder zeitlich abgestuften Beschichtung wenigstens eines Teilbereichs einer Oberfläche eines Gegenstandes oder eines Raumes bereitgestellt, wobei die Kit-of-Parts Zusammensetzung folgende Komponenten aufweist:
(I.) Komponente (A) umfassend wenigstens ein nichtmetallisches, anorganisches Sol und/oder wenigstens ein hybridpolymeres Sol jeweils hergestellt aus der Umsetzung mindestens zweier Alkoxysilane und wenigstens einer Säure als Hydrolysekatalysator und/oder jeweils wenigstens eine Vorläuferverbindung davon, und wenigstens ein gradkettig oder verzweigtes Alkanol mit 1 bis 6 C-Atomen und wenigstens einer OH-Gruppe in einem Anteil von wenigstens 50 Gew.-%, jeweils bezogen auf das Gesamtgewicht der Komponente (A),
(II.) Komponente (B) umfassend wenigstens einen organischen Photosensensibiliator, der aus der Gruppe, die aus substituierten Phenalen-1-on-Derivaten, substituierten Curcumin-Derivaten, substituierten Porphycen-Derivaten und Mischungen davon, vorzugsweise substituierten Phenalen-1-on-Derivaten, substituierten Porphycen-Derivaten und Mischungen davon, weiter bevorzugt Porphycen-Derivaten gemäß Anspruch 8 und Mischungen davon mit substituierten Phenalen-1-on-Derivaten, weiter bevorzugt substituierten Phenalen-1-on-Derivaten, besteht, ausgewählt wird, und
(III) optional, Komponente (C) umfassend wenigstens einen Haftvermittler.

Vorzugsweise umfasst Komponente (B) weiterhin wenigstens ein Lösungsmittel, vorzugsweise wenigstens ein gradkettig oder verzweigtes Alkanol mit 1 bis 6 C-Atomen und wenigstens einer OH-Gruppe oder wenigstens ein nichtmetallisches, anorganisches Sol und/oder wenigstens ein hybridpolymeres Sol jeweils hergestellt aus der Umsetzung mindestens zweier Alkoxysilane und wenigstens einer Säure als Hydrolysekatalysator und/oder jeweils wenigstens eine Vorläuferverbindung davon.

Die Komponenten (A), (B) und (C) werden vorzugsweise getrennt voneinander gelagert, wobei vor einer Verwendung in einem erfindungsgemäßen Beschichtungsverfahren zunächst eine entsprechende Menge der Komponente (A) und der Komponente (B) gemischt, vorzugsweise homogenisiert, werden. Vorzugsweise nach einer kurzen Standzeit, vorzugsweise von wenigstens 1 Minute, wird die zu verwendende Kombination aus Komponente (A) und Komponente (B) in Schritt (A) des erfindungsgemäßen Beschichtungsverfahrens auf wenigstens einen Teilbereich einer zu behandelnden Oberfläche, und nachfolgend in Schritt (B) getrocknet.

Optional kann vor einer Verwendung der Kombination aus Komponente (A) und Komponente (B) in Schritt (A) des erfindungsgemäßen Beschichtungsverfahrens auf den wenigstens einen Teilbereich der zu behandelnden Oberfläche Komponente (C) aufgebracht werden.

Ein erfindungsgemäßer beschichteter Gegenstand umfasst wenigstens eine, auf zumindest einem Teilbereich einer Oberfläche des Gegenstandes angeordnete photokatalytisch-aktive Beschichtung, die wenigstens ein nichtmetallisches, anorganisches Gel, vorzugsweise Xerogel, und/oder wenigstens ein hybridpolymeres Gel, vorzugsweise Xerogel, und wenigstens einen in, an oder auf dem Gel angeordneten wenigstens einen organischen Photosensibilisator aufweist, wobei der wenigstens eine organische Photosensibilisator aus der Gruppe, die aus substituierten Phenalen-1-on-Derivaten, substituierten Curcumin-Derivaten, substituierten Porphycen-Derivaten und Mischungen davon, vorzugsweise substituierten Phenalen-1-on-Derivaten, substituierten Porphycen-Derivaten und Mischungen davon, weiter bevorzugt Porphycen-Derivaten gemäß Anspruch 8 und Mischungen davon mit substituierten Phenalen-1-on-Derivaten, weiter bevorzugt substituierten Phenalen-1-on-Derivaten, besteht, ausgewählt wird.

Vorzugsweise liegt ein erfindungsgemäßer beschichteter Gegenstand in Form eines selbsttragenden Films, eines Verbunds aus Fasern oder eines Formgegenstandes vor, weiter bevorzugt in Form einer Folie, weiter bevorzugt Schutzfolie, Schutzhülle, oder Vorhang, eines Transportbandes, einer flächigen Unterlage, eines Gewebes, eines Filters, eines Bezugs, eines Schlauchs, eines Beutels, eines Gefäßes, einer Schale, einer Displayabdeckung, eines Tasters, eines Griffs, eines Handlaufs, einer Tastatur, oder einer Computer-Maus, Medizinprodukten, Lebensmittelverpackungen, Getränkeverpackungen, Tastern, Griffen, Textilien, Baustoffen, elektronischen Geräten, Haushaltsgeräten, Möbeln, Fenstern, Böden, Wänden oder Hygieneartikeln.

Eine erfindungsgemäße photokatalytisch-aktiven Beschichtungs-Zusammensetzung oder ein erfindungsgemäßer beschichteter Gegenstand wird zur photodynamischen Inaktivierung von Mikroorganismen, die vorzugsweise ausgewählt werden aus der Gruppe, die aus Viren, Archäeen, Bakterien, Bakteriensporen, Pilzen, Pilzsporen, Protozoen, Algen und blutübertragbaren Parasiten besteht, und/oder zur photokatalytischen Inaktivierung oxidierbarer organischer oder anorganischer Moleküle verwendet.

Vorzugsweise wird eine photokatalytisch-aktive Beschichtungs-Zusammensetzung oder ein erfindungsgemäßer beschichteter Gegenstand zur Oberflächenreinigung und/oder Oberflächenbeschichtung eines Gegenstandes oder eines Raumes verwendet.

Vorzugsweise wird eine photokatalytisch-aktive Beschichtungs-Zusammensetzung oder ein erfindungsgemäßer beschichteter Gegenstand zur Oberflächenbeschichtung von Medizinprodukten, Lebensmittelverpackungen, Getränkeverpackungen, Tastern, Griffen, Textilien, Schuhmaterialien, Schuhe, Leder, Baustoffen, elektronischen Geräten, Haushaltsgeräten, Möbeln, Fenstern, Böden, Wänden oder Hygieneartikeln.

Weitere Anwendungen sind beispielsweise Schnuller, Nuckel, Schläuche und Leitungen, Fensterscheiben, Glasflächen und/oder Fliesen von Nassräume und/oder Nasszellen, Touchscreenelemente, Personalcomputer (PC) und Peripheriegeräte, Lappen, Wischtücher, Arbeitsplatzauflagen, Behandlungs- und Vorbereitungsflächen in Kliniken und Altenheimen, Sanitäreinrichtung, Sanitärgeräte, Wurstdärme, Getränkebehälter, Geschirr oder Abfallbehälter.

Die Aufgabe der vorliegenden Erfindung wird weiterhin gelöst durch die Bereitstellung eines erfindungsgemäßen, vorzugsweise nicht-medizinischen, Verfahrens gemäß Anspruch 20 zur, vorzugsweise photodynamischen, Inaktivierung von Mikroorganismen, die vorzugsweise Viren, Archäeen, Bakterien, Bakteriensporen, Pilzen, Pilzsporen, Protozoen, Algen, blutübertragbaren Parasiten oder Kombinationen davon umfassen, und/oder einem Biofilm davon umfasst, wobei das Verfahren folgende Schritte umfasst:
(A) Aufbringen einer erfindungsgemäßen Beschichtungs-Zusammensetzung auf wenigstens einen Teilbereich einer zu behandelnden Oberfläche, vorzugsweise bei einer Temperatur von höchstens 50 °C, vorzugsweise bei einer Temperatur aus einem Bereich von 5 °C bis 50 °C, weiter bevorzugt von 10 °C bis 40 °C, weiter bevorzugt von 15 °C bis 30°C, und
(B) Trocknen der in Schritt (A) aufgebrachten Beschichtungs-Zusammensetzung , bevorzugt bei einer Temperatur aus einem Bereich von 5°C bis 150°C, bevorzugt von 10°C bis 120°C, weiter bevorzugt von 15°C bis 80°C, unter Erhalt wenigstens einer ersten, Photosensibilisator-haltigen Beschichtung, und
(C) Bestrahlen der in Schritt (B) erhaltenen ersten, Photosensibilisator-haltigen Beschichtung mit elektromagnetischer Strahlung geeigneter Wellenlänge, vorzugsweise 300 nm bis 600 nm, und Energiedichte, vorzugsweise von 0,1 J / cm² bis 1 kJ/cm², vorzugsweise von 0,5 J / cm² bis 500 J/cm², vorzugsweise von 1 J / cm² bis 100 J/cm², vorzugsweise in Gegenwart von Sauerstoff und/oder wenigstens einer Sauerstoff-abgebenden Verbindung.

Vorzugsweise wird das erfindungsgemäße Inaktivierungsverfahren gemäß Anspruch 20 nicht zur Behandlung des menschlichen oder tierischen Körpers angewendet.

In Schritt (A) der erfindungsgemäßen Inaktivierungsverfahrens werden vorzugsweise auf dem wenigstens einen Teilbereich der zu behandelnden Oberfläche anhaftende Mikroorganismen und/oder ein Biofilm davon mit wenigstens einer erfindungsgemäßen Beschichtungs-Zusammensetzung kontaktiert und weiter bevorzugt inaktiviert.

Nach Trocknen der in Schritt (A) aufgebrachten Beschichtungs-Zusammensetzung, bevorzugt bei einer Temperatur aus einem Bereich von 5°C bis 150°C, bevorzugt von 10°C bis 120°C, weiter bevorzugt von 15°C bis 80°C, in Schritt (B) wird wenigstens einer ersten, Photosensibilisator-haltigen Beschichtung erhalten, die eine weitere Besiedelung des behandelten Teilbereichs der Oberfläche mit Mikroorganismen, die vorzugsweise Viren, Archäeen, Bakterien, Bakteriensporen, Pilzen, Pilzsporen, Protozoen, Algen, blutübertragbaren Parasiten oder Kombinationen davon umfassen, verhindert, wenn vorzugsweise die in Schritt (B) erhaltenen ersten, Photosensibilisator-haltigen Beschichtung mit elektromagnetischer Strahlung geeigneter Wellenlänge, vorzugsweise 300 nm bis 600 nm, und Energiedichte, vorzugsweise von 0,1 J / cm² bis 1 kJ/cm², vorzugsweise von 0,5 J / cm² bis 500 J/cm², weiter bevorzugt von 1 J / cm² bis 100 J/cm², vorzugsweise in Gegenwart von Sauerstoff und/oder wenigstens einer Sauerstoff-abgebenden Verbindung bestrahlt wird.

Beispielsweise können transparente, durchsichtige oder transluzente Gegenstände, wie beispielsweise Nuckel, Schnuller, Schläuche, oder ähnliches, unter Verwendung einer erfindungsgemäße Photosensibilisatorzusammensetzung hergestellt werden und mit Hilfe des erfindungsgemäßen Verfahrens gereinigt und/oder entkeimt werden.

Weiter bevorzugt werden Gegenstände behandelt, die eine thermisch begrenzte Haltbarkeit aufweisen, beispielsweise Gegenstände aus thermoplastischen Kunststoffen, oder von Desinfektionsmitteln angegriffen werden.

Gegenstände, die eine thermisch begrenzte Haltbarkeit aufweisen, können beispielsweise nur unzureichend sterilisiert werden, da sie bei höheren Temperaturen ihre Form verlieren oder spröde werden.

Darüber hinaus kann es bei einer unsachgemäßen und/oder übermäßigen Anwendung von Desinfektionsmitteln zu Resistenzbildung durch Selektion robuster Mikroorganismen kommen, wenn beispielsweise die Wirkstoffkonzentration und Einwirkzeit und damit die keimreduzierende Wirkung zu gering ist.

Die Erfindung wird nachfolgend durch Figuren und Beispiele erläutert, ohne hierauf beschränkt zu sein.

Alle verwendeten Chemikalien wurden von gängigen Anbietern käuflich erworben (Thermo Fisher Scientific, Polysciences Europe GmbH, Sigma Aldrich, TCI, ABCR, Acros, Merck und Fluka) und ohne weitere Reinigung eingesetzt. Lösemittel wurden vor Gebrauch destilliert und bei Bedarf auf übliche Art und Weise getrocknet. Trockenes DMF wurde bei Fluka (Taufkirchen, DE) käuflich erworben.

Dünnschichtchromatographische Analysen (TLC) wurden an Kieselgel 60 mit Fluoreszenz-Indikator F-254 mit 0,20 mm Schichtdicke der Firma Merck (Darmstadt, DE) und Detektion über UV-Licht bei 254 nm / 366 nm oder durch Anfärbung mit Ninhydrin in Ethanol durchgeführt. Die Säulenchromatographie wurde an Kieselgel 60 (0,03-0,2 mm) von Carl Roth durchgeführt.

Schmelzpunkte wurden auf einem Schmelzpunktgerät (MPM-Serie) der Firma Schorpp Gerätetechnik (Überlingen, DE) gemessen und wurden unkorrigiert verwendet.

NMR Spektren wurden an Bruker Avance 300 (1H 300.13 MHz, 13C 75.47 MHz, T = 300 K), Bruker Avance III (1H 400.13 MHz, 13C 100.61 MHz, T = 300 K), Bruker Avance 600 (1H 600.13 MHz, 13C 150.92 MHz, T = 300 K) und Bruker Avance III 600 Kryo (1H 600.25 MHz, 13C 150.95 MHz, T = 300 K) Instrumenten (Bruker Corporation, Billerica, US) gemessen. Die chemischen Verschiebungen sind angegeben als δ[ppm] relativ zum externen Standard ("solvent residual peak"). Die Spektren wurden nach erster Ordnung analysiert, die Kopplungskonstanten J sind angegeben in Hertz [Hz]. Charakterisierung der Signale: s = singlet, d = doublet, t = triplet, q = quartet, m = multiplet, bs = broad singlet, psq = pseudo quintet, dd = double doublet, dt = doublet of triplets, ddd = double double doublet. Die Integration wurde als relative Zahl der Atome bestimmt. Zuordnung der Signale in 13C-Spektren erfolgte über 2D-Spektroskopie (COSY, HSQC und HMBC) oder DEPT Verfahren (pulse angle: 135 °) und wird angegeben als (+) für CH3 oder CH, (-) für CH2 und (Cq) für quaternäre Cq. Fehler der angegebenen Werte: Chemische Verschiebung 0.01 ppm (1H NMR) und 0.1 ppm (13C NMR), Kopplungskonstante J 0.1 Hz. Die für die Messungen verwendeten Lösungsmittel sind für jedes Spektrum angegeben.

IR-Spektren wurden mit einem Spektrometer Cary 630 der Firma Agilent aufgenommen. Absorptionsspektren wurden auf einem UV/Vis Spektrometer Cary 60 der Firma Agilent (Santa Clara, CA, USA) aufgenommen. Alle Messungen wurden in 1-cm-UV-Küvetten (Rotilabo) und Lösungsmitteln in UV-Qualität der Firma Merck (Darmstadt, DE) bei Raumtemperatur durchgeführt. Die Intensität der Peaks in rel. [a.u.] (relative "arbitrary units") angegeben. Für exemplarische Verbindungen wurde der Extinktionskoeffizient (ε / [M⁻¹cm⁻¹]) bestimmt. Fehler der angegebenen Werte: Wellenlänge Absorptionsmaximum λ +/-3nm, molarer Extinktionskoeffizient ε +/- 5%. Massenspektren wurden auf einem Agilent Technologies 6540 UHD Accurate - Mass Q-TOF LC/MS (LC-MS, GC-CIMS) und einem Jeol AccuTOF GCX GC-EIMS, FD Spektrometer gemessen (JEOL GmbH, Freising, DE). Xenon diente als lonisationsgas für FAB. Die Lösungsmittel für Absorptions- und Emissionsmessungen wurden in spezieller spektroskopischer Reinheit von Acros oder Baker bzw. Uvasol von Merck gekauft. Milliporewasser (18 MΩ, Milli QPlus) wurde für alle Messungen verwendet.

Nachfolgend verwendete Abkürzungen: DCM = Dichlormethan; DMF = N,N-Dimethylformamid; DIPEA = Diisopropylethylamin; DEAD = Azodicarbonsäurediethylester; EDC = 1-Ethyl-3-(3-dimethylaminopropyl)carbodiimid; NBS = N-Bromosuccinimid; RT = Raumtemperatur; TBAH = Tetrabutylammoniumhydrogensulfat; THF = Tetrahydrofuran; d.Th = der Theorie.

Folgende Phenalen-1-on Derivate sind kommerziell verfügbar, beispielsweise von der Chemieliva Pharmaceutical Co., Ltd (Chongqing, CN) oder Alfa Chemistry (Ronkonkoma, NY, US) und wurden unverändert eingesetzt:

**Tabelle 1: Kommerziell verfügbare Phenalen-1-on Derivate**

| | | | | | |
|---|---|---|---|---|---|
| 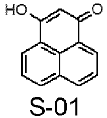 | CAS 5472-84-4 | 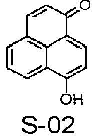 | CAS 21913-87-1 | 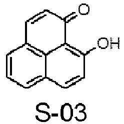 | CAS 7465-58-9 |
| | Gelbes Pulver | | Oranges Pulver | | Gelbes Pulver |
| Molare Masse (MW): 196,2 g/mol | | | Summenformel (MF): C₁₃H₈O | | |

### Beispiel 1: Herstellung der verwendeten Photosensibilisatoren

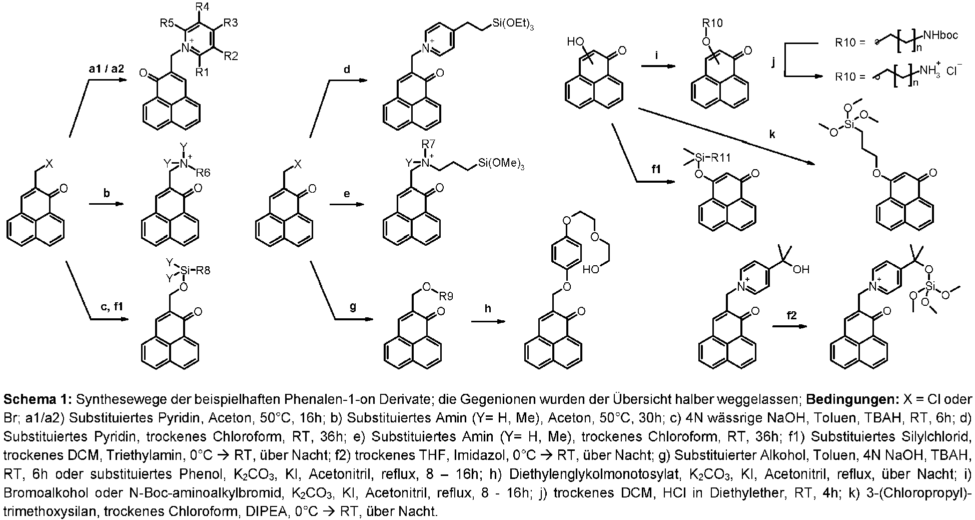

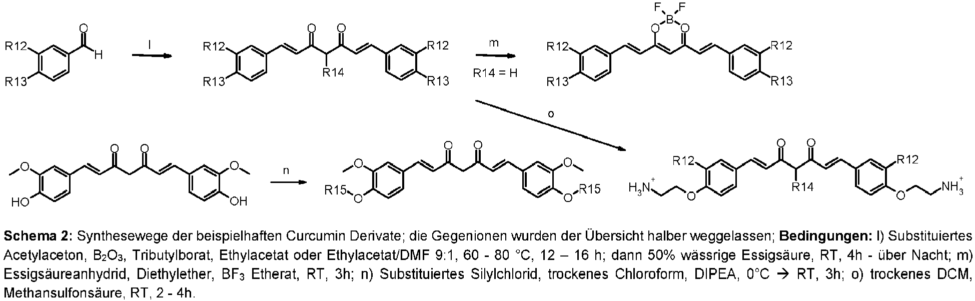

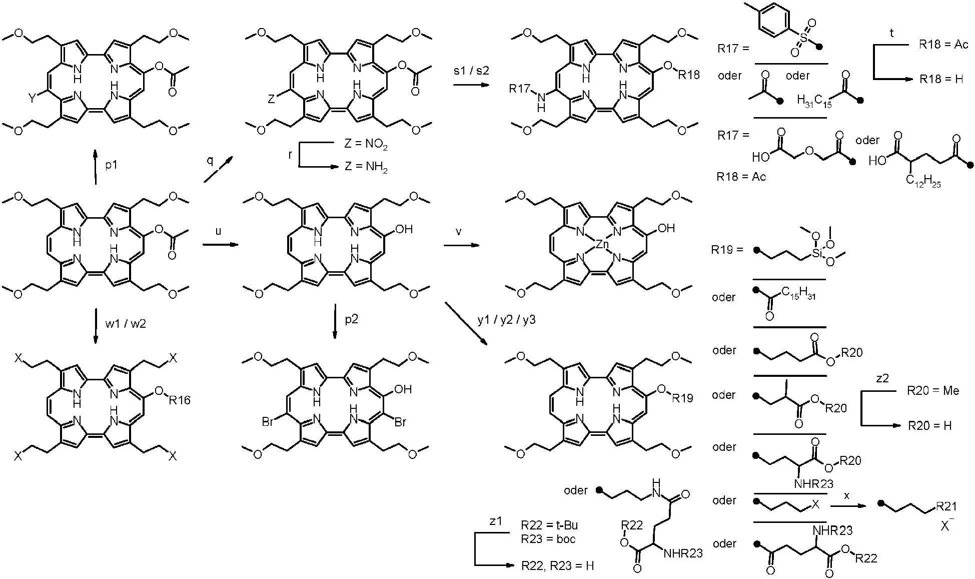

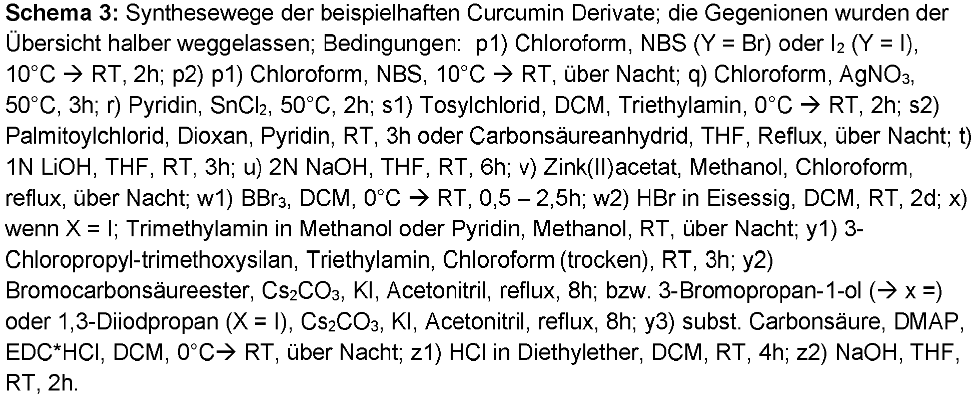

### Synthesevorschriften

### 1.1 Allgemeine Vorschrift a1)

2-Bromomethyl-1H-phenalen-1-on (135 mg, 0,5 mmol) wurde zusammen mit dem Pyridinbaustein (0,75 mmol) in Aceton (3 mL) vorgelegt. Die Lösung wurde 36h bei 50°C gerührt. Es entstand eine gelbliche Suspension die nach Abkühlen auf Raumtemperatur auf zwei Bluecaps aufgeteilt wurde (nachwaschen/Transfer mit wenig Aceton, max. 2 mL). Das Produkt wurde durch Zugabe von Diethylether auf 15 mL pro Cap gefällt, abzentrifugiert (60 mins, 4400 rpm, 0°C) und der klare Überstand verworfen. Das Präzipitat wurde in Diethylether suspendiert, man ließ absetzen und verwarf den Überstand. Der Reinigungsschritt wurde noch einmal wiederholt und das Produkt anschließend bei vermindertem Druck getrocknet. Falls nötig konnte es durch Umkristallisation aus Isopropanol / Methylethylketon weiter gereinigt werden.

### 1.2 Allgemeine Vorschrift a2)

2-Chloromethyl-1H-phenalen-1-on (115 mg, 0,5 mmol) wurde zusammen mit dem Pyridinbaustein (0,75 mmol) in Aceton (3 mL) vorgelegt. Die Lösung wurde 48h bei 50°C gerührt. Die entstandene Suspension wurde auf zwei Bluecaps aufgeteilt (nachwaschen/Transfer mit wenig Aceton, max. 2 mL) und durch Zugabe von Diethylether auf 15 mL pro Cap gefällt. Das Produkt wurde abzentrifugiert (60 mins, 4400 rpm, 0°C) und der Überstand verworfen. Das Präzipitat wurde in Diethylether suspendiert. Man ließ absetzen und verwarf den Überstand. Der Reinigungsschritt wurde noch einmal wiederholt und das Produkt anschließend bei vermindertem Druck getrocknet. Falls nötig konnte es durch Säulenchromatographie mit Chloroform/Methanol 6:1 weiter gereinigt werden.

Die jeweils hergestellten Verbindungen sind nachfolgend in Tabelle 2 zusammengefasst.

**Tabelle 2: Mit allgemeiner Vorschrift a1) und a2) hergestellte Verbindungen**

| ***No*** | ***Reaktant Molmasse Einwaage*** | ***Zielverbindung*** / ***Nummer*** | ***Ausbeute*** / ***Aussehen*** | ***Molekülmasse*** / ***Summenformel*** | ***Analytik*** |
|---|---|---|---|---|---|
| I | Pyridin | 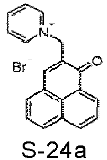 | 148 mg | 352,3 g/mol | **¹H-NMR** (300 MHz, DMSO-d6): δ [ppm] = 9,27 (d, J = 7,2 Hz, 2H), 8,62 (m, 1H), 8,51 (m, 2H), 8,43 (s, 1H), 8,37 (m, 1H), 8,18 (m, 3H), 7,93 (t, J = 7,6 Hz, 1H), 7,82 (t, J = 8,0 Hz, 1H), 5,83 (s, 2H); - **MS** (ESI-MS, CH₂Cl₂/MeOH + 10 mmol NH₄OAc): e/z (%) = 272,11 (100%, M+); - **UV** (H₂O): λ/ [nm] (ε / [M⁻¹cm⁻¹]) = 255 (20600), 320 (3400), 360 - 420 (9900) |
| | (CAS 110-86-1) | | 91 % d.Th. | | |
| | 59,1 g/mol | | Gelbes Pulver | C₁₉H₁₄NOBr | |
| | 45 mg | | | | |
| II | Pyridin | 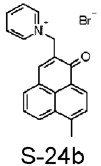 | 145 mg | 366,23 g/mol | **¹H-NMR** (300 MHz, CD₃OD): δ [ppm] = 9,22 (d, J = 7,2 Hz, 2H), 8,58 (m, 1H), 8,47 (m, 2H), 8,39 (s, 1H), 8,37 (m, 1H), 8,11 (m, 3H), 7,79 (t, J = 7,6 Hz, 1H), 7,72 (d, J = 8,0 Hz, 1H), 5,79 (s, 2H), 2,89 (s, 3H); - **MS** (ESI-MS, 95% H₂O + 0,1% HCOOH / 5% MeCN + 0,1% HCOOH): e/z (%) = 286,12 (100%, M⁺); - **UV** (H₂O): λ/ [nm] (rel. [a.u.]) = 255 (1), 360 - 430 (0,56); |
| | (CAS 110-86-1) | | 78 % d.Th. | | |
| | 59,1 g/mol | | Schmutzig gelbes Pulver | C₂₀H₁₆NOBr | |
| | 45 mg | | | | |
| III | 2-(4-Pyridyl)-2-propanol | 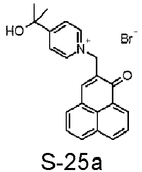 | 191 mg | 410,3 g/mol | **¹H-NMR** (400 MHz, DMSO-d₆): δ [ppm] = 9,21 (d, J = 8,0 Hz, 2H), 8,46 - 8,51 (m, 3H), 8,34 (d, J = 8,0 Hz, 1H), 8,21 (d, J = 7,2 Hz, 2H), 8,15 (d, J = 7,2 Hz, 1H), 7,90 (t, J = 7,6 Hz, 1H), 7,80 (t, J = 8,0 Hz, 1H), 5,81 (s, 2H), 1,50 (s, 6H); - **MS** (ESI-MS, CH₂Cl₂/MeOH + 10 mmol NH₄OAc): e/z (%) = 330,15 (100%, M+); - UV (H₂O): λ/ [nm] (ε / [M⁻¹cm⁻¹]) = 256 (20800), 320 (3300), 360 - 420 (9800) |
| | (CAS 15031-78-4) | | 93 % d.Th. | | |
| | 137,18 g/mol | | Gelbes Pulver | C₂₂H₂₀NO₂Br | |
| | 103 mg | | | | |
| IV | 2-(4-Pyridyl)-2-propanol | 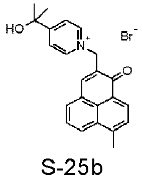 | 174 mg | 424,33 g/mol | **¹H-NMR** (300 MHz, CD₃OD): δ [ppm] = 9,15 (d, J = 8,0 Hz, 2H), 8,45 - 8,52 (m, 2H), 8,38 (s, 1H), 8,17 (d, J = 8,0 Hz, 2H), 8,11 (d, J = 8,0 Hz, 1H), 7,80 (t, J = 8,0 Hz, 1H), 7,73 (d, J = 8,0 Hz, 1H), 5,75 (s, 2H), 2,90 (s, 3H), 1,58 (s, 6H); - **MS** (ESI-MS, 95% H₂O + 0,1% HCOOH / 5% MeCN + 0,1% HCOOH): e/z (%) = 344,16 (100%, M⁺); - UV (H₂O): λ/ [nm] (rel. [a.u.]) = 256 (1), 360 - 430 (0,52); |
| | (CAS 15031-78-4) | | 82 % d.Th. | | |
| | 137,18 g/mol | | Schmutzig gelbes Pulver | C₂₃H₂₂NO₂Br | |
| | 103 mg | | | | |
| V | Diphenyl(4-pyridyl)methanol | 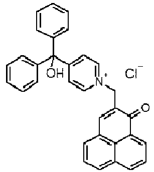 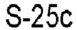 | 171 mg | 490 g/mol | **¹H-NMR** (400 MHz, DMSO-d₆): δ [ppm] = 9,18 (d, J = 8,0 Hz, 2H), 8,44 - 8,56 (m, 3H), 8,36 (d, J = 8,6 Hz, 1H), 8,16 (d, J = 8,0 Hz, 1H), 8,02 (d, J = 8,0 Hz, 2H), 7,92 (t, J = 8,0 Hz, 1H), 7,81 (t, J = 8,0 Hz, 1H), 7,31 - 7,39 (m, 6H), 7,22 - 7,28 (m, 4H) 5,78 (s, 2H); - **MS** (ESI-MS, 95% H₂O + 0,1% HCOOH / 5% MeCN + 0,1% HCOOH): e/z (%) = 454,18 (100%, M⁺); - UV (H₂O): λ/ [nm] (rel. [a.u.]) = 254 (1), 360 - 425 (0,52); |
| | (CAS 1620-30-0) | | 70 % d.Th. | | |
| | 261,32 g/mol | | Blassgelbes Pulver | C₃₂H₂₄NO₂Cl | |
| | 196 mg | | | | |
| VI | 2-(4-pyridyl) ethanol | 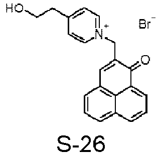 | 172 mg | 396,3 g/mol | Siehe WO2018167264A1 / EP17161718.6 |
| | (CAS 5344-27-4) | | 87 % d.Th. | | |
| | 123,16 g/mol | | Schmutzig gelbes Pulver | C₂₁H₁₈NO₂Br | |
| | 92 mg | | | | |
| VII | Pyridin-3-sulfonsäure (*) | 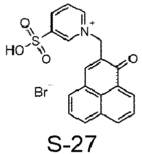 | 162 mg | 432,29 g/mol | **¹H-NMR** (400 MHz; DMSO-d6): δ [ppm] = 9,41 (s, 1H), 9,18 (d, J = 7,2 Hz, 1H), 8,70 (d, J = 7,9 Hz, 1H), 8,52 (m, 2H), 8,43 (s, 1H), 8,36 (d, J = 7,8 Hz, 1H), 8,19 (d, J = 7,6 Hz, 1H), 8,12 (m, 1H), 7,92 (t, 7,6 Hz, 1H), 7,81 (t, 7,6 Hz, 1H), 5,85 (s, 2H); - **MS** (ESI-MS, 95% H₂O + 0,1% HCOOH / 5% MeCN + 0,1% HCOOH): e/z (%) = 352,06 (100%, M⁺), 703,12 (5%, (2M⁺-H⁺)⁺); - UV (H₂O): λ/ [nm] (rel. [a.u.]) = 252 (1), 322 (0,26), 360 - 420 (0,54); |
| | (CAS 636-73-7) | | 75 % d.Th. | | |
| | 159,17 g / mol | | Blassgelbes Pulver | C₁₉H₁₄NO₄SBr | |
| | 120 mg | | | | |
| VIII | 3-Hydroxypyridin | 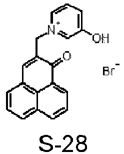 | 162 mg | 368,23 g/mol | **¹H-NMR** (400 MHz; DMSO-d6): δ [ppm] = 8,78 (s, 1H), 8,71 (d, J = 6,0 Hz, 1H), 8,52 (m, 2H), 8,36 (m, 2H), 8,15 (d, J = 6,4 Hz, 1H), 8,05 (m, 1H), 7,94 (m, 2H), 7,81 (t, 7,6 Hz, 1H), 4,72 (s, 2H); - **MS** (ESI-MS, 95% H₂O + 0,1% HCOOH / 5% MeCN + 0,1% HCOOH): e/z (%) = 288,10 (100%, M⁺); - **UV** (H₂O): λ/ [nm] (rel. [a.u.]) = 250 (1), 360 - 420 (0,5); |
| | (CAS 109-00-2) | | 88 % d.Th. | | |
| | 95,1 g/mol | | Gelbes Pulver | C₁₉H₁₄NO₂Br | |
| | 71 mg | | | | |
| IX | 2-Ethyl-3-hydroxy-6-methylpyridin | 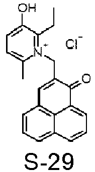 | 62 mg | 365,86 g/mol | **¹H-NMR** (400 MHz, DMSO-d6): δ [ppm] = 8,61 (d, J = 8,1 Hz, 1H), 8,56 (d, 1H), 8,52 (s, 1H), 8,41 (d, J = 8,0 Hz, 1H), 8,15 (d, J = 8,0 Hz, 1H), 7,97 (t, J = 8,0 Hz, 1H), 7,84 (m, 2H), 7,50 (m, 1H), 4,68 (s, 2H), 2,93 (q, J = 6,8 Hz, 2H), 2,59 (s, 3H), 1,22 (t, J = 6,8 Hz, 3H); - **MS** (ESI-MS, CH₂Cl₂/MeOH + 10 mmol NH₄OAc): e/z (%) = 330,16 (100%, M+); - **UV** (H₂O): λ/ [nm] (rel. [a.u.]) = 253 (1), 350 - 425 (0,49); |
| | | | 35 % d.Th. | | |
| | (CAS 2364-75-2) | | Dunkelgelbes Pulver | C₂₂H₂₀NO₂Cl | |
| | 137,18 mg | | | | |
| | 103 mg | | | | |
| XI | 2-(Pyridin-3-carbonylamino) essigsäure | 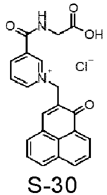 | 106 mg | 408,84 g/mol | **¹H-NMR** (400 MHz; DMSO-d6): δ [ppm] = 9,63 (s, 1H), 9,58 (m, 1H), 9,40 (d, J = 7,2 Hz, 1H), 8,98 (d, J = 7,9 Hz, 1H), 8,52 (t, J = 7,6 Hz, 2H), 8,43 (s, 1H), 8,37 (d, J = 7,9 Hz, 1H), 8,30 (m, 1H), 8,17 (d, J = 7,6 Hz, 1H), 7,93 (t, 7,6 Hz, 1H), 7,81 (t, 7,6 Hz, 1H), 5,88 (s, 2H), 4,03 (d, J = 4,8 Hz, 2H); - **MS** (ESI-MS, 95% H₂O + 0,1% HCOOH / 5% MeCN + 0,1% HCOOH): e/z (%) = 373,12 (100%, M⁺), 745,23 (2%, (2M⁺-H⁺)⁺); - **UV** (H₂O): λ/ [nm] (rel. [a.u.]) = 256 (1), 320 (0,3), 360 - 420 (0,52); |
| | | | 52 % d.Th. | | |
| | (CAS 583-08-4) | | Gelbes Pulver | C₂₂H₁₇N₂O₄Cl | |
| | 180,16 mg | | | | |
| | 135 mg | | | | |
| XII | 5-Chinolinol | 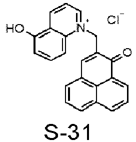 | 151 mg | 373,84 g/mol | **¹H-NMR** (400 MHz, DMSO-d6): δ [ppm] = 12,31 (bs, 1H), 9,72 (d, J = 6,4 Hz, 1H), 9,39 (d, J = 8,1 Hz, 1H), 8,54 (d, J = 8,0 Hz, 1H), 8,49 (d, |
| | (CAS 578-67-6) | | | | J = 8,1 Hz, 1H), 8,30 (d, J = 8,0 Hz, 1H), 8,11 (m, 1H), 7,97 - 8,04 (m, |
| | | | 81 % d.Th. | C₂₃H₁₆NO₂Cl | 3H), 7,88 - 7,96 (m, 2H), 7,72 (t, J = 8,0 Hz, 1H), 7,43 (d, J = 8,0 Hz, |
| | 145,16 mg | | Gelbes Pulver | | 1H), 6,18 (s, 2H); - **MS** (ESI-MS, 95% H₂O + 0,1% HCOOH / 5% |
| | 109 mg | | | | MeCN + 0,1% HCOOH): e/z (%) = 338,12 (100%, M⁺); - **UV** (H₂O): λ/ [nm] (rel. [a.u.]) = 255 (1), 350 - 425 (0,31); |
| XIII | 6-Hydroxychinolin | 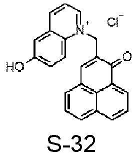 | 160 mg | 373,84 g/mol | **¹H-NMR** (400 MHz, DMSO-d6): δ [ppm] = 11,41 (bs, 1H), 9,52 (d, J = 6,3 Hz, 1H), 9,13 (d, J = 8,0 Hz, 1H), 8,46 - 8,58 (m, 3H), 8,30 (d, J = |
| | (CAS 580-16-5) | | 86 % d.Th. | | 8,1 Hz, 1H), 8,11 (m, 1H), 7,98 - 8,04 (m, 2H), 7,89 - 7,93 (m, 1H), |
| | 145,16 mg | | Oranges Pulver | C₂₃H₁₆NO₂Cl | 7,79 (d, J = 8,0 Hz, 1H), 7,68 - 7,78 (m, 2H), 6,21 (s, 2H); - **MS** (ESI-MS, 95% H₂O + 0,1% HCOOH / 5% MeCN + 0,1% e/z |
| | 109 mg | | | | HCOOH): (%) = 338,12 (100%, M⁺); - **UV** (H₂O): λ/ [nm] (rel. [a.u.]) = 255 (1), 320 (0,23), 350 - 425 (0,26); |
| XIV | 8-Hydroxychinolin | 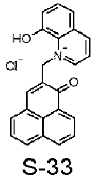 | 136 mg | 373,84 g/mol | **¹H-NMR** (400 MHz, DMSO-d6): δ [ppm] = 11,96 (bs, 1H), 9,53 (d, J = 6,3 Hz, 1H), 9,29 (d, J = 8,0 Hz, 1H), 8,59 (d, J = 8,0 Hz, 1H), 8,41 (d, |
| | (CAS 148-24-3) | | 73 % d.Th. | | J = 8,1 Hz, 1H), 8,27 (d, J = 8,0 Hz, 1H), 8,21 (m, 1H), 7,89 - 7,98 (m, J = J = |
| | 145,16 mg | | Dunkelgelbes Pulver | : C₂₃H₁₆NO₂Cl | 3H), 7,81 (t, 8,0 Hz, 1H), 7,69 (t, 8,0 Hz, 1H), 7,55 (m, 1H), 7,41 (s, 1H), 6,46 (s, 2H); - **MS** (ESI-MS, 95% H₂O + 0,1% HCOOH / |
| | 109 mg | | | | 5% MeCN + 0,1% HCOOH): e/z (%) = 338,12 (100%, M⁺); - **UV** (H₂O): λ/ [nm] (rel. [a.u.]) = 255 (1), 350 - 425 (0,25); |
| XV | Pyridin-4-boronsäure | 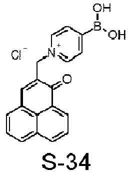 | 65 mg | 351,6 g/mol | **¹H-NMR** (400 MHz; MeOD): δ [ppm] = 9,07 (d, J = 7,2 Hz, 2H), 8,55 (d, J = 8,0 Hz, 1H), 8,41 (m, 2H), 8,26 (d, J = 8,0 Hz, 1H), 8,21 (m, 2H), 8,10 (d, J = 7,6 Hz, 1H), 7,85 (t, 7,3 Hz, 1H), 7,76 (t, 7,8 Hz, |
| | (CAS 1692-15-5) | | 37 % d.Th. | | 1H), 5,75 (s, 2H); - **MS** (ESI-MS, 95% H₂O + 0,1% HCOOH / 5% |
| | 122,92 mg | | Blassgelbes Pulver | C₁₉H₁₅NO₃BCl | MeCN + 0,1% HCOOH): e/z (%) = 316,11 (100%, M⁺); - **UV** |
| | 92 mg | | | | (Ethanol): λ/ [nm] (ε / [M⁻¹cm⁻¹]) = 255 (42100), 317 (3700), 350 - 425 (10600); |

| | | | | | |
|---|---|---|---|---|---|
| (*) Eingesetzt als Natriumsalz unter Zugabe von 0,3 mL Methanol. | | | | | |

### 1.3 Allgemeine Vorschrift b)

2-Chloromethyl-1H-phenalen-1-on (115 mg, 0,5 mmol) wurde zusammen mit dem Dimethylamin (2 mmol) in N,N-Dimethylformamid (0,8 mL) vorgelegt. Die Lösung wurde 48 h bei 50°C im Dunklen gerührt. Die Suspension wurde auf zwei Bluecaps aufgeteilt (nachwaschen/transfer mit wenig Dichlormethan, max. 2 mL) und durch Zugabe von Diethylether auf 15 mL pro Cap gefällt. Das Produkt wurde abzentrifugiert (60 mins, 4400 rpm, 0°C) und der Überstand verworfen. Das Präzipitat wurde in Diethylether suspendiert. Man ließ absetzen und verwarf den Überstand. Der Reinigungsschritt wurde zweimal wiederholt und das Produkt anschließend getrocknet. Falls nötig konnte es durch Säulenchromatographie mit Chloroform/Methanol Gemisch weiter gereinigt werden.

Die jeweils hergestellten Verbindungen sind nachfolgend in Tabelle 3 zusammengefasst.

### 1.4 Vorschrift c) (Herstellung von 2-Hydroxymethyl-1H-phenalen-1-on; siehe WO2018167264A1 / EP17161718.6)

2-Chloromethyl-1H-phenalen-1-on (230 mg, 1 mmol) wurde in Toluen gelöst (20 mL). Wässriges Natriumhydroxid (4N, 5 mL) und der Phasentransferkatalysator TBAH (100 mg) wurden zugegeben und anschließend das Reaktionsgemisch 6 h bei Raumtemperatur lebhaft gerührt. Es bildete sich ein gelbbrauner Niederschlag. Der Niederschlag wurde abfiltriert, mit Wasser (3-4 mal), Toluen und Petrolether gewaschen. Das Produkt 2-Hydroxymethyl-1H-phenalen-1-on wurde an der Luft bis zur Gewichtskonstanz getrocknet. Falls nötig konnte es durch Säulenchromatographie weiter gereinigt werden (DCM/Ethanol 10:1, Rf = 0,2).

### 1.5 Vorschrift d)

2-Chloromethyl-1H-phenalen-1-on (115 mg, 0,5 mmol) wurde zusammen mit dem Pyridinbaustein (0,6 mmol) in trockenem DCM (5 mL) vorgelegt. Die Lösung wurde 48h bei Raumtemperatur gerührt. Das Produkt wurde durch Zugabe von 15 mL trockenem Diethylether gefällt und der Überstand verworfen. Das Präzipitat wurde in trockenem Diethylether suspendiert. Man ließ absetzen und verwarf den Überstand. Der Reinigungsschritt wurde noch einmal wiederholt und das Produkt anschließend bei vermindertem Druck getrocknet. (Produkt immer vor Feuchtigkeit schützen.

Die jeweils hergestellten Verbindungen sind nachfolgend in Tabelle 4 zusammengefasst.

### 1.6 Allgemeine Vorschrift e)

2-Chloromethyl-1H-phenalen-1-on (115 mg, 0,5 mmol) wurde in trockenem Chloroform (1 mL) unter Stickstoff vorgelegt. Der Aminoalkylsilanbaustein (0,55 mmol) wurde unverdünnt oder als käufliche 40%ige Lösung in Methanol zugegeben. Das Gemisch wurde 48h bei Raumtemperatur unter Feuchtigkeitsauschluss gerührt. Das Produkt wurde durch Zugabe von 10 mL trockenem Diethylether gefällt und der Überstand verworfen. Das Präzipitat wurde bei vermindertem Druck getrocknet. (Produkt immer vor Feuchtigkeit schützen, kühl lagern).

Die jeweils hergestellten Verbindungen sind nachfolgend in Tabelle 5 zusammengefasst.

### 1.7 Allgemeine Vorschrift f1)

2-Hydroxymethyl-1H-phenalen-1-on (70 mg, 0,3 mmol) oder 3-Hydroxy-phenalen-1-on (60 mg, 0,3 mmol) wurde zusammen mit Imidazol (8 mg, 0,1 mmol) und Triethylamin (30 mg, 0,3 mmol) in trockenem DCM (2 mL) in einem 5 mL Rundkolben mit Septum unter Stickstoff vorgelegt. Das Chlorosilan (0,6 mmol) in 1 mL trockenem DCM wurde langsam mittels einer Spritze über das Septum bei ca. 0°C zugetropft. Das Eisbad wurde entfernt und das Reaktionsgemisch über Nacht bei Raumtemperatur gerührt. Alle flüchtigen Komponenten wurden bei vermindertem Druck abgezogen. Der Rückstand wurde mit 10 mL trockenem Diethylether extrahiert und die Lösung über einen Spritzenfilter (0,2 Micron) filtriert. Das Lösungsmittel wurde bei vermindertem Druck abgezogen. Die hergestellten Verbindungen wurden unter Ausschluss von Feuchtigkeit aufbewahrt.

Die jeweils hergestellten Verbindungen sind nachfolgend in Tabelle 6 zusammengefasst.

### 1.8 Vorschrift f2)

Verbindung S-25 (200 mg, 0,5 mmol) wurde zusammen mit Imidazol (8 mg, 0,1 mmol) und Tributylamin (92 mg, 0,5 mmol) in trockenem DCM (6 mL) in einem 10 mL Rundkolben mit Septum unter Stickstoff vorgelegt. Das Chlorsilan (0,6 mmol) in 1 mL trockenem DCM wurde langsam mittels einer Spritze über das Septum bei ca. 0°C zu der Suspension zugetropft. Das Eisbad wurde entfernt und das Reaktionsgemisch über Nacht bei Raumtemperatur gerührt. Alle flüchtigen Komponenten wurden bei vermindertem Druck abgezogen. Der Rückstand wurde mit 5 mL trockenem Xylen und dann mit 10 mL trockenem Diethylether unter Stickstoff sorgfältig gewaschen und anschließend bei vermindertem Druck getrocknet. Die hergestellten Verbindungen wurden unter Ausschluss von Feuchtigkeit aufbewahrt.

Die jeweils hergestellten Verbindungen sind nachfolgend in Tabelle 7 zusammengefasst.

### 1.9 Allgemeine Vorschrift g)

2-Bromomethyl-1H-phenalen-1-one (272 mg, 1,0 mmol) wurde in DMF (2 mL) vorgelegt. Der Alkohol (2,0 mmol), Kaliumcarbonat (276 mg, 2,0 mmol) und Kaliumiodid (166 mg, 1,0 mmol) wurden zugegeben. Der Ansatz wurde über Nacht bei 60°C unter Stickstoff gerührt. Nach Abkühlen auf Raumtemperatur wurde mit 30 mL Ethylacetat verdünnt und mehrmals mit Wasser und gesättigter Kochsalzlösung (3-4 mal, 20 mL) ausgeschüttelt. Die organische Phase wurde abgetrennt und über Magnesiumsulfat getrocknet. Nach Filtration und Einengen unter vermindertem Druck wurde das Rohprodukt durch Säulenchromatographie mit Ethylacetat / Petrolether Gemisch gereinigt.

Die jeweils hergestellten Verbindungen sind nachfolgend in Tabelle 8 zusammengefasst.

### 1.10 Vorschrift h)

Verbindung S-12 (151 mg, 0,5 mmol) wurde in Acetonitril (3 mL) vorgelegt. Diethylenglykolmonotosylat (260mg, 1,0 mmol), Kaliumcarbonat (276 mg, 2,0 mmol) und Kaliumiodid (166 mg, 1,0 mmol) wurden zugegeben. Der Ansatz wurde über Nacht bei 60°C unter Stickstoff gerührt. Nach Abkühlen auf Raumtemperatur wurde mit 30 mL Ethylacetat verdünnt und mehrmals mit Wasser und gesättigter Kochsalzlösung (3 mal, 20 mL) ausgeschüttelt. Die organische Phase wurde abgetrennt und über Magnesiumsulfat getrocknet. Nach Filtration und Einengen unter vermindertem Druck wurde das Rohprodukt zunächst durch wiederholte Flashchromatographie mit Ethylacetat / Dichlormethan 1:1, dann mit Ethylacetat/ Petrolether 1:3 →2:1 gereinigt.

Die jeweils hergestellten Verbindungen sind nachfolgend in Tabelle 9 zusammengefasst.

### 1.11.1 Allgemeine Vorschrift i)

Das Hydroxy-phenalen-1-on (98 mg, 0,5 mmol) wurde in DMF (3 mL) vorgelegt. Das entsprechende Bromoalkanol bzw. boc-geschützte Aminoalkylbromid (0,75 mmol), Kaliumcarbonat (276 mg, 2,0 mmol) und Kaliumiodid (83 mg, 0,5 mmol) wurden zugegeben. Der Ansatz wurde über Nacht bei 60°C unter Stickstoff gerührt. Nach Abkühlen auf Raumtemperatur wurde mit 30 mL Ethylacetat verdünnt und mehrmals mit Wasser und gesättigter Kochsalzlösung (3 mal, 20 mL) ausgeschüttelt. Die organische Phase wurde abgetrennt und über Magnesiumsulfat getrocknet. Nach Filtration und Einengen unter vermindertem Druck wurde das Rohprodukt durch Säulenchromatographie mit Ethylacetat/ Petrolether Gemisch gereinigt.
Die jeweils hergestellten Verbindungen sind nachfolgend in Tabelle 10 zusammengefasst.

### 1.11.2 Vorschrift j) Entschützung der Boc-Gruppe

Das in Tabelle 9 dargestellte boc-geschützte Phenalen-1-on Derivat (0,2 mmol) wurde in trockenem Dichlormethan (3 mL pro 100 mg) vorgelegt. Eine gesättigte Lösung von Chlorwasserstoff in Diethylether (0,5 mL pro mmol Boc-Gruppe) wurde zugetropft. Der Ansatz wurde 3h unter Feuchtigkeitsausschluss gerührt. Das Produkt wurde durch Zugabe von 30 mL getrocknetem Diethylether gefällt. Der Niederschlag wurde abzentrifugiert und mit Diethylether gründlich gewaschen. Das Produkt wurde bei vermindertem Druck getrocknet.

Die jeweils hergestellten Verbindungen sind nachfolgend in Tabelle 11 zusammengefasst.

### 1.12 Allgemeine Vorschrift k)

3-Hydroxy-phenalen-1-one (60 mg, 0,3 mmol) wurde zusammen mit DIPEA (35 mg, 0,3 mmol) in trockenem Chloroform (2 mL) in einem 5 mL Rundkolben mit Septum unter Stickstoff vorgelegt. 3-(Chloropropyl)-trimethoxysilan (0,5 mmol) in 1 mL trockenem Chloroform wurde langsam mittels einer Spritze über das Septum bei ca. 0°C zugetropft. Das Eisbad wurde entfernt und das Reaktionsgemisch über Nacht bei Raumtemperatur gerührt. Alle flüchtigen Komponenten wurden bei vermindertem Druck abgezogen. Der Rückstand wurde mit 10 mL trockenem Diethylether extrahiert und die Lösung über einen Spritzenfilter (0,2 Micron) filtriert. Das Lösungsmittel wurde bei vermindertem Druck abgezogen. (Produkt immer vor Feuchtigkeit schützen).

Die jeweils hergestellten Verbindungen sind nachfolgend in Tabelle 12 zusammengefasst.

### 1.13 Allgemeine Vorschrift I)

Das substituierte Acetylaceton (2,0 mmol) wurde zusammen mit Boroxid (139 mg, 2,0 mmol) in 4 mL trockenem Ethylacetat vorgelegt und 30min bei 60°C gerührt. Anschließend wurden das substituierte Aldehyd (4,2 mmol) und Tributylborat (920 mg, 4,0 mmol) nacheinander zugeben und der Ansatz für weitere 30 min gerührt. Im nächsten Schritt wurde 2-Methoxyethylamin (180 mg, 2,4 mmol) gelöst in 2 mL Ethylacetat langsam zugetropft. Der Ansatz wurde 12 bis 16h bei 80°C (DC Kontrolle Reaktionsfortschritt), dann bei Raumtemperatur für 6h gerührt. Es wurden 30 mL 50%ige wässrige Essigsäure zugeben und bis zur vollständigen Hydrolyse des Komplexes gerührt (DC Kontrolle; mind. 4h oder bis über Nacht). Die Lösungsmittel wurden bei vermindertem Druck am Rotationsverdampfer abgezogen.

Aufarbeitung I) Der Rückstand wurde in Ethylacetat (ca. 30 mL) aufgenommen und filtriert. Die organische Lösung wurde mehrmals mit wässriger Kochsalzlösung gewaschen (2-3x je 30 mL), über Magnesiumsulfat getrocknet und einrotiert. Das Rohprodukt wurde durch Säulenchromatographie an Kieselgel mit Petrolether / Aceton Gemischen gereinigt.

Aufarbeitung II) Der Rückstand wurde mit Wasser (2x 10 mL) ausgelaugt und bei vermindertem Druck getrocknet. Anschließend wurde Ethylacetat (ca. 10 mL) suspendiert, über eine Fritte abgesaugt und mit kaltem Ethylacetat und Petrolether gewaschen.

Die jeweils hergestellten Verbindungen sind nachfolgend in Tabelle 13 zusammengefasst.

### 1.14 Allgemeine Vorschrift m) Komplexierung mit BF-Gruppe

Verbindung S-52a (0,2 mmol, 118 mg) wurde in einer Mischung aus Essigsäureanhydrid (3 mL) und Diethylether (1,5 mL) vorgelegt. Bortrifluorid Etherat (0,5 mL) wurde unter Feuchtigkeitsausschluss (Septum) bei 0°C unter Rühren langsam zugetropft. Der Ansatz wurde über Nacht in den Tiefkühler gestellt. Das auskristallisierte Produkt wurde abgesaugt, mit eiskaltem Diethylether gewaschen und an der Luft getrocknet.

Die jeweils hergestellten Verbindungen sind nachfolgend in Tabelle 14 zusammengefasst.

### 1.15 Allgemeine Vorschrift n)

Curcumin (74 mg, 0,2 mmol) wurde zusammen mit DIPEA (47 mg, 0,4 mmol) in trockenem Chloroform (3 mL) in einem 5 mL Rundkolben mit Septum unter Stickstoff vorgelegt. 3-(Chloropropyl)-trimethoxysilan (0,5 mmol) in 1 mL trockenem Chloroform wurde langsam mittels einer Spritze über das Septum bei ca. 0°C zugetropft. Das Eisbad wurde entfernt und das Reaktionsgemisch über Nacht bei Raumtemperatur gerührt. Alle flüchtigen Komponenten wurden bei vermindertem Druck abgezogen. Der Rückstand wurde mit 10 mL trockenem Diethylether extrahiert und die Lösung über einen Spritzenfilter (0,2 Micron) filtriert. Das Lösungsmittel wurde bei vermindertem Druck abgezogen.

Die jeweils hergestellten Verbindungen sind nachfolgend in Tabelle 15 zusammengefasst.

### 1.16 Allgemeine Vorschrift o) Entschützung der Boc-Gruppe

Das jeweils in Tabelle 13 dargestellte boc-geschützte Curcuminderivat (0,2 mmol) wurde in Dichlormethan/Methanol 8:1 (trockene Lösungsmittel, 3 mL pro 100 mg) in einem Kolben mit Septum vorgelegt. Eine 40%ige Lösung von Methansulfonsäure in DCM (0,5 mL pro mmol Boc-Gruppe) enthaltend 30 mg Triisopropylsilan wurde unter Kühlung über Kanüle/Septum zugetropft. Der Ansatz wurde 2 h unter Feuchtigkeitsausschluss und Lichtschutz gerührt. Das Produkt wurde durch Zugabe von 30 mL trockenem Diethylether gefällt. Der Niederschlag wurde abzentrifugiert und mit trockenem Diethylether gründlich gewaschen. Der Niederschlag wurde in möglichst wenig Methanol gelöst und in den 10fachen Überschuss getrocknetes Ethylacetat eingetropft. Der entstandene Niederschlag wird abzentrifugiert und zweimal mit wenig trockenem Diethylether gewaschen.

Die jeweils hergestellten Verbindungen sind nachfolgend in Tabelle 16 zusammengefasst.

### 1.17 Allgemeine Vorschrift p1)

Eine Lösung von 9-Acetoxy-2,7,12,17-tetra-(beta-methoxyethyl)porphycen (0,06 g, 0,1 mmol) wurde in Dichlormethan (50 mL) mit NBS (35 mg, 0,2 mmol, für Bromierung) oder lod (51 mg, 0,2 mmol, für lodierung) für 3h bei RT gerührt. Es wurde mit verd. Kaliumiodidlösung (0,5%ig, 30 mL), gesättigter Kochsalzlösung (2 × 60 mL) und Wasser (60 mL) gewaschen. Die organische Phase wurde getrocknet (MgSO₄), filtriert und unter reduziertem Druck eingeengt. Das Produkt wurde durch wiederholte Flash-Chromatographie an Kieselgel mit Dichlormethan/Ethylacetat 2:1 als Laufmittel gereinigt.

Die jeweils hergestellten Verbindungen sind nachfolgend in Tabelle 17 zusammengefasst.

### 1.18 Vorschrift p2)

9-Hydroxy-2,7,12,17-tetra-(beta-methoxyethyl)porphycen (56 mg, 0,1 mmol) wurde in 30 mL trockenem Chloroform gelöst. N-Bromosuccinimid (50 mg, 0,27 mmol) wurde bei 10°C zugegeben und das Reaktionsgemisch im auftauenden Eisbad 30 min und anschließend für 4h bei Raumtemperatur gerührt. Die Lösung wurde mit gesättigter Kochsalzlösung (2 × 20 mL) und Wasser (20 mL) gewaschen. Die organische Phase wurde getrocknet (MgSO₄), filtriert und unter reduziertem Druck eingeengt. Das Produkt wurde durch Säulenchromatographie an Kieselgel mit Dichlormethan / Ethylacetat 1:1 gereinigt.

Die jeweils hergestellten Verbindungen sind nachfolgend in Tabelle 18 zusammengefasst.

### 1.19 Vorschrift q)

Eine Lösung von 9-Acetoxy-2,7,12,17-tetra-(beta-methoxyethyl)porphycen (0,12 g, 0,2 mmol) und Silbernitrat (612 mg, 3,6 mmol) in Dichlormethan (40 mL) und Essigsäure (40 mL) wurde bei 50°C gerührt.

### Bedingung I) für 3 h

### Bedingung II) über Nacht

Nach Abkühlen auf Raumtemperatur wurde das Gemisch mit Ethylacetat (40 mL) verdünnt, in einen Scheidetrichter überführt und mit gesättigter Kochsalzlösung (2 × 40 mL) und Wasser (40 mL) gewaschen. Die organische Phase wurde getrocknet (MgSO₄), filtriert und unter reduziertem Druck eingeengt. Das Produkt wurde durch Flash-Chromatographie an Kieselgel mit Dichlormethan/Ethylacetat 1:1 als Laufmittel gereinigt. Der Feststoff wurde in Petrolether suspendiert, abgesaugt und an der Luft bis zur Gewichtskonstanz getrocknet.

Die jeweils hergestellten Verbindungen sind nachfolgend in Tabelle 19 zusammengefasst.

### 1.20 Vorschrift r)

Zu einer Lösung von 19-Nitro-9-Acetoxy-2,7,12,17-tetra-(beta-methoxyethyl)porphycen (0,13 g, 0,2 mmol) in Pyridin (6 mL) wurde Zinn(II)chlorid Dihydrat (270 mg, 1,2 mmol) zugegeben und anschließend der Ansatz unter Stickstoff für 1h bei 110°C gerührt. Nach Abkühlen auf Raumtemperatur wurde das Rohprodukt durch Zugabe von 50 mL Petrolether gefällt und der Überstand verworfen. Der Niederschlag wurde mit Dichlormethan (3x 15 mL) ausgelaugt, die vereinigten organischen Extrakte filtriert und in einen Scheidetrichter überführt. Es wurde mit gesättigter Kochsalzlösung (2 × 30 mL) und Wasser (30 mL) gewaschen. Die organische Phase wurde getrocknet (MgSO₄), filtriert und unter reduziertem Druck eingeengt. Der Feststoff wurde in Petrolether suspendiert, abgesaugt und bei vermindertem Druck getrocknet. Das Produkt wurde ohne weitere Reinigung direkt weiter umgesetzt.

Die jeweils hergestellten Verbindungen sind nachfolgend in Tabelle 20 zusammengefasst.

### 1.21 Allgemeine Vorschrift s1)

19-Amino-9-acetoxy-2,7,12,17-tetra-(beta-methoxyethyl)porphycen (62 mg, 0,1 mmol) und Pyridin (0,2 mL, 3 mmol) wurden in trockenem Dichlormethan (2 mL) bei 2-5°C vorgelegt. Das Carbonsäure- oder Sulfonsäurechlorid (0,5 mmol) in trockenem Dichlormethan (0,5 mL) wurde zugetropft und anschließend der Ansatz für 3h bei Raumtemperatur gerührt (DC Kontrolle). Falls nötig wurde 2h bei Raumtemperatur weitergerührt oder 30min refluxiert. Es wurde mit Ethylacetat (20 mL) verdünnt. Die Lösung wurde mit gesättigter Kochsalzlösung (2 × 20 mL) und Wasser (20 mL) gewaschen. Die organische Phase wurde getrocknet (MgSO₄), filtriert und unter reduziertem Druck eingeengt. Der Feststoff wurde durch Säulenchromatographie an Kieselgel mit Dichlormethan / Ethylacetat 2:1 (Verb. S-71 Ac) oder Dichlormethan / Ethylacetat 4:1 → 3:1 (Verb. S-70b Ac) gereinigt und anschließend mit Petrolether gewaschen.

Die jeweils hergestellten Verbindungen sind nachfolgend in Tabelle 21 zusammengefasst.

### 1.22 Vorschrift s2)

19-Amino-9-acetoxy-2,7,12,17-tetra-(beta-methoxyethyl)porphycen (31 mg, 0,05 mmol) und Pyridin (0,02 mL, 0,3 mmol) wurden in trockenem Tetrahydrofuran (0,5 mL) bei 2-5°C vorgelegt. Das Carbonsäureanhydrid (0,3 mmol) in trockenem Tetrahydrofuran (0,5 mL) wurde zugetropft und anschließend der Ansatz für 3h bei Raumtemperatur gerührt, dann über Nacht refluxiert. Es wurde mit Dichlormethan (20 mL) verdünnt. Die Lösung wurde mit gesättigter Kochsalzlösung (10 mL), 1N wässriger Salzsäure (10 mL) und Wasser (10 mL) gewaschen. Die organische Phase wurde getrocknet (MgSO₄), filtriert und unter reduziertem Druck eingeengt. Der Feststoff wurde durch Säulenchromatographie an Kieselgel mit Dichlormethan / Ethylacetat 1:1 → 1:2 → Ethylacetat → Ethylacetat / Ethanol 10:1 bzw. Dichlormethan / Ethanol 20:1 → 8:1 gereinigt.

Die jeweils hergestellten Verbindungen sind nachfolgend in Tabelle 22 zusammengefasst.

### 1.23 Allgemeine Vorschrift t)

Zur Entschützung der Acetatgruppe wurde das Porphycencarbonamid bzw. -sulfonamid (0,1 mmol) in THF (2 mL) vorgelegt. Wässrige Lithiumhydroxidlösung (0,5 mL, 1 N, 5 Äquivalente) wurde in einer Portion zugegeben. Nach 4 h Rühren bei 40°C in einer Stickstoffatmosphäre wurde das Gemisch mit Diethylether/Dichlormethan 1:1 (30 mL) verdünnt, mit gesättigter Kochsalzlösung (2 × 20 mL) und Wasser (20 mL) gewaschen. Die organische Phase wurde getrocknet (MgSO₄), filtriert und unter reduziertem Druck eingeengt. Der Feststoff wurde in Petrolether suspendiert und abgesaugt.

Die jeweils hergestellten Verbindungen sind nachfolgend in Tabelle 23 zusammengefasst.

### 1.24 Vorschrift u)

9-Acetoxy-2,7,12,17-tetra-(beta-methoxyethyl)porphycen (0,1 mmol) wurde in THF (4 mL) gelöst. Wässrige Natriumhydroxidlösung (1 mL, 2 N, 20 Äquivalente) wurde in einer Portion zugegeben. Nach 6 h Rühren bei 40°C in einer Stickstoffatmosphäre wurde das Gemisch mit Diethylether/Dichlormethan 1:1 (20 mL) verdünnt, in einen Scheidetrichter überführt und mit gesättigter Kochsalzlösung (2 × 10 mL) und Wasser (10 mL) gewaschen. Die organische Phase wurde getrocknet (MgSO₄), filtriert und unter reduziertem Druck eingeengt. Der Feststoff wurde in wenig Ethylacetat suspendiert und abgesaugt. Die Kristalle wurden mit eiskaltem Ethylacetat gewaschen und bei reduziertem Druck bis zur Gewichtskonstanz getrocknet. Bei Bedarf kann das Produkt durch Flash-Chromatographie mit Kieselgel unter Verwendung von Dichlormethan/Ethylacetat 2:1 (Rf ~ 0,4) als Laufmittel gereinigt werden.

Die jeweils hergestellten Verbindungen sind nachfolgend in Tabelle 24 zusammengefasst.

### 1.25 Vorschrift v)

9-Hydroxy-2,7,12,17-tetra-(beta-methoxyethyl)porphycen (Verb. S-58; 0,12 g, 0,2 mmol) in Chloroform (40 mL) wurde mit 5 mL einer gesättigten methanolischen Zink(II)acetatlösung (enthält ca. 75 mg Zinksalz) für 3 Tage bei 60°C unter Stickstoff gerührt. Das Lösungsmittel wurde abgezogen und der Rückstand in Chloroform/Ethanol 50:1 (30 mL) aufgenommen. Das Produkt wurde durch Zugabe von 120 mL Petrolether gefällt. Der Niederschlag wurde abgesaugt, mit Petrolether gründlich gewaschen und an der Luft getrocknet. Bei Bedarf konnte das Produkt durch Flash-Chromatographie an Kieselgel mit Ethylacetat → Ethylacetat/Ethanol 5:1 als Laufmittel gereinigt werden.

Die jeweils hergestellten Verbindungen sind nachfolgend in Tabelle 25 zusammengefasst.

### 1.26 Vorschrift w1)

9-Acetoxy-2,7,12,17-tetra-(beta-methoxyethyl)porphycen (0,06 g, 0,1 mmol) wurde in trockenem Dichlormethan (20 mL) unter Stickstoff vorgelegt und auf -20°C gekühlt. Unter Feuchtigkeitsausschluss wurde eine Lösung von Bortribromid in Dichlormethan (4 mL, 0,2 M) zugetropft.

Bedingung I) Der Ansatz wurde im auftauenden Eisbad für 30 mins gerührt.

Bedingung II) Der Ansatz wurde im auftauenden Eisbad für 1h und dann bei Raumtemperatur für 1,5h gerührt.

Wässrige Natriumhydrogencarbonatlösung (5%ig, 10 mL) wurde zugegeben und die Mischung 10 min lebhaft gerührt. Nach Verdünnen mit THF (25 mL) wurde das ausgefallene Produkt abfiltriert. Der schwarzblaue Niederschlag wurde zunächst mit wenig kaltem THF, dann mit Eiswasser gewaschen und an der Luft bis zur Gewichtskonstanz

Die jeweils hergestellten Verbindungen sind nachfolgend in Tabelle 26 zusammengefasst.

### 1.27 Vorschrift w2)

9-Acetoxy-2,7,12,17-tetra-(beta-methoxyethyl)porphycen (0,06 g, 0,1 mmol) wurde in trockenem Dichlormethan (5 mL) vorgelegt und im Eisbad gekühlt. Eine Lösung von Bromwasserstoff in Eisessig (33% w/w; 5 mL) wurde unter Feuchtigkeitsausschluss über 15 min zugetropft. Der Ansatz wurde im auftauenden Eisbad für 1h, dann bei Raumtemperatur für 2 Tage gerührt.

Die Lösung wurde mit 30 mL Dichlormethan verdünnt und mit gesättigter Kochsalzlösung (2x 30 mL), Natriumhydrogencarbonatlösung (5%ig, 30mL) und Wasser (30 mL) gewaschen. Die organische Phase wurde getrocknet (MgSO₄), filtriert und unter reduziertem Druck eingeengt. Das Produkt wurde durch Flash-Chromatographie an Kieselgel unter Verwendung von Dichlormethan / Ethylacetat 3:1 als Laufmittel gereinigt und bei reduziertem Druck bis zur Gewichtskonstanz getrocknet. Es wurden ein Hauptprodukt (S-60a) und ein Nebenprodukt (S-60b) isoliert.

Die jeweils hergestellten Verbindungen sind nachfolgend in Tabelle 27 zusammengefasst.

### 1.28 Allgemeine Vorschrift x)

9-(3-lodoprop-1-oxy)-2,7,12,17-tetra-(beta-methoxyethyl)porphycen (0,15 g, 0,2 mmol) wurden in 1 mL Methanol suspendiert. Das tertiäre Amin wurde als 1 M Lösung in Methanol zugegeben (2 mL) und der Ansatz für 36 bei Raumtemperatur gerührt. Alle flüchtigen Komponenten wurden bei vermindertem Druck abgezogen, der tiefblaue Rückstand in möglichst wenig Methanol gelöst und durch Zugabe von trockenem Diethylether gefällt (ca. 20-facher Überschuss). Der Niederschlag wurde abzentrifugiert und mit Petrolether gründlich gewaschen. Das Produkt wurde bei vermindertem Druck getrocknet.

Die jeweils hergestellten Verbindungen sind nachfolgend in Tabelle 28 zusammengefasst.

### 1.29 Allgemeine Vorschrift y1)

9-Hydroxy-2,7,12,17-tetra-(beta-methoxyethyl)porphycen (Verb. S-58a; 0,17 g, 0,3 mmol) wurde in trockenem DMF (4 mL) gelöst. Anschließend wurde das Alkylierungsreagenz (1,0 mmol), Kaliumiodid (83 mg, 0,5 mmol) und Caesiumcarbonat (488 mg, 1,5 mmol) zugegeben. Nach Rühren bei 60°C in einer Stickstoffatmosphäre über Nacht (DC-Kontrolle) wurde das Gemisch mit Ethylacetat (30 mL) verdünnt, in einen Scheidetrichter überführt und mit gesättigter Kochsalzlösung (3 × 20 mL) und Wasser (20 mL) gewaschen. Die organische Schicht wurde getrocknet (MgSO₄), filtriert und unter reduziertem Druck eingeengt. Das Rohmaterial wurde durch Säulenchromatographie mit Silicagel unter Verwendung von Dichlormethan/Ethylacetat Gemisch als Elutionsmittel gereinigt (Bsp. I und II mit 3:1 → 1:1, die übrigen Bsp. mit 6:1 → 4:1). Schließlich wurde das Produkt in Petrolether suspendiert, abfiltriert und mit Petrolether gewaschen.

Die jeweils hergestellten Verbindungen sind nachfolgend in Tabelle 29 zusammengefasst.

### 1.30 Allgemeine Vorschrift y2)

9-Hydroxy-2,7,12,17-tetra-(beta-methoxyethyl)porphycen (Verb. S-58a; 0,12 g, 0,2 mmol) wurde in trockenem DCM (4 mL) gelöst im Eisbad unter Feuchtigkeitsauschluss gerührt. Anschließend wurde in dieser Reihenfolge die Carbonsäure (0,5 mmol), DMAP (61 mg, 0,5 mmol) und EDC Hydrochlorid (95 mg, 1 mmol) nacheinander zugegeben. Der Ansatz wurde 1h im auftauenden Eisbad, dann bei RT über Nacht gerührt. Das Gemisch wurde mit Ethylacetat (30 mL) verdünnt, in einen Scheidetrichter überführt und mit gesättigter Kochsalzlösung (2 × 20 mL) und Wasser (20 mL) gewaschen. Die organische Phase wurde getrocknet (MgSO₄), filtriert und unter reduziertem Druck eingeengt. Das Rohmaterial wurde durch Säulenchromatographie mit Silicagel unter Verwendung von Dichlormethan/Ethylacetat 4:1 und Ethylacetat / Petrolether 2:3 → 1:1 als Laufmittel gereinigt.

Die jeweils hergestellten Verbindungen sind nachfolgend in Tabelle 30 zusammengefasst.

### 1.31 Vorschrift y3)

9-Hydroxy-2,7,12,17-tetra-(beta-methoxyethyl)porphycen (Verb. S-58a; 56 mg, 0,1 mmol) wurde zusammen mit DIPEA (17 mg, 0,15 mmol) in trockenem Chloroform (2 mL) in einem 5 mL Rundkolben mit Septum unter Stickstoff vorgelegt. 3-(Chloropropyl)-trimethoxysilan (40 mg, 0,2 mmol) in 1 mL trockenem Chloroform wurde langsam mittels einer Spritze über das Septum bei ca. 0°C zugetropft. Das Eisbad wurde entfernt und das Reaktionsgemisch über Nacht bei Raumtemperatur gerührt. Alle flüchtigen Komponenten wurden bei vermindertem Druck abgezogen. Der Rückstand wurde mit 10 mL trockenem Diethylether extrahiert und die Lösung über einen Spritzenfilter (0,2 Micron) filtriert. Das Lösungsmittel wurde bei vermindertem Druck abgezogen.

Die jeweils hergestellten Verbindungen sind nachfolgend in Tabelle 31 zusammengefasst.

### 1.32 Allgemeine Vorschrift z1) Entschützung der tert.-Butyl bzw. Boc-Gruppe

Das geschützte Porphycenderivat (0,1 mmol) wurde in Dichlormethan (5 mL pro 100 mg) vorgelegt. Eine gesättigte Lösung von Chlorwasserstoff in Diethylether (0,5 mL pro mmol tert.-Butyl oder Boc-Gruppe) wurde zugetropft. Der Ansatz wurde 6 h unter Feuchtigkeitsausschluss gerührt. Das Produkt wurde durch Zugabe von 30 mL Petrolether gefällt. Der Niederschlag wurde abzentrifugiert und mit Petrolether gründlich gewaschen. Das Produkt wurde bei vermindertem Druck getrocknet.

Die jeweils hergestellten Verbindungen sind nachfolgend in Tabelle 32 zusammengefasst.

### 1.33 Allgemeine Vorschrift z2) Entschützung des Methylesters

Der Methylester (0,1 mmol) wurde in THF (4 mL) gelöst. Wässrige Natriumhydroxidlösung (0,5 mL, 1 N, 5 Äquivalente) wurde in einer Portion zugegeben. Nach 4 h Rühren bei RT wurde mit Ethylacetat verdünnt (20 mL). Die Lösung wurde im Scheidetrichter mit gesättigter Kochsalzlösung (2x 10 mL), 1 N HCl (10 mL) und Wasser (10 mL) gewaschen. Die organische Phase wurde getrocknet (MgSO₄), filtriert und unter reduziertem Druck eingeengt. Falls nötig konnte mit Flashchromatographie an Kieselgel mit Dichlormethan / Ethylacetat 1:1 weiter gereinigt werden. Die jeweils hergestellten Verbindungen sind nachfolgend in Tabelle 33 zusammengefasst.

**Tabelle 3: Mit allgemeiner Vorschrift b) hergestellte Verbindungen**

| ***No*** | ***Reaktant Molmasse Einwaage*** | ***Zielverbindung*** / ***Nummer*** | ***Ausbeute*** / ***Aussehen*** | ***Molekülmasse*** / ***Summenformel*** | ***Analytik*** |
|---|---|---|---|---|---|
| I | N,N-Dimethylethanolamin (CAS 108-01-0) | 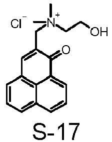 | 137 mg | 317,85 g/mol | Siehe WO2018167264A1 / EP17161718.6 |
| | | | 86 % d.Th. | | |
| | 89,1 g/mol | | Gelbes Pulver | C₁₈H₂₀NO₂Cl | |
| | 188 mg | | | | |
| II | 2-(2-Dimethylaminoethyloxy)ethanol (CAS 1704-62-7) | 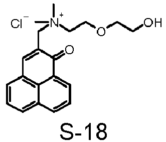 | 128 mg | 361,85 g/mol | Siehe WO2018167264A1 / EP17161718.6 |
| | | | 71 % d.Th. | | |
| | | | Schmutzig gelber Feststoff | C₂₀H₂₄NO₃Cl | |
| | 133,2 g/mol | | | | |
| | 266 mg | | | | |
| III | 2-[2-(2-Dimethylaminoethoxy)-ethoxy]-ethanol (CAS 2741-30-2) | 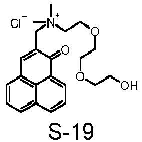 | 118 mg | 405,95 g/mol | Siehe WO2018167264A1 / EP17161718.6 |
| | | | 58 % d.Th. | | |
| | | | Gelbbraunes Öl | C₂₂H₂₈NO₄Cl | |
| | 177,2 g/mol | | | | |
| | 354 mg | | | | |
| IV | 3-Dimethylaminophenol (CAS 99-07-0) | 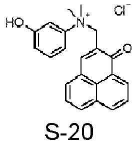 | 62 mg | 365,86 g/mol | **¹H-NMR** (400 MHz; MeOD): δ [ppm] = 8,58 (d, J = 7,3 Hz, 1H), 8,39 (d, J = 8,0 Hz, 1H), 8,24 (d, J = 8,0 Hz, 1H), 8,18 (d, J = 7,9 Hz, 1H), 7,84 - 7,90 (m, 1H), 7,83 (d, J = 7,6 Hz, 1H), 7,65 - 7,76 (m, 3H), 7,54 - 7,63 (m, 2H), 5,09 (s, 2H), 3,71 (s, 6H); - **MS** (ESI-MS, 95% H₂O + 0,1% HCOOH / 5% MeCN + 0,1% HCOOH): e/z (%) = 330,15 (100%, M⁺); - UV (H₂O): λ/ [nm] (rel. [a.u.]) = 250 (1), 360 - 420 (0,48); |
| | | | 34 % d.Th. | | |
| | 137,18 g/mol | | Gelbes Pulver | C₂₂H₂₀NO₂Cl | |
| | 264 mg | | | | |
| V | 1-(3-Dimethylaminophenyl)ethanol (CAS 5339-01-5) | 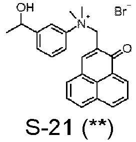 | 73 mg | 438,36 g/mol | **¹H-NMR** (400 MHz; MeOD): δ [ppm] = 8,56 (d, J = 7,2 Hz, 1H), 8,37 (d, J = 7,9 Hz, 1H), 8,23 (d, J = 8,0 Hz, 1H), 8,16 (d, J = 7,9 Hz, 1H), 7,85 - 7,89 (m, 1H), 7,82 (d, J = 7,6 Hz, 1H), 7,63 - 7,72 (m, 3H), 7,55 - 7,62 (m, 2H), 5,08 (s, 2H), 3,73 (s, 6H), 1,48 (m, 1H), 1,34 (d, J = 6,2 Hz, 3H); - **MS** (ESI-MS, 95% H₂O + 0,1% HCOOH / 5% MeCN + 0,1% HCOOH): e/z (%) = 358,18 (100%, M⁺); - UV (H₂O): λ/ [nm] (rel. [a.u.]) = 250 (1), 360 - 420 (0,5); |
| | | | 37 % d.Th. | | |
| | | | Gelbes Pulver | C₂₄H₂₄NO₂Br | |
| | 165,24 g/mol | | | | |
| | 330 mg | | | | |
| VI | 3-Dimethylaminobenzoesäure (CAS 99-64-9) | 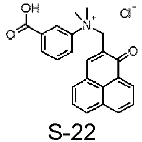 | 31 mg | 393,87 g/mol | **MS** (ESI-MS, 95% H₂O + 0,1% HCOOH / 5% MeCN + 0,1% HCOOH): e/z (%) = 358,14 (100%, M⁺); - **UV** (H₂O): λ/ [nm] (rel. [a.u.]) = 255 (1), 360 - 420 (0,5); |
| | | | 16% d.Th. | | |
| | | | Schmutzig gelbes Pulver | C₂₃H₂₀NO₃Cl | |
| | 165,19 g/mol | | | | |
| | 330 mg | | | | |
| VI | Ethyl 4-(Dimethylamino) benzoat (CAS 10287-53-3) | 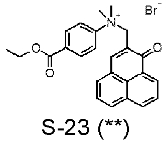 | 47 mg | 466,37 g/mol | **¹H-NMR** (600 MHz; DMSO-d6): δ [ppm] = 8,48 (d, J = 7,7 Hz, 1H), 8,42 (d, J = 7,8 Hz, 1H), 8,18 (d, J = 8,0 Hz, 1H), 8,02 (d, J = 7,6 Hz, 1H), 7,93 (s, 1H), 7,87 (t, J = 7,8 Hz, 1H), 7,76 (d, J = 7,6 Hz, 2H), 7,70 (t, J = 7,6 Hz, 1H), 6,79 (m, 2H), 5,03 (s, 2H), 4,21 (q, J = 6,6 Hz, 2H), 2,98 (s, 6H), 1,27 (d, J = 6,4 Hz, 3H); - **UV** (H₂O): λ/ [nm] (rel. [a.u.]) = 256 (1), 360 - 420 (0,47); |
| | | | 23 % d.Th. | | |
| | | | Dunkelgelbes Pulver | C₂₅H₂₄NO₃Br | |
| | 193,25 g/mol | | | | |
| | 386 mg | | | | |

| | | | | | |
|---|---|---|---|---|---|
| (**) Reaktion durchgeführt unter Zusatz von 0,12 mL DIPEA (2 eq). | | | | | |

**Tabelle 4: Mit allgemeiner Vorschrift d) hergestellte Verbindungen**

| ***No*** | ***Reaktant Molmasse Einwaage*** | ***Zielverbindung*** / ***Nummer*** | ***Ausbeute*** / ***Aussehen*** | ***Molekülmasse*** / ***Summenformel*** | ***Analytik*** |
|---|---|---|---|---|---|
| I | 4-[2-(triethoxysilyl) ethyl]pyridine (CAS 98299-74-2) | 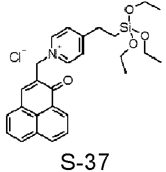 | | 498,1 g/mol | **¹H-NMR** (400 MHz, DMSO-d6): δ [ppm] = 9,08 (m, 2H), 8,52 (m, 2H), 8,37 (m, 3H), 8,14 (m, 1H), 7,94 (m, 2H), 7,79 (m, 1H), 6,41 (m, 2H), 5,71 (s, 2H), 3,35 (m, 6H), 2,92 (m, 2H), 1,08 (t, J = 6,6 Hz, 9H); - MS (ESI-MS, 95% H₂O + 0,1% HCOOH / 5% MeCN + 0,1% HCOOH): e/z (%) = 462,21 (100%, M⁺); |
| | | | | C₂₇H₃₂NO₄SiCl | |
| | | | 177 mg | | |
| | | | 71 % d.Th. | | |
| | | | Oranges Glas | | |
| | 269,43 g/mol | | | | |
| | 162 mg | | | | |

**Tabelle 5: Mit allgemeiner Vorschrift e) hergestellte Verbindungen**

| ***No*** | ***Reaktant Molmasse Einwaage*** | ***Zielverbindung*** / ***Nummer*** | ***Ausbeute*** / ***Aussehen*** | ***Molekülmasse*** / ***Summenformel*** | ***Analytik*** |
|---|---|---|---|---|---|
| I | (N,N-Dimethyl-3-aminopropyl) trimethoxysilane | 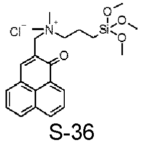 | 150 mg | 436,02 g/mol | Siehe WO2018167264A1 / EP17161718.6 |
| | | | 69 % d.Th. | | |
| | (CAS 2530-86-1) | | Oranges Glas | C₂₂H₃₀NO₄SiCl | |
| | 207,3 g/mol 114 mg | | | | |
| II | N-[3-(Trimethoxysilyl) propyl]butan-1-amin | 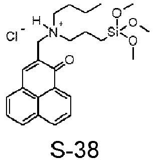 | 130 mg | 464,08 g/mol | **¹H-NMR** (400 MHz, CDCl₃): δ [ppm] = 8,62 (d, J = 7,8 Hz, 1H), 8,17 (d, J = 8,0 Hz, 1H), 7,96 (d, J = 8,0 Hz, 1H), 7,91 (s, 1H), 7,74 - 7,82 (m, 2H), 7,58 (m, 2H), 4,67 (s, 2H), 3,57 (s, 9H), 2,91 (m, 2H), 2,53 (m, 2H), 1,73 (m, 2H), 1,51 (m, 2H), 1,32 (m, 2H), 0,91 (t, J = 5,6 Hz, 3H), 0,67 (m, 2H); |
| | | | 56 % d.Th. | | |
| | (CAS 31024-56-3) | | Oranges Glas | C₂₄H₃₄NO₄SiCl | |
| | 235,39 g/mol | | | | |
| | 129 mg | | | | |
| III | Trimethoxy [3-(phenyl amino)propyl]silan | 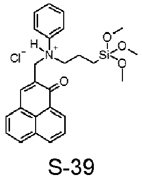 | 188 mg | 488,08 g/mol | **¹H-NMR** (400 MHz, CDCl₃): δ [ppm] = 8,68 (d, J = 7,8 Hz, 1H), 8,22 (d, J = 8,0 Hz, 1H), 8,04 (d, J = 8,0 Hz, 1H), 7,92 (s, 1H), 7,80 (m, 2H), 7,62 (t, J = 7,8 Hz, 1H), 7,18 (t, J = 6,6 Hz, 2H), 6,69 (m, 1H), 6,62 (d, J = 6,8 Hz, 2H), 4,68 (s, 2H), 3,58 (s, 9H), 3,12 (m, 2H), 1,74 (m, 2H), 0,61 (m, 2H); |
| | | | 77 % d.Th. | | |
| | | | Dunkelgelber amorpher Feststoff | | |
| | (CAS 3068-76-6) | | | C₂₆H₃₀NO₄SiCl | |
| | 255,39 g/mol | | | | |
| | 140 mg | | | | |
| IV | N-(Hydroxyethyl)-N-methylamino-propyl trimethoxysilan | 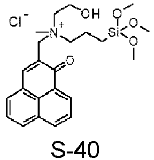 | 167 mg | 466,05 g/mol | **¹H-NMR** (400 MHz, CDCl₃): δ [ppm] = 8,66 (d, J = 7,9 Hz, 1H), 8,20 (d, J = 8,0 Hz, 1H), 8,03 (d, J = 8,0 Hz, 1H), 7,91 (s, 1H), 7,77 - 7,84 (m, 2H), 7,59 (t, J = 7,8 Hz, 1H), 4,67 (s, 2H), 3,75 (m, 2H), 3,56 (s, 3H), 3,45 (s, 9H), 2,48 (m, 2H), 2,37 (m, 2H), 1,59 (m, 2H), 0,65 (m, 2H); - **MS** (ESI-MS, 95% H₂O + 0,1% HCOOH / 5% MeCN + 0,1% HCOOH): e/z (%) = 430,20 (100%, M⁺), 416,19 (11%, (M - CH₂)⁺); |
| | (CAS 330457-46-0) | | 72 % d.Th. | C₂₃H₃₂NO₅SiCl | |
| | 237,37 g/mol | | Oranges Glas | | |
| | 130 mg | | | | |
| V | 4-[3-(Trimethoxysilyl) propyl]morpholin | 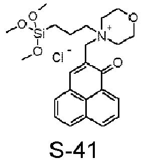 | 176 mg | 476,09 g/mol | **¹H-NMR** (400 MHz, CDCl₃): δ [ppm] = 8,67 (d, J = 8,0 Hz, 1H), 8,21 (d, J = 8,0 Hz, 1H), 8,03 (d, J = 8,0 Hz, 1H), 7,92 (s, 1H), 7,76 - 7,83 (m, 2H), 7,61 (t, J = 8,0 Hz, 1H), 4,68 (s, 2H), 3,71 (m, 4H), 3,54 (s, 9H), 2,43 (m, 4H), 2,32 (m, 2H), 1,59 (m, 2H), 0,63 (m, 2H); - **MS** (ESI-MS, 95% H₂O + 0,1% HCOOH / 5% MeCN + 0,1% HCOOH): e/z (%) = 442,20 (100%, M⁺), 428,19 (9%, (M -CH₂)⁺); |
| | (CAS 31024-54-1) | | 75 % d.Th. | | |
| | 249,38 g/mol | | Oranges Glas | C₂₅H₃₄NO₄SiCl | |
| | 139 mg | | | | |
| VI | 3-(N-Styrylmethyl-2-aminoethylamino)propyl trimethoxysilane | 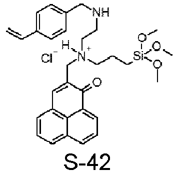 | 104 mg | 537,20 g/mol | **MS** (ESI-MS, 95% H₂O + 0,1% HCOOH / 5% MeCN + 0,1% HCOOH): e/z (%) = 532,23 (100%, M⁺); |
| | | | 39 % d.Th. | | |
| | (CAS 94951-11-8) | | Bräunliches Glas | C₃₁H₃₉N₂O₄SiCl | |
| | 338,52 g/mol | | | | |
| | 186 mg | | | | |
| VII | Bis-[3-(methylamino)-propyl]-trimethoxysilan | 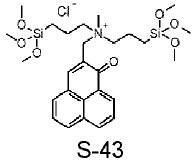 | 132 mg | 584,26 g/mol | **¹H-NMR** (400 MHz, CDCl₃): δ [ppm] = 8,61 (d, J = 7,3 Hz, 1H), 8,24 (d, J = 8,0 Hz, 1H), 8,08 (d, J = 8,0 Hz, 1H), 7,92 (s, 1H), 7,75 - 7,82 (m, 2H), 7,60 (t, J = 7,6 Hz, 1H), 7,42 (s, 1H), 5,08 (s, 2H), 3,56 (s, 18H), 2,35 (m, 4H), 2,22 (bs, 3H), 1,58 (m, 4H), 0,61 (m, 4H); - **MS** (ESI-MS, 95% H₂O + 0,1% HCOOH / 5% MeCN + 0,1% HCOOH): e/z (%) = 548,25 (100%, M⁺); |
| | | | 48 % d.Th. | | |
| | | | Braungelber amorpher Feststoff | C₂₇H₄₂NO₇Si₂Cl | |
| | (CAS 31024-70-1) | | | | |
| | 355,58 g/mol | | | | |
| | 195 mg | | | | |
| VIII | Triethoxy-3-(2-imidazolin-1-yl)-propylsilan | 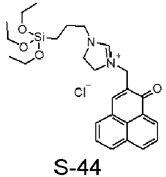 | 140 mg | 503,12 g/mol | **¹H-NMR** (400 MHz, CDCl₃): δ [ppm] = 8,58 (d, J = 7,2 Hz, 1H), 8,21 (d, J = 8,0 Hz, 1H), 8,06 (d, J = 8,0 Hz, 1H), 7,91 (s, 1H), 7,74 - 7,81 (m, 2H), 7,61 (m, 1H), 7,42 (s, 1H), 4,92 (s, 2H), 4,18 (m, 2H), 3,79 (m, 6H), 3,42 (m, 2H), 3,24 (m, 2H), 1,65 (m, 2H), 1,18 (m, 9H), 0,59 (m, 2H); - **MS** (ESI-MS, 95% H₂O + 0,1% HCOOH / 5% MeCN + 0,1% HCOOH): e/z (%) = 467,24 (100%, M⁺); |
| | | | 66 % d.Th. | | |
| | (CAS 58068-97-6) | | Oranges Glas | C₂₆H₃₅N₂O₄SiCl | |
| | 274,43 g/mol | | | | |
| | 151 mg | | | | |

**Tabelle 6: Mit allgemeiner Vorschrift f1) hergestellte Verbindungen**

| ***No*** | ***Reaktant Molmasse Einwaage*** | ***Zielverbindung*** / ***Nummer*** | ***Ausbeute*** / ***Aussehen*** | ***Molekülmasse*** / ***Summenformel*** | ***Analytik*** |
|---|---|---|---|---|---|
| I | Triethoxychlorosilan (CAS 4667-99-6) | 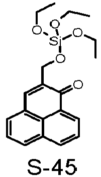 | 64 mg | 372,50 g/mol | Siehe WO2018167264A1 / EP17161718.6 |
| | | | 57 % d.Th. | | |
| | | | Schmutzig gelber amorpher Feststoff | | |
| | 198,72 g/mol | | | C₂₀H₂₄O₅Si | |
| | 120 mg | | | | |
| II | Allyldimethylchlorosilan (CAS 4028-23-3) | 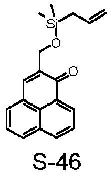 | 67 mg | 308,46 g/mol | Siehe WO2018167264A1 / EP17161718.6 |
| | | | 73 % d.Th. | | |
| | 134,68 g/mol | | Gelbes Glas | C₁₉H₂₀O₂Si | |
| | 81 mg | | | | |
| III | Triethoxychlorosilan (CAS 4667-99-6) | 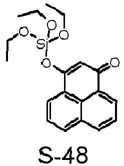 | 54 mg | 358,47 g/mol | Siehe WO2018167264A1 / EP17161718.6 |
| | | | 51 % d.Th. | | |
| | 198,72 g/mol | | Oranges Glas | C₁₉H₂₂O₅Si | |
| | 120 mg | | | | |
| IV | Allyldimethylchlorosilan (CAS 4028-23-3) | 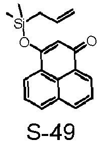 | 49 mg | 294,43 g/mol | Siehe WO2018167264A1 / EP17161718.6 |
| | | | 55 % d.Th. | | |
| | 134,68 g/mol | | Oranges Glas | C₁₈H₁₈O₂Si | |
| | 81 mg | | | | |

**Tabelle 7: Mit allgemeiner Vorschrift f2) hergestellte Verbindungen**

| ***No*** | ***Reaktant Molmasse Einwaage*** | ***Zielverbindung*** / ***Nummer*** | ***Ausbeute*** / ***Aussehen*** | ***Molekülmasse*** / ***Summenformel*** | ***Analytik*** |
|---|---|---|---|---|---|
| I | Triethoxychlorosilan (CAS 4667-99-6) | 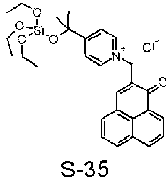 | 155 mg | 528,12 g/mol | **¹H-NMR** (400 MHz, DMSO-d₆): δ [ppm] = 9,19 (d, J = 7,9 Hz, 2H), 8,45 - 8,52 (m, 3H), 8,33 (d, J = 8,0 Hz, 1H), 8,22 (d, J = 7,3 Hz, 2H), 8,16 (d, J = 7,2 Hz, 1H), 7,91 (t, J = 7,6 Hz, 1H), 7,81 (t, J = 8,0 Hz, 1H), 5,78 (s, 2H), 3,68 - 3,87 (m, approx. 6H), 1,36 (s, 6H) 1,21 (t, approx. 9H); - **MS** (ESI-MS, 95% H₂O + 0,1% HCOOH / 5% MeCN + 0,1% HCOOH): e/z (%) = 492,22 (100%, M⁺); |
| | | | 64 % d.Th. | | |
| | | | Oranger amorpher Feststoff | | |
| | | | | C₂₈H₃₄NO₅SiCl | |
| | 198,72 g/mol | | | | |
| | 120 mg | | | | |

**Tabelle 8: Mit allgemeiner Vorschrift g) hergestellte Verbindungen**

| ***No*** | ***Reaktant Molmasse Einwaage*** | ***Zielverbindung*** / ***Nummer*** | ***Ausbeute*** / ***Aussehen*** | ***Molekülmasse*** / ***Summenformel*** | ***Analytik*** |
|---|---|---|---|---|---|
| I | Hydrochinon (CAS 123-31-9) | 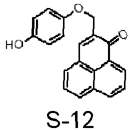 | 178 mg | MW: 302,33 g/mol | **¹H-NMR** (400 MHz, DMSO-d6): δ [ppm] = 8,97 (s, 1H), 8,55 (d, J = 8,0 Hz, 1H), 8,48 (d, J = 8,0 Hz, 1H), 8,26 (d, J = 8,0 Hz, 1H), 8,08 (m, 2H), 7,82 (t, J = 7,9 Hz, 1H), 7,75 (t, J = 7,9 Hz, 1H), 6,90 (m, 2H), 6,71 (m, 2H), 4,98 (s, 2H); - **MS** (ESI-MS, 95% H₂O + 0,1% HCOOH / 5% MeCN + 0,1% HCOOH): e/z (%) = 303,10 (100%, MH⁺), 627,18 (54%, (2M+Na⁺)⁺); - **UV** (H₂O): λ/ [nm] (rel. [a.u.]) = 250 (1), 360 - 420 (0,46); |
| | | | 59 % d.Th. | | |
| | 110,11 g/mol | | Gelbes Glas | MF: C₂₀H₁₄O₃ | |
| | 220 mg | | | | |
| II | 4-Hydroxybenzylalkohol (CAS 623-05-2) | 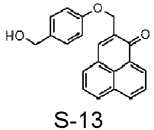 | 228 mg | MW: 316,36 g/mol | Siehe WO2018167264A1 / EP17161718.6 |
| | | | 72 % d.Th. | | |
| | | | Gelber Feststoff | | |
| | 124,14 g/mol | | | MF: C₂₁H₁₆O₃ | |
| | 248 mg | | | | |
| III | 4-Hydroxy-3-methoxy benzylalkohol (CAS 498-00-0) | 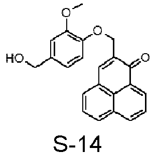 | 254 mg | MW: 346,39 g/mol | Siehe WO2018167264A1 / EP17161718.6 |
| | | | 74 % d.Th. | | |
| | | | Gelber Feststoff | MF: C₂₂H₁₈O₄ | |
| | 154,17 g/mol | | | | |
| | 308 mg | | | | |
| IV | 4-Hydroxybenzoesäure (CAS 99-96-7) | 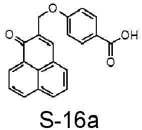 | 191 mg | MW: 330,34 g/mol | **MS** (ESI-MS, 95% H₂O + 0,1% HCOOH / 5% MeCN + 0,1% HCOOH): e/z (%) = 331,07 (100%, MH⁺), 353,05 (81%, MNa⁺); |
| | | | 58 % d.Th. | | |
| | | | Schmutzig gelbes Pulver | MF: C₂₁H₁₄O₄ | |
| | 138,12 g/mol | | | | |
| | 276 mq | | | | |
| V | 2-(4-Hydroxyphenoxy)propionsäure (CAS 67648-61-7) | 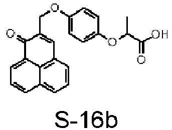 | 252 mg | MW: 374,40 g/mol | **¹H-NMR** (400 MHz, CDCl₃): δ [ppm] = 8,68 (d, J = 7,9 Hz, 1H), 8,23 (d, J = 8,0 Hz, 1H), 8,04 (d, J = 8,0 Hz, 1H), 7,94 (s, 1H), 7,81 (m, 2H), 7,62 (t, J = 7,9 Hz, 1H), 7,01 (d, J = 8,6 Hz, 2H), 6,88 (d, J = 8,6 Hz, 2H), 6,78 (s, 1H), 5,12 (s, 2H), 1,63 (d, J = 7,8 Hz, 3H); - **MS** (ESI-MS, 95% H₂O + 0,1% HCOOH / 5% MeCN + 0,1% HCOOH): e/z (%) = 375,12 (100%, MH⁺), 397,10 (100%, MNa⁺), 771,22 (15%, (2M+Na⁺)⁺); - **UV** (H₂O): λ/ [nm] (rel. [a.u.]) = 252 (1), 360 - 420 (0,47); |
| | | | 68 % d.Th. | | |
| | | | Gelbes Pulver | MF: C₂₃H₁₈O₅ | |
| | 182,17 g/mol | | | | |
| | 364 mg | | | | |

**Tabelle 9:Mit allgemeiner Vorschrift h) hergestellte Verbindungen**

| ***No*** | ***Reaktant Molmasse Einwaage*** | ***Zielverbindung*** / ***Nummer*** | ***Ausbeute*** / ***Aussehen*** | ***Molekülmasse*** / ***Summenformel*** | ***Analytik*** |
|---|---|---|---|---|---|
| I | Diethylenglykolmonotosylat | 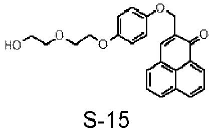 | 76 mg | 390,44 g/mol | **MS** (ESI-MS, 95% H₂O + 0,1% HCOOH / 5% MeCN + 0,1% HCOOH): e/z (%) = 391,15 (100%, MH⁺), 413,13 (82%, MNa⁺); - **UV** (H₂O): λ/ [nm] (rel. [a.u.]) = 254 (1), 360 - 420 (0,5); |
| | | | 39 % d.Th. | | |
| | 260,2 g/mol | | Bräunliches zähes Öl | C₂₄H₂₂O₅ | |
| | 260 mg | | | | |

**Tabelle 10: Mit allgemeiner Vorschrift i) hergestellte Verbindungen**

| ***No*** | ***Reaktant Molmasse Einwaage*** | ***Zielverbindung*** / ***Nummer*** | ***Ausbeute*** / ***Aussehen*** | ***Molekülmasse*** / ***Summenformel*** | ***Analytik*** |
|---|---|---|---|---|---|
| I | 3-Brom-1-propanol | 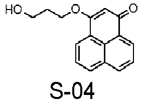 | 69 mg | 254,29 g/mol | Siehe WO2018167264A1 / EP17161718.6 |
| | (CAS 627-18-9) | | 54 % d.Th. | | |
| | 139,0 g/mol | | Gelblicher Feststoff | C₁₆H₁₄O₃ | |
| | 104 mg | | | | |
| II | 3-Brom-1-propanol | 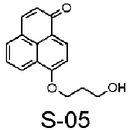 | 66 mg | 254,29 g/mol | **¹H-NMR** (400 MHz, CDCl₃): δ [ppm] = 8,58 (d, J = 8,7 Hz, 1H), 8,38 (d, J = 8,4 Hz, 1H), 7,72 (d, 6,5 Hz, 1H), 7,67 (d, 9,8 Hz, 1H), 7,51 (t, 7,6 Hz, 1H), 7,08 (d, 9,1 Hz, 1H), 6,67 (m, 1H), 4,41 (m, 2H), 3,96 (m, 2H), 2,23 (m, 2H); - **MS** (ESI-MS, 95% H₂O + 0,1% HCOOH / 5% MeCN + 0,1% HCOOH): e/z (%) = 255,10 (100%, MH⁺), 531,18 (16%, (2M+Na⁺)⁺); - **UV** (H₂O): λ/ [nm] (rel. [a.u.]) = 265 (1), 320 (0,19), 390 - 470 (0,56); |
| | (CAS 627-18-9) | | 51 % d.Th. | | |
| | 139,0 g/mol | | Oranger Feststoff | C₁₆H₁₄O₃ | |
| | 104 mg | | | | |
| III | 3-Brom-1-propanol | 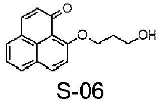 | 85 mg | 254,29 g/mol | **¹H-NMR** (400 MHz, CDCl₃): δ [ppm] = 8,21 (d, J = 8,0 Hz, 1H), 7,96 (d, J = 8,0 Hz, 1H), 7,81 (d, J = 8,0 Hz, 1H), 7,71 (d, J = 8,0 Hz, 1H), 7,51 (t, J = 8,0 Hz, 1H), 7,46 (d, J = 8,0 Hz, 1H), 6,77 (d, J = 8,0 Hz, 1H), 5,59 (bs, 1H), 4,48 (t, J = 7,1 Hz, 2H), 3,99 (m, 2H), 2,25 (m, 2H); - **MS** (ESI-MS, 95% H₂O + 0,1% HCOOH / 5% MeCN + 0,1% HCOOH): e/z (%) = 255,10 (100%, MH⁺), 531,18 (21%, (2M+Na⁺)⁺); |
| | (CAS 627-18-9) | | 67 % d.Th. | | |
| | 139,0 g/mol | | Schmutzig gelbes Pulver | C₁₆H₁₄O₃ | |
| | 104 mg | | | | |
| IV | Diethylenglykolmonotosylat | 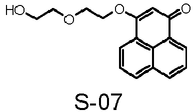 | 70 mg | 284,31 g/mol | Siehe WO2018167264A1 / EP17161718.6 |
| | | | 49 % d.Th. | | |
| | 260,2 g/mol | | Oranger, zäher Feststoff | C₁₇H₁₆O₄ | |
| | 195 mg | | | | |
| V | 3-(Boc-amino)-propylbromid | 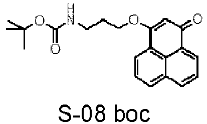 | 76 mg | 353,42 g/mol | Siehe WO2018167264A1 / EP17161718.6 |
| | (CAS 83948-53-2) | | 43 % d.Th. | | |
| | 175,2 g/mol | | Oranges Glas | C₂₁H₂₃NO₄ | |
| | 131 mg | | | | |
| VI | 2-(Boc-amino)-ethylbromid | 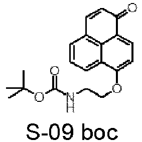 | 78 mg | 339,39 g/mol C₂₀H₂₁NO₄ | **¹H-NMR** (400 MHz, CDCl₃): δ [ppm] = 8,55 (d, J = 8,8 Hz, 1H), 8,38 (d, J = 8,4 Hz, 1H), 7,71 (d, 6,4 Hz, 1H), 7,66 (d, 10,0 Hz, 1H), 7,51 (t, 7,6 Hz, 1H), 7,03 (d, 9,2 Hz, 1H), 6,66 (d, J = 10,0 Hz, 1H), 5,00 (s, 1H), 4,28 (t, 2H), 3,66 (t, 2H), 1,42 (s, 9H); - **MS** (ESI-MS, CH₂Cl₂/MeOH + 10 mmol NH₄OAc): e/z (%) = 341,15 (100%, MH+); - **UV** (H₂O): λ/ [nm] (ε / [M⁻¹cm⁻¹]) = 260 (20100), 340 (3600), 370 - 450 (10300) |
| | (CAS 39684-80-5) | | 46 % d.Th. | | |
| | 161,1 g/mol | | Oranges Glas | | |
| | 120 mg | | | | |
| VII | 3-(Boc-amino)-propylbromid | 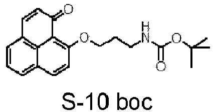 370 | 90 mg | 353,42 g/mol | **¹H-NMR** (400 MHz, CDCl₃): δ [ppm] = 8,22 (d, J = 8,0 Hz, 1H), 8,01 (d, J = 7,9 Hz, 1H), 7,85 (d, 7,9 Hz, 1H), 7,75 (d, 8,0 Hz, 1H), 7,56 (t, 8,0 Hz, 1H), 7,49 (d, 8,0 Hz, 1H), 6,79 (d, J = 8,0 Hz, 1H), 4,46 (t, J = 7,2 Hz, 2H), 3,53 (m, 2H), 2,21 (m, 2H), 1,48 (s, 9H); - **MS** (ESI-MS, 95% H₂O + 0,1% HCOOH / 5% MeCN + 0,1% HCOOH): e/z (%) = 354,17 (100%, MH⁺), 376,15 (43%, MNa⁺), 729,31 (47%, (2M+Na⁺)⁺); - **UV** (H₂O): λ/ [nm] (rel. [a.u.]) = 260 (0,96), 355 (1), 370 - 440 (0,5); |
| | | | 51 % d.Th. | | |
| | (CAS 83948-53-2) | | Dunkelgelbes Pulver | C₂₁H₂₃NO₄ | |
| | 175,2 g/mol | | | | |
| | 131 mg | | | | |

**Tabelle 11: Mit allgemeiner Vorschrift j) hergestellte Verbindungen**

| ***No*** | ***Reaktant Molmasse Einwaage*** | ***Zielverbindung*** / ***Nummer*** | ***Ausbeute*** / ***Aussehen*** | ***Molekülmasse*** / ***Summenformel*** | ***Analytik*** |
|---|---|---|---|---|---|
| I | S-08 Boc | 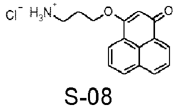 | 51 mg | 289,76 g/mol | Siehe WO2018167264A1 / EP17161718.6 |
| | | | 90 % d.Th. | | |
| | 353,2 g/mol | | Oranges, hygroskopisches Pulver | C₁₆H₁₆NO₂Cl | |
| | 70 mg | | | | |
| I | S-09 Boc | 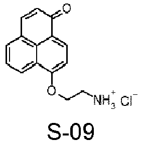 | 49 mg | 275,73 g/mol | **MS** (ESI-MS, CH₂Cl₂/MeOH + 10 mmol NH₄OAc): e/z (%) = 240,10 (100%, M+); - UV (H₂O): λ/ [nm] (ε / [M⁻¹cm⁻¹]) = 260 (20300), 330 (3400), 365 - 455 (10400) |
| | | | 93 % d.Th. | | |
| | 339,4 g/mol | | Oranges, hygroskopisches Pulver | C₁₅H₁₄NO₂Cl | |
| | 68 mg | | | | |
| III | S-10 Boc | 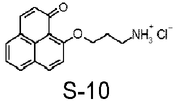 | 53 mg | 289,76 g/mol | **MS** (ESI-MS, 95% H₂O + 0,1% HCOOH / 5% MeCN + 0,1% HCOOH): e/z (%) = 254,12 (100%, M⁺), 507,23 (7%, (2M+H⁺)⁺); - **UV** (H₂O): λ/ [nm] (rel. [a.u.]) = 265 (0,88), 355 (1), 370 - 440 (0,46); |
| | 353,2 g/mol | | | | |
| | 70 mg | | 94 % d.Th. Dunkelgelbes, hygroskopisches Pulver | C₁₆H₁₆NO₂Cl | |

**Tabelle 12: Mit allgemeiner Vorschrift k) hergestellte Verbindungen**

| ***No*** | ***Reaktant Molmasse Einwaage*** | ***Zielverbindung*** / ***Nummer*** | ***Ausbeute*** / ***Aussehen*** | ***Molekülmasse*** / ***Summenformel*** | ***Analytik*** |
|---|---|---|---|---|---|
| I | 3-(Chloropropyl)-trimethoxysilan | 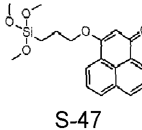 | 64 mg | 358,47 g/mol | **¹H-NMR** (400 MHz, CDCl₃): δ [ppm] = 8,31 (d, J = 8,0 Hz, 1H), 8,12 (d, J = 8,0 Hz, 1H), 8,08 (d, J = 8,0 Hz, 1H), 7,97 (d, J = 8,0 Hz, 1H), 7,68 (t, J = 8,0 Hz, 1H), 7,53 (t, J = 8,0 Hz, 1H), 6,12 (s, 1H), 3,46 (s, 9H), 3,41 (m, 2H), 1,73 (m, 2H), 0,64 (m, 2H); |
| | | | 60 % d.Th. | | |
| | (CAS 2530-87-2) | | Bräunliches Glas | C₁₉H₂₂O₅Si | |
| | 198,72 g/mol | | | | |
| | 100 mg | | | | |

**Tabelle 13: Mit allgemeiner Vorschrift I) hergestellte Verbindungen**

| ***No*** | ***Reaktant Molmasse Einwaage*** | ***Zielverbindung*** / ***Nummer*** | ***Ausbeute*** / ***Aussehen*** | ***Molekülmasse*** / ***Summenformel*** | ***Analytik*** |
|---|---|---|---|---|---|
| I | 4-(2-N-bocaminoethoxy) benzaldehyd | 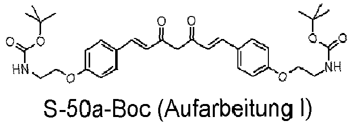 | 0,90 g | 594,67 g/mol | Siehe WO2017032892A1 / EP15182597.3 |
| | | | 76 % d.Th. | | |
| | (CAS 198990-09-9) | | Gelbes Pulver | C₃₃H₄₂N₂O₈ | |
| | 265,31 g/mol | | | | |
| | 1,11 g | | | | |
| II | 4-(2-N-bocaminoethoxy) benzaldehyd | 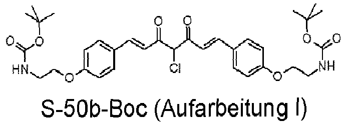 | 0,79 g | 629,16 g/mol | **¹H-NMR** (400 MHz, CDCl₃): δ[ppm] = 7,61 (d, *J* = 15,6 Hz, 2H), 7,49 (d, *J* = 8,2 Hz, 4H), 6,90 (d, *J* = 8,2 Hz, 4H), 6,49 (d, *J* = 15,6 Hz, 2H), 5,78 (s, 1H), 5,01 (bs, 2H), 4,06 (m, 4H), 3,54 (m, 4H), 1,45 (s, 18H); - **MS** (ESI-MS, 95% H₂O + 0,1% HCOOH / 5% MeCN + 0,1% HCOOH): e/z (%) = 629,26 (100%, MH⁺), 651,25 (72%, MNa⁺); - **UV** (H₂O): λ/ [nm] (rel. [a.u.]) = 255 (0,26), 445 (1); |
| | | | 63 % d.Th. | | |
| | (CAS 198990-09-9) | | Oranges Glas | C₃₃H₄₁ClN₂O₈ | |
| | 265,31 g/mol | | | | |
| | 1,11 g | | | | |
| III | 4-(2-N-bocaminoethoxy) benzaldehyd | 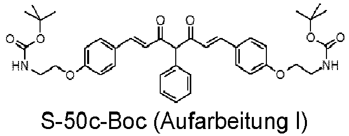 | 0,87 g | 670,81 g/mol | **¹H-NMR** (400 MHz, CDCl₃): δ[ppm] = 7,61 (d, *J* = 15,6 Hz, 2H), 7,42 (m, 2H), 7,21 - 7,26 (m, 5H), 6,76 (d, *J* = 8,1 Hz, 4H), 6,32 (d, *J* = 15,6 Hz, 2H), 4,91 (bs, 2H), 3,97 (m, 4H), 3,48 (m, 4H), 1,41 (s, 18H); - **MS** (ESI-MS, 95% H₂O + 0,1% HCOOH / 5% MeCN + 0,1% HCOOH): e/z (%) = 671,33 (100%, MH⁺), 693,31 (6%, MNa⁺); - **UV** (H₂O): λ/ [nm] (rel. [a.u.]) = 430 (1); |
| | | | 65 % d.Th. | | |
| | (CAS 198990-09-9) | | Oranges Glas | C₃₉H₄₆N₂O₈ | |
| | 265,31 g/mol | | | | |
| | 1,11 g | | | | |
| IV | 3-Bromo-4-(2-N-boc-aminoethoxy) benzaldehyd | 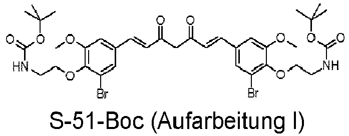 | 0,96 g | 812,56 g/mol | **¹H-NMR** (600 MHz, CDCl₃): δ[ppm] = 7,53 (d, *J* = 15,7 Hz, 2H), 7,38 (d, *J* = 1,7 Hz, 2H), 7,01 (d, *J* = 1,7 Hz, 2H), 6,53 (d, *J* = 15,7 Hz, 2H), 5,84 (s, 1H), 5,50 (bs, 2H), 4,15 (t, J = 4,6 Hz, 4H), 3,93 (s, 6H), 3,51 (m, 4H), 1,48 (s, 18H); - **MS** (ESI-MS, 95% H₂O + 0,1% HCOOH / 5% MeCN + 0,1% HCOOH): e/z (%) = 813,14 (100%, MH⁺), 835,12 (27%, MNa⁺); - **UV** (H₂O): λ/ [nm] (rel. [a.u.]) = 408 (1); |
| | | | 59 % d.Th. | | |
| | 244,2 g/mol | | Oranges Glas | C₃₅H₄₄Br₂N₂O₁₀ | |
| | 1,45 g | | | | |
| V | 4-(3-Hydroxypropoxy) benzaldehyd | 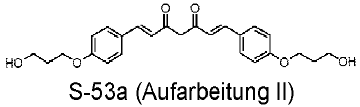 | 0,48 g | 424,50 g/mol | **¹H-NMR** (400 MHz, CDCl₃): δ[ppm] = 7,62 (d, *J* = 15,6 Hz, 2H), 7,51 (d, J = 8,1 Hz, 4H), 6,92 (d, *J* = 8,1 Hz, 4H), 6,49 (d, *J* = 15,6 Hz, 2H), 4,18 (t, J = 6,8 Hz, 4H), 3,87 (m, 4H), 2,08 (m, 4H), 2,06 (bs, 2H); - **MS** (ESI-MS, 95% H₂O + 0,1% HCOOH / 5% MeCN + 0,1% HCOOH): e/z (%) = 425,12 (100%, MH⁺), 447,11 (9%, MNa⁺); - **UV** (H₂O): λ/ [nm] (rel. [a.u.]) = 420 (1); |
| | | | 57 % d.Th. | | |
| | (CAS 99186-35-3) | | Oranges Pulver | C₂₅H₂₈O₆ | |
| | 180,2 g/mol | | | | |
| | 0,76 g | | | | |
| VI | 3-Methoxy-4-(3-hydroxypropoxy) benzaldehyd | 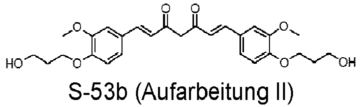 | 0,48 g | 484,55 g/mol | **¹H-NMR** (400 MHz, CDCl₃): δ[ppm] = 7,56 (d, *J* = 15,6 Hz, 2H), 7,08 (m, 2H), 7,03 (m, 2H), 6,85 (d, *J* = 8,2 Hz, 2H), 6,46 (d, *J =* 15,6 Hz, 2H), 4,11 (m, 4H), 3,68 (m, 4H), 2,11 (bs, 2H), 2,06 (m, 4H); - **MS** (ESI-MS, 95% H₂O + 0,1% HCOOH / 5% MeCN + 0,1% HCOOH): e/z (%) = 485,22 (100%, MH⁺), 507,21 (11%, MNa⁺); - **UV** (H₂O): λ/ [nm] (rel. [a.u.]) = 425 (1); |
| | | | 49 % d.Th. | | |
| | (CAS 107115-25-3) | | Rotoranges Pulver | C₂₇H₃₂O₈ | |
| | 210,2 g/mol | | | | |
| | 0,88 g | | | | |
| VII | 4-(11-Hydroxy undecyloxy) benzaldehyd (CAS 124389-14-6) | 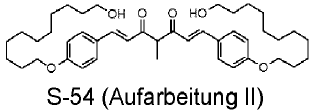 | 0,64 g | 662,96 g/mol | **MS** (ESI-MS, 95% H₂O + 0,1% HCOOH / 5% MeCN + 0,1% HCOOH): e/z (%) = 663,46 (100%, MH⁺), 685,44 (71%, MNa⁺); - **UV** (H₂O): λ/ [nm] (rel. [a.u.]) = 230 (1), 410 (0,65); |
| | | | 48 % d.Th. | | |
| | | | Oranger, zäher Feststoff | C₄₂H₆₂O₆ | |
| | 292,4 g/mol 1,23 g | | | | |
| VIII | 4-(6-Hydroxy hexyloxy) benzaldehyd | 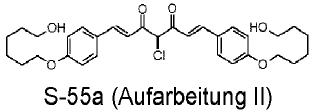 | 0,49 g | 543,11 g/mol | **MS** (ESI-MS, 95% H₂O + 0,1% HCOOH / 5% MeCN + 0,1% HCOOH): e/z (%) = 543,25 (100%, MH⁺), 565,23 (71%, MNa⁺); - **UV** (H₂O): λ/ [nm] (rel. [a.u.]) = 233 (1), 428 (0,88); |
| | | | 45 % d.Th. | | |
| | (CAS 96735-91-0) | | Oranger, zäher Feststoff | C₃₁H₃₉ClO₆ | |
| | 222,3 g/mol | | | | |
| | 0,94 q | | | | |
| IX | 4-(11-Hydroxy undecyloxy) benzaldehyd | 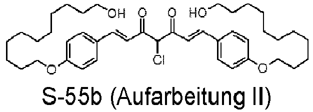 | 0,41 g | 683,38 g/mol | **MS** (ESI-MS, 95% H₂O + 0,1% HCOOH / 5% MeCN + 0,1% HCOOH): e/z (%) = 683,41 (100%, MH⁺), 705,40 (92%, MNa⁺); - **UV** (H₂O): λ/ [nm] (rel. [a.u.]) = 230 (1), 425 (0,96); |
| | | | 30 % d.Th. | | |
| | | | Oranger, zäher Feststoff | | |
| | (CAS 124389-14-6) | | | C₄₁H₅₉ClO₆ | |
| | 292,4 g/mol | | | | |
| | 1,23 g | | | | |
| X | 3-Benzyloxy-4-hydroxy benzaldehyd | 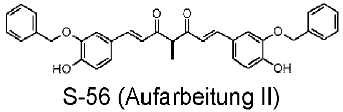 | 0,54 g | 534,61 g/mol | **¹H-NMR** (300 MHz, DMSO-d6): δ[ppm] = 9.65 (bs, 2H), 7,55 (d, *J* = 15,6 Hz, 2H), 7,42 - 7,30 (m, 10H), 7,15 - 7,02 (m, 4H), 6,88 (d, *J* = 8,2 Hz, 2H), 6,49 (d, *J* = 15.6 Hz, 2H), 5,22 (s, 4H), 3,61 (s, 3H); - **MS** (ESI-MS, 95% H₂O + 0,1% HCOOH / 5% MeCN + 0,1% HCOOH): e/z (%) = 535,21 (100%, MH⁺), 557,19 (38%, MNa⁺); - **UV** (H₂O): λ/ [nm] (rel. [a.u.]) = 265 (0,26), 440 (1); |
| | | | 50 % d.Th. | | |
| | (CAS 50773-56-3) | | Rotoranges Pulver | C₃₄H₃₀O₆ | |
| | 228,25 g/mol | | | | |
| | 0,96 g | | | | |
| XI | 4-Decyloxy benzaldehyd | 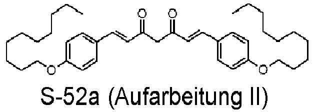 | 0,78 g | 588,88 g/mol | **¹H-NMR** (400 MHz, CDCl₃): δ[ppm] = 7,62 (d, *J* = 15,8 Hz, 2H), 7,50 (d, *J* = 8,2 Hz, 4H), 6,90 (d, *J* = 8,2 Hz, 4H), 6,49 (d, *J =* 15,8 Hz, 2H), 5,78 (s, 1H), 3,89 (t, *J* = 6,8 Hz, 4H), 1,79 (m, 4H), 1,45 (m, 4H), 1,22 - 1,39 (m, 24H), 0,89 (t, *J* = 6,8 Hz, 6H); - **MS** (ESI-MS, 95% H₂O + 0,1% HCOOH / 5% MeCN + 0,1% HCOOH): e/z (%) = 611,41 (100%, MNa⁺); - UV (H₂O): λ/ [nm] (rel. [a.u.]) = 245 (0,23), 415 (1); |
| | | | 66 % d.Th. | | |
| | (CAS 24083-16-7) | | Oranger, zäher Feststoff | C₃₉H₅₆O₄ | |
| | 262,4 g/mol | | | | |
| | 1,10 g | | | | |

**Tabelle 14: Mit allgemeiner Vorschrift m) hergestellte Verbindungen**

| ***No*** | ***Reaktant Molmasse Einwaage*** | ***Zielverbindung* / *Nummer*** | ***Ausbeute* / *Aussehen*** | ***Molekülmasse* / *Summenformel*** | ***Analytik*** |
|---|---|---|---|---|---|
| I | S-52a | 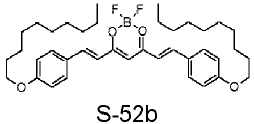 | 100 mg | 636,68 g/mol | **¹H-NMR** (400 MHz, CDCl₃): δ[ppm] = 8,01 (d, *J* = 15,6 Hz, 2H), 7,57 (d, *J* = 8,1 Hz, 4H), 6,93 (d, *J* = 8,1 Hz, 4H), 6,58 (d, *J* = 15,6 Hz, 2H), 6,00 (s, 1H), 4,01 (t, *J* = 6,8 Hz, 4H), 1,81 (m, 4H), 1,43 (m, 4H), 1,22 - 1,40 (m, 24H), 0,89 (t, *J* = 6,8 Hz, 6H); **¹⁹F-NMR** (376 MHz, CDCl₃): δ[ppm] = -141,1; - **MS** (ESI-MS, 95% H₂O + 0,1% HCOOH / 5% MeCN + 0,1% HCOOH): e/z (%) = 659,41 (100%, MNa⁺); - **UV** (H₂O): λ/ [nm] (rel. [a.u.]) = 260 (0,14), 490 (1); |
| | 588,88 g/mol | | 79 % d.Th. | | |
| | | | Rotbrauner Feststoff | C₃₉H₅₅BFN₂O₄ | |
| | 118 mg | | | | |

**Tabelle 15: Mit allgemeiner Vorschrift n) hergestellte Verbindungen**

| ***No*** | ***Reaktant Molmasse Einwaage*** | ***Zielverbindung*** / ***Nummer*** | ***Ausbeute*** / ***Aussehen*** | ***Molekülmasse*** / ***Summenformel*** | ***Analytik*** |
|---|---|---|---|---|---|
| I | 3-(Chloropropyl)-trimethoxysilan | 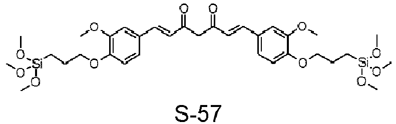 | 43 % d. Th. | 692,92 g/mol | **¹H-NMR** (400 MHz, CDCl₃): δ[ppm] = 7,51 (d, *J* = 15,6 Hz, 2H), 7,19 (m, 2H), 7,03 (m, 2H), 6,84 (d, J = 7,2 Hz, 2H), 6,47 (d, *J* = 15,6 Hz, 2H), 5,79 (s, 1H), 3,93 (s, 6H), 3,51 (s, 18H), 3,38 (m, 4H), 1,83 (m, 4H), 0,71 (m, 4H); |
| | (CAS 2530-87-2) | | Oranges Glas | C₃₃H₄₈O₁₂Si₂ | |
| | 198,72 g/mol | | | | |
| | 100 mg | | | | |

**Tabelle 16: Mit allgemeiner Vorschrift o) hergestellte Verbindungen**

| ***No*** | ***Reaktant Molmasse Einwaage*** | ***Zielverbindung*** / ***Nummer*** | ***Ausbeute*** / ***Aussehen*** | ***Molekülmasse*** / ***Summenformel*** | ***Analytik*** |
|---|---|---|---|---|---|
| I | S-50a boc | 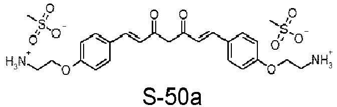 | 99 mg | 586,69 g/mol | **¹H-NMR** (400 MHz, DMSO-d6): δ[ppm] = 8,01 (bs, 6H), 7,71 (d, J = 15,8 Hz, 4H), 7,60 (d, J = 8,4 Hz, 2H), 7,06 (d, J = 8,4 Hz, 2H), 6,81 (d, J = 15,8 Hz, 4H), 6,13 (s, 1H), 4,22 (t, J = 6,4 Hz, 4H), 3,34 (m, 4H), 3,21 (m, 4H), 2,46 (s, 6H); - **MS** (ESI-MS, 95% H₂O + 0,1% HCOOH / 5% MeCN + 0,1% HCOOH): e/z (%) = 198,10 (100%, M²⁺), 395,20 (9%, M⁺); - **UV** (H₂O): λ/ [nm] (rel. [a.u.]) = 422 (1); |
| | | | | C₂₃H₂₈N₂O₄ + 2x | |
| | | | 84 % d.Th. | CH₃O₃S | |
| | 593,71 g/mol | | Gelber hygroskopischer Feststoff | | |
| | 118 mg | | | | |
| II | S-50b boc | 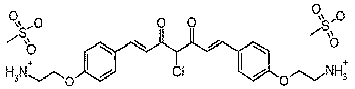 | 101 mg | 621,14 g/mol | **MS** (ESI-MS, 95% H₂O + 0,1% HCOOH / 5% MeCN + 0,1% HCOOH): e/z (%) = 216,09 (100%, M²⁺), 431,17 (5%, M⁺); |
| | 629,16 g/mol | | | C₂₃H₂₇ClN₂O₄ + 2 × | |
| | 126 mg | | 81 % d.Th. Oranger hygroskopischer Feststoff | CH₃O₃S | |
| | | 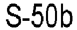 | | | |
| III | S-50c boc | 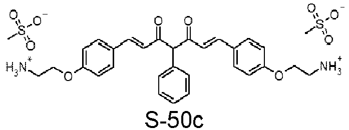 | 105 mg | 662,79 g/mol | **MS** (ESI-MS, 95% H₂O + 0,1% HCOOH / 5% MeCN + 0,1% HCOOH): e/z (%) = 236,12 (100%, M²⁺), 471,22 (4%, M⁺); - **UV** (H₂O): λ/ [nm] (rel. [a.u.]) = 230 (0,82), 427 (1); |
| | | | 86 % d.Th. | C₂₉H₃₂N₂O₄ + 2 x | |
| | 670,81 g/mol | | Rotoranger hygroskopischer Feststoff | CH₃O₃S | |
| | 134 mg | | | | |
| IV | S-51 boc | 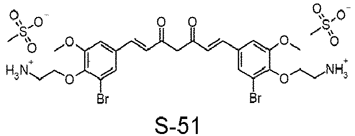 | 126 mg | 804,53 g/mol | **¹H-NMR** (600 MHz, DMSO-d6): δ[ppm] = 8,00 (bs, 6H), 7,26 - 7,65 (m, 6H), 7,03 - 7,08 (m, 2H), 6,18 (s, 1H), 4,15 (m, 4H), 3,90 (m, 6H), 3,21 (m, 4H), 2,34 (s, 6H); - **MS** (ESI-MS, 95% H₂O + 0,1% HCOOH / 5% MeCN + 0,1% HCOOH): e/z (%) = 307,02 (100%, M²⁺), 613,03 (7%, M⁺); - **UV** (H₂O): λ/ [nm] (rel. [a.u.]) = 232 (0,89), 408 (1); |
| | | | | C₂₅H₃₀Br₂N₂O₆ + 2 | |
| | | | 78 % d.Th. | x CH₃O₃S | |
| | 812,56 g/mol | | Oranger hygroskopischer Feststoff | | |
| | 162 mg | | | | |

**Tabelle 17: Mit allgemeiner Vorschrift p1) hergestellte Verbindungen**

| ***No*** | ***Reaktant Molmasse Einwaage*** | ***Zielverbindung*** / ***Nummer*** | ***Ausbeute*** / ***Aussehen*** | ***Molekülmasse*** / ***Summenformel*** | ***Analytik*** |
|---|---|---|---|---|---|
| I | 9-Acetoxy-2,7,12,17-tetrakis(methoxyethyl)porphycen | 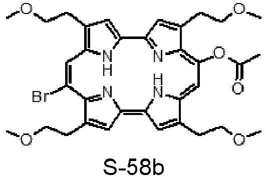 | 36 mg | 679,62 g/mol | **¹H-NMR** (300 MHz, CDCl₃): δ[ppm] = 10,12 (s, 1H), 9,52 (s, 1H), 9,18 (s, 1H), 9,09 (s, 1H), 9,07 (s, 1H), 8,99 (s, 1H), 4,16 - 4,24 (m, 8H), 4,05 - 4,14 (m, 4H), 3,97 - 4,04 (m, 2H), 3,88 - 3,95 (m, 2H), 3,63 (s, 3H), 3,62 (s, 3H), 3,59 (s, 6H), 2,89 (s, 3H); - **MS** (ESI-MS, 95% H₂O + 0,1% HCOOH / 5% MeCN + 0,1% HCOOH): e/z (%) = 681,21 (100%, MH⁺), 1359,42 (7%, (2M+H⁺)⁺); - **UV** (H₂O): λ/ [nm] (rel. [a.u.]) = 365 (1), 560 (0,16), 610 (0,24), 630 (0,27); |
| | | | 53 % d.Th. | | |
| | (CAS 147008-54-6) | | Dunkelblaues Pulver | C₃₄H₃₉BrN₄O₆ | |
| | 600,1 g/mol | | | | |
| | 60 mg | | | | |
| II | 9-Acetoxy-2,7,12,17-tetrakis(methoxyethyl)porphycen | 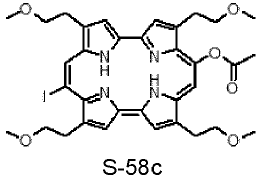 | 30 mg | 726,62 g/mol | **MS** (ESI-MS, 95% H₂O + 0,1% HCOOH / 5% MeCN + 0,1% HCOOH): e/z (%) = 727,20 (100%, MH⁺), 1453,39 (6%, (2M+H⁺)⁺); - **UV** (H₂O): λ/ [nm] (rel. [a.u.]) = 365 (1), 560 (0,29), 610 (0,3), 630 (0,32); |
| | | | 41 % d.Th. | | |
| | (CAS 147008-54-6) | | Dunkelblaues Pulver | C₃₄H₃₉IN₄O₆ | |
| | 600,1 g/mol | | | | |
| | 60 mg | | | | |

**Tabelle 18: Mit allgemeiner Vorschrift p2) hergestellte Verbindungen**

| ***No*** | ***Reaktant Molmasse Einwaage*** | ***Zielverbindung*** / ***Nummer*** | ***Ausbeute*** / ***Aussehen*** | ***Molekülmasse*** / ***Summenformel*** | ***Analytik*** |
|---|---|---|---|---|---|
| I | N-Bromosuccinimid (CAS 128-08-5) | 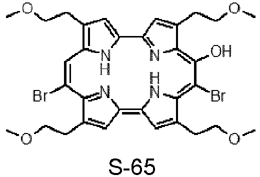 | 34 mg 48 % d.Th. | MW: 716,47 g/mol | **MS** (ESI-MS, 95% H₂O + 0,1% HCOOH / 5% MeCN + 0,1% HCOOH): e/z (%) = 717,11 (100%, MH⁺), 739,49 (5%, MNa⁺); - **UV** (H₂O): λ/ [nm] (rel. [a.u.]) = 371 (1), 398 (0,78), 575 (0,17), 616 (0,21), 638 (0,24); |
| | 177,99 g/mol | | Grünblauer Feststoff | C₃₂H₃₇Br₂N₄O₅ | |
| | 50 mg | | | | |
| II | N-Bromosuccinimid | 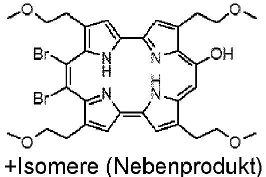 | 15 mg 21 % d.Th. | MW: 716,47 g/mol | **MS** (ESI-MS, 95% H₂O + 0,1% HCOOH / 5% MeCN + 0,1% HCOOH): e/z (%) = 717,11 (100%, MH⁺), 739,49 (3%, MNa⁺); |
| | (CAS 128-08-5) 177,99 g/mol | | Grünblauer Feststoff | C₃₂H₃₇Br₂N₄O₅ | |
| | 50 mg | | | | |

**Tabelle 19: Mit allgemeiner Vorschrift q) hergestellte Verbindungen**

| ***No*** | ***Reaktant Molmasse Einwaage*** | ***Zielverbindung*** / ***Nummer*** | ***Ausbeute*** / ***Aussehen*** | ***Molekülmasse*** / ***Summenformel*** | ***Analytik*** |
|---|---|---|---|---|---|
| I | 9-Acetoxy-2,7,12,17-tetrakis(methoxyethyl)porphycen (CAS 147008-54-6) | 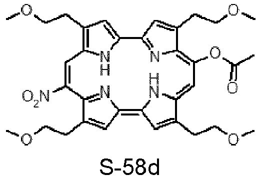 | 86 mg | 645,72 | **¹H-NMR** (300 MHz, CDCl₃): δ[ppm] = 9,78 (s, 1H), 9,12 (s, 1H), 9,08 (s, 1H), 9,06 (s, 1H), 8,97 (s, 1H), 8,88 (s, 1H), 4,17 - 4,26 (m, 8H), 4,06 - 4,16 (m, 4H), 3,99 - 4,05 (m, 2H), 3,91 - 3,97 (m, 2H), 3,62 (s, 3H), 3,61 (s, 3H), 3,58 (s, 6H), 2,88 (s, 3H); - **MS** (ESI-MS, 95% H₂O + 0,1% HCOOH / 5% MeCN + 0,1% HCOOH): e/z (%) = 646,28 (100%, MH⁺), 1291,57 (48%, (2M+H⁺)⁺); - **UV** (H₂O): λ/ [nm] (rel. [a.u.]) = 372 (1), 562 (0,26), 605 (0,34), 635 (0,36); |
| | | | 67 % d.Th. | | |
| | | | Grünblaue Schuppen (Bedingung I) | g/mol C₃₄H₃₉N₅O₈ | |
| | 600,1 g/mol | | | | |
| | 120 mg | | | | |
| II | 9-Acetoxy-2,7,12,17-tetrakis(methoxyethyl)porphycen (CAS 147008-54-6) | 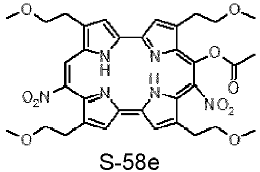 | 70 mg | 690,72 g/mol | **MS** (ESI-MS, 95% H₂O + 0,1% HCOOH / 5% MeCN + 0,1% HCOOH): e/z (%) = 691,27 (100%, MH⁺), 713,25 (31%, MH⁺), 1381,54 (7%, (2M+H⁺)⁺), 1403,52 (4%, (2M+Na⁺)⁺); - **UV** (H₂O): λ/ [nm] (rel. [a.u.]) = 376 (1), 564 (0,23), 606 (0,31), 638 (0,34); |
| | | | 55 % d.Th. | | |
| | | | Dunkelgrünes | C₃₄H₃₆N₆O₁₀ | |
| | 600,1 g/mol | | Pulver(Bedingung II) | | |
| | 120 mq | | | | |

**Tabelle 20: Mit allgemeiner Vorschrift r) hergestellte Verbindungen**

| ***No*** | ***Reaktant Molmasse Einwaage*** | ***Zielverbindung*** / ***Nummer*** | ***Ausbeute*** / ***Aussehen*** | ***Molekülmasse*** / ***Summenformel*** | ***Analytik*** |
|---|---|---|---|---|---|
| I | Zinn(II)chlorid Dihydrat (CAS 10025-69-1) | 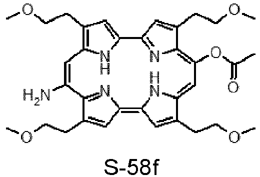 | 96 mg | | **¹H-NMR** (300 MHz, CDCl₃): δ[ppm] = 9,12 (s, 1H), 8,82 (s, 1H), 8,77 (s, 1H), 8,44 (m, 2H), 7,81 (s, 1H), 5,33 (bs, 2H), 4,21 - 4,28 (m, 4H), 4,11 - 4,20 (m, 2H), 4,01 - 4,10 (m, 4H), 3,92 - 3,99 (m, 2H), 3,64 (s, 3H), 3,62 (s, 3H), 3,52 - 3,58 (m, 2H), 3,51 (s, 3H), 3,46 (s, 3H), 2,88 (s, 3H); - MS (ESI-MS, 95% H₂O + 0,1% HCOOH / 5% MeCN + 0,1% HCOOH): e/z (%) = 616,31 (100%, MH⁺), 628,29 (2%, MNa⁺); |
| | | | 78 % d.Th. | 615,74 g/mol | |
| | | | Grünliches | C₃₄H₄₁N₅O₆ | |
| | 225,64 g/mol | | Pulver | | |
| | 451 mg | | | | |

**Tabelle 21: Mit allgemeiner Vorschrift s1) hergestellte Verbindungen**

| ***No*** | ***Reaktant Molmasse Einwaage*** | ***Zielverbindung*** / ***Nummer*** | ***Ausbeute*** / ***Aussehen*** | ***Molekülmasse*** / ***Summenformel*** | ***Analytik*** |
|---|---|---|---|---|---|
| I | Essigsäureanhydrid (CAS 108-24-7) | 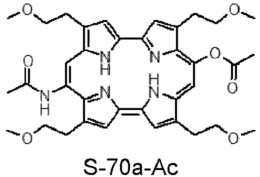 | 56 mg | | **¹H-NMR** (300 MHz, CDCl₃): δ[ppm] = 11,50 (s, 1H), 10,16 (s, 1H), 9,39 (s, 1H), 9,26 (s, 1H), 9,24 (s, 1H), 9,20 (s, 1H), 9,17 (s, 1H), 4,21 - 4,39 (m, 12H), 4,11 - 4,19 (m, 4H), 3,62 (s, 3H), 3,60 (s, 3H), 3,58 (s, 3H), 3,50 (s, 3H), 2,89 (s, 3H), 2,67 (s, 3H); - **MS** (ESI-MS, 95% H₂O + 0,1% HCOOH / 5% MeCN + 0,1% HCOOH): e/z (%) = 658,32 (100%, MH⁺), 680,30 (7%, MNa⁺), 1337,62 (11%, (2M+H⁺)⁺), 1359,60 (10%, (2M+Na⁺)⁺); - **UV** (H₂O): λ/ [nm] (rel. [a.u.]) = 374 (1), 560 (0,18), 629 (0,27); |
| | | | 84 % d.Th. | 657,77 g/mol | |
| | 102,09 g/mol | | Dunkelblauer | C₃₆H₄₃N₅O₇ | |
| | 51 mg | | Feststoff | | |
| II | Palmitoylchlorid (CAS 112-67-4) | 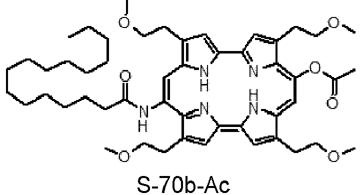 | 42 mg | | **MS** (ESI-MS, 95% H₂O + 0,1% HCOOH / 5% MeCN + 0,1% HCOOH): e/z (%) = 854,54 (100%, MH⁺), 876,52 (41%, MNa⁺); - UV (H₂O): λ/ [nm] (rel. [a.u.]) = 370 (1), 560 (0,15), 670 (0,2); |
| | | | 49 % d.Th. | 854,15 g/mol | |
| | 274,87 g/mol | | Blauer | C₅₀H₇₁N₅O₇ | |
| | 137 mg | | Feststoff | | |
| III | Tosylchlorid (CAS 98-59-9) | 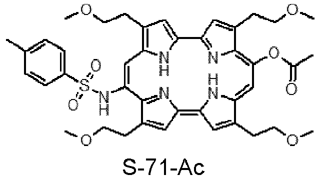 | 38 mg | | **¹H-NMR** (300 MHz, CDCl₃): δ[ppm] = 11,38 (s, 1H), 9,78 (s, 1H), 9,40 (s, 1H), 9,17 - 9,28 (m, 4H), 7,78 (d, J = 8,2 Hz, 2H), 7,16 (d, J = 8,2 Hz, 2H), 4,08 - 4,36 (m, 14H), 4,01 (m, 2H), 3,63 (s, 3H), 3,61 (s, 3H), 3,59 (s, 3H), 3,53 (s, 3H), 2,89 (s, 3H), 2,63 (s, 3H); - **MS** (ESI-MS, 95% H₂O + 0,1% HCOOH / 5% MeCN + 0,1% HCOOH): e/z (%) = 770,32 (100%, MH⁺), 1539,63 (35%, (2M+H⁺)⁺); - **UV** (H₂O): λ/ [nm] (rel. [a.u.]) = 375 (1), 560 (0,2), 605 (0,25), 630 (0,25); |
| | | | 47 % d.Th. | 769,92 g/mol | |
| | 190,65 g/mol | | Grünblauer | C₄₁H₄₇N₅O₈S | |
| | 95 mg | | Feststoff | | |

**Tabelle 22: Mit allgemeiner Vorschrift s2) hergestellte Verbindungen**

| ***No*** | ***Reaktant Molmasse Einwaage*** | ***Zielverbindung*** / ***Nummer*** | ***Ausbeute*** / ***Aussehen*** | ***Molekülmasse*** / ***Summenformel*** | ***Analytik*** |
|---|---|---|---|---|---|
| I | Diglykolsäureanhydrid (CAS 4480-83-5) | 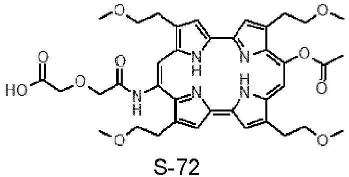 | 20 mg | | **¹H-NMR** (300 MHz, MeOD): δ[ppm] = 9,38 (s, 1H), 9,01 (s, 1H), 7,75 - 8,84 (m, 4H), 4,12 - 4,27 (m, 20H), 3,64 (s, 3H), 3,59 (s, 3H), 3,56 (s, 3H), 3,51 (s, 3H), 2,82 (s, 3H); - **MS** (ESI-MS, 95% H₂O + 0,1% HCOOH / 5% MeCN + 0,1% HCOOH): e/z (%) = 732,32 (100%, MH⁺), 1463,64 (19%, (2M+H⁺)⁺); - **UV** (H₂O): λ/ [nm] (rel. [a.u.]) = 370 (1), 560 (0,18), 605 (0,23), 630 (0,22); |
| | | | 56 % d.Th. | 731,81 g/mol | |
| | 116,07 g/mol | | Dunkelblauer | C₃₈H₄₅N₅O₁₀ | |
| | 34 mg | | Feststoff | | |
| II | Diglykolsäureanhydrid (CAS 4480-83-5) | 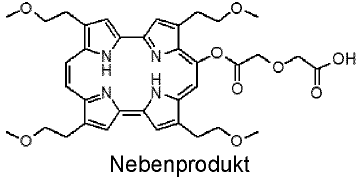 | 3 mg | | **MS** (ESI-MS, 95% H₂O + 0,1% HCOOH / 5% MeCN + 0,1% HCOOH): e/z (%) = 674,30 (100%, MH⁺), 1347,58 (6%, (2M+H⁺)⁺); |
| | | | 8 % d.Th. | 673,74 g/mol | |
| | 116,07 g/mol | | Dunkelblauer | C₃₆H₄₁N₄O₉ | |
| | 34 mg | | Feststoff | | |
| III | 3-Dodecyldihydrofuran-2,5-dione (CAS 2561-85-5) | 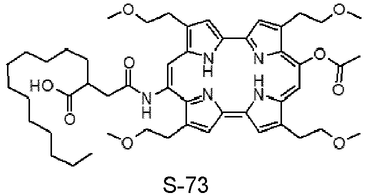 | 19 mg | | **¹H-NMR** (300 MHz, CDCl₃): δ[ppm] = 11,12 (s, 1H), 9,30 (s, 1H), 8,82 (m, 2H), 8,71 (s, 1H), 8,37 (s, 2H), 7,16 (d, J = 8,2 Hz, 2H), 3,96 - 4,38 (m, 16H), 3,82 (m, 1H), 3,71 (s, 3H), 3,68 (s, 3H), 3,52 (s, 3H), 3,41 (s, 3H), 3,38 - 3,46 (m, 2H), 2,92 (s, 3H), 1,61 (m, 2H), 1,21 - 1,36 (m, 20H), 0,88 (m, 3H); - **MS** (ESI-MS, 95% H₂O + 0,1% HCOOH / 5% MeCN + 0,1% HCOOH): e/z (%) = 884,52 (100%, MH⁺); - **UV** (H₂O): λ/ [nm] (rel. [a.u.]) = 374 (1), 562 (0,19), 627 (0,26); |
| | | | 43 % d.Th. | 884,14 g/mol | |
| | | | Dunkelblauer | C₅₀H₆₉N₅O₉ | |
| | 268,4 g/mol | | Feststoff | | |
| | 81 mg | | | | |
| IV | 3-Dodecyldihydrofuran-2,5-dione (CAS 2561-85-5) | 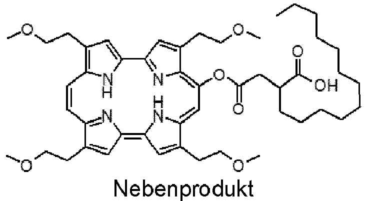 | 2 mg | | **MS** (ESI-MS, 95% H₂O + 0,1% HCOOH / 5% MeCN + 0,1% HCOOH): e/z (%) = 828,45 (100%, MH⁺); - **UV** (H₂O): λ/ [nm] (rel. [a.u.]) = 371 (1), 562 (0,18), 610 (0,21), 628 (0,27); |
| | | | 4 % d.Th. | 826,07 g/mol | |
| | | | Dunkelblauer | C₄₈H₆₅N₄O₈ | |
| | 268,4 g/mol | | Feststoff | | |
| | 81 mg | | | | |

**Tabelle 23: Mit allgemeiner Vorschrift t) hergestellte Verbindungen**

| ***No*** | ***Reaktant Molmasse Einwaage*** | ***Zielverbindung*** | ***Ausbeute*** | ***Molekülmasse*** / ***Summenformel*** | ***Analytik*** |
|---|---|---|---|---|---|
| I | | 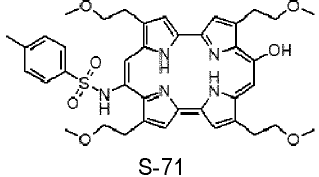 | 55 mg | 727,88 g/mol | **MS** (ESI-MS, 95% H₂O + 0,1% HCOOH / 5% MeCN + 0,1% HCOOH): e/z (%) = 728,31 (100%, MH⁺); |
| | S-69 Ac | | 72 % d.Th. | | |
| | 769,92 g/mol | | Schwarzblauer | | |
| | 77 mg | | Feststoff | C₃₉H₄₅N₅O₇S | |
| II | S-70 Ac | 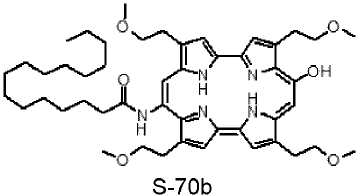 | 53 mg | 812,06 g/mol | **MS** (ESI-MS, 95% H₂O + 0,1% HCOOH / 5% MeCN + 0,1% HCOOH): e/z (%) = 812,53 (100%, MH⁺); - **UV** (H₂O): λ/ [nm] (rel. [a.u.]) = 370 (1), 405 (0,66), 570 (0,15), 670 (0,2); |
| | | | 65 % d.Th. | | |
| | 854,15 g/mol | | Blauer | | |
| | 85 mg | | Feststoff | C₄₈H₆₉N₅O₆ | |

**Tabelle 24: Mit allgemeiner Vorschrift u) hergestellte Verbindungen**

| ***No*** | ***Reaktant Molmasse Einwaage*** | ***Zielverbindung*** / ***Nummer*** | ***Ausbeute*** / ***Aussehen*** | ***Molekülmasse*** / ***Summenformel*** | ***Analytik*** |
|---|---|---|---|---|---|
| I | 9-Acetoxy-2,7,12,17-tetrakis(methoxyethyl)porphycen (CAS 147008-54-6) 600,1 g/mol 60 mg | 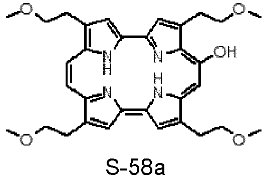 | 52 mg | 558,68 g/mol | **¹H-NMR** (300 MHz, CDCl₃): δ[ppm] = 11,12 (bs, 1H), 9,49 (m, 1H), 9,28 (m, 2H), 8,92 - 9,07 (m, 3H), 4,08 - 4,36 (m, 16H), 3,61 (s, 6H), 3,59 (s, 3H), 3,57 (s, 3H); - **MS** (ESI-MS, 95% H₂O + 0,1% HCOOH / 5% MeCN + 0,1% HCOOH): e/z (%) = 559,29 (84%, MH⁺), 1117,58 (100%, (2M+H⁺)⁺); - **UV** (n-Octanol): λ/ [nm] (ε / [M⁻¹cm⁻¹]) = 368 (135400), 388 (83500), 563 (17800), 638 (36600), 677 (23600); |
| | | | 93 % d.Th. | | |
| | | | Violett schimmerndes, dunkelblaues feines Pulver | | |
| | | | | C₃₂H₃₈N₄O₅ | |
| II | 9-Acetoxy-19-acetamido-2,7,12,17-tetrakis(methoxyethyl)porphycen 657,8 g/mol 66 mg | 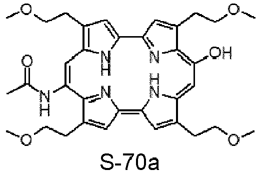 | 51 mg | 615,74 g/mol | MS (ESI-MS, 95% H₂O + 0,1% HCOOH / 5% MeCN + 0,1% HCOOH): e/z (%) = 616,31 (100%, MH⁺), 1231,62 (7%, (2M+H⁺)⁺); - **UV** (H₂O): λ/ [nm] (rel. [a.u.]) = 365 (1), 390 (0,66), 562 (0,21), 633 (0,27); |
| | | | 83 % d.Th. | | |
| | | | Dunkelblaues feines Pulver | C₃₄H₄₁N₅O₆ | |

**Tabelle 25: Mit allgemeiner Vorschrift v) hergestellte Verbindungen**

| ***No*** | ***Reaktant Molmasse Einwaage*** | ***Zielverbindung*** / ***Nummer*** | ***Ausbeute*** / ***Aussehen*** | ***Molekülmasse*** / ***Summenformel*** | ***Analytik*** |
|---|---|---|---|---|---|
| I | Zink(II)acetat (CAS 557-34-6) 183,48 g/mol 75 mg | 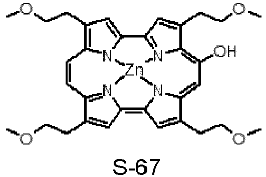 | 24 mg | 624,05 g/mol | **MS** (ESI-MS, 95% H₂O + 0,1% HCOOH / 5% MeCN + 0,1% HCOOH): e/z (%) = 311,1 (19%, M²⁺), 622,2 (100%, M⁺); |
| | | | 20 % d.Th. | | |
| | | | Schmutzig blaues Pulver | C₃₂H₃₈N₄O₅Zn | |

**Tabelle 26: Mit allgemeiner Vorschrift w1) hergestellte Verbindungen**

| ***No*** | ***Reaktant Molmasse Einwaage*** | ***Zielverbindung*** / ***Nummer*** | ***Ausbeute*** / ***Aussehen*** | ***Molekülmasse*** / ***Summenformel*** | ***Analytik*** |
|---|---|---|---|---|---|
| I | 9-Acetoxy-2,7,12,17-tetrakis(methoxyethyl)porphycen (CAS 147008-54-6) 600,1 g/mol 60 mg | 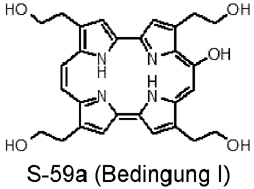 | 31 mg | 502,58 g/mol | **MS** (ESI-MS, 95% H₂O + 0,1% HCOOH / 5% MeCN + 0,1% HCOOH): e/z (%) = 503,23 (100%, MH⁺), 1005,45 (12%, (2M+H⁺)⁺); - **UV** (H₂O): λ/ [nm] (rel. [a.u.]) = 365 (1), 555 (0,27), 630 (0,3); |
| | | | 62 % d.Th. | | |
| | | | Schwarzblaues feines Pulver | C₂₈H₃₀N₄O₅ | |
| II | 9-Acetoxy-2,7,12,17-tetrakis(methoxyethyl)porphycen (CAS 147008-54-6) 600,1 g/mol 60 mq | 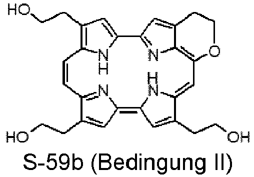 | 21 mg | 484,55 g/mol | **MS** (ESI-MS, 95% H₂O + 0,1% HCOOH / 5% MeCN + 0,1% HCOOH): e/z (%) = 485,22 (100%, MH⁺), 967,43 (6%, (2M+H⁺)⁺); - **UV** (H₂O): λ/ [nm] (rel. [a.u.]) = 365 (1), 555 (0,31), 630 (0,36); |
| | | | 43 % d.Th. | | |
| | | | Schwarzblaues feines Pulver | C₂₈H₂₈N₄O₄ | |

**Tabelle 27: Mit allgemeiner Vorschrift w2) hergestellte Verbindungen**

| ***No*** | ***Reaktant Molmasse Einwaage*** | ***Zielverbindung*** / ***Nummer*** | ***Ausbeute*** / ***Aussehen*** | ***Molekülmasse*** / ***Summenformel*** | ***Analytik*** |
|---|---|---|---|---|---|
| I | 9-Acetoxy-2,7,12,17-tetrakis(methoxyethyl)porphycen (CAS 147008-54-6) 600,1 g/mol 60 mg | 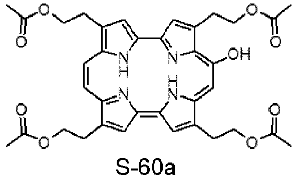 | 21 mg | 670,3 g/mol | **¹H-NMR** (300 MHz, CDCl₃): δ[ppm] = 11,18 (bs, 1H), 9,58 (m, 1H), 9,37 (m, 1H), 8,92 - 9,18 (m, 4H), 8,48 (s, 1H), 5,03 (m, 2H), 4,56 (m, 4H), 4,42 (m, 4H), 4,22 - 4,38 (m, 6H), 2,23 (s, 3H), 2,21 (s, 6H), 2,14 (s, 3H); - **MS** (ESI-MS, 95% H₂O + 0,1% HCOOH / 5% MeCN + 0,1% HCOOH): e/z (%) = 671,27 (100%, MH⁺), 1341,54 (29%, (2M+H⁺)⁺); - **UV** (H₂O): λ/ [nm] (rel. [a.u.]) = 364 (1), 386 (0,63), 558 (0,21), 636 (0,24); |
| | | | 31 % d.Th. | | |
| | | | Dunkelblaues feines Pulver | C₃₆H₃₈N₄O₉ | |
| II | 9-Acetoxy-2,7,12,17-tetrakis(methoxyethyl)porphycen (CAS 147008-54-6) 600,1 g/mol 60 mg | 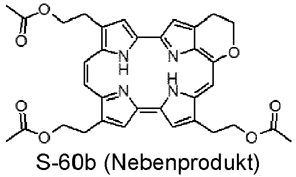 | 8 mg | 610,67 g/mol | **¹H-NMR** (300 MHz, CDCl₃): δ[ppm] = 9,61 (m, 1H), 9,50 (m, 1H), 9,21 - 9,28 (m, 3H), 9,17 (s, 1H), 8,98 (s, 1H), 5,25 (m, 2H), 5,01 (m, 6H), 4,25 - 4,39 (m, 6H), 4,08 (m, 2H), 2,22 (s, 3H), 2,20 (s, 3H), 2,17 (s, 3H); - **MS** (ESI-MS, 95% H₂O + 0,1% HCOOH / 5% MeCN + 0,1% HCOOH): e/z (%) = 611,25 (100%, MH⁺), 633,23 (13%, MNa⁺), 1221,49 (49%, (2M+H⁺)⁺); - **UV** (H₂O): λ/ [nm] (rel. [a.u.]) = 371 (1), 554 (0,33), 626 (0,17); |
| | | | 13% d.Th. | | |
| | | | Schwarzblaues feines Pulver | C₃₄H₃₄N₄O₇ | |

**Tabelle 28: Mit allgemeiner Vorschrift x) hergestellte Verbindungen**

| ***No*** | ***Reaktant Molmasse Einwaage*** | ***Zielverbindung*** / ***Nummer*** | ***Ausbeute* / *Aussehen*** | ***Molekülmasse*** / ***Summenformel*** | ***Analytik*** |
|---|---|---|---|---|---|
| I | Trimethylamin | 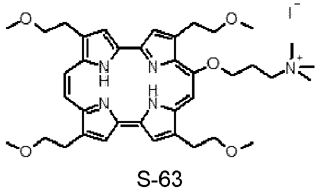 | 132 mg | 785,77 g/mol | **¹H-NMR** (300 MHz, CD₃OD): δ[ppm] = 9,68 (d, J = 10,4 Hz, 1H), 9,49 (d, J = 10,4 Hz, 1H), 9,32 - 9,38 (m, 3H), 9,03 (s, 1H), 8,69 (s, 1H), 4,58 (m, 2H), 4,16 - 4,35 (m, 12H), 3,93 - 4,07 (m, 4H), 3,56 - 3,63 (m, 2H), 3,59 (s, 3H), 3,56 (s, 6H), 3,53 (s, 3H), 3,36 (m, 2H), 3,02 (s, 9H), 1,84 (m, 2H); - **MS** (ESI-MS, 95% H₂O + 0,1% HCOOH / 5% MeCN + 0,1% HCOOH): e/z (%) = 329,70 (83%, (M⁺+H⁺)²⁺), 658,40 (100%, M⁺); - **UV** (n-Octanol): λ/ [nm] (ε / [M⁻¹cm⁻¹]) = 371 (128000), 389 (86800), 564 (35600), 632 (56000), 680 (23600); |
| | (CAS 75-50-3) | | 84 % d.Th. | | |
| | 79,1 g/mol | | Blaues | C₃₈H₅₂N₅O₅I | |
| | 158 mg | | feines Pulver | | |
| II | Pyridin | 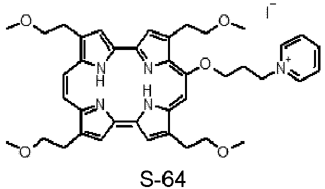 | 148 mg | 805,76 g/mol | **¹H-NMR** (300 MHz, DMSO-d6): δ[ppm] = 9,81 (d, J = 10,4 Hz, 1H), 9,51 - 9,68 (m, 5H), 9,38 (s, 1H), 9,31 (d, J = 6,6 Hz, 2H), 8,22 (m, 3H), 5,21 (m, 2H), 5,12 (m, 2H), 4,15 - 4,28 (m, 16H), 3,59 (s, 3H), 3,58 (s, 6H), 3,56 (s, 3H), 3,01 (m, 2H); - **MS** (ESI-MS, 95% H₂O + 0,1% HCOOH / 5% MeCN + 0,1% HCOOH): e/z (%) = 339,690 (57%, (M⁺+H⁺)²⁺), 678,37 (100%, M⁺); |
| | (CAS 110-86-1) | | 92 % d.Th. | | |
| | 59,1 g/mol | | Blaues | C₄₀H₄₈N₅O₅I | |
| | 118 mg | | feines Pulver | | |

**Tabelle 29: Mit allgemeiner Vorschrift y1) hergestellte Verbindungen**

| ***No*** | ***Reaktant Molmasse Einwaage*** | ***Zielverbindung*** / ***Nummer*** | ***Ausbeute*** / ***Aussehen*** | ***Molekülmasse*** / ***Summenformel*** | ***Analytik*** |
|---|---|---|---|---|---|
| I | 3-Brom-1-propanol (CAS 627-18-9) | 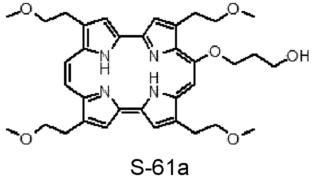 | 152 mg | 616,76 g/mol | **¹H-NMR** (300 MHz, CDCl₃): δ[ppm] = 9,64 (d, J = 10,2 Hz, 1H), 9,46 (d, J = 10,2 Hz, 1H), 9,39 (s, 1H), 9,33 (s, 4H), 5,16 (m, 2H), 4,18 - 4,34 (m, 18H), 3,71 (m, 2H), 3,61 (s, 3H), 3,59 (s, 6H), 3,58 (s, 3H), 2,62 (m, 2H); - **MS** (ESI-MS, 95% H₂O + 0,1% HCOOH / 5% MeCN + 0,1% HCOOH): e/z (%) = 617,33 (100%, MH⁺), 1233,66 (61%, (2M+H⁺)⁺); - **UV** (n-Octanol): λ/ [nm] (ε / [M⁻¹cm⁻¹]) = 366 (131000), 386 (88900), 565 (27300), 634 (42700), 683 (23500); |
| | | | 82 % d.Th. Blauer, amorpher Feststoff | | |
| | 139,0 g/mol | | | C₃₅H₄₄N₄O₆ | |
| | 139 mg | | | | |
| II | Triethylenglykol monotosylat | 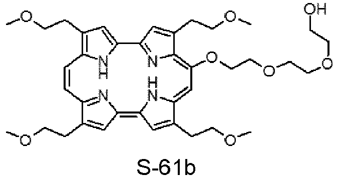 | 147 mg | 690,84 g/mol | **¹H-NMR** (400 MHz, CDCl₃): δ[ppm] = 9,63 (d, J = 10,4 Hz, 1H), 9,45 (d, J = 10,4 Hz, 1H), 9,25 (s, 1H), 9,24 (s, 1H), 9,22 (s, 1H), 9,20 (s, 1H), 9,19 (s, 1H), 5,07 (m, 2H), 4,15 - 4,36 (m, 18H), 3,96 (m, 2H), 3,85 (m, 2H), 3,77 (m, 2H), 3,68 (m, 2H), 3,61 (s, 3H), 3,60 (s, 3H), 3,60 (s, 3H), 3,59 (s, 3H); - **MS** (ESI-MS, 95% H₂O + 0,1% HCOOH / 5% MeCN + 0,1% HCOOH): e/z (%) = 691,37 (100%, MH⁺), 1381,74 (83%, (2M+H⁺)⁺); - **UV** (n-Octanol): λ/ [nm] (ε / [M⁻¹cm⁻¹]) = 366 (134000), 387 (91200), 565 (32600), 632 (56700), 682 (19800); |
| | | | 71 % d.Th. | | |
| | (CAS 77544-68-4) | | Blaues, violett schimmerndes Glas | | |
| | 304,3 g/mol | | | C₃₈H₅₀N₄O₈ | |
| | 304 mg | | | | |
| III | 1,3-Diiodpropan | 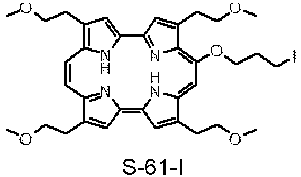 | 155 mg | 726,65 g/mol | **¹H-NMR** (300 MHz, CDCl₃): δ[ppm] = 9,63 (d, J = 10,3 Hz, 1H), 9,47 (d, J = 10,3 Hz, 1H), 9,33 (s, 1H), 9,27 (s, 4H), 5,01 (m, 2H), 4,19 - 4,32 (m, 16H), 3,79 (m, 2H), 3,61 (s, 3H), 3,60 (s, 6H), 3,59 (s, 3H), 2,81 (m, 2H); |
| | (CAS 627-31-6) | | 67 % d.Th. | | |
| | 295,8 g/mol | | Blauviolettes Glas | C₃₅H₄₃N₄O₅I | |
| | 296 mg | | | | |
| IV | 3-(Boc-amino)-propylbromid | 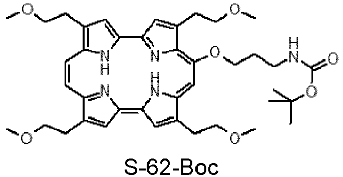 | 165 mg | 715,89 g/mol | **¹H-NMR** (300 MHz, CDCl₃): δ[ppm] = 9,62 (d, J = 10,4 Hz, 1H), 9,42 (d, J = 10,4 Hz, 1H), 9,18 - 9,24 (m, 5H), 5,27 (bs, 1H), 4,93 (m, 2H), 4,16 - 4,33 (m, 16H), 3,71 (m, 2H), 3,60 (s, 3H), 3,58 (s, 6H), 3,57 (s, 3H), 2,56 (m, 2H), 1,49 (s, 1H); - **MS** (ESI-MS, 95% H₂O + 0,1% HCOOH / 5% MeCN + 0,1% HCOOH): e/z (%) = 716,42 (100%, MH⁺), 1431,79 (3%, (2M+H⁺)⁺); - **UV** (H₂O): λ/ [nm] (rel. [a.u.]) = 366 (1), 560 (0,21), 629 (0,24); |
| | (CAS 83948-53-2) | | 77 % d.Th. | | |
| | | | | C₄₀H₅₃N₅O₇ | |
| | 175,2 g/mol | | Blaues Glas | | |
| | 175 mg | | | | |
| V | Methyl 4-Bromobutyrat | 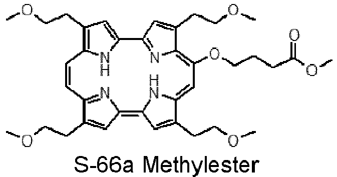 | 132 mg | 658,80 g/mol | **¹H-NMR** (400 MHz, CDCl₃): δ[ppm] = 9,63 (d, J = 10,4 Hz, 1H), 9,45 (d, J = 10,4 Hz, 1H), 9,20 - 9,26 (m, 5H), 4,95 (m, 2H), 4,16 - 4,33 (m, 16H), 3,82 (s, 3H), 3,61 (s, 12H), 2,93 (t, J = 7,1 Hz, 2H), 2,68 (m, 2H); - **MS** (ESI-MS, 95% H₂O + 0,1% HCOOH / 5% MeCN + 0,1% HCOOH): e/z (%) = 659,34 (100%, MH⁺), 1317,68 (18%, (2M+H⁺)⁺); - UV (H₂O): λ/ [nm] (rel. [a.u.]) = 368 (1), 560 (0,22), 626 (0,36); |
| | | | 67 % d.Th. | | |
| | (CAS 4897-84-1) | | Blauer amorpher Feststoff | | |
| | | | | C₃₇H₄₆N₄O₇ | |
| | 181,03 g/mol | | | | |
| | 181 mg | | | | |
| VI | Methyl 3-bromo-2-methylpropanoate (CAS 20609-71-6) | 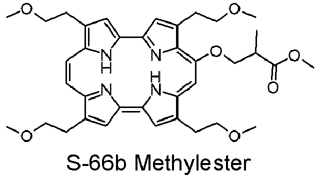 | 61 mg | 658,80 g/mol | **¹H-NMR** (400 MHz, CDCl₃): δ[ppm] = 9,64 (d, J = 10,4 Hz, 1H), 9,46 (d, J = 10,4 Hz, 1H), 9,19 - 9,25 (m, 5H), 4,16 - 4,34 (m, 16H), 3,71 (s, 3H), 3,62 (s, 3H), 3,61 (s, 6H), 3,59 (s, 3H), 3,46 - 3,64 (m, 2H), 2,88 (m, 1H), 1,34 (d, J = 5,4 Hz, 3H); - **MS** (ESI-MS, 95% H₂O + 0,1% HCOOH / 5% MeCN + 0,1% HCOOH): e/z (%) = 659,34 (100%, MH⁺), 1317,68 (10%, (2M+H⁺)⁺); - **UV** (H₂O): λ/ [nm] (rel. [a.u.]) = 367 (1), 558 (0,28), 627 (0,39); |
| | | | 30 % d.Th. | | |
| | | | Blauer amorpher Feststoff | C₃₇H₄₆N₄O₇ | |
| | 181,03 g/mol | | | | |
| | 181 mg | | | | |
| VII | tert-Butyl 1-(methoxycarbonyl)-3-bromopropyl carbamate (CAS 168077-38-1) | 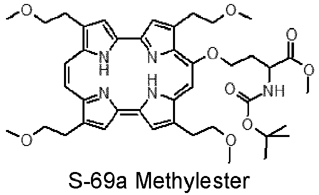 | 77 mg | 773,93 g/mol | **¹H-NMR** (400 MHz, CDCl₃): δ[ppm] = 9,63 (d, J = 10,4 Hz, 1H), 9,46 (d, J = 10,4 Hz, 1H), 9,29 (s, 1H), 9,20 - 9,25 (m, 4H), 5,81 (m, 1H), 4,98 (m, 2H), 4,89 (m, 1H), 4,19 - 4,34 (m, 16H), 3,82 (s, 3H), 3,62 (s, 3H), 3,61 (s, 6H), 3,59 (s, 3H), 2,90 (m, 1H), 2,71 (m, 1H), 1,51 (s, 9H); - **MS** (ESI-MS, 95% H₂O + 0,1% HCOOH / 5% MeCN + 0,1% HCOOH): e/z (%) = 774,41 (100%, MH⁺), 1547,81 (8%, (2M+H⁺)⁺); - **UV** (H₂O): λ/ [nm] (rel. [a.u.]) = 372 (1), 560 (0,21), 626 (0,33); |
| | | | 33 % d.Th. | | |
| | | | Blauer amorpher Feststoff | C₄₂H₅₅N₅O₉ | |
| | 296,16 g/mol | | | | |
| | 296 mg | | | | |
| VIII | α-N-(tert-butoxy carbonyl)-glutaminsäure-(3-bromopropyl)amidtert-butylester (***) | 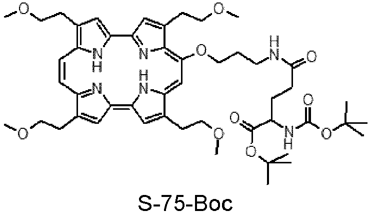 | 127 mg | 901,12 g/mol | **¹H-NMR** (600 MHz, CDCl₃): δ[ppm] = 9,65 (d, J = 10,4 Hz, 1H), 9,48 (d, J = 10,4 Hz, 1H), 9,34 (s, 1H), 9,22 - 9,27 (m, 4H), 5,35 (bs, 1H), 5,25 (bs, 1H), 5,02 (m, 2H), 4,18 - 4,36 (m, 16H), 3,86 (m, 2H), 3,61 (s, 3H), 3,59 (s, 3H), 3,59 (s, 3H), 3,58 (s, 3H), 3,38 (m, 2H), 2,61 (m, 2H), 2,37 (m, 1H), 2,27 (m, 2H), 1,46 (s, 9H), 1,25 (s, 9H); - **MS** (ESI-MS, 95% H₂O + 0,1% HCOOH / 5% MeCN + 0,1% HCOOH): e/z (%) = 901,51 (100%, MH⁺); |
| | | | 47 % d.Th. | | |
| | | | Blauer amorpher Feststoff | C₄₉H₆₈N₆O₁₀ | |
| | 423 mg | | | | |
| | 423,35 g/mol | | | | |

**Tabelle 30: Mit allgemeiner Vorschrift y2) hergestellte Verbindungen**

| ***No*** | ***Reaktant Molmasse Einwaage*** | ***Zielverbindung*** / ***Nummer*** | ***Ausbeute*** / ***Aussehen*** | ***Molekülmasse*** / ***Summenformel*** | ***Analytik*** |
|---|---|---|---|---|---|
| I | N-Boc-glutaminsäure-1-tert.-butylester | 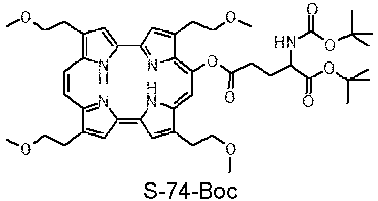 | 124 mg | 844,03 g/mol | **¹H-NMR** (400 MHz, CDCl₃): δ[ppm] = 9,52 - 9,68 (m, 3H), 9,22 - 9,34 (m, 4H), 5,51 (m, 1H), 4,60 (m, 1H), 4,22 - 4,35 (m, 14H), 4,17 (m, 2H), 3,62 (s, 6H), 3,60 (s, 6H), 3,34 (m, 2H), 2,71 (m, 1H), 2,68 (m, 1H), 2,34 (m, 1H), 1,58 (s, 9H), 1,27 (s, 9H); - **MS** (ESI-MS, 95% H₂O + 0,1% HCOOH / 5% MeCN + 0,1% HCOOH): e/z (%) = 844,45 (100%, MH⁺), 1005,45 (12%, (2M+H⁺)⁺); - **UV** (H₂O): λ/ [nm] (rel. [a.u.]) = 365 (1), 555 (0,21), 600 (0,21), 630 (0,24); |
| | | | 74 % d.Th. | | |
| | (CAS 24277-39-2) | | Blauer, amorpher Feststoff | | |
| | | | | C₄₆H₆₁N₅O₁₀ | |
| | 303,35 g/mol | | | | |
| | 151 mg | | | | |

**Tabelle 31: Mit allgemeiner Vorschrift y3) hergestellte Verbindungen**

| ***No*** | ***Reaktant Molmasse Einwaage*** | ***Zielverbindung* / *Nummer*** | ***Ausbeute* / *Aussehen*** | ***Molekülmasse* / *Summenformel*** | ***Analytik*** |
|---|---|---|---|---|---|
| I | 3-(Chloropropyl)-trimethoxysilan | 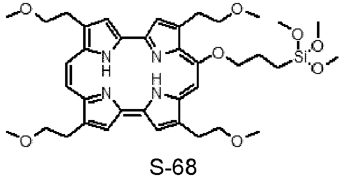 | 32 mg | 720,95 g/mol | **¹H-NMR** (400 MHz, CDCl₃): δ[ppm] = 9,56 (d, J = 8,0 Hz, 1H), 9,41 (d, J = 8,0 Hz, 1H), 9,33 (s, 1H), 9,26 (s, 4H), 4,13 - 4,32 (m, 16H), 3,58 (s, 3H), 3,56 (s, 3H), 3,55 (s, 3H), 3,52 (s, 9H), 3,36 (s, 3H), 2,52 (m, 2H), 1,84 (m, 2H), 0,68 (m, 2H); |
| | | | 45 % d.Th. | | |
| | (CAS 2530-87-2) | | Blauer amorpher Feststoff | | |
| | 198,72 g/mol | | | C₃₈H₅₂N₄O₈Si | |
| | 40 mg | | | | |

**Tabelle 32: Mit allgemeiner Vorschrift z1) hergestellte Verbindungen**

| ***No*** | ***Reaktant Molmasse Einwaage*** | ***Zielverbindung* / *Nummer*** | ***Ausbeute* / *Aussehen*** | ***Molekülmasse* / *Summenformel*** | ***Analytik*** |
|---|---|---|---|---|---|
| I | S-62-Boc | 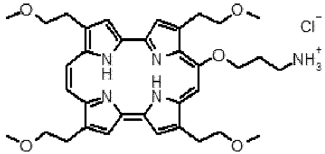 | 65 mg | 652,24 g/mol | **¹H-NMR** (600 MHz, CD₃OD): δ[ppm] = 8,84 (d, J = 7,8 Hz, 1H), 8,77 (d, J = 7,8 Hz, 1H), 8,52 - 8,68 (m, 2H), 8,47 (s, 1H), 8,04 (s, 1H), 4,27 (m, 2H), 4,12 (m, 4H), 4,01 (m, 4H), 3,81 - 3,94 (m, 4H), 3,61 - 3,67 (m, 2H), 3,61 (s, 3H), 3,57 (s, 6H), 3,53 (s, 3H), 3,51 (m, 2H), 3,32 (m, 2H), 2,38 (m, 2H); - MS (ESI-MS, 95% H₂O + 0,1% HCOOH / 5% MeCN + 0,1% HCOOH): e/z (%) = 309,18 (48%, (M+2H⁺)²⁺), 617,36 (100%, MH⁺); |
| | | | 83 % d.Th. | | |
| | 715,89 g/mol | | | | |
| | | | Blaues feines Pulver | C₃₅H₄₆N₅O₅Cl | |
| | 72 mg | | | | |
| | | 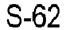 | | | |
| II | S-69a | 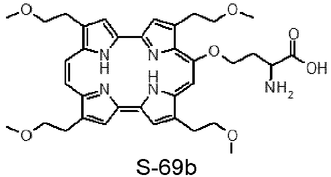 | 45 mg | 659,79 g/mol | **MS** (ESI-MS, 95% H₂O + 0,1% HCOOH / 5% MeCN + 0,1% HCOOH): e/z (%) = 330,67 (94%, (M⁺+H⁺)²⁺), 660,34 (100%, MH⁺); - UV (H₂O): λ/ [nm] (rel. [a.u.]) = 366 (1), 562 (0,21), 625 (0,31); |
| | 759,9 g/mol | | 68 % d.Th. | | |
| | | | | C₃₆H₄₅N₅O₇ | |
| | 76 mg | | Blaues Glas | | |
| III | S-74-Boc | 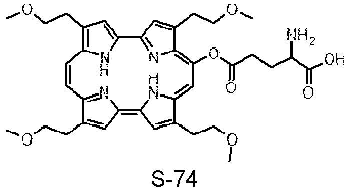 | 43 mg | 687,80 g/mol | **MS** (ESI-MS, 95% H₂O + 0,1% HCOOH / 5% MeCN + 0,1% HCOOH): e/z (%) = 344,67 (100%, (M⁺+H⁺)²⁺), 688,33 (34%, MH⁺); - UV (H₂O): λ/ [nm] (rel. [a.u.]) = 365 (1), 390 (0,75), 570 (0,17), 608 (0,19), 633 (0,22); |
| | 844,03 g/mol | | 62 % d.Th. | | |
| | | | | C₃₇H₄₅N₅O₈ | |
| | 84 mg | | Blaues Glas | | |
| IV | S-75-Boc | 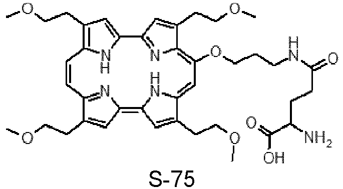 | 42 mg | 744,90 g/mol | **MS** (ESI-MS, 95% H₂O + 0,1% HCOOH / 5% MeCN + 0,1% HCOOH): e/z (%) = 373,19 (100%, (M⁺+H⁺)²⁺), 745,39 (27%, MH⁺); - UV (H₂O): λ/ [nm] (rel. [a.u.]) = 363 (1), 392 (0,71), 571 (0,19), 610 (0,20), 631 (0,23); |
| | 901,12 g/mol | | 57 % d.Th. | | |
| | | | | C₄₀H₅₂N₆O₈ | |
| | 90 mg | | Blaues Glas | | |

**Tabelle 33: Mit allgemeiner Vorschrift z2) hergestellte Verbindungen**

| ***No*** | ***Reaktant Molmasse Einwaage*** | ***Zielverbindung* / *Nummer*** | ***Ausbeute*** / ***Aussehen*** | ***Molekülmasse* / *Summenformel*** | ***Analytik*** |
|---|---|---|---|---|---|
| I | S-66a | 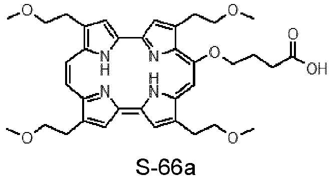 | 55 mg | 644,77 g/mol | **¹H-NMR** (600 MHz, CDCl₃): δ[ppm] = 9,48 (d, J = 10,4 Hz, 1H), 9,30 (d, J = 10,4 Hz, 1H), 9,13 (s, 1H), 9,10 (s, 1H), 9,01 (s, 1H), 8,94 (s, 1H), 8,93 (s, 1H), 4,73 (t, J = 6,0 Hz, 2H), 4,21 - 4,29 (m, 10H), 4,12 - 4,19 (m, 6H), 3,96 (t, J = 7,2 Hz, 2H), 3,60 (s, 6H), 3,59 (s, 3H), 3,55 (s, 3H), 2,91 (t, J = 7,2 Hz, 2H), 2,55 (m, 2H); - **MS** (ESI-MS, 95% H₂O + 0,1% HCOOH / 5% MeCN + 0,1% HCOOH): e/z (%) = 645,33 (100%, MH⁺), 1289,65 (90%, (2M+H⁺)⁺); - UV (H₂O): λ/ [nm] (rel. [a.u.]) = 366 (1), 558 (0,22), 626 (0,37); |
| | Methylester | | 85 % d.Th. | | |
| | 658,8 g/mol | | Blaugrünes Pulver | C₃₆H₄₄N₄O₇ | |
| | 66 mg | | | | |
| II | S-66b | 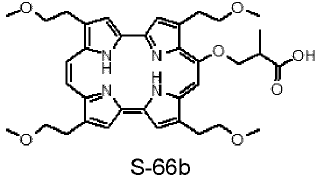 | 51 mg | 644,77 g/mol | **MS** (ESI-MS, 95% H₂O + 0,1% HCOOH / 5% MeCN + 0,1% HCOOH): e/z (%) = 645,33 (100%, MH⁺), 1289,65 (27%, (2M+H⁺)⁺); - UV (H₂O): λ/ [nm] (rel. [a.u.]) = 366 (1), 556 (0,21), 628 (0,32); |
| | Methylester | | 79 % d.Th. | | |
| | 658,8 g/mol | | Blaugrünes Pulver | C₃₆H₄₄N₄O₇ | |
| | 66 mg | | | | |
| III | S-69a | 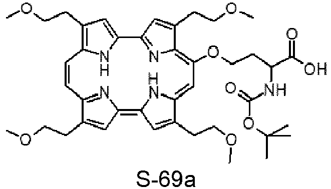 | 55 mg | 759,90 g/mol | **MS** (ESI-MS, 95% H₂O + 0,1% HCOOH / 5% MeCN + 0,1% HCOOH): e/z (%) = 760,39 (100%, MH⁺), 1519,78 (69%, (2M+H⁺)⁺); - UV (H₂O): λ/ [nm] (rel. [a.u.]) = 372 (1), 561 (0,22), 626 (0,37); |
| | Methylester | | 72 % d.Th. | | |
| | 773,9 g/mol | | Blaugrünes Pulver | C₄₁H₅₃N₅O₉ | |
| | 77 mg | | | | |

### Beispiel 2: Herstellung und Anwendung von Sol-Gel- Formulierungen

Zunächst wurden verschiedene Herstellvorschriften der Beschichtungslösungen sowie mögliche Rezepturen beschrieben. Die so erzeugten alkoholischen SolGel Lösungen wurden auf ihre Stabilität in flüssiger Phase untersucht, auf verschiedene Probenträger aufgebracht und die Eigenschaften der Schichten bzw. deren Qualität bewertet. Der Einfluss verschiedener Aushärtebedingungen wurde verglichen.

In ausgewählten Systemen wurden verschiedene Derivate der verwendeten Photokatalysatorklassen eingebracht. Nach Aushärten der Schichten wurde das Auswaschverhalten untersucht um die ausreichend feste Einbindung in die Beschichtungen zu bewerten.

Mit mikrobiologischen Untersuchungen wurde die Wirksamkeit der photokatalysatorhaltigen SolGel Beschichtungen gegen Bakterien und Viren bestimmt. Zusätzlich wurde die Photostabilität, Temperaturbeständigkeit und Langzeitwirkung des Gesamtsystems grundlegend geprüft.

### Herstellvorschriften Beschichtungslösungen

### Beispiel 2a:

Eine Mischung aus Alkoxysilanen (siehe Tabellen 39 und 40, in Summe 5,0 mmol) wurde mit 4,0 mL 2-Propanol gemischt und kurz zur homogenen Verteilung gerührt. Nach Zugabe von 0,5 mL (≈ 2 eq) bzw. 0,65 mL (≈ 2,5 eq) einer verdünnten Säure in deionisiertem Wasser (siehe Tabelle 1a) wurde das Gemisch 6 h bei Raumtemperatur gerührt. Nach einer Ruhezeit von 4 - 6 h war die Lösung gebrauchsfertig. Es ergab sich ein Gesamtvolumen von ca. 5 mL.

**Tabelle 34: Liste der verwendeten Katalysatoren**

| **Kürzel** | **Katalysator** | **Konzentration /mM** | |
|---|---|---|---|
| HA | Essigsäure | 50 | 0,5 mL (≈ 2 eq) |
| HB | Borsäure | 50 | 0,65 mL (≈ 2,5 eq) |
| HC | Salzsäure | 10 | 0,65 mL (≈ 2,5 eq) |

**Tabelle 35: Anwendungseinstellung**

| Zugabe 2-Propanol | Verhältnis | Feststoffgehalt | Bevorzugte Verwendung |
|---|---|---|---|
| 10,0 mL | 1:2 | 3,5 +/- 0,3 % | Wischapplikation / Tauchen |
| 25,0 mL | 1:5 | 1,8 +/- 0,2 % | Wischapplikation / Tauchen |
| 40,0 mL | 1:8 | 1,1 +/- 0,1 % | Wischapplikation / Tauchen |

### Beispiel 2b:

Eine Mischung aus Alkoxysilanen (siehe Tabellen 39 und 40, in Summe 5,0 mmol) wurde mit 4,0 mL 2-Propanol gemischt und kurz zur homogenen Verteilung gerührt. Nach Zugabe von 0,65 mL (≈ 2,5 eq) wässriger Borsäure (50 mM) wurde das Gemisch 3 h bei 60°C gerührt. Nach einer Ruhezeit von 4 - 6 h war die Lösung gebrauchsfertig.

### Beispiel 2c:

Eine Mischung aus Alkoxysilanen (siehe Tabellen 39 und 40, in Summe 5,0 mmol) wurde mit 4,0 mL 2-Propanol gemischt und kurz zur homogenen Verteilung gerührt. Es wurden 0,65 mL der in der folgenden Tabelle angegebenen Katalysatorlösung zugemischt. Bei PO und SX wurden zusätzlich 0,65 mL deionisiertes Wasser zugegeben. Das Gemisch wurde über Nacht bei Raumtemperatur gerührt. Nach einer Ruhezeit von 4 - 6 h war die Lösung gebrauchsfertig.

**Tabelle 36: Liste der verwendeten Katalysatoren / Lösungen**

| Kürzel | Name | Konzentration |
|---|---|---|
| AL | Aluminiumlaktat | 10 mM in Wasser |
| PO | Tripyrrolidinophosphanoxid | 5% (w/w) in 2-Propanol |
| SX | Hexamethyldisilazan | 5% (w/w) in 2-Propanol |

### Beispiel 3a:

Zur vorgelegten Mischung der Alkoxysilane (siehe Tabellen 39 und 40, in Summe 5,0 mmol) wurden 9,0 mL Ethanol und 0,32 mL wässrige Essigsäure (1,25 eq, 50 mM) nacheinander zugegeben und für 16 h bei Raumtemperatur gerührt. Nach einer Ruhezeit von 4 h war die Lösung gebrauchsfertig.

### Beispiel 3b:

Zur vorgelegten Mischung der Alkoxysilane (siehe Tabellen 39 und 40, in Summe 5,0 mmol) wurden 8,0 mL 1-Methoxy-2-Propanol und 0,63 mL wässrige Essigsäure (10 mM) nacheinander zugegeben und für 16 h bei Raumtemperatur gerührt. Nach einer Ruhezeit von 4 h war die Lösung gebrauchsfertig.

### Beispiel 4:

Zur vorgelegten Mischung der Alkoxysilane (siehe Tabellen 39 und 40, in Summe 5,0 mmol) wurden 1,0 mL 2-Propanol und 0,65 mL wässrige Essigsäure (50 mM) nacheinander zugegeben. Die Mischung wurde bei Raumtemperatur bis zur Einphasigkeit gerührt (0,5 h - 8 h, je nach Mischung der Alkoxysilane). Nach Ausschalten des Rührers muss die Lösung noch mindestens 48 h bei Raumtemperatur stehen.

Anschließend wurde mit der entsprechenden Menge 2-Propanol nach Tabelle 37 auf die gewünschte Anwendungskonzentration aufgefüllt: Nach Verdünnung war die Lösung nach einer Ruhezeit von 24 h gebrauchsfertig.

**Tabelle 37: Anwendungseinstellung nach Beispiel 4**

| Zugabe 2-Propanol | Feststoffgehalt | Bevorzugte Verwendung |
|---|---|---|
| 3,0 mL | 9 +/- 0,7 % | Sprühapplikation / Rakeln / Aufwalzen |
| 6,0 mL | 7 +/- 0,6 % | Sprühapplikation / Rakeln / Aufwalzen |
| 9,0 mL | 5 +/- 0,5 % | Wischapplikation / Tauchen |

### Beispiel 5:

Zur vorgelegten Mischung der Alkoxysilane (siehe Tabellen 39 und 40, in Summe 5,0 mmol) wurden 8,0 mL 1-Methoxy-2-Propanol und 0,63 mL wässrige Essigsäure (10 mM) nacheinander zugegeben. Nach Rühren bei Raumtemperatur über Nacht wurden 0,25 g 4,4'-Sulfonyldiphenol und 0,01 g 1-Methylimidazol nacheinander zugegeben. Danach wurde eine Stunde gerührt und anschließend die klare Lösung für 12h stehengelassen.

### Beispiel 6 ("2K System"):

Lösung A): Die Silane GLYMO (32,7 g, 136 mmol) und TEOS (9,8 g, 47 mmol) wurden in 58 mL Essigsäure (50 mM) vorgelegt und über Nacht bei Raumtemperatur bis zur Einphasigkeit gerührt. Lösung B): GLYMO (0,6 g, 2,5 mmol) wurde in 98 g Dioxan gelöst und 1-Methylimidazol (0,1 g, 1,2 mmol) werden zugegeben. Die Lösung wurde 1,5 h bei 95 °C gerührt. Nach Abkühlen auf RT ließ man 12 h stehen; die Lösung war gebrauchsfertig.

Lösung B'): Eine 2 %ige Lösung (w/w) von FOTES in Dioxan (98 g) wurde vorgelegt. GLYMO (0,6 g, 2,5 mmol) und 1-Methylimidazol (0,1 g, 1,2 mmol) wurden nacheinander zugegeben. Die Lösung wurde 1,5 h bei 95 °C gerührt. Nach Abkühlen auf RT ließ man 12 h stehen; die Lösung war gebrauchsfertig.

Die Beschichtungslösung wurde durch eine 1:1 Mischung (w/w) aus Lösung A und Lösung B oder B' nach 15 minütigem Rühren erhalten.

### Beispiel 7a: 2K-System ("Kits of Parts")

Grundkomponente (A): Ein Mischung aus 15 mmol TEOS, 20 mmol MTES und 10 mmol APTMS wurde analog zu Beispiel 4 in 10,0 mL 2-Propanol vorgelegt und mit 7,0 mL wässriger Essigsäure (50 mM) für 2h gerührt, 48h stehen gelassen und mit 90,0 mL 2-Propanol aufgefüllt.

Zusatzkomponente (B): Die notwendige Menge an Photokatalysator wurde in einer Mischung aus 1,0 mL 2-Propanol und 8,0 mL 1-Methoxy-2-Propanol gelöst und 5,0 mmol GLYMO zugegeben. Die beiden Lösungen können getrennt voneinander gelagert werden. Vor der Beschichtung wurde die Zusatzkompontente (B) mit der Grundkomponente (A) homogen gemischt. Nach einer Stunde Standzeit wurde nach Beispiel 9 beschichtet.

### Beispiel 7b: 2K-System ("Kits of Parts")

Grundkomponente (A): Ein Mischung aus 25,0 mmol TEOS, 22,5 mmol APTMS und 7,5 mmol GLYMO wurden analog zu Beispiel 4 in 10,0 mL 2-Propanol vorgelegt und mit 7,0 mL wässriger Essigsäure (50 mM) für 2h gerührt, 48h stehen gelassen und mit 90,0 mL 2-Propanol aufgefüllt. Zusatzkomponente (B): Die notwendige Menge an Photokatalysator wurde in einer Mischung aus 1,0 mL 2-Propanol und 8,0 mL 1-Methoxy-2-Propanol vorgelegt. Es wurde 1,0 mL einer Lösung von Glycerolmonostearat (GMS, 0,8% w/w) in einer Mischung aus Methylethylketon und 2-Propanol (2:3 v/v) zugegeben und 15 min gerührt.

Die beiden Lösungen können getrennt voneinander gelagert werden. Vor der Beschichtung wurde die Zusatzkomponente (B) mit der Grundkomponente (A) homogen gemischt. Nach zehn Minuten Standzeit wurde nach Beispiel 9 beschichtet.

### Beispielrezepturen / Silanmischungen

Die folgenden Stoffe sind kommerziell verfügbar. Es wurde der Einfachheit halber ein Alkoxysilan (z.B. Ethoxy oder Methoxy) mit entsprechenden Substituenten ausgewählt. Es konnte auch jeweils das analoge Derivat eingesetzt werden, d.h. beispielsweise Methyltrimethoxysilan anstatt Methyltriethoxysilan.

**Tabelle 38: Chemikalien und Abkürzungen**

| Kurzbezeichnung | Systematischer Name | CAS No | Gehalt |
|---|---|---|---|
| TEOS | Tetraethoxysilan | 78-10-4 | > 98% |
| PTES | Phenyltriethoxysilan | 780-69-8 | > 98% |
| MTES | Methyltriethoxysilan | 2031-67-6 | > 98% |
| GLYMO | (3-Glycidyloxypropyl)-trimethoxysilan | 2530-83-8 | > 98% |
| MEMO | 3-Trimethoxysilyl-propylmethacrylat | 2530-85-0 | > 98% |
| FOTES | 1H,1H,2H,2H-Perfluoroctyl-triethoxysilan | 51851-37-7 | > 95% |
| APTMS | 3-Acetoxypropyl-trimethoxysilan | 59004-18-1 | ≥ 97% |
| SATES | [3-(Trimethoxysilyl)propyl]-succinanhydrid | 156088-53-8 | > 95% |
| CPTMS | Tris-[3-(trimethoxysilyl)propyl]-isocyanurat | 26115-70-8 | > 95% |
| HMTES | Hydroxymethyl-triethoxysilan (50%ige Lösung in Methanol) | 162781-70-6 | ≥ 50% |
| BPTMS | Benzyloxypropyl-trimethoxysilan | 76241-02-6 | ≥ 97% |
| MPTMS | Methoxypropyl-trimethoxysilan | 33580-59-5 | ≥ 97% |
| iOTES | Isooctyl-triethoxysilan | 34396-03-7 | ≥ 95% |
| iBTES | Isobutyl-triethoxysilan | 17980-47-1 | ≥ 97% |

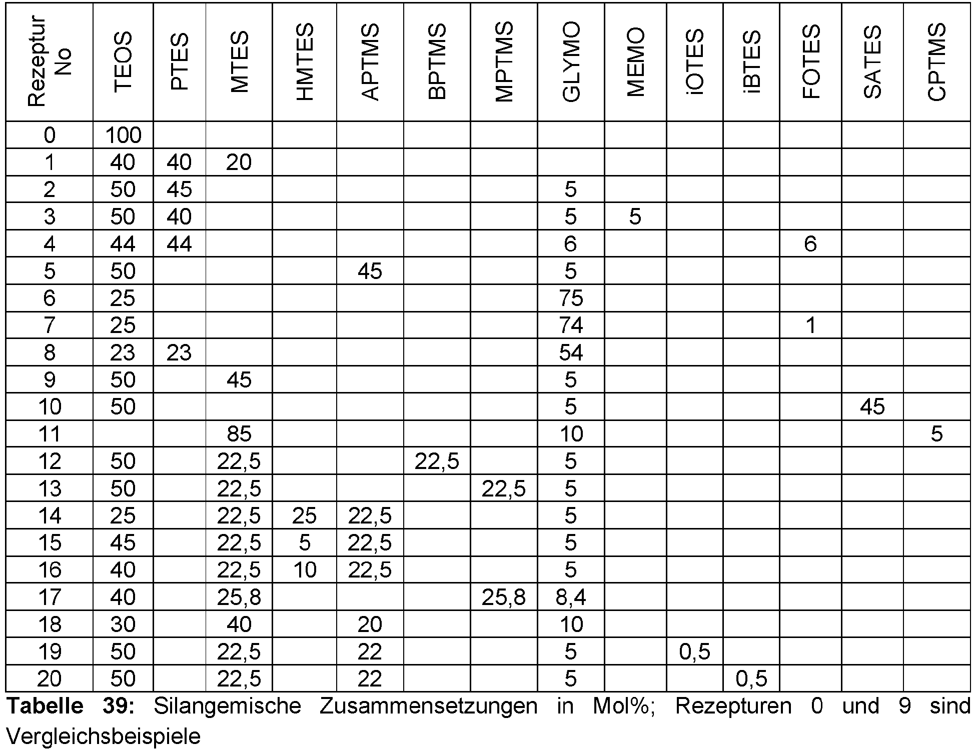

Rezeptur 0 dient als Vergleichsbeispiel. Hier wurde reines TEOS ohne weitere Zusatzstoffe nach Herstellvorschrift Beispiel 1a und Beispiel 4 umgesetzt.

**Tabelle 40: Zuordnung der Beispielvorschriften zu den Rezepturen**

| **Beispiel:** | **1a** | | **1b** | **1c** | | **2** | **3** | **4** | **5** | **6** |
|---|---|---|---|---|---|---|---|---|---|---|
| Rezeptur | Kat | | | | Kat | | | | | |
| 0 | X | HC | | | | | | X | | |
| 1 | X | HC | | | | | | X | | |
| 2 | X | HA/HB/HC | X | X | AL/PO/SX | X | X | X | | |
| 3 | X | HA | X | X | PO | X | X | X | | |
| 4 | X | HA | | | | | | X | | |
| 5 | X | HA | X | X | PO | | | X | | |
| 6 | | | | | | | | | | X |
| 7 | | | | | | | | | | X |
| 8 | | | | X | PO | | | | | |
| 9 | X | HA | X | X | PO | | | X | | |
| 10 | | HA | | | | | | | X | |
| 11 | X | HA | | | | | | | X | |
| 12 | | | | | | | | X | | |
| 13 | X | HA | | | | | | X | | |
| 14 | X | HA | | | | | | X | | |
| 15 | X | HA | | | | | | X | | |
| 16 | X | HA | | | | | | X | | |
| 17 | X | HA | | | | | | X | | |
| 18 | X | HA | | | | | | X | | |
| 19 | X | HA | | | | | | X | | |
| 20 | X | HA | | | | | | X | | |

Im Folgenden werden mögliche Zusatzstoffe, die Auftragung der Beschichtungslösungen auf Oberflächen, die Aushärtung, Haftvermittler sowie nachträgliche Hydrophobierung der aufgebrachten Beschichtung beschrieben.

### Modifikation und Verarbeitung der Beschichtungslösung, Nachbehandlung

### Beispiel 8: Zusatzstoffe

Die Beschichtungslösungen (10,0 mL) nach Beispiel 2a und 4 wurden mit 0,1 mL einer 1%igen Lösung von Glycerolmonostearat (GMS) in Methylethylketon / 2-Propanol 2:3 gemischt und 5 min gerührt. Anschließend wurden 0,2 mL 1 Ethoxy-2-Propanol zugegeben. (Das GMS dient als Verlaufsadditiv, 1 Ethoxy-2-propanol als Verlaufshilfsmittel und MEK als Dispergierhilfsmittel). Falls nötig konnten noch Hilfsstoffe wie Verlaufsadditive oder Dispergierhilfsmittel zugegeben werden.

### Beispiel 9: Beschichten und optional beschleunigte Aushärtung

Die Beschichtungslösungen nach Beispiel 2a bis 8 wurden mit den gängigen Beschichtungsmethoden (Tauchen, Sprühen, Walzen oder Bewischen) langsam, dünn und gleichmäßig auf Prüfkörper aufgebracht. Bevorzugt wurden Spiralrakel 4 oder 6 µm oder Mikrofasertücher oder feinporige, kaschierte Schaumstoffschwämme oder Laminierschwämme aus Polyvinylalkohol verwendet.

Die behandelten Flächen wurden anschließend bei Raumtemperatur für 24 - 48 h gelagert um die Schichten aushärten zu lassen. Alternativ können die Beschichtungen z.B. auch für 2 h bei 60°C bzw. 1 h bei 80°C bzw. 10 min bei 120°C bzw. 1 min bei 150°C ausgehärtet werden. Zu beachten: vor Erwärmung musste die Schicht vollständig trocken sein.

Je nach Auftragungsart und Verwendungszweck ergaben sich für die erfindungsgemäßen Sol-Gel-Beschichtungen unterschiedliche Schichtdicken. Üblicherweise betrugen sie bis zu 5 µm, bevorzugt bis zu 2 µm, besonders bevorzugt < 1 µm

Die Aushärtung der Schicht konnte bei Raumtemperatur erfolgen. Zur Erlangung einer hohen Kratzfestigkeit der Beschichtung innerhalb einer angemessenen Zeitspanne erfolgte das Aushärten bevorzugt bei einer Temperatur von etwa 80 bis 150°C über mehrere Minuten bis wenige Stunden.

### Beispiel 10: Verbesserung der Haftung

Ein Melaminplättchen wurde mit einer 1%ige AMEO-Lösung in Isopropanol oder Ethanol beschichtet und anschließend 5 min bei Raumtemperatur getrocknet. Danach wurde das Plättchen mit einer Beschichtungslösung nach Beispiel 1a bis 7 beschichtet.

### Beispiel 11: Nachträgliche Hydophobierung

Ein mit einer Beschichtungslösung nach Beispiel 2a bis 8 beschichtete Glasplatte wurde mit einer käuflich zu erwerbenden hydrophoben Beschichtungslösung nach obiger Anleitung beschichtet. Als hydrophobe Beschichtungslösung wurde eine 1 %ige Lösung eines wasserbasierten fluoroalkylfunktionalen Oligosiloxans (z.B. SIVO 121 oder F8815 von Evonik) verwendet. Diese Lösung wurde auf die Beschichtung mit einem Baumwolltuch aufpoliert.

Funktionelle Moleküle können grundsätzlich auch nachträglich auf die erste SolGel Schicht mit antimikrobiellen Katalysator aufgebracht werden. Diese obere funktionelle Schicht wurde dabei sehr dünn aufgetragen (wenige Moleküllagen), um die Funktion der darunter liegenden Schicht nicht negativ zu beeinflussen.

Die zweite Schicht kann mit allen gängigen Beschichtungsmethoden wie Tauchen, Sprühen, Rakeln, Walzen etc. aufgebracht werden.

### Beispiel 12: Haltbarkeit des flüssigen Produktes und Bewertung der Beschichtungen

Beispielhafte Untersuchung der Stabilität von Rezeptur 5 hergestellt nach Beispiel 4 durch beschleunigte Alterung in Anlehnung an die ASTM F1980-16 ("Standard Guide for Accelerated Aging of Sterile Barrier Systems for Medical Devices") bei 37°C:

**Tabelle 41: Stabilität der SolGel Formulierung nach Rezeptur 5 in Abhängigkeit vom Feststoffgehalt bzw. Verdünnung mit 2-Propanol**

| Zugabe 2-Propanol [mL] | Feststoffgehalt [%] gerundet | Stabilität der Lösung bei 37°C [in Tagen] | Umrechnung auf RT [Monate] gerundet |
|---|---|---|---|
| Unverdünnt | 17,8 | 30 +/-3 | 3 |
| 1 mL | 13,5 | 40 +/-1 | 4 |
| 2 mL | 10,9 | 42 +/-2 | 4 |
| 3 mL | 9,1 | 70 +/-5 | 7 |
| 4 mL | 7,8 | 100 +/-2 | >10 |
| 6 mL | 6,9 | 140 +/-3 | >12 |
| 9 mL | 4,5 | > 150 | >12 |

Die oberen Daten sind die Versuchsergebnisse zur "beschleunigten Alterung". Da 15°C über RT und einem Q-Faktor von 2, wird deren Stabilitätsdauer mit Faktor 3 multipliziert um den Wert bei Raumtemperatur abzuschätzen.

Die Stabilität stieg mit zunehmendem Isopropanolgehalt an. Ein Feststoffgehalt von < 10 Gew.-% erwies sich für den praktischen Einsatz als vorteilhaft.

Messung und Bewertung der Schichten (ohne Photokatalysator): Die Beschichtung erfolgte auf Prüfkörpern aus Glas und Edelstahl nach Beispiel 9. Herstellung nach Beispiel 4 und 6; Feststoffgehalt Lösung < 10%.

Die Bewertung der Kratzfestigkeit erfolgte in Anlehnung an die in der DIN EN ISO 1518-1:2019-10 ("Beschichtungsstoffe - Bestimmung der Kratzbeständigkeit - Teil 1: Verfahren mit konstanter Last (ISO 1518-1:2019)"; Deutsche Fassung EN ISO 1518-1:2019) beschriebenen Methode unter Verwendung einer Kugelspitze, (1 mm).

Für die Bewertung der Wirkung eines Haftvermittlers wurden die Beschichtung auf Prüfkörpern aus Melamin und Edelstahl nach Beispiel 9 durchgeführt.

Die Ergebnisse sind in den Tabelle 42 bis 44 dargestellt. Dabei bedeuten:
(++ = sehr gut, + = gut / o = mittel / - = schlecht / -- = sehr schlecht), Hydrolyse: Zeit bis Einphasigkeit, Kratzfestigkeit nach ISO 1518-1 (Kugelspitze, 1 mm). n.d. = nicht gemessen.

Rezeptur 0 (Vergleichsbeispiel) neigte bei Aushärtung zur Rissbildung und Versprödung. Eine Temperaturerhöhung beschleunigte den Prozess.

Rezeptur 5 und 17 wurden bei 80°C für 1 h gehärtet. Das Ergebnis war hinsichtlich Aushärtung und Kratzfestigkeit mit der Tabellenangabe bei 120°C vergleichbar.

Wurden Rezeptur 5 und 17 bei 80°C in 5 - 6 Zyklen zu je 10 min gehärtet, wurde ebenfalls eine vergleichbare mechanische Stabilität der Beschichtung erreicht.

Die Aushärtung der Sol Gel Systeme erfolgt graduell über die Zeit und kann durch Temperatureintrag stark beschleunigt werden. Sie ist vorzugsweise ein Produkt aus Zeit und Temperatur. Je höher die Temperatur bei der Aushärtung, desto kürzer kann das Tempern durchgeführt werden.

Die Photokatalysatoren zeigten Temperaturstabilitäten von 160°C oder darüber; dementsprechend wurde 150°C als max. Temperatur für den beschleunigten Aushärteprozess gewählt.

**Tabelle 42: Bewertung der Materialeigenschaften**

| | Schichtqualität | Transparenz | Verlauf | Hydrolyse | Kratzfestigkeit (RT Härtung 24h) | Kratzfestigkeit (1h / 120°C) | Haftung auf Glas | Haltbarkeit Lösung bei RT in Monaten |
|---|---|---|---|---|---|---|---|---|
| Rezeptur 0 (Vergleich) | -- | + | + | 2 h / 25°C | ○ | n.d. | ○ | < 1 |
| Rezeptur 1 | - | + | + | 2 h / 25°C | ○ | n.d. | + | > 8 |
| Rezeptur 2 | ++ | + | ++ | 3 h / 25°C | ++ | ++ | + | > 8 |
| Rezeptur 3 | + | + | + | 3 h / 25°C | ++ | n.d. | + | > 12 |
| Rezeptur 4 | ○ | + | - | 3 h / 25°C | ○ | n.d. | + | > 3 |
| Rezeptur 5 | ++ | + | ++ | 2 h / 25°C | ○ | + | + | > 10 |
| Rezeptur 6 | ○ | + | - | 1,5 h / 95°C | ○ | n.d. | + | > 3 |
| Rezeptur 7 | - | ○ | - | 1,5 h / 95°C | ○ | n.d. | ○ | > 3 |
| Rezeptur 8 | - | + | ○ | 1,5 h / 25°C | ○ | n.d. | + | > 3 |
| Rezeptur 9 | + | + | + | 2 h / 25°C | + | ++ | + | > 10 |
| Rezeptur 10 | + | + | + | 3 h / 25°C | ○ | + | + | > 12 |
| Rezeptur 11 | + | + | + | 1,5 h / 25°C | - | + | + | > 12 |
| Rezeptur 12 | + | + | + | 1,5 h / 25°C | + | n.d. | + | > 3 |
| Rezeptur 13 | + | + | + | 2 h / 25°C | + | n.d. | ○ | > 9 |
| Rezeptur 14 | + | + | + | 1,5 h / 25°C | ++ | n.d. | ++ | > 9 |
| Rezeptur 15 | + | + | + | 1,5 h / 25°C | ○ | n.d. | ++ | > 9 |
| Rezeptur 16 | + | + | + | 1,5 h / 25°C | ○ | n.d. | ++ | > 9 |
| Rezeptur 17 | ++ | + | ++ | 1,5 h / 25°C | + | ++ | ++ | > 10 |
| Rezeptur 18 | ++ | + | + | 1,5 h / 25°C | ○ | n.d. | ++ | > 10 |
| Rezeptur 19 | ++ | + | + | 3 h / 25°C | ○ | + | + | > 10 |
| Rezeptur 20 | ++ | + | + | 3 h / 25°C | ○ | + | + | > 10 |

**Tabelle 43: Vergleich der Beispiele**

| | **Schichtqualität** | **Transparenz** | **Verlauf** | **Hydrolyse** | **Kratzfestigkeit (RT Härtung 24h)** | **Kratzfestigkeit (1h / 120°C)** | **Haftung auf Glas** | **Haltbarkeit Lösung bei RT in Monaten** |
|---|---|---|---|---|---|---|---|---|
| Rezeptur 5 / Beispiel 4 | ++ | + | ++ | 2 h / 25°C | ○ | + | + | > 10 |
| Rezeptur 18/ Beispiel 4 | ++ | + | + | 1,5 h / 25°C | ○ | n.d. | ++ | > 10 |
| Beispiel 7a | ++ | + | ++ | 2 h / 25°C | ○ | + | ++ | > 12 |
| Beispiel 7b | ++ | + | ++ | 2 h / 25°C | + | ++ | + | > 11 |

**Tabelle 44: Vergleich der Beispiele; Bewertung der Kratzfestigkeit bzw. Haftung nach RT Härtung bei 24h**

| Prüfkörper: | **Melamin** | | | | **Edelstahl** | | | |
|---|---|---|---|---|---|---|---|---|
| Beschichtung: | **Schichtqualität** | **Verlauf** | **Haftung** | **Kratzfestigkeit** | **Schichtqualität** | **Verlauf** | **Haftung** | **Kratzfestigkeit** |
| Rezeptur 5 / Beispiel 4 Ohne Primer nach Beispiel 10 | + | + | - | ○ | ++ | ++ | + | ○ |
| Rezeptur 18 / Beispiel 4 Ohne Primer nach Beispiel 10 | + | + | ○ | ○ | ++ | + | + | ○ |
| Rezeptur 5 / Beispiel 4 Mit Primer nach Beispiel 10 | ++ | ++ | + | + | ++ | ++ | ++ | ○ |
| Rezeptur 18 / Beispiel 4 Mit Primer nach Beispiel 10 | ++ | ++ | + | + | ++ | ++ | + | + |

### Beispiel 13 bis 19: Bewertung der Einbringung der Photokatalysatoren

Für alle Untersuchungen wurden nach Beispiel 8 beschichtete Glasträger verwendet.

### A) Immersionstest: Screening von Einbindung / Auswaschen der Photokatalysatoren

Um das Auswaschen der verschiedenen Farbstoffe in den Sol-Gel-Beschichtungen zu beurteilen wurde ein Immersionstest in vollentsalztem Wasser mit einem pH-Wert von (6 ± 1) und einer Wassertemperatur von (22 ± 3) °C für eine Stunde durchgeführt. Dazu wurden zunächst Schichten (Rezeptur 5, Beispiel 4, aufgefüllt mit 3,0 mL 2-Propanol; sh. Tabelle 3) mit erhöhter Farbstoffkonzentration (10 bis 40 mM; um die notwendige Auflösung bei der dünnen Schicht zu erreichen) auf Glas-Objektträgern erzeugt. Diese wurden nach dem Ablüften bei Raumtemperatur (30 min) eine Stunde bei 60°C nachgehärtet. Anschließend wurden die Schichten direkt im UV-VIS-Spektrometer vermessen. Die Ausgangswerte (Absorptionsmaximum des jeweiligen Farbstoffs) sollten dabei zwischen 0,05 A.U. und 1,50 A.U. liegen.

Nach einer Stunde in VE-Wasser wurden die Prüfkörper getrocknet und erneut gemessen. Aus den beiden Messungen wurde ein relativer Signalverlust in Prozent bei dem farbstoffspezifischen Absorptionsmaximum bestimmt.

Dieser Immersionstest diente dazu, das Auswaschverhalten verschiedener Farbstoffe aus Beschichtungssystemen zu beurteilen. Weiter soll er dabei helfen, verschiedene Farbstoffklassen oder verschiedene Farbstoffderivate einer Farbstoffklasse bezüglich dieser Charakteristik miteinander zu vergleichen. Die Ergebnisse sind in den folgenden Tabellen sortiert nach Stoffgruppen zusammengefasst:

### Beispiel 13:

**Tabelle 45: Einbindung von Photokatalysatoren mit Hydroxyfunktion in SolGel Beschichtungen**

| Gruppe A: neutral, hydroxyfunktionell | | | | |
|---|---|---|---|---|
| Verbindungen | Exemplarisch für | Stoffklasse | Verlust durch Auswaschen | Fehler |
| S-03 | S-01 / S-02 / S-03 | Phenalen-1-one | 11 % | +/- 4% |
| S-04 | S-04 / S-05 / S-06 / S-07 | Phenalen-1-one | 16 % | +/- 5% |
| S-12 | S-12 / S-13 / S-14 | Phenalen-1-one | 3 % | +/- 3% |
| S-53a | S-53a / S-53b | Curcumin | 13 % | +/- 3% |
| S-56 | | Curcumin | < 1 % | +/- 4% |
| S-58a | S-58a / S-65 | Porphycen | 4 % | +/- 2% |
| S-59a | S-59a / S-59b | Porphycen | 8 % | +/- 3% |
| S-60a | | Porphycen | 8 % | +/- 3% |
| S-61a | S-61a / S-61b | Porphycen | 6 % | +/- 3% |
| S-70a | S-70a / S-70b / S-71 | Porphycen | 4 % | +/- 3% |

### Beispiel 14:

**Tabelle 46: Einbindung von Photokatalysatoren mit negativer Ladung in SolGel Beschichtungen**

| Gruppe B: kationisch | | | | |
|---|---|---|---|---|
| Verbindungen | Exemplarisch für | Stoffklasse | Verlust durch Auswaschen | Fehler |
| S-08 | S-08 / S-09 / S-10 | Phenalen-1-one | 13 % | +/- 10% |
| S-24a | S-24a / S-24b | Phenalen-1-one | 9 % | +/- 3% |
| S-50b | S-50a / S-50b / S-50c | Curcumin | 13 % | +/- 3% |
| S-51 | | Curcumin | 11 % | +/- 3% |
| S-62 | | Porphycen | 3 % | +/- 2% |
| S-64 | S-63 / S-64 | Porphycen | 2 % | +/- 2% |

### Beispiel 15:

**Tabelle 47: Einbindung von Photokatalysatoren mit positiver Ladung in SolGel Beschichtungen**

| Gruppe C: anionisch | | | | |
|---|---|---|---|---|
| Verbindungen | Exemplarisch für | Stoffklasse | Verlust durch Auswaschen | Fehler |
| S-16 | | Phenalen-1-one | 9 % | +/- 3% |
| S-66a | S-66a / S-66b / S-69a | Porphycen | 3 % | +/- 2% |
| S-72 | | Porphycen | 5 % | +/- 3% |
| S-73 | | Porphycen | < 1 % | +/- 2% |

### Beispiel 16:

**Tabelle 48: Einbindung von kationischen Photokatalysatoren und Hydroxyfunktion in SolGel Beschichtungen**

| Gruppe D: kationisch, hydroxyfunktionell | | | | |
|---|---|---|---|---|
| Verbindungen | Exemplarisch für | Stoffklasse | Verlust durch Auswaschen | Fehler |
| S-20 | S-17/ S-18 / S-19 / S-20 / S-21 | Phenalen-1-one | 6 % | +/- 3% |
| S-25a | S-25a / S-25b / S-26 | Phenalen-1-one | 8 % | +/- 3% |
| S-27 | | Phenalen-1-one | 7 % | +/- 3% |
| S-28 | S-28 / S-29 | Phenalen-1-one | 15 % | +/- 5% |
| S-32 | S-31 / S-32 / S-33 | Phenalen-1-one | 13 % | +/- 3% |

### Beispiel 17:

**Tabelle 49: Einbindung von zwitterionischen Photokatalysatoren in SolGel Beschichtungen**

| Gruppe E: zwitterionisch | | | | |
|---|---|---|---|---|
| Verbindungen | Exemplarisch für | Stoffklasse | Verlust durch Auswaschen | Fehler |
| S-22 | | Phenalen-1-one | 13 % | +/- 4% |
| S-25c | | Phenalen-1-one | < 1 % | +/- 3% |
| S-30 | | Phenalen-1-one | 13 % | +/- 3% |
| S-74 | S-69b / S-74 | Porphycene | 11 % | +/- 4% |
| S-75 | | Porphycene | 9 % | +/- 3% |

### Beispiel 18:

**Tabelle 50: Einbindung von Photokatalysatoren mit Alkoxysilangruppen in SolGel Beschichtungen**

| Gruppe F: Alkoxysilanfunktion | | | | |
|---|---|---|---|---|
| Verbindungen | Exemplarisch für | Stoffklasse | Verlust durch Auswaschen | Fehler |
| S-35 | | Phenalen-1-one | 6 % | +/- 3% |
| S-37 | S-36 / S-37 | Phenalen-1-one | 8 % | +/- 3% |
| S-38 | S-38 / S-39 | Phenalen-1-one | 11 % | +/- 3% |
| S-40 | | Phenalen-1-one | 7 % | +/- 2% |
| S-41 | S-41 / S-42 / S-44 | Phenalen-1-one | 5 % | +/- 2% |
| S-43 | | Phenalen-1-one | < 1 % | +/- 3% |
| S-57 | | Curcumin | 11 % | +/- 3% |
| S-68 | | Porphycen | 9 % | +/- 3% |

### Beispiel 19:

**Tabelle 51: Einbindung von Photokatalysatoren in SolGel Beschichtungen**

| Gruppe G: Sonstige | | | |
|---|---|---|---|
| Borsäurefunktion | | | |
| Verbindungen | Stoffklasse | Verlust durch Auswaschen | Fehler |
| S-34 | Phenalen-1-one | 3 % | +/- 2% |

| Neutral unpolar | | | |
|---|---|---|---|
| Verbindungen | Stoffklasse | Verlust durch Auswaschen | Fehler |
| S-52a | Curcumine | 13 % | +/- 3% |
| S-60b | Porphycene | 2 % | +/- 2% |

| Borkomplex | | | |
|---|---|---|---|
| Verbindungen | Stoffklasse | Verlust durch Auswaschen | Fehler |
| S-52b | Curcumine | 4 % | +/- 2% |

### Vergleichsbeispiel 20:

In Vergleichsbeispiel 20 wurden folgende Photosensibilisatoren verwendet und deren Einbindung in die Sol-Gel-Beschichtung getestet:

**Tabelle 52: Einbindung von Photokatalysatoren in SolGel Beschichtungen**

| Verbindungen | Stoffklasse | Verlust durch Auswaschen | Fehler |
|---|---|---|---|
| Phenalen-1-on (Verb.Bsp. 48); drei Ammoniumgruppen (a) (trikationisch) | Phenalen-1-one | > 54% | +/- 12% |
| Curcumin 05 Hydrochlorid / SACUR-05 (Verb. Bsp.50) (b) (hexakationisch) | Curcumine | > 66% | +/- 20% |
| 2,7,12-Tris(pyridinio-p-tolyl)-17-(p-(methoxymethyl)phenyl) porphycen bromid (c) | Porphycene | > 70 % | +/- 20 % |
| (trikationisch) | | | |

| | | | |
|---|---|---|---|
| (a) hergestellt nach WO2012113860A3. Dazu wurde 2-Chlormethyl-1H-phenalen-1-on mit dem zweifach Boc-geschütztem Diethylentriamin umgesetzt und nach chromatographischer Aufreinigung mit HCl in Diethylether entschützt. Das Produkt wurde mit Diethylether gefällt und getrocknet. - MS (ESI-MS, CH2Cl2/MeOH + 10 mmol NH4OAc): e/z (%) = 310,1 (100, M⁺) (b) hergestellt nach: EP3135110A1. Dazu wurde 3,4,5-tris-(2-N-tert-butyloxycarbonyl-aminoethoxy)benzaldehyd in Ethylacetat mit Acetylaceton in Gegenwart von Boroxid und n-Butylamin kondensiert. Das erhaltene Curcumin wurde chromatographisch aufgereinigt und anschließend mit Trifluoressigsäure in Dichlormethan entschützt. Durch lonenaustauschchromatographie und Gefriertrockung wurde anschließend das Hydrochlorid der Verbindung erhalten. - MS (ESI, MeCN/H₂O + 0.06 % TFA): 158.6 (47%, (M+4H⁺)⁴⁺), 211.1 (100%, (M+3H⁺)³⁺), 273.1 (6%, (M+2H⁺)²⁺ -C2H5N), 316.2 (24%, (M+2H⁺)²⁺), 631.3 (12%, MH⁺) (c) hergestellt nach: Ragàs, X.; et al. Cationic porphycenes as potential photosensitizers for antimicrobial photodynamic therapy. J. Med. Chem. 2010, 53, 7796-7803. | | | |

2,7,12,17-Tetra(p-(methoxymethyl)phenyl)porphycen wurde mit Bromwasserstoff in Eisessig entschützt und das Produkt chromatographisch gereinigt. Anschließend wurde mit Pyridin bei 80°C für 2h quaternisiert und das Produkt mit tert-Butylmethylether gefällt. - MS (ESI, MeCN/H₂O + 0.06 % TFA): 333,15 (100%, (M³⁺).

2,7,12,17-Tetra(p-(methoxymethyl)phenyl)porphycen wurde mit Bromwasserstoff in Eisessig entschützt und das Produkt chromatographisch gereinigt. Anschließend wurde mit Pyridin bei 80°C für 2h quaternisiert und das Produkt mit tert-Butylmethylether gefällt. - MS (ESI, MeCN/H2O + 0.06 % TFA): 333,15 (100%, (M3+).

Multi-kationische Photosensibilisatorderivate mit erhöhtem sterischen Anspruch wurden nicht ausreichend in die SolGel Beschichtungen eingebunden und wuschen sich deutlich besser aus als die in den erfindungsgemäßen Beispielen verwendeten Photosensibilisatoren.

### Beispiele 21 bis 26: Mikrobiologische Wirksamkeit der ausgehärteten Schichten

### Beispiel 21: Wirksamkeitsprüfung gegen Bakterien / Kurzbeschreibung der Methode (Bakterientest in Anlehnung an ISO 22196):

Die Bestimmung der antimikrobiellen Aktivität erfolgte nach einer modifizierten Version der ISO 22196:2011-08 ("Messung von antibakterieller Aktivität auf Kunststoff- und anderen porenfreien Oberflächen", Ausgabedatum: 2011-08).

Bei der Testdurchführung wurde ein dünner Flüssigkeitsfilm, in dem die Bakterien enthalten sind (1,25 x 104 /cm2), direkt auf die Probekörper (2,5 cm x 2,5 cm) aufgebracht. Direkt nach Beimpfung wurden von der Nullprobe die Bakterien von den Probekörperoberflächen mittels Ultraschall und Vortexen abgelöst und die Keimzahl (KBE (engl. CFU), Kolonie-bildende Einheit) bestimmt (t0-Wert). Ein weiterer Satz Nullproben und antimikrobiell ausgestatteter Proben wurden mit Bakterien im Flüssigkeitsfilm bei Raumtemperatur inkubiert. Nach 4 h wurden überlebende Bakterien von den Probekörperoberflächen mittels Ultraschall und Vortexen abgelöst und die Keimzahl bestimmt (t4-Wert).

Im Unterschied zu der in der ISO 22196:2011-08 beschriebenen Methode wurde das Inokulum nicht mit einer Folie abgedeckt und die Inkubationszeit von 24 auf 4 Stunden reduziert. Weiterhin wurden die Platten der Proben 3 und 4 mit Licht mit einer Intensität von 300 µW/cm2 belichtet.

Die Beschichtung für diese Versuche basierte auf Rezeptur 5 nach Beispiel 4 hergestellt, beschichtet nach Beispiel 9 auf Schichtwerkstoff (Melamin). Als Photokatalysator wurde die Verbindung S-25a zu 2 mM in der Schicht verwendet. Die Ergebnisse sind Tabelle 53 dargestellt.

**Tabelle 53: Photodynamische Wirkung einer SolGel Beschichtung gegen verschiedene Bakterienstämme**

| | | Log₁₀ Reduktion | |
|---|---|---|---|
| Bakterienstamm | Klasse | Probe | Dunkelkontrolle |
| A. baumanii ATCC 15308 | Gram negativ | > 4,0 | 0,1 ± 0,1 |
| E.faecium EDCC 5271 | Gram positiv | > 4,0 | 0,0 ± 0,1 |
| S.aureus ATCC 6538 | Gram positiv | > 4,0 | 0,1 ± 0,1 |

### Beispiel 22 / Bakterizide Wirkung - verschiedene Katalysatoren

Die Beschichtung für diese Versuche basierte auf Rezeptur 2 nach Beispiel 2c hergestellt, beschichtet nach Beispiel 9 auf Schichtwerkstoff (Melamin). Als Photokatalysator wurde die Verbindung S-25a zu 2 mM in der Schicht verwendet.

Der Bakterientest wurde in Anlehnung an ISO 22196 nach oben beschriebener Methode durchgeführt. Die Ergebnisse sind Tabelle 54 dargestellt.

**Tabelle 54: Photodynamische Wirkung der Beschichtung (verschiedene) Katalysatoren gegen S.aureus**

| | | Log₁₀ Reduktion | |
|---|---|---|---|
| Kürzel | Katalysator | Probe | Dunkelkontrolle |
| AL | Aluminiumlaktat | 3,3±0,4 | 0,2±0,7 |
| PO | Tripyrrolidinophosphanoxid | 3,6±0,3 | 0,0±0,1 |
| SX | Hexamethyldisilazan | 2,6±1,5 | 0,4±0,6 |

### Beispiel 23 / Bakterizide Wirkung - verschiedene Rezepturen

Die Beschichtung für diese Versuche wurde nach Beispiel 2a Rezepturen 2 bis 5 hergestellt, aufgetragen nach Beispiel 9 auf Schichtwerkstoff (Melamin). Als Photokatalysator wurde die Verbindung S-25a zu 2 mM in der Schicht verwendet.

Die Rezepturen 6 und 7 wurden nach Vorschrift 2 hergestellt. Als Photokatalysator wurde die Verbindung S-25a verwendet (5 mM).

Der Bakterientest wurde in Anlehnung an ISO 22196 nach oben beschriebener Methode durchgeführt. Die Ergebnisse sind Tabelle 55 dargestellt.

**Tabelle 55: Photodynamische Wirkung verschiedener SolGel Beschichtung gegen S.aureus**

| | Log₁₀ Reduktion S. aureus | |
|---|---|---|
| | Probe | Dunkelkontrolle |
| Rezeptur 2 | 3,3±0,5 | 0,0±0,0 |
| Rezeptur 3 | 2,6±1,7 | 0,9±0,8 |
| Rezeptur 4 | 2,4±0,5 | 0,0±0,1 |
| Rezeptur 5 | 2,3±0,7 | 0,0±0,1 |
| Rezeptur 6 | 3,1±0,6 | 0,5±0,0 |
| Rezeptur 7 | 1,9±0,2 | 0,0±0,2 |

### Beispiel 24 / Bakterizide Wirkung - Einfluss des Feststoffgehaltes auf die Wirksamkeit

Die Beschichtung für diese Versuche basierte auf Rezeptur 2. Die nach Beispiel 2a erhaltene Beschichtung wurde mit 2 bzw. 5 bzw. 8 Teilen (v/v) IPA aufgefüllt (1:2/1:5/1:8; sh. Tabelle 1b). Zusätzlich wurde der Farbstoffgehalt S-25a bezogen auf den Feststoffgehalt variiert.

Der Bakterientest wurde in Anlehnung an ISO 22196 nach oben beschriebener Methode durchgeführt. Die Ergebnisse sind Tabelle 56 dargestellt.

**Tabelle 56: Photodynamische Wirkung verschiedener Einstellungen der SolGel Beschichtung gegen S.aureus (Anmerkung: Für den Farbstoff S-24a wurden im Rahmen des Fehlers die gleichen Werte erhalten. Sie sind hier nicht abgebildet).**

| Verdünnung mit IPA | Log₁₀ Reduktion | | | |
|---|---|---|---|---|
| | Wirksamkeit 1 mM | Dunkelkontrolle 1 mM | Wirksamkeit 2 mM | Dunkelkontrolle 2 mM |
| 1:2 | 3,0±0,2 | 0,1±0,4 | 3,3±0,5 | 0,0±0,0 |
| 1:5 | 2,0±0,2 | 0,0±0,2 | 2,8±0,2 | 0,1±0,1 |
| 1:8 | 1,5±0,1 | 0,0±0,2 | 2,7±0,6 | 0,0±0,1 |

### Beispiel 25 / Bakterizide Wirkung - Einfluss verschiedener Katalysatoren auf die Wirksamkeit

Die Beschichtung für diese Versuche basierte auf Rezeptur 4 nach Beispiel 5 hergestellt, beschichtet nach Beispiel 9 auf Schichtwerkstoff (Melamin). Als Photokatalysator wurde die Verbindung S-25a zu 2 mM in der Schicht verwendet.

Der Bakterientest wurde in Anlehnung an ISO 22196 nach oben beschriebener Methode durchgeführt. Die Ergebnisse sind Tabelle 57a bis 57b dargestellt.

**Tabelle 57a: Photodynamische Wirkung verschiedener Katalysatoren in der SolGel Beschichtung gegen S.aureus**

| Photoatalysator | S. enterica | | I. monocytoqenes | |
|---|---|---|---|---|
| | Log₁₀ Reduktion | | Log₁₀ Reduktion | |
| | Probe | Dunkelkontrolle | Probe | Dunkelkontrolle |
| S-25a | 2,5±0,4 | 0,0±0,1 | 1 ,7±1,2 | 0,0±0,1 |
| S-24a | 4,5±0,8 | 0,0±0,2 | 4,5±0,3 | 0,0±0,3 |
| S-28 | 3,9±0,7 | 0,0±0,1 | 4,3±0,2 | 0,0±0,0 |
| S-51 | 1,8±0,2 | 0,0±0,2 | 2,3±0,6 | 0,0±0,1 |

**Tabelle 57b: Photodynamische Wirkung verschiedener Katalysatoren in der SolGel Beschichtung gegen S.aureus**

| Photokatalysator | S. aureus | |
|---|---|---|
| | Log₁₀ Reduktion | |
| | Probe | Dunkelkontrolle |
| S-58a | 1,4±0,1 | 0,0±0,1 |
| S-64 | 2,1±0,3 | 0,0±0,2 |

### Beispiel 26 Wirksamkeitsprüfung gegen Viren / Kurzbeschreibung der Methode (Virentest in Anlehnung an ISO 21702):

Eine antivirale Wirksamkeit wurde in Anlehnung an die in der ISO 21702:2019-05 ("Messung der antiviralen Aktivität an Kunststoffen und anderen nicht-porösen Oberflächen, Ausgabedatum: 2019-05) beschriebenen Methode durchgeführt.

Die Prüfkörper mit Beschichtung (+/- Photosensitizer; PS) wurden mit 50 µL einer Virussuspension beimpft. Die Suspension wurde im Dunklen bis zur sichtbaren Trocknung der Flüssigkeit inkubiert. Die Hauptprobe (Prüfkörper mit Beschichtung: mit PS) und die Lichtkontrolle (Prüfkörper mit Beschichtung: ohne PS) wurden anschließend mit einer Lichtintensität von 20 mW/cm² (LED Customer Device) für 83 Min belichtet, wohingegen die Referenzkontrolle (Prüfkörper mit Beschichtung: ohne PS) und die Dunkelkontrolle (Prüfkörper mit Beschichtung: mit PS) solange im Dunkeln inkubiert wurde.

Nach Rückgewinnung der Viren vom Prüfkörper wurden die Titer der Lichtkontrolle, der Dunkelkontrolle sowie der Hauptprobe gegenüber des Titers der Referenzkontrolle gemessen (Titration mittels Endpunktverdünnung bzw. Large Volume Plating) und in Log10-Stufen Reduktionen berechnet.

Die Beschichtung für diese Versuche basierte auf Rezeptur 5 nach Beispiel 4 hergestellt, beschichtet nach Beispiel 9 auf Schichtwerkstoff (Melamin). Als Photokatalysator wurde die Verbindung S-25a zu 2 mM in der Schicht verwendet. Die Ergebnisse sind Tabelle 58 dargestellt.

Der Virentest wurde in Anlehnung an ISO 21702 nach oben beschriebener Methode durchgeführt.

**Tabelle 58: Photodynamische Wirkung einer SolGel Beschichtung gegen verschiedene Virenstämme**

| | | Log₁₀ Reduktion | |
|---|---|---|---|
| Virentyp | Klasse | Probe | Dunkelkontrolle |
| Influenza A Virus (H1N1, Stamm New Caledonia) | behüllt | 3,8 ± 0,2 | -0,8 ± 0,3 |
| TGEV-Coronavirus (Transmissible Gastroenteritis Virus of Swine; Stamm Toyama 36) | behüllt | 5,5 ± 0,3 | -0,1 ± 0,3 |
| Adenovirus (Typ 5, Stamm Adenoid 75) | unbehüllt | 2,0 ± 0,3 | 0,0 ± 0,4 |

### Beispiele 27 bis 29 Haltbarkeitstests via mikrobiologischer Untersuchung

Um die Haltbarkeit der Beschichtung bzw. das Auswaschen des Farbstoffs gegen gängige Reinigungs- und Desinfektionsmitteln, wurden damit Immersionstests in Incidin Plus (Ecolab GmbH, 10% in Wasser, Farbstoff S-25a) und Isopropanol (70% in Wasser) durchgeführt.

### Beispiel 27 / Bakterizide Wirkung - Einfluss Auswaschen auf die Wirksamkeit

Die Beschichtung für diese Versuche basierte auf Rezeptur 2 nach Beispiel 2a, die unter Verwendung von Borsäure hergestellt wurde und nach Beispiel 9 auf Schichtwerkstoff (Melamin). beschichtet wurde. Als Photokatalysator wurde die Verbindung S-25a zu 2 mM in der Schicht verwendet.

Der Bakterientest wurde in Anlehnung an ISO 22196 nach oben beschriebener Methode durchgeführt. Die Ergebnisse sind in den Tabellen 59 und 60 zusammengefasst.

**Tabelle 59: Mikrobiologische Wirksamkeit (Iog10 Reduktion) nach X h Immersion in Incidin Plus (10% in Wasser).**

| | Log₁₀ Reduktion nach | | | |
|---|---|---|---|---|
| | 0 h | 1 h | 2 h | 3 h |
| Probe | 3,7±0,2 | 2,6±0,1 | 2,4±0,3 | 1,4±0,1 |
| Dunkelkontrolle | 0,3±0,1 | 0,8±0,3 | 0,4±0,2 | 0,4±0,1 |

**Tabelle 60: Mikrobiologische Wirksamkeit (Iog10 Reduktion) nach 3 h Immersion in Isopropanol (70% in Wasser) mit verschiedenen Farbstoffkonzentrationen.**

| | Log₁₀ Reduktion nach | |
|---|---|---|
| Konzentration S-34 | 0 h | 3 h |
| 1 mM | 2,7±0,4 | 1,8±0,3 |
| 1 mM Dunkelkontrolle | 0,0±0,0 | 0,0±0,0 |
| 2 mM | 2,8±0,9 | 1,7±0,4 |
| 2 mM Dunkelkontrolle | 0,0±0,1 | 0,0±0,2 |

### Beispiel 28 / Bakterizide Wirkung - Einfluss Langzeitbelichtung / Photostabilität

Zur Bewertung der Photostabilität des Farbstoffs S-25a (2 mM) in der Beschichtung wurden beschichtete Flächen mit 18 mW/cm² (405 nm, ca. 200 Fache Raumlichtintensität, Zeitrafferversuch) bestrahlt. So wurde eine Echtzeit-Photostabilität von 2 Jahren simuliert.

Die Beschichtung für diese Versuche basierte auf Rezeptur 2 nach Beispiel 2a unter Verwendung von Borsäure hergestellt, aufgebracht nach Beispiel 9 auf Schichtwerkstoff (Melamin). Als Photokatalysator wurde die Verbindung S-25a zu 2 mM in der Schicht verwendet.

Der Bakterientest wurde in Anlehnung an ISO 22196 nach oben beschriebener Methode durchgeführt. Die Ergebnisse sind in der Tabelle 61 zusammengefasst.

**Tabelle 61: Mikrobiologische Wirksamkeit nach simulierter Photobelastung für 1, 2, 3, 6, 12 und 24 Monate**

| | Log₁₀ Reduktion nach x Monaten simulierter Belastung: | | | | | | |
|---|---|---|---|---|---|---|---|
| | Start (0) | 1 | 2 | 3 | 6 | 12 | 24 |
| Probe | 4,7±0,3 | 4,6±0,4 | 4,3±0,2 | 4,2±0,2 | 4,3±0,2 | 4,3±0,1 | 4,3±0,2 |
| Dunkelkontrolle | 0,1±0,2 | 0,0±0,0 | 0,2±0,2 | 0,2±0,3 | 0,1±0,1 | 0,3±0,4 | 0,2±0,4 |

Nach simulierter Langzeitbelichtung von bis zu 24 Monaten wies die Beschichtung eine keine wesentliche Abnahme der bakteriziden Wirkung nach Belichtung mit elektromagnetischer Strahlung auf.

### Beispiel 29 / Bakterizide Wirkung - Einfluss thermische Alterung

Zur Beurteilung der Schicht auf Alterungsprozesse, wurde eine beschleunigte Alterung nach ASTM F1980-16 bei 60°C für 4 Wochen durchgeführt.

Die Beschichtung für diese Versuche basierte auf Rezeptur 2 nach Beispiel 2a unter Verwendung von Borsäure hergestellt, beschichtet nach Beispiel 9 auf Schichtwerkstoff (Melamin). Als Photokatalysator wurde die Verbindung S-25a zu 2 mM in der Schicht verwendet.

Der Bakterientest wurde in Anlehnung an ISO 22196 nach oben beschriebener Methode durchgeführt. Die Ergebnisse sind in der Tabelle 62 zusammengefasst.

**Tabelle 62: Mikrobiologische Wirksamkeit (log₁₀ Reduktion) bei beschleunigter Alterung (60°C).**

| | Log₁₀ Reduktion nach | | | | |
|---|---|---|---|---|---|
| | 0 Wo | 1 Wo | 2 Wo | 3 Wo | 4 Wo |
| Probe | 3,9±0,2 | 3,8±0,9 | 3,4±0,2 | 3,3±0,0 | 2,8±0,2 |
| Dunkelkontrolle | 0,1±0,1 | 0,0±0,1 | 0,0±0,0 | 0,3±0,0 | 0,4±0,1 |

### Beispiel 30: Raumlichtversuche

Um die antimikrobielle Wirksamkeit in einem realen Szenario abzuschätzen, wurden sogenannte Raumlichtversuche durchgeführt. Dazu wurden die mit Bakterien versetzten Probenträger mit einer, für Innenräume repräsentativen Lichtintensität von 10 µW/cm² für einen Zeitraum von 24 h bestrahlt.

Herstellung der Beschichtung erfolgte gemäß Beispiel 2a (2,5 eq wässrige Borsäure, 50 mM), mit Rezeptur 3. Die Ergebnisse sind in der Tabelle 63 zusammengefasst.

**Tabelle 63: Antimikrobielle Wirksamkeit bei Raumlichtbedingungen**

| | Log₁₀ Reduktion | |
|---|---|---|
| Farbstoff (5 mM) | 24 h | Dunkelkontrolle |
| S-25a | 2,6±0,8 | 1,1±0,9 |
| S-13 | 1,9±0,0 | 0,9±0,0 |

### Vergleichsbeispiel 31

Bei Rezepturen mit einem zu hohen TEOS-Anteil, oder bei solchen, die ausschließlich TEOS im Silananteil haben, dauerte die Hydrolyse sehr lange. Die Sol-Gel-Rezepturen ergaben zwar zunächst optisch gute Schichten, diese neigten aber im Zuge der Aushärtung zur Versprödung und Rissbildung. Diese Lösungen besaßen zudem eine sehr geringe Lagerstabilität von nur wenigen Tagen. Auch die mikrobiologische Wirksamkeit mit einer Keimreduktion von 0,4 log₁₀-Stufen (Dunkelkontrolle: 0,1 log₁₀-Stufen) war gering. Die Beschichtung wurde nach Beispiel 1a mit Salzsäure (1 N) als Katalysator hergestellt (Rezeptur 0, sh. Tabelle 5). Es wurde eine Farbstoffkonzentration von 0,25 mM in dieser Lösung eingestellt (S-25a) und die zu testenden Schichten erzeugt.

Ähnlich verhielten sich Rezepturen mit hohem MTES-Anteil (> 85 Mol-%). Es konnten aus solchen Rezepturen zwar relativ robuste und kratzfeste Schichten hergestellt werden, jedoch waren diese Lösungen ebenfalls nur für wenige Tage lagerstabil. Zudem konnte selbst durch sehr hohe Farbstoffkonzentrationen keine gute antimikrobielle Wirksamkeit erzielt werden (sh. Tabelle 30). Die Proben wurden nach Beispiel 2a mit der Rezeptur 9 hergestellt. Die Ergebnisse sind in der Tabelle 64 zusammengefasst.

**Tabelle 64: Antimikrobielle Wirksamkeit (log₁₀ Reduktion) von Schichten mit hohem MTES Anteil bei verschiedenen Farbstoffkonzentrationen**

| | Log₁₀ Reduktion | | |
|---|---|---|---|
| | 4 mM | 6 mM | 8 mM |
| Probe | 0,4±0,1 | 0,4±0,1 | 0,5±0,0 |
| Dunkelkontrolle | 0,0±0,0 | 0,0±0,0 | 0,0±0,0 |

Analog verhielten sich Schichten, die bei Verwendung von Rezepturen mit sehr hohem GLYMO-Anteil (> 75 Mol-%) erhalten wurden. Es konnten aus solchen Rezepturen zwar optisch schöne Schichten erzeugt werden, die allerdings keine photodynamische Wirksamkeit gegenüber der Kontrolle zeigten (alle Werte im Rahmen des Fehlers vergleichbar). Die Proben wurden nach Beispiel 2a mit der Rezeptur 9 hergestellt.

## Patentansprüche

1. Photokatalytisch-aktive Beschichtungs-Zusammensetzung,
umfassend
(i.) wenigstens ein nichtmetallisches, anorganisches Sol und/oder wenigstens ein hybridpolymeres Sol jeweils hergestellt aus der Umsetzung mindestens zweier Alkoxysilane und wenigstens einer Säure als Hydrolysekatalysator, vorzugsweise wenigstens ein hybridpolymeres Sol hergestellt aus der Umsetzung mindestens zweier Alkoxysilane und wenigstens einer Säure als Hydrolysekatalysator,
(ii.) wenigstens einen organischen Photosensensibilisator, der aus der Gruppe, die aus substituierten Phenalen-1-on-Derivaten, substituierten Curcumin-Derivaten, substituierten Porphycen-Derivaten und Mischungen davon besteht, vorzugsweise substituierten Phenalen-1-on-Derivaten, substituierten Curcumin-Derivaten und Mischungen davon, weiter bevorzugt substituierten Phenalen-1-on-Derivaten, ausgewählt wird, und
(iii.) wenigstens ein gradkettig oder verzweigtes Alkanol mit 1 bis 6 C-Atomen und wenigstens einer OH-Gruppe in einem Anteil von wenigstens 50 Gew.-%, jeweils bezogen auf das Gesamtgewicht der Beschichtungs-Zusammensetzung.

2. Photokatalytisch-aktive Beschichtungs-Zusammensetzung nach Anspruch 1, wobei die Beschichtungs-Zusammensetzung weiterhin Wasser in einem Anteil von höchstens 15 Gew.-%, vorzugsweise höchstens 12 Gew.-%, weiter bevorzugt höchstens 10 Gew.-%, jeweils bezogen auf das Gesamtgewicht der Beschichtungs-Zusammensetzung umfasst.

3. Photokatalytisch-aktive Beschichtungs-Zusammensetzung nach einem der Ansprüche 1 oder 2, wobei das wenigstens eine aus der Umsetzung mindestens zweier Alkoxysilane und wenigstens einer Säure als Hydrolysekatalysator hergestellte hybridpolymere Sol weiterhin wenigstens einen substituierten oder unsubstituierten organischen Rest, der jeweils direkt an wenigstens ein Siliziumatom des Sols gebunden ist, aufweist, wobei der wenigstens eine substituierte oder unsubstituierte organische Rest jeweils unabhängig voneinander aus der Gruppe, die aus unverzweigten oder verzweigten Alkyl-Rest mit 1 bis 10 C-Atomen, unverzweigten oder verzweigten Alkenyl-Rest mit 2 bis 10 C-Atomen, unverzweigten oder verzweigten Hydroxyalkyl-Rest mit 1 bis 10 C-Atomen und wenigstens einer Hydroxygruppe, unverzweigten oder verzweigten Hydroxyalkenyl-Rest mit 2 bis 10 C-Atomen und wenigstens einer Hydroxygruppe, unverzweigten oder verzweigten Epoxyyalkyl-Rest mit 2 bis 10 C-Atomen und wenigstens einer Epoxidgruppe, unverzweigten oder verzweigten Aminoalkyl-Rest mit 1 bis 10 C-Atomen und wenigstens einer Aminogruppe, die jeweils unabhängig voneinander substituiert oder unsubstituiert sein kann, unverzweigten oder verzweigten Aminoalkenyl-Rest mit 2 bis 10 C-Atomen und wenigstens einer Aminogruppe, die jeweils unabhängig voneinander substituiert oder unsubstituiert sein kann, unverzweigten oder verzweigten Ether-Rest mit 2 bis 10 C-Atomen und wenigstens einer Ethergruppe, unverzweigten oder verzweigten Hydroxy-substituierten Ether-Rest mit 2 bis 10 C-Atomen, wenigstens einer Ethergruppe und wenigstens einer OH-Gruppe, unverzweigten oder verzweigten Epoxid-substituierten Ether-Rest mit 4 bis 10 C-Atomen, wenigstens einer Ethergruppe und wenigstens einer Epoxid-Gruppe, unverzweigten oder verzweigten Carbonsäureester-Rest mit 2 bis 10 C-Atomen und wenigstens einer Carbonsäureester-Gruppe, unverzweigten oder verzweigten Carbonsäureamid-Rest mit 1 bis 10 C-Atomen und wenigstens einer Carbonsäureamid-Gruppe, und Aryl-Rest mit 5 bis 12 C-Atomen, der jeweils unabhängig voneinander unsubstituiert oder mit einer unverzweigten oder verzweigten Alkyl-Rest mit 1 bis 10 C-Atomen, unverzweigten oder verzweigten Alkenyl-Rest mit 2 bis 10 C-Atomen, unverzweigten oder verzweigten Hydroxyalkyl mit 1 bis 10 C-Atomen und wenigstens einer Hydroxygruppe, unverzweigten oder verzweigten Hydroxyalkenyl-Rest mit 2 bis 10 C-Atomen und wenigstens einer Hydroxygruppe, unverzweigten oder verzweigten Epoxyyalkyl-Rest mit 2 bis 10 C-Atomen und wenigstens einer Epoxidgruppe, unverzweigten oder verzweigten Aminoalkyl-Rest mit 1 bis 10 C-Atomen und wenigstens einer Aminogruppe, die jeweils unabhängig voneinander substituiert oder unsubstituiert sein kann, unverzweigten oder verzweigten Aminoalkenyl-Rest mit 2 bis 10 C-Atomen und wenigstens einer Aminogruppe, die jeweils unabhängig voneinander substituiert oder unsubstituiert sein kann, unverzweigten oder verzweigten Ether-Rest mit 2 bis 10 C-Atomen und wenigstens einer Ethergruppe, unverzweigten oder verzweigten Hydroxy-substituierten Ether-Rest mit 2 bis 10 C-Atomen, wenigstens einer Ethergruppe und wenigstens einer OH-Gruppe, unverzweigten oder verzweigten Epoxid-substituierten Ether-Rest mit 4 bis 10 C-Atomen, wenigstens einer Ethergruppe und wenigstens einer Epoxid-Gruppe, unverzweigten oder verzweigten Carbonsäureester-Rest mit 2 bis 10 C-Atomen und wenigstens einer Carbonsäureester-Gruppe, unverzweigten oder verzweigten Carbonsäureamid-Rest mit 1 bis 10 C-Atomen und wenigstens einer Carbonsäureamid-Gruppe substituiert sein können, und Mischungen davon besteht, ausgewählt ist.

4. Photokatalytisch-aktive Beschichtungs-Zusammensetzung nach einem der Ansprüche 1 bis 3, wobei die mindestens zwei Alkoxysilane eine Kombination aus:
(a) wenigstens ein Tetraalkoxysilan, das 4 unverzweigte oder verzweigte Alkoxy-Reste mit 1 bis 4 C-Atomen aufweist, vorzugsweise Tetramethoxysilan (TMOS), Tetraethoxysilan (TEOS), Tetraisopropoxysilan, und Mischungen davon, und
(b) weiterhin wenigstens ein modifiziertes Silan, das 3 unverzweigte oder verzweigte Alkoxy-Reste mit jeweils unabhängig voneinander 1 bis 4 C-Atomen, vorzugsweise ausgewählt aus Methoxy, Ethoxy, Propoxy und Kombinationen davon, und einen (Zahl = 1) organischen Rest, der aus der Gruppe, die aus unverzweigtem oder verzweigtem Alkyl-Rest mit 1 bis 10 C-Atomen, vorzugsweise 1 bis 8 C-Atomen, die jeweils unsubstituiert oder mit wenigstens einer OH-Gruppe, wenigstens einer Alkoxy-Gruppe mit 1 - 8 C-Atomen, vorzugsweise ausgewählt aus Methoxy, Ethoxy, Propoxy und Kombinationen davon, wenigstens einer Epoxyalkoxy-Gruppe mit 2 - 8 C-Atomen, vorzugsweise 3 - 6 C-Atomen, und wenigstens einer Epoxygruppe, vorzugsweise Epoxypropoxy-Gruppe, wenigstens einer Carbonsäureester-Gruppe mit 1 - 8 C-Atomen, wenigstens einer Carbonsäureanhydrid-Gruppe mit 4 - 8 C-Atomen, die offenkettig oder cyclisch sein können, wenigstens einer Fluoridgruppe, wenigstens einer Phenylgruppe, wenigstens einer Aryloxygruppe mit 6 - 8 C-Atomen, vorzugsweise Benzyloxy-Gruppe, wenigstens einer Amino-Gruppe, , oder Kombinationen davon substituiert sind, unverzweigtem oder verzweigtem Alkenyl-Rest mit 2 bis 10 C-Atomen, vorzugsweise 2 bis 8 C-Atomen, die jeweils unsubstituiert oder mit wenigstens einer OH-Gruppe, wenigstens einer Alkoxy-Gruppe mit 1 - 8 C-Atomen, vorzugsweise ausgewählt aus Methoxy, Ethoxy, Propoxy und Kombinationen davon, wenigstens einer Epoxyalkoxy-Gruppe mit 2 - 8 C-Atomen, vorzugsweise 3 - 6 C-Atomen, und wenigstens einer Epoxygruppe, vorzugsweise Epoxypropoxy-Gruppe, wenigstens einer Carbonsäureester-Gruppe mit 1 - 8 C-Atomen, wenigstens einer Carbonsäureanhydrid-Gruppe mit 4 - 8 C-Atomen, die offenkettig oder cyclisch sein können, wenigstens einer Fluoridgruppe, wenigstens einer Phenylgruppe, wenigstens einer Aryloxygruppe mit 6 - 8 C-Atomen, vorzugsweise Benzyloxy-Gruppe, wenigstens einer Amino-Gruppe, , oder Kombinationen davon substituiert sind, und Aryl-Rest mit 6 bis 13 C-Atomen, vorzugsweise 6 bis 10 C-Atomen, vorzugsweise 6 C-Atomen, die jeweils unsubstituiert oder mit wenigstens einer OH-Gruppe, wenigstens einer Alkoxy-Gruppe mit 1 - 8 C-Atomen, vorzugsweise ausgewählt aus Methoxy, Ethoxy, Propoxy und Kombinationen davon, wenigstens einer Epoxyalkoxy-Gruppe mit 2 - 8 C-Atomen, vorzugsweise 3 - 6 C-Atomen, und wenigstens einer Epoxygruppe, vorzugsweise Epoxypropoxy-Gruppe, wenigstens einer Carbonsäureester-Gruppe mit 1 - 8 C-Atomen, wenigstens einer Carbonsäureanhydrid-Gruppe mit 4 - 8 C-Atomen, die offenkettig oder cyclisch sein können, wenigstens einer Fluoridgruppe, wenigstens einer Phenylgruppe, wenigstens einer Aryloxygruppe mit 6 - 8 C-Atomen, vorzugsweise Benzyloxy-Gruppe, wenigstens einer Amino-Gruppe, oder Kombinationen davon substituiert sind, besteht, ausgewählt ist, umfasst.

5. Photokatalytisch-aktive Beschichtungs-Zusammensetzung nach einem der Ansprüche 1 bis 4, wobei das wenigstens eine substituierte Phenalen-1-on-Derivat die allgemeine Formel (1) aufweist: 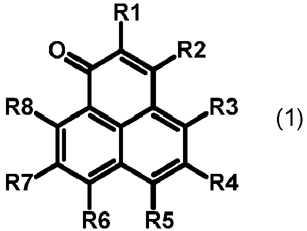
wobei die Reste R1 bis R8, die jeweils unabhängig voneinander gleich oder voneinander verschieden sein können, jeweils Wasserstoff, *- OH, *- C(=O)OH, *- S(=O)₂OH, , *- O - Si(OR^{(VIII)})_{3 - p}(R^{(IX)})ₚ, Halogen, vorzugsweise Chlor, Brom, oder lod, Alkyl, das gradkettig oder verzweigt sein kann, mit 1 bis 4C-Atomen, vorzugsweise Methyl, Ethyl, n-Propyl oder iso-Propyl, *-O-Alkyl, das gradkettig oder verzweigt sein kann, mit 1 bis 4 C-Atomen, vorzugsweise Methoxy oder Ethoxy, Aryl mit 5 bis 10 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, Aryloxy mit 5 bis 10 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, Alkylaryl mit 6 bis 10 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, *-O-Alkylaryl mit 6 bis 10 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, oder einen organischen Rest W1 bedeuten, mit der Maßgabe, dass wenigstens einer der Reste R1 bis R8, vorzugsweise wenigstens einer der Reste R1, R2, R4, R6, oder R8, weiter bevorzugt wenigstens einer der Reste R1, R2, R4, oder R6, weiter bevorzugt wenigstens einer der Reste R1 oder R2, ein organischer Rest W1 ist, wobei der organische Rest W1 jeweils unabhängig voneinander ein Rest mit der allgemeinen Formel (2a) bis (4b) bedeutet:
* - [(C(D)(E))_{b} - A]ₐ - (C(D)(E))ₘ - X (2a)
* - Q - [(C(D)(E))_{b} - A]ₐ - (C(D)(E))ₘ - X (2b)
* - (C(D)(E))_{d} - Ar - [B - (C(D)(E)_{b}]ₐ - (C(D)(E))ₙ - X (3a)
* - Q - (C(D)(E))_{d} - Ar - [B - (C(D)(E)_{b}]ₐ - (C(D)(E))ₙ - X (3b)
* - [(C(D)(E))_{b} - A]_{c} - (C(D)(E))_{g} - Ar - (C(D)(E))ₙ - X (4a)
* - Q - [(C(D)(E))_{b} - A]_{c} - (C(D)(E))_{g} - Ar - (C(D)(E))ₙ - X (4b)
wobei Rest Q jeweils unabhängig voneinander Sauerstoff, ein Rest der allgemeinen Formel * - C(=O) - *, ein Rest der Formel * - C(=O)O - *, oder ein Rest der Formel * - OC(=O) - *, vorzugsweise Sauerstoff, bedeutet, und
wobei Rest A jeweils unabhängig voneinander Sauerstoff, ein Rest der allgemeinen Formel * - C(=O) - *, ein Rest der Formel * - C(=O)O - *, ein Rest der Formel * - OC(=O) - *, oder ein Rest mit der allgemeinen Formel (13) bis (14): 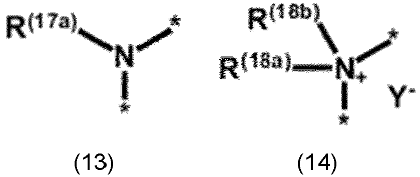 bedeutet, vorzugsweise Sauerstoff; oder ein Rest mit der allgemeinen Formel (13) bis (14), und
wobei Rest B jeweils unabhängig voneinander Sauerstoff, ein Rest der allgemeinen Formel * - C(=O) - *, ein Rest der Formel * - C(=O)O - *, ein Rest der Formel * - OC(=O) - *, oder ein Rest mit der allgemeinen Formel (12) bis (14): 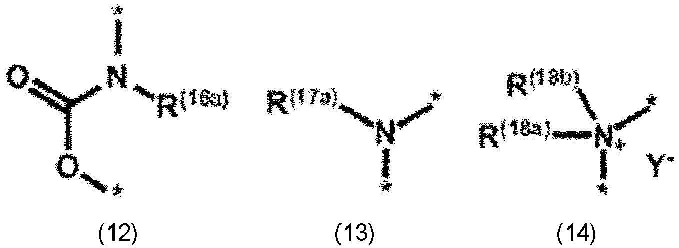 bedeutet, und
wobei die Reste R^{(16a)}, R^{(17a)}, R^{(18a)} und R^{(18b)}, jeweils unabhängig voneinander Wasserstoff, Alkyl-Rest, der geradkettig oder verzweigt ist, mit 1 bis 5 Kohlenstoffatomen, vorzugsweise Methyl, Ethyl, n-Propyl, iso-Propyl, n-Butyl, sec-Butyl, iso-Butyl, oder n-Pentyl, der unsubstituiert oder mit einem oder mehrerer Reste, die jeweils unabhängig voneinander Chlor, Brom, Fluor, *- OH, *- Si(OR^{(VIII)})_{[3 - p]}(R^{(IX)})ₚ, oder *- O - Si(OR^{(VIII)})_{[3 - p]}(R^{(IX)})ₚ, bedeuten, substituiert ist, Phenyl oder Benzyl bedeuten, und wobei Phenyl und Benzyl, jeweils unabhängig voneinander, unsubstituiert oder mit einem oder mehrerer Reste, die aus der Gruppe, die aus Halogen, *- OH, *- C(=O)OH, *- S(=O)₂OH, *- B(OH)₂, *- Si(OR^{(VIII)})_{[3 - p]}(R^{(IX)})ₚ, Alkyl-Rest, der gradkettig oder verzweigt ist, mit 1 bis 4 Kohlenstoffatomen, oder *- O - Si(OR^{(VIII)}) _{[3 - p]}(R^{(IX)})ₚ besteht, ausgewählt ist, substituiert ist, und
wobei die Reste D und E jeweils unabhängig voneinander Wasserstoff, *- OH, *- O - Si(OR^{(VIII)})_{[3 - p]}(R^{(IX)})ₚ, Halogen, Alkyl, das gradkettig oder verzweigt sein kann, mit 1 bis 15 Kohlenstoffatomen, Alkoxy, das gradkettig oder verzweigt sein kann, mit 1 bis 15 Kohlenstoffatomen, Aryloxy mit 6 bis 10 Kohlenstoffatomen, vorzugsweise Phenoxy oder Benzyloxy, Hydroxylalkyl, das gradkettig oder verzweigt sein kann, mit 1 bis 5 Kohlenstoffatomen und 1 bis 5 OH-Gruppen, Halogenalkyl, das gradkettig oder verzweigt sein kann, mit 1 bis 5 Kohlenstoffatomen und 1 bis 5 Halogen-Gruppen, Phenyl, oder Benzyl, wobei Phenyl und Benzyl jeweils unabhängig voneinander unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sind, bedeuten,
wobei der Index a jeweils unabhängig voneinander eine ganze Zahl von 1 bis 5, vorzugsweise von 1 bis 4, vorzugsweise 1 bis 2, bedeutet, und
wobei der Index b jeweils unabhängig voneinander eine ganze Zahl von 1 bis 4, vorzugsweise von 2 bis 3, weiter bevorzugt 2, bedeuten, und
wobei der Index c jeweils unabhängig voneinander eine ganze Zahl von 0 bis 5, vorzugsweise von 0 bis 4, vorzugsweise 1 bis 3, bedeutet, und
wobei die Indices d, und m jeweils unabhängig voneinander eine ganze Zahl von 1 bis 12, vorzugsweise 1 bis 8, vorzugsweise von 1 bis 4, bedeuten, und
wobei die Indices g, und n jeweils unabhängig voneinander eine ganze Zahl von 0 bis 12, vorzugsweise 0 bis 8, vorzugsweise von 2 bis 4, bedeuten, und
wobei der Index p jeweils unabhängig voneinander eine ganze Zahl von 1 bis 3 bedeutet, und
wobei der Rest X jeweils unabhängig voneinander *- NH(R^{(I)}), *- OH, *- C(=O)OH, *- S(=O)₂OH, *- B(OH)₂, *- Si(OR^{(VIII)})_{3 - p}(R^{(IX)})ₚ, *- O - Si(OR^{(VIII)}_{3 - p}(R^{(IX)})ₚ, oder ein Rest mit der allgemeinen Formel (15): 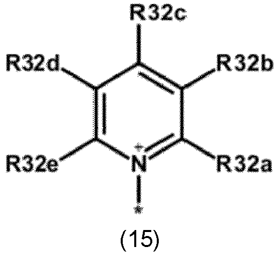
bedeutet, wobei die Reste R32a bis R32e jeweils unabhängig voneinander, Wasserstoff, Alkyl, das gradkettig oder verzweigt sein kann, mit 1 bis 4 Kohlenstoffatomen, oder Alkenyl, das gradkettig oder verzweigt sein kann, mit 2 bis 4 Kohlenstoffatomen, bedeuten, und
wobei der Rest Ar ein Rest der allgemeinen Formel (25a) bis (31), weiter bevorzugt ein Rest der allgemeinen Formel (25a) bis (28b), bedeutet: 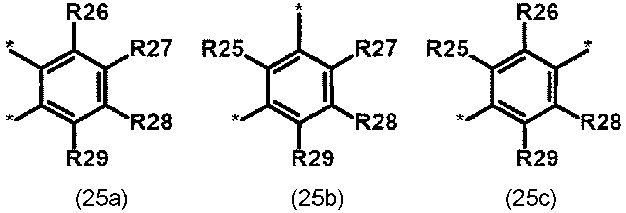 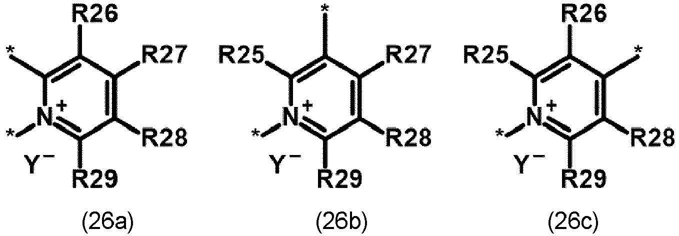 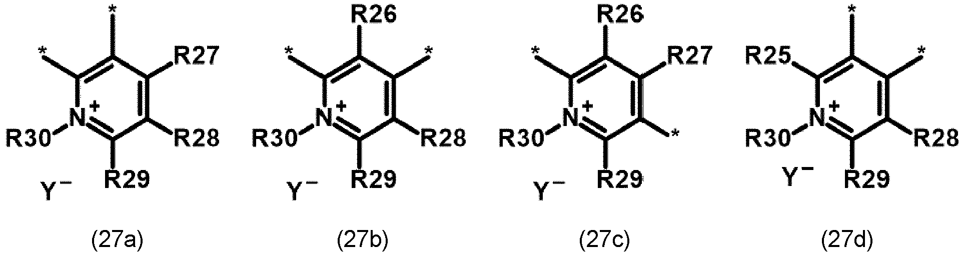 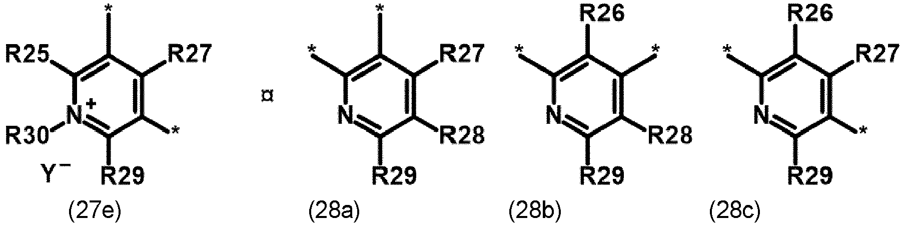 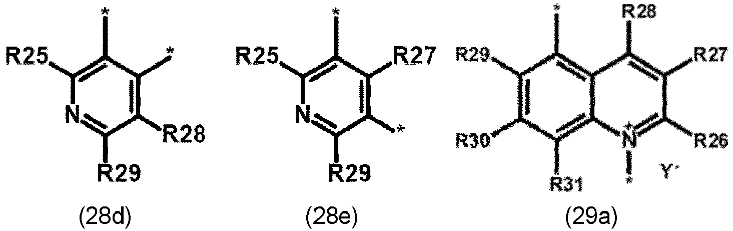 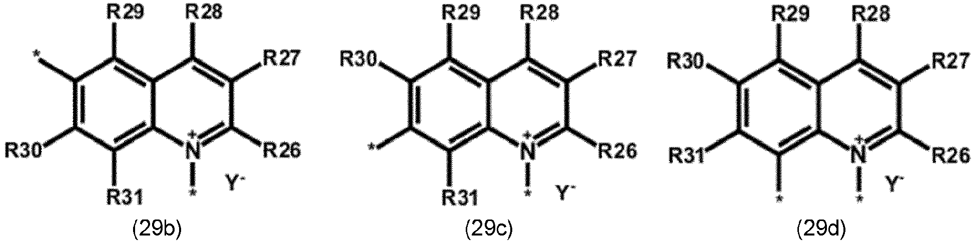 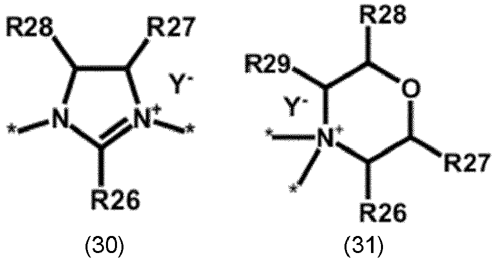
wobei die Reste R26, R27, R28, R29, R30, und R31 jeweils unabhängig voneinander Wasserstoff, Alkyl-Rest, der geradkettig oder verzweigt ist, mit 1 bis 5 Kohlenstoffatomen, vorzugsweise Methyl, Ethyl, n-Propyl, iso-Propyl, n-Butyl, sec-Butyl, iso-Butyl, oder n-Pentyl, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})ₚ, oder *- O - Si(OR^{(VIII)}) _{[3 - p]}(R^{(IX)})ₚ, bedeuten, substituiert ist, Phenyl oder Benzyl bedeuten, und wobei Phenyl und Benzyl, jeweils unabhängig voneinander, unsubstituiert oder mit einem oder mehrerer Reste, die aus der Gruppe, die aus Halogen, *- OH, *- C(=O)OH, *- S(=O)₂OH, *- B(OH)₂, *- Si(OR^{(VIII)}) _{[3 - p]}(R^{(IX)})ₚ, Alkyl-Rest, der gradkettig oder verzweigt ist, mit 1 bis 4 Kohlenstoffatomen, vorzugsweise Methyl, Ethyl, n-Propyl, oder iso-Propyl, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})ₚ, oder *- O - Si(OR^{(VIII)})_{[3-p]}(R^{(IX)})ₚ, bedeuten, substituiert ist, *- O - Alkyl-Rest, der gradkettig oder verzweigt ist, mit 1 bis 4 Kohlenstoffatomen, vorzugsweise Methoxy, Ethoxy, n-Propoxy, oder iso-Propoxy, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})ₚ, oder *- O - Si(OR^{(VIII)})_{[3 - p]}(R^{(IX)})ₚ, bedeuten, substituiert ist, Carboxyalkyl-Rest, der gradkettig oder verzweigt ist, mit 2 bis 4 Kohlenstoffatomen, vorzugsweise Carboxymethyl, Carboxyethyl, Carboxy-n-propyl, oder Carboxy-iso-propyl, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})ₚ, oder *- O - Si(OR^{(VIII)})_{[3 - p]}(R^{(IX)})ₚ, bedeuten, substituiert ist, oder Alkenyl-Rest der gradkettig oder verzweigt ist, mit 2 bis 3 C-Atomen, vorzugasweise Vinyl oder Allyl, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})_{p,} oder *- O - Si(OR^{(VIII)})_{[3 - p]}(R^{(IX)})ₚ, bedeuten, substituiert ist, und
wobei die Reste R^{(I)}, R^{(VIII)} und R^{(IX)}, jeweils unabhängig voneinander, Alkyl, das gradkettig oder verzweigt sein kann, mit 1 bis 4 Kohlenstoffatomen, oder Alkenyl, das gradkettig oder verzweigt sein kann, mit 2 bis 4 Kohlenstoffatomen,
und wobei Y⁻ ein Anion ist, das jeweils unabhängig voneinander Fluorid, Chlorid, Bromid, lodid, Sulfat, Hydrogensulfat, Phosphat, Hydrogenphosphat, Dihydrogenphosphat, wenigstens ein Carboxylat-Anion einer Carbonsäure mit 1 bis 15 Kohlenstoffatomen, wenigstens ein Sulfonat-Anion einer Sulfonsäure mit 1 bis 12 C-Atomen oder eine Kombination davon bedeutet, und
wobei das substituierte Phenalen-1-on-Derivat der allgemeinen Formel (1) höchstens zwei neutrale protonierbare Stickstoffatome, oder zwei permanent positiv geladene Stickstoffatome oder zwei Säuregruppen aufweist.

6. Photokatalytisch-aktive Beschichtungs-Zusammensetzung nach einem der Ansprüche 1 bis 4, wobei das wenigstens eine substituierte Curcumin-Derivat die allgemeine Formel (2a) oder Formel (2b) aufweist: 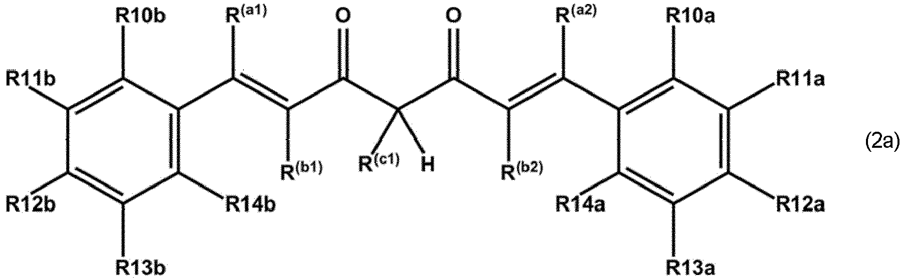 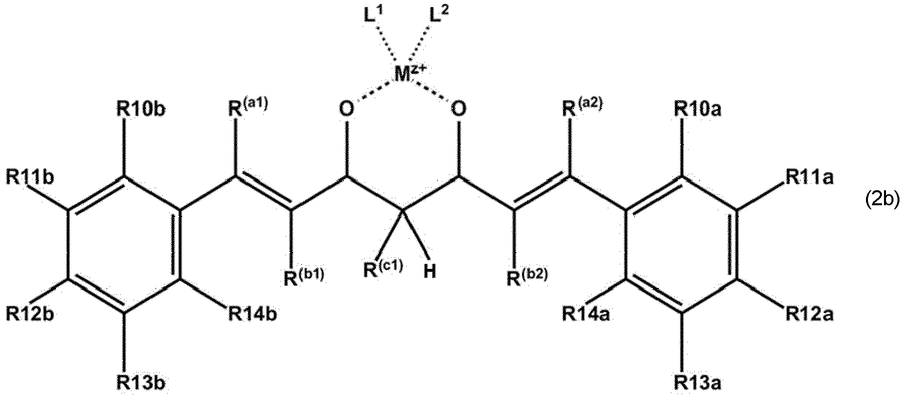
wobei M^{z+} das Kation eines Metalls oder Halbmetalls M bedeutet, wobei z die formale Oxidationszahl des Metalls oder Halbmetalls M ist und wobei z eine ganze Zahl von 1 bis 7, vorzugsweise von 2 bis 3, ist, und wobei L¹ und L² jeweils unabhängig voneinander Wasser, Fluorid, Chlorid, Bromid, lodid, Phosphat, Hydrogenphosphat, Dihydrogenphosphat, Sulfat, Hydrogensulfat, Tosylat, Mesylat oder wenigstens ein Carboxylat-Ion einer Carbonsäure mit 1 bis 15 Kohlenstoffatomen und/oder Mischungen davon bedeuten, wobei die Reste L¹ und L² jeweils zusammen einen verbrückten Liganden mit zwei oder mehr Koordinationsstellen bilden können, der ausgewählt ist Polyketonen mit 5 bis 15 C-Atomen und zwei oder mehr Ketogruppen,
wobei die Reste R^{(a1)}, R^{(a2)}, R^{(b1)} und R^{(b2)}, die jeweils unabhängig voneinander gleich oder voneinander verschieden sein können, jeweils Wasserstoff, , Alkyl, das gradkettig oder verzweigt sein kann, mit 1 bis 4 C-Atomen, vorzugsweise Methyl, Ethyl, n-Propyl oder iso-Propyl, *-O-Alkyl, das gradkettig oder verzweigt sein kann, mit 1 bis 4 C-Atomen, vorzugsweise Methoxy oder Ethoxy, Phenyl oder Benzyl bedeuten, wobei Phenyl und Benzyl jeweils unabhängig voneinander unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können,
wobei der Rest R^{(c1)} jeweils Wasserstoff, Halogen, Alkyl, das gradkettig oder verzweigt sein kann, mit 1 bis 4 C-Atomen, vorzugsweise Methyl, Ethyl, n-Propyl oder iso-Propyl, *-O-Alkyl, das gradkettig oder verzweigt sein kann, mit 1 bis 4 C-Atomen, vorzugsweise Methoxy oder Ethoxy, Phenyl, Benzyl, wobei Phenyl und Benzyl jeweils unabhängig voneinander unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können,
und wobei die Reste R10a bis R14b, die jeweils unabhängig voneinander gleich oder voneinander verschieden sein können, jeweils Wasserstoff, *- OH, *- C(=O)OH, *- S(=O)₂OH,, *- O - Si(OR^{(VIII)})_{3 - p}(R^{(IX)})ₚ, Halogen, vorzugsweise Chlor, Brom, oder lod, Alkyl, das gradkettig oder verzweigt sein kann, mit 1 bis 4 C-Atomen, vorzugsweise Methyl, Ethyl, n-Propyl oder iso-Propyl, *-O-Alkyl, das gradkettig oder verzweigt sein kann, mit 1 bis 4 C-Atomen, vorzugsweise Methoxy oder Ethoxy, Aryl mit 5 bis 10 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, Aryloxy mit 5 bis 10 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, Alkylaryl mit 6 bis 10 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, *-O-Alkylaryl mit 6 bis 10 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, oder einen organischen Rest W1 bedeuten, mit der Maßgabe, dass einer der Reste R10a bis R14a und einer der Reste R10b bis R14b ein organischer Rest W1 bedeutet,
wobei der organische Rest W1 jeweils unabhängig voneinander ein Rest mit der allgemeinen Formel (12a) bis (14b) bedeutet:
* - [(C(D)(E))_{b} - A]ₐ - (C(D)(E))ₘ - X (12a)
* - Q - [(C(D)(E))_{b} - A]ₐ - (C(D)(E))ₘ - X (12b)
* - (C(D)(E))_{d} - Ar - [B - (C(D)(E)_{b}]ₐ - (C(D)(E))ₙ - X (13a)
* - Q - (C(D)(E))_{d} - Ar - [B - (C(D)(E)_{b}]ₐ - (C(D)(E))ₙ - X (13b)
* - [(C(D)(E))_{b} - A]_{c} - (C(D)(E))_{g} - Ar - (C(D)(E))ₙ - X (14a)
* - Q - [(C(D)(E))_{b} - A]_{c} - (C(D)(E))_{g} - Ar - (C(D)(E))ₙ - X (14b)
wobei Rest Q jeweils unabhängig voneinander Sauerstoff, ein Rest der allgemeinen Formel * - C(=O) - *, ein Rest der Formel * - C(=O)O - *, oder ein Rest der Formel * - OC(=O) - *, vorzugsweise Sauerstoff, bedeutet, und
wobei Rest A jeweils unabhängig voneinander Sauerstoff, ein Rest der allgemeinen Formel * - C(=O) - *, ein Rest der Formel * - C(=O)O - *, ein Rest der Formel * - OC(=O) - *, oder ein Rest mit der allgemeinen Formel (13) bis (14): 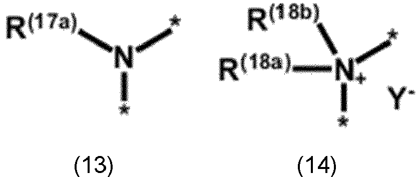 , vorzugsweise Sauerstoff, bedeutet, und
wobei Rest B jeweils unabhängig voneinander Sauerstoff, ein Rest der allgemeinen Formel * - C(=O) - *, ein Rest der Formel * - C(=O)O - *, ein Rest der Formel * - OC(=O) - *, oder ein Rest mit der allgemeinen Formel (12) bis (14): 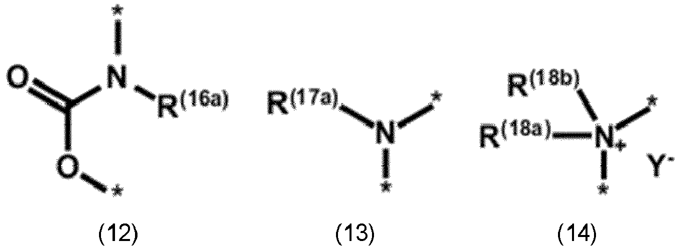 bedeutet, und
wobei die Reste R^{(16a)}, R^{(17a)}, R^{(18a)} und R^{(18b)}, jeweils unabhängig voneinander Wasserstoff, Alkyl-Rest, der geradkettig oder verzweigt ist, mit 1 bis 5 Kohlenstoffatomen, vorzugsweise Methyl, Ethyl, n-Propyl, iso-Propyl, n-Butyl, sec-Butyl, iso-Butyl, oder n-Pentyl, der unsubstituiert oder mit einem oder mehrerer Reste, die jeweils unabhängig voneinander Chlor, Brom, Fluor, *- OH, *- Si(OR^{(VIII)})_{[3 - p]}(R^{(IX)})ₚ, oder *- O - Si(OR^{(VIII)})_{[3 - p]}(R^{(IX)})ₚ, bedeuten, substituiert ist, Phenyl oder Benzyl bedeuten, und wobei Phenyl und Benzyl, jeweils unabhängig voneinander, unsubstituiert oder mit einem oder mehrerer Reste, die aus der Gruppe, die aus Halogen, *- OH, *- C(=O)OH, *- S(=O)₂OH, *- B(OH)₂, *- Si(OR^{(VIII)})_{[3 - p]}(R^{(IX)})ₚ, Alkyl-Rest, der gradkettig oder verzweigt ist, mit 1 bis 4 Kohlenstoffatomen, oder *- O - Si(OR^{(VIII)}) _{[3 - p]}(R^{(IX)})ₚ besteht, ausgewählt ist, substituiert ist, und
wobei die Reste D und E jeweils unabhängig voneinander Wasserstoff, *- OH, *- O - Si(OR^{(VIII)})_{[3 - p]}(R^{(IX)})ₚ, Halogen, Alkyl, das gradkettig oder verzweigt sein kann, mit 1 bis 15 Kohlenstoffatomen, Alkoxy, das gradkettig oder verzweigt sein kann, mit 1 bis 15 Kohlenstoffatomen, Aryloxy mit 6 bis 10 Kohlenstoffatomen, vorzugsweise Phenoxy oder Benzyloxy, Hydroxylalkyl, das gradkettig oder verzweigt sein kann, mit 1 bis 5 Kohlenstoffatomen und 1 bis 5 OH-Gruppen, Halogenalkyl, das gradkettig oder verzweigt sein kann, mit 1 bis 5 Kohlenstoffatomen und 1 bis 5 Halogen-Gruppen, Phenyl, oder Benzyl, wobei Phenyl und Benzyl jeweils unabhängig voneinander unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sind, bedeuten,
wobei der Index a jeweils unabhängig voneinander eine ganze Zahl von 1 bis 5, vorzugsweise von 1 bis 4, vorzugsweise 1 bis 2, bedeutet, und
wobei der Index b jeweils unabhängig voneinander eine ganze Zahl von 1 bis 4, vorzugsweise von 2 bis 3, weiter bevorzugt 2, bedeuten, und
wobei der Index c jeweils unabhängig voneinander eine ganze Zahl von 0 bis 5, vorzugsweise von 0 bis 4, vorzugsweise 1 bis 3, bedeutet, und
wobei die Indices d, und m jeweils unabhängig voneinander eine ganze Zahl von 1 bis 12, vorzugsweise 1 bis 8, vorzugsweise von 2 bis 4, bedeuten, und
wobei die Indices g, und n jeweils unabhängig voneinander eine ganze Zahl von 0 bis 12, vorzugsweise 0 bis 8, vorzugsweise von 2 bis 4, bedeuten, und
wobei der Index p jeweils unabhängig voneinander eine ganze Zahl von 1 bis 3 bedeutet, und
wobei der Rest X jeweils unabhängig voneinander *- NH(R^{(I)}), *- OH, *- C(=O)OH, *- S(=O)₂OH, *- B(OH)₂, *- Si(OR^{(VIII)})_{3 - p}(R^{(IX)})ₚ, *- O - Si(OR^{(VIII)})_{3 - p}(R^{(IX)})ₚ, oder ein Rest mit der allgemeinen Formel (15): 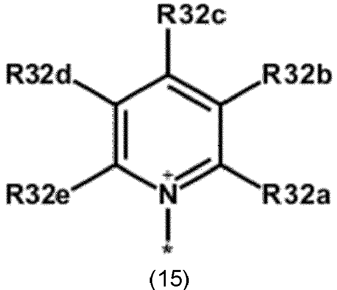
wobei die Reste R32a bis R32e jeweils unabhängig voneinander, Wasserstoff, Alkyl, das gradkettig oder verzweigt sein kann, mit 1 bis 4 Kohlenstoffatomen, oder Alkenyl, das gradkettig oder verzweigt sein kann, mit 2 bis 4 Kohlenstoffatomen, bedeuten, und
wobei der Rest Ar ein Rest der allgemeinen Formel (25a) bis (31), weiter bevorzugt ein Rest der allgemeinen Formel (25a) bis (28b), bedeutet: 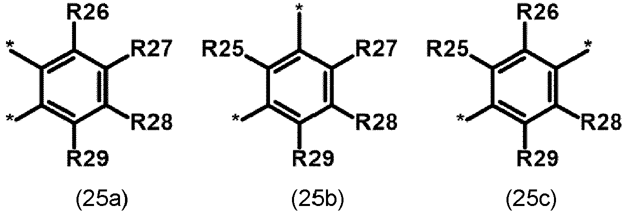 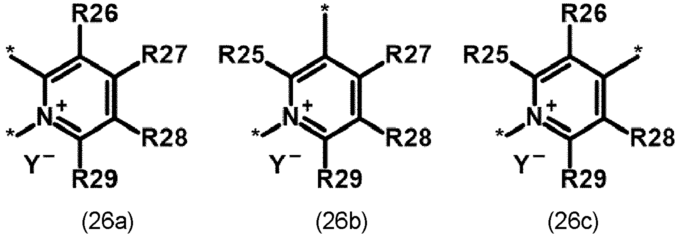 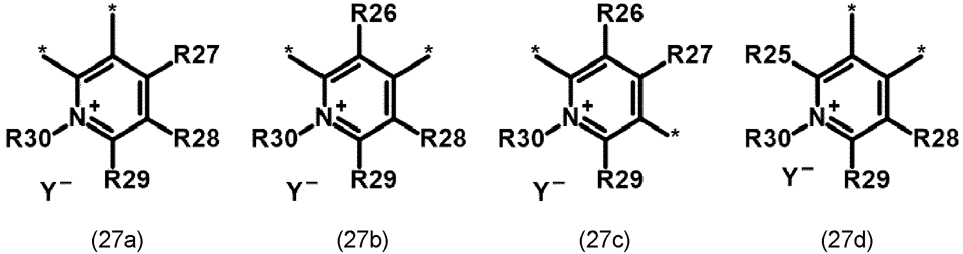 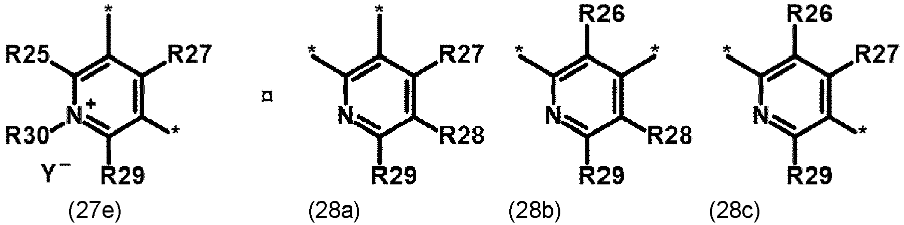 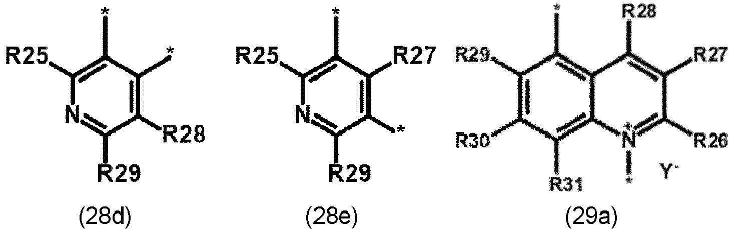 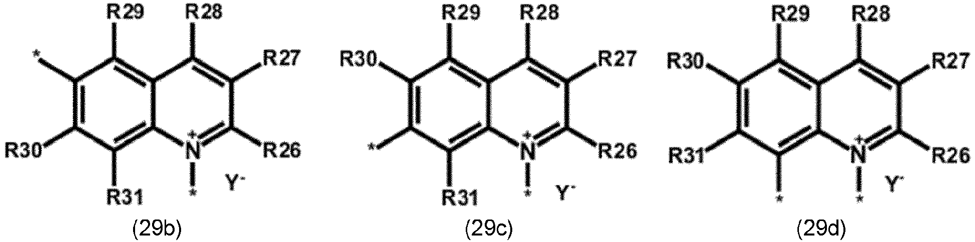 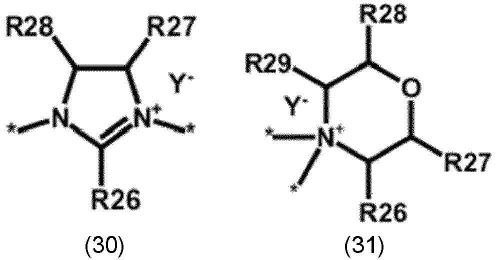
wobei die Reste R26, R27, R28, R29, R30, und R31 jeweils unabhängig voneinander Wasserstoff, Alkyl-Rest, der geradkettig oder verzweigt ist, mit 1 bis 5 Kohlenstoffatomen, vorzugsweise Methyl, Ethyl, n-Propyl, iso-Propyl, n-Butyl, sec-Butyl, iso-Butyl, oder n-Pentyl, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})ₚ, oder *- O - Si(OR^{(VIII)}) _{[3 - p]}(R^{(IX)})ₚ, bedeuten, substituiert ist, Phenyl oder Benzyl bedeuten, und wobei Phenyl und Benzyl, jeweils unabhängig voneinander, unsubstituiert oder mit einem oder mehrerer Reste, die aus der Gruppe, die aus Halogen, *- OH, *- C(=O)OH, *- S(=O)₂OH, *- B(OH)₂, *- Si(OR^{(VIII)}) _{[3 - p]}(R^{(IX)})ₚ, Alkyl-Rest, der gradkettig oder verzweigt ist, mit 1 bis 4 Kohlenstoffatomen, vorzugsweise Methyl, Ethyl, n-Propyl, oder iso-Propyl, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})ₚ, oder *- O - Si(OR^{(VIII)})_{[3-p]}(R^{(IX)})ₚ, bedeuten, substituiert ist, *- O - Alkyl-Rest, der gradkettig oder verzweigt ist, mit 1 bis 4 Kohlenstoffatomen, vorzugsweise Methoxy, Ethoxy, n-Propoxy, oder iso-Propoxy, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})ₚ, oder *- O - Si(OR^{(VIII)})_{[3 - p]}(R^{(IX)})ₚ, bedeuten, substituiert ist, Carboxyalkyl-Rest, der gradkettig oder verzweigt ist, mit 2 bis 4 Kohlenstoffatomen, vorzugsweise Carboxymethyl, Carboxyethyl, Carboxy-n-propyl, oder Carboxy-iso-propyl, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})ₚ, oder *- O - Si(OR^{(VIII)})_{[3 - p]}(R^{(IX)})ₚ, bedeuten, substituiert ist, oder Alkenyl-Rest der gradkettig oder verzweigt ist, mit 2 bis 3 C-Atomen, vorzugasweise Vinyl oder Allyl, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})_{p,} oder *- O - Si(OR^{(VIII)})_{[3 - p]}(R^{(IX)})ₚ bedeuten, substituiert ist, und
wobei die Reste R^{(I)}, R^{(VIII)} und R^{(IX)}, jeweils unabhängig voneinander, Alkyl, das gradkettig oder verzweigt sein kann, mit 1 bis 4 Kohlenstoffatomen, oder Alkenyl, das gradkettig oder verzweigt sein kann, mit 2 bis 4 Kohlenstoffatomen,
und wobei Y- ein Anion ist, das jeweils unabhängig voneinander Fluorid, Chlorid, Bromid, lodid, Sulfat, Hydrogensulfat, Phosphat, Hydrogenphosphat, Dihydrogenphosphat, wenigstens ein Carboxylat-Anion einer Carbonsäure mit 1 bis 15 Kohlenstoffatomen, wenigstens ein Sulfonat-Anion einer Sulfonsäure mit 1 bis 12 C-Atomen oder eine Kombination davon bedeutet, und
wobei das substituierte Curcumin-Derivat der allgemeinen Formel (2a) oder Formel (2b) höchstens zwei neutrale protonierbare Stickstoffatome, oder zwei permanent positiv geladene Stickstoffatome oder zwei Säuregruppen aufweist.

7. Photokatalytisch-aktive Beschichtungs-Zusammensetzung nach einem der Ansprüche 1 bis 4, wobei das wenigstens eine substituierte Porphycen-Derivat die allgemeine Formel (3): 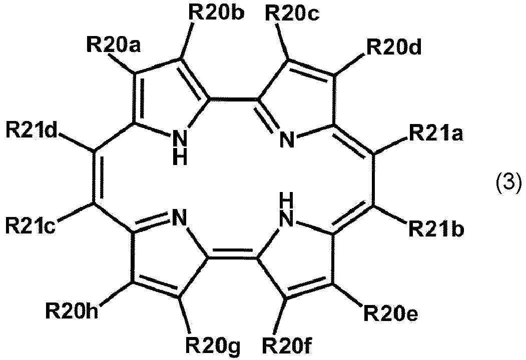 aufweist, und
wobei die Reste R20a, R20b, R20c, R20d, R20e, R20f, R20g, und R20h, die jeweils unabhängig voneinander gleich oder voneinander verschieden sein können, jeweils Wasserstoff, Halogen, vorzugsweise Chlor, Brom, oder lod, Alkyl, das gradkettig oder verzweigt sein kann, mit 1 bis 4 C-Atomen, vorzugsweise Methyl, Ethyl, n-Propyl oder iso-Propyl, die jeweils unsubstituiert oder mit einem oder mehrerer Reste, die aus der Gruppe, die aus Hydroxy, Chlor, Brom, Fluor, und Kombinationen davon, besteht, ausgewählt werden, substituiert sein können, Alkoxy, das gradkettig oder verzweigt sein kann, mit 1 bis 4 C-Atomen, vorzugsweise Methoxy oder Ethoxy, die jeweils unsubstituiert oder mit einem oder mehrerer Reste, die aus der Gruppe, die aus Hydroxy, Chlor, Brom, Fluor, und Kombinationen davon, besteht, ausgewählt werden, substituiert sein können, Alkylalkyloxy, das gradkettig oder verzweigt sein kann, mit 2 bis 8 C-Atomen, vorzugsweise Methylmethoxy, Methylethoxy, Ethylmethoxy, oder Ethylethoxy, die jeweils unsubstituiert oder mit einem oder mehrerer Reste, die aus der Gruppe, die aus Hydroxy, Chlor, Brom, und Kombinationen davon, besteht, ausgewählt werden, substituiert sein können, Alkylcarboxylester, das gradkettig oder verzweigt sein kann, mit 2 bis 8 C-Atomen, vorzugsweise Methylacetat, Ethyl-2-acetat, Propyl-3-acetat, Methylpropionat, Ethyl-2-proponat, Propyl-3-butyrat, Methylbutyrat, Ethyl-2-butyrat, oder Propyl-3-butyrat, Aryl mit 6 bis 10 Kohlenstoffatomen, vorzugsweise Phenyl oder Benzyl, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, oder Aryloxy mit 6 bis 10 Kohlenstoffatomen, vorzugsweise Phenoxy oder Benzyloxy, die jeweils unsubstituiert oder mit einem oder mehrerer Reste, die aus der Gruppe, die aus Hydroxy, Chlor, Brom, Fluor, Methyl, Ethyl, n-Propyl, iso-Propyl, Methoxy, Ethoxy, und Kombinationen davon, besteht, ausgewählt werden, substituiert sein können, bedeuten,
wobei die Reste R21a, R21b, R21c, und R21d, die jeweils unabhängig voneinander gleich oder voneinander verschieden sein können, jeweils Wasserstoff, Nitro, Halogen, vorzugsweise Chlor, Brom, oder lod, Alkyl, das gradkettig oder verzweigt sein kann, mit 1 bis 4 C-Atomen, vorzugsweise Methyl, Ethyl, n-Propyl oder iso-Propyl, *-O-Alkyl, das gradkettig oder verzweigt sein kann, mit 1 bis 4 C-Atomen, vorzugsweise Methoxy oder Ethoxy, * - NH - S(=O)₂ - Aryl mit 5 bis 15 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, * - NH - C(=O) - Alkyl mit 1 bis 15 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, Aryloxy mit 5 bis 10 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, Alkylaryl mit 6 bis 10 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, *-O-Alkylaryl mit 6 bis 10 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, oder einen organischen Rest W1 bedeuten, mit der Maßgabe, dass wenigstens einer der Reste R21a, R21b, R21c, oder R21d ein organischer Rest W1 bedeutet
wobei der organische Rest W1 jeweils unabhängig voneinander ein Rest mit der allgemeinen Formel (21a) bis (24b) bedeutet:
-X (21a)
* - Q - (C(D)(E))ₘ - X (21b)
* - [(C(D)(E))_{b} - A]ₐ - (C(D)(E))ₘ - X (22a)
* - Q - [(C(D)(E))_{b} - A]ₐ - (C(D)(E))ₘ - X (22b)
* - (C(D)(E))_{d} - Ar - [B - (C(D)(E)_{b}]ₐ - (C(D)(E))ₙ - X (23a)
* - Q - (C(D)(E))_{d} - Ar - [B - (C(D)(E)_{b}]ₐ - (C(D)(E))ₙ - X (23b)
* - [(C(D)(E))_{b} - A]_{c} - (C(D)(E))_{g} - Ar - (C(D)(E))ₙ - X (24a)
* - Q - [(C(D)(E))_{b} - A]_{c} - (C(D)(E))_{g} - Ar - (C(D)(E))ₙ - X (24b)
wobei Reste Q, A, und B jeweils unabhängig voneinander Sauerstoff, ein Rest der allgemeinen Formel * - C(=O) - *, ein Rest der Formel * - C(=O)O - *, ein Rest der Formel * - OC(=O) - *, oder ein Rest mit der allgemeinen Formel (12) bis (14): 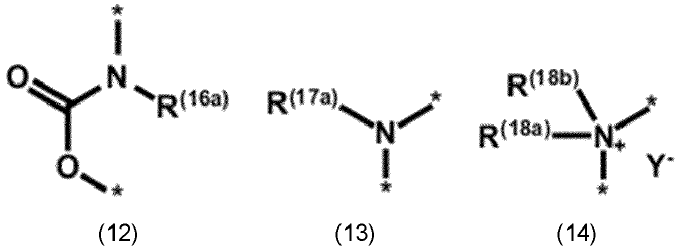 bedeutet, und
wobei die Reste R^{(16a)}, R^{(17a)}, R^{(18a)} und R^{(18b)}, jeweils unabhängig voneinander Wasserstoff, Alkyl-Rest, der geradkettig oder verzweigt ist, mit 1 bis 5 Kohlenstoffatomen, vorzugsweise Methyl, Ethyl, n-Propyl, iso-Propyl, n-Butyl, sec-Butyl, iso-Butyl, oder n-Pentyl, der unsubstituiert oder mit einem oder mehrerer Reste, die jeweils unabhängig voneinander Chlor, Brom, Fluor, *- OH, *- Si(OR^{(VIII)})_{[3 - p]}(R^{(IX)})ₚ, oder *- O - Si(OR^{(VIII)})_{[3 - p]}(R^{(IX)})ₚ, bedeuten, substituiert ist, Phenyl oder Benzyl bedeuten, und wobei Phenyl und Benzyl, jeweils unabhängig voneinander, unsubstituiert oder mit einem oder mehrerer Reste, die aus der Gruppe, die aus Halogen, *- OH, *- C(=O)OH, *- S(=O)₂OH, *- B(OH)₂, *- Si(OR^{(VIII)})_{[3 - p]}(R^{(IX)})ₚ, Alkyl-Rest, der gradkettig oder verzweigt ist, mit 1 bis 4 Kohlenstoffatomen, oder *- O - Si(OR^{(VIII)}) _{[3 - p]}(R^{(IX)})ₚ besteht, ausgewählt ist, substituiert ist, und
wobei die Reste D und E jeweils unabhängig voneinander Wasserstoff, *- OH, *- O - Si(OR^{(VIII)})_{[3 - p]}(R^{(IX)})ₚ, Halogen, Alkyl, das gradkettig oder verzweigt sein kann, mit 1 bis 15 Kohlenstoffatomen, Alkoxy, das gradkettig oder verzweigt sein kann, mit 1 bis 15 Kohlenstoffatomen, Aryloxy mit 6 bis 10 Kohlenstoffatomen, vorzugsweise Phenoxy oder Benzyloxy, Hydroxylalkyl, das gradkettig oder verzweigt sein kann, mit 1 bis 5 Kohlenstoffatomen und 1 bis 5 OH-Gruppen, Halogenalkyl, das gradkettig oder verzweigt sein kann, mit 1 bis 5 Kohlenstoffatomen und 1 bis 5 Halogen-Gruppen, Phenyl, oder Benzyl, wobei Phenyl und Benzyl jeweils unabhängig voneinander unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sind, bedeuten,
wobei der Index a jeweils unabhängig voneinander eine ganze Zahl von 1 bis 5, vorzugsweise von 1 bis 4, vorzugsweise 1 bis 2, bedeutet, und
wobei der Index b jeweils unabhängig voneinander eine ganze Zahl von 1 bis 4, vorzugsweise von 2 bis 3, weiter bevorzugt 2, bedeuten, und
wobei der Index c jeweils unabhängig voneinander eine ganze Zahl von 0 bis 5, vorzugsweise von 0 bis 4, vorzugsweise 1 bis 3, bedeutet, und
wobei die Index d jeweils unabhängig voneinander eine ganze Zahl von 1 bis 18, vorzugsweise 1 bis 15, vorzugsweise von 1 bis 4, vorzugsweise 1 bis 3, bedeuten, und
wobei die Index m jeweils unabhängig voneinander eine ganze Zahl von 1 bis 18, vorzugsweise 1 bis 15, vorzugsweise von 2 bis 4, bedeuten, und
wobei die Indices g, und n jeweils unabhängig voneinander eine ganze Zahl von 0 bis 18, vorzugsweise 0 bis 15, vorzugsweise von 2 bis 4, bedeuten, und
wobei der Index p jeweils unabhängig voneinander eine ganze Zahl von 1 bis 3 bedeutet, und
wobei der Rest X jeweils unabhängig voneinander *- NH(R^{(I)}), *- OH, *- C(=O)OH, *- S(=O)₂OH, *- B(OH)₂, *- Si(OR^{(VIII)})_{3 - p}(R^{(IX)})ₚ, *- O - Si(OR^{(VIII)})_{3 - p}(R^{(IX)})ₚ, oder ein Rest mit der allgemeinen Formel (15) oder (16): 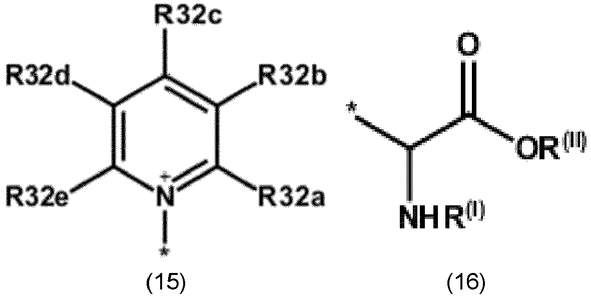
wobei die Reste R32a bis R32e jeweils unabhängig voneinander, Wasserstoff, Alkyl, das gradkettig oder verzweigt sein kann, mit 1 bis 4 Kohlenstoffatomen, oder Alkenyl, das gradkettig oder verzweigt sein kann, mit 2 bis 4 Kohlenstoffatomen, bedeuten, und
wobei der Rest Ar ein Rest der allgemeinen Formel (25a) bis (31), weiter bevorzugt ein Rest der allgemeinen Formel (25a) bis (28b), bedeutet: 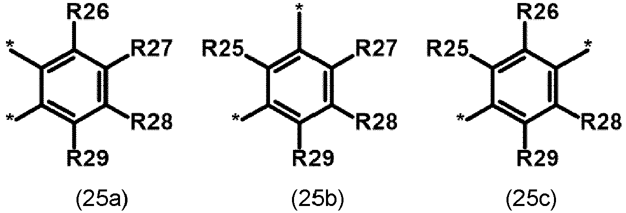 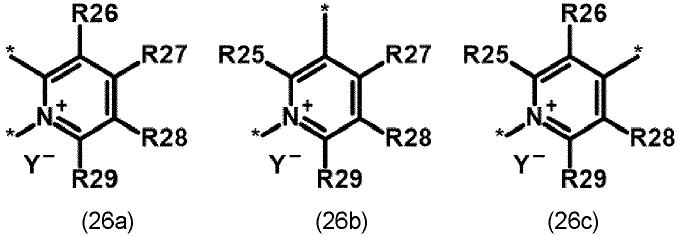 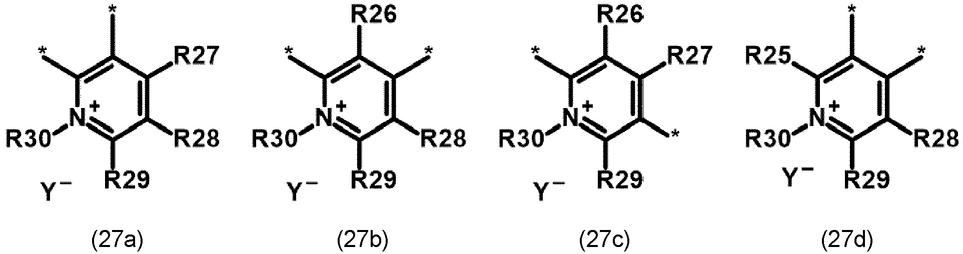 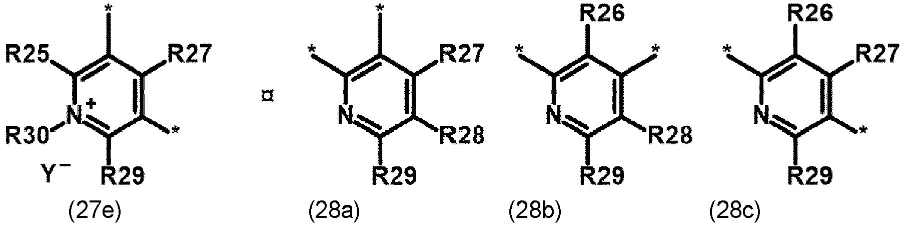 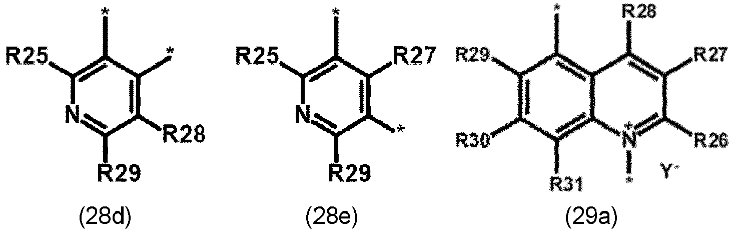 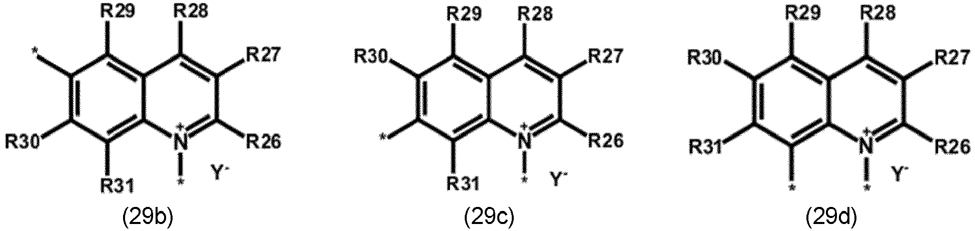 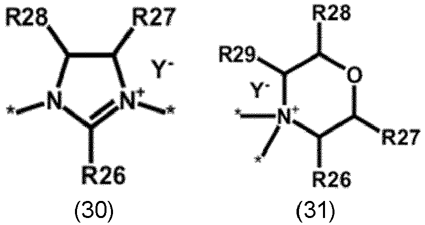
wobei die Reste R26, R27, R28, R29, R30, und R31 jeweils unabhängig voneinander Wasserstoff, Alkyl-Rest, der geradkettig oder verzweigt ist, mit 1 bis 5 Kohlenstoffatomen, vorzugsweise Methyl, Ethyl, n-Propyl, iso-Propyl, n-Butyl, sec-Butyl, iso-Butyl, oder n-Pentyl, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})ₚ, oder *- O - Si(OR^{(VIII)}) _{[3 - p]}(R^{(IX)})ₚ, bedeuten, substituiert ist, Phenyl oder Benzyl bedeuten, und wobei Phenyl und Benzyl, jeweils unabhängig voneinander, unsubstituiert oder mit einem oder mehrerer Reste, die aus der Gruppe, die aus Halogen, *- OH, *- C(=O)OH, *- S(=O)₂OH, *- B(OH)₂, *- Si(OR^{(VIII)}) _{[3 - p]}(R^{(IX)})ₚ, Alkyl-Rest, der gradkettig oder verzweigt ist, mit 1 bis 4 Kohlenstoffatomen, vorzugsweise Methyl, Ethyl, n-Propyl, oder iso-Propyl, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})ₚ, oder *- O - Si(OR^{(VIII)})_{[3-p]}(R^{(IX)})ₚ, bedeuten, substituiert ist, *- O - Alkyl-Rest, der gradkettig oder verzweigt ist, mit 1 bis 4 Kohlenstoffatomen, vorzugsweise Methoxy, Ethoxy, n-Propoxy, oder iso-Propoxy, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})ₚ, oder *- O - Si(OR^{(VIII)})_{[3 - p]}(R^{(IX)})ₚ, bedeuten, substituiert ist, Carboxyalkyl-Rest, der gradkettig oder verzweigt ist, mit 2 bis 4 Kohlenstoffatomen, vorzugsweise Carboxymethyl, Carboxyethyl, Carboxy-n-propyl, oder Carboxy-iso-propyl, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})ₚ, oder *- O - Si(OR^{(VIII)})_{[3 - p]}(R^{(IX)})ₚ, bedeuten, substituiert ist, oder Alkenyl-Rest der gradkettig oder verzweigt ist, mit 2 bis 3 C-Atomen, vorzugasweise Vinyl oder Allyl, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})_{p,} oder *- O - Si(OR^{(VIII)})_{[3 - p]}(R^{(IX)})ₚ, bedeuten, substituiert ist, und
wobei die Reste R^{(I)}, R^{(II)}, R^{(VIII)} und R^{(IX)}, jeweils unabhängig voneinander, Alkyl, das gradkettig oder verzweigt sein kann, mit 1 bis 4 Kohlenstoffatomen, oder Alkenyl, das gradkettig oder verzweigt sein kann, mit 2 bis 4 Kohlenstoffatomen,
und wobei Y- ein Anion ist, das jeweils unabhängig voneinander Fluorid, Chlorid, Bromid, lodid, Sulfat, Hydrogensulfat, Phosphat, Hydrogenphosphat, Dihydrogenphosphat, wenigstens ein Carboxylat-Anion einer Carbonsäure mit 1 bis 15 Kohlenstoffatomen, wenigstens ein Sulfonat-Anion einer Sulfonsäure mit 1 bis 12 C-Atomen oder eine Kombination davon bedeutet, und
wobei das substituierte Porphycen-Derivat der allgemeinen Formel (3) höchstens zwei neutrale protonierbare Stickstoffatome, oder zwei permanent positiv geladene Stickstoffatome oder zwei Säuregruppen aufweist.

8. Porphycen-Derivat das die allgemeine Formel (3): 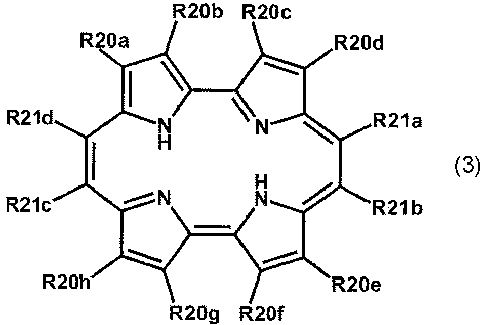 aufweist, und
wobei die Reste R20a, R20b, R20c, R20d, R20e, R20f, R20g, und R20h, die jeweils unabhängig voneinander gleich oder voneinander verschieden sein können, jeweils Wasserstoff, Halogen, vorzugsweise Chlor, Brom, oder lod, Alkyl, das gradkettig oder verzweigt sein kann, mit 1 bis 4 C-Atomen, vorzugsweise Methyl, Ethyl, n-Propyl oder iso-Propyl, die jeweils unsubstituiert oder mit einem oder mehrerer Reste, die aus der Gruppe, die aus Hydroxy, Chlor, Brom, Fluor, und Kombinationen davon, besteht, ausgewählt werden, substituiert sein können, Alkoxy, das gradkettig oder verzweigt sein kann, mit 1 bis 4 C-Atomen, vorzugsweise Methoxy oder Ethoxy, die jeweils unsubstituiert oder mit einem oder mehrerer Reste, die aus der Gruppe, die aus Hydroxy, Chlor, Brom, Fluor, und Kombinationen davon, besteht, ausgewählt werden, substituiert sein können, Alkylalkyloxy, das gradkettig oder verzweigt sein kann, mit 2 bis 8 C-Atomen, vorzugsweise Methylmethoxy, Methylethoxy, Ethylmethoxy, oder Ethylethoxy, die jeweils unsubstituiert oder mit einem oder mehrerer Reste, die aus der Gruppe, die aus Hydroxy, Chlor, Brom, und Kombinationen davon, besteht, ausgewählt werden, substituiert sein können, Alkylcarboxylester, das gradkettig oder verzweigt sein kann, mit 2 bis 8 C-Atomen, vorzugsweise Methylacetat, Ethyl-2-acetat, Propyl-3-acetat, Methylpropionat, Ethyl-2-proponat, Propyl-3-butyrat, Methylbutyrat, Ethyl-2-butyrat, oder Propyl-3-butyrat, Aryl mit 6 bis 10 Kohlenstoffatomen, vorzugsweise Phenyl oder Benzyl, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, oder Aryloxy mit 6 bis 10 Kohlenstoffatomen, vorzugsweise Phenoxy oder Benzyloxy, die jeweils unsubstituiert oder mit einem oder mehrerer Reste, die aus der Gruppe, die aus Hydroxy, Chlor, Brom, Fluor, Methyl, Ethyl, n-Propyl, iso-Propyl, Methoxy, Ethoxy, und Kombinationen davon, besteht, ausgewählt werden, substituiert sein können, bedeuten,
wobei die Reste R21a, R21b, R21c, und R21d, die jeweils unabhängig voneinander gleich oder voneinander verschieden sein können, jeweils Wasserstoff, Nitro, Halogen, vorzugsweise Chlor, Brom, oder lod, Alkyl, das gradkettig oder verzweigt sein kann, mit 1 bis 4 C-Atomen, vorzugsweise Methyl, Ethyl, n-Propyl oder iso-Propyl, *-O-Alkyl, das gradkettig oder verzweigt sein kann, mit 1 bis 4 C-Atomen, vorzugsweise Methoxy oder Ethoxy, * - NH - S(=O)₂ - Aryl mit 5 bis 15 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, * - NH - C(=O) - Alkyl mit 1 bis 15 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, Aryloxy mit 5 bis 10 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, Alkylaryl mit 6 bis 10 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, *-O-Alkylaryl mit 6 bis 10 C-Atomen, die jeweils unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sein können, oder einen organischen Rest W1 bedeuten, mit der Maßgabe, dass wenigstens einer der Reste R21a, R21b, R21c, oder R21d ein organischer Rest W1 bedeutet
wobei der organische Rest W1 jeweils unabhängig voneinander ein Rest mit der allgemeinen Formel (22b), (23b), oder (24b) bedeutet:
* - Q - [(C(D)(E))_{b} - A]ₐ - (C(D)(E))ₘ - X (22b)
* - Q - (C(D)(E))_{d} - Ar - [B - (C(D)(E)_{b}]ₐ - (C(D)(E))ₙ - X (23b)
* - Q - [(C(D)(E))_{b} - A]_{c} - (C(D)(E))_{g} - Ar - (C(D)(E))ₙ - X (24b)
wobei Rest Q jeweils unabhängig voneinander Sauerstoff, ein Rest der allgemeinen Formel * - C(=O)O - *, oder ein Rest der allgemeinen Formel * - OC(=O) - *, vorzugsweise Sauerstoff, bedeutet, und
wobei die Reste A, und B jeweils unabhängig voneinander Sauerstoff, ein Rest der allgemeinen Formel * - C(=O) - *, ein Rest der Formel * - C(=O)O - *, ein Rest der Formel * - OC(=O) - *, oder ein Rest mit der allgemeinen Formel (12) bis (14): 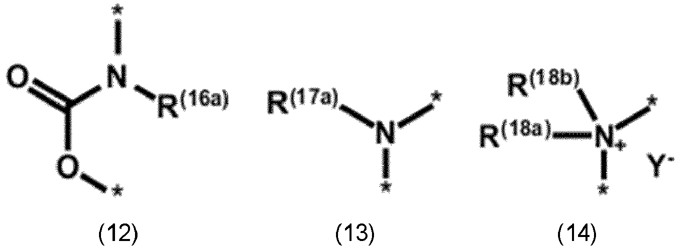 bedeutet, und
wobei die Reste R^{(16a)}, R^{(17a)}, R^{(18a)} und R^{(18b)}, jeweils unabhängig voneinander Wasserstoff, Alkyl-Rest, der geradkettig oder verzweigt ist, mit 1 bis 5 Kohlenstoffatomen, vorzugsweise Methyl, Ethyl, n-Propyl, iso-Propyl, n-Butyl, sec-Butyl, iso-Butyl, oder n-Pentyl, der unsubstituiert oder mit einem oder mehrerer Reste, die jeweils unabhängig voneinander Chlor, Brom, Fluor, *- OH, *- Si(OR^{(VIII)})_{[3 - p]}(R^{(IX)})ₚ, oder *- O - Si(OR^{(VIII)})_{[3 - p]}(R^{(IX)})ₚ, bedeuten, substituiert ist, Phenyl oder Benzyl bedeuten, und wobei Phenyl und Benzyl, jeweils unabhängig voneinander, unsubstituiert oder mit einem oder mehrerer Reste, die aus der Gruppe, die aus Halogen, *- OH, *- C(=O)OH, *- S(=O)₂OH, *- B(OH)₂, *- Si(OR^{(VIII)})_{[3 - p]}(R^{(IX)})ₚ, Alkyl-Rest, der gradkettig oder verzweigt ist, mit 1 bis 4 Kohlenstoffatomen, oder *- O - Si(OR^{(VIII)}) _{[3 - p]}(R^{(IX)})ₚ besteht, ausgewählt ist, substituiert ist, und
wobei die Reste D und E jeweils unabhängig voneinander Wasserstoff, *- OH, *- O - Si(OR^{(VIII)})_{[3 - p]}(R^{(IX)})ₚ, Halogen, Alkyl, das gradkettig oder verzweigt sein kann, mit 1 bis 15 Kohlenstoffatomen, Alkoxy, das gradkettig oder verzweigt sein kann, mit 1 bis 15 Kohlenstoffatomen, Aryloxy mit 6 bis 10 Kohlenstoffatomen, vorzugsweise Phenoxy oder Benzyloxy, Hydroxylalkyl, das gradkettig oder verzweigt sein kann, mit 1 bis 5 Kohlenstoffatomen und 1 bis 5 OH-Gruppen, Halogenalkyl, das gradkettig oder verzweigt sein kann, mit 1 bis 5 Kohlenstoffatomen und 1 bis 5 Halogen-Gruppen, Phenyl, oder Benzyl, wobei Phenyl und Benzyl jeweils unabhängig voneinander unsubstituiert oder mit einem oder mehrerer Reste, die aus der Gruppe, die aus Chlor, Brom, Fluor, Methyl, Ethyl, n-Propyl, iso-Propyl, Methoxy, Ethoxy, und Kombinationen davon, besteht, ausgewählt werden, substituiert sind, bedeuten,
wobei der Index a jeweils unabhängig voneinander eine ganze Zahl von 1 bis 5, vorzugsweise von 1 bis 4, vorzugsweise 1 bis 2, bedeutet, und
wobei der Index b jeweils unabhängig voneinander eine ganze Zahl von 1 bis 4, vorzugsweise von 2 bis 3, weiter bevorzugt 2, bedeuten, und
wobei der Index c jeweils unabhängig voneinander eine ganze Zahl von 0 bis 5, vorzugsweise von 0 bis 4, vorzugsweise 1 bis 3, bedeutet, und
wobei die Index d jeweils unabhängig voneinander eine ganze Zahl von 1 bis 18, vorzugsweise 1 bis 15, vorzugsweise von 1 bis 4, vorzugsweise 1 bis 3, bedeuten, und
wobei die Index m jeweils unabhängig voneinander eine ganze Zahl von 1 bis 18, vorzugsweise 1 bis 15, vorzugsweise von 2 bis 4, bedeuten, und
wobei die Indices g, und n jeweils unabhängig voneinander eine ganze Zahl von 0 bis 18, vorzugsweise 0 bis 15, vorzugsweise von 2 bis 4, bedeuten, und
wobei der Index p jeweils unabhängig voneinander eine ganze Zahl von 1 bis 3 bedeutet, und
wobei der Rest X jeweils unabhängig voneinander *- NH(R^{(I)}), *- OH, *- C(=O)OH, *- S(=O)₂OH, *- B(OH)₂, *- Si(OR^{(VIII)})_{3 - p}(R^{(IX)})ₚ, *- O - Si(OR^{(VIII)})_{3 - p}(R^{(IX)})ₚ, oder ein Rest mit der allgemeinen Formel (15) oder (16): 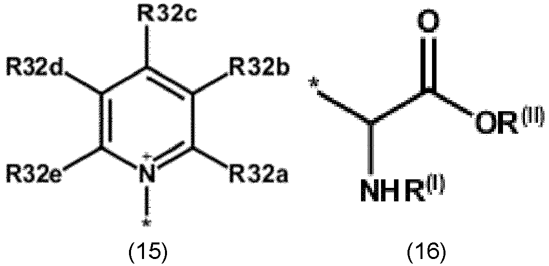
wobei die Reste R32a bis R32e jeweils unabhängig voneinander, Wasserstoff, Alkyl, das gradkettig oder verzweigt sein kann, mit 1 bis 4 Kohlenstoffatomen, oder Alkenyl, das gradkettig oder verzweigt sein kann, mit 2 bis 4 Kohlenstoffatomen, bedeuten, und
wobei der Rest Ar ein Rest der allgemeinen Formel (25a) bis (31), weiter bevorzugt ein Rest der allgemeinen Formel (25a) bis (28b), bedeutet: 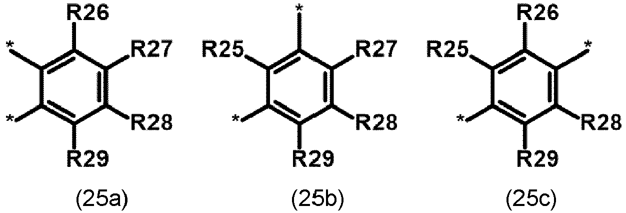 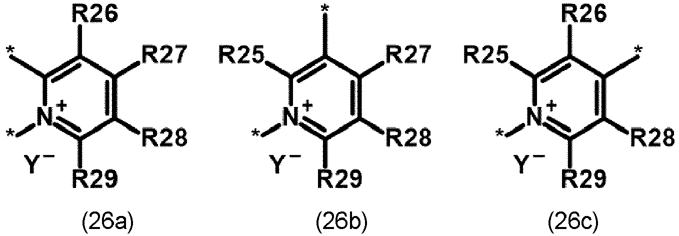 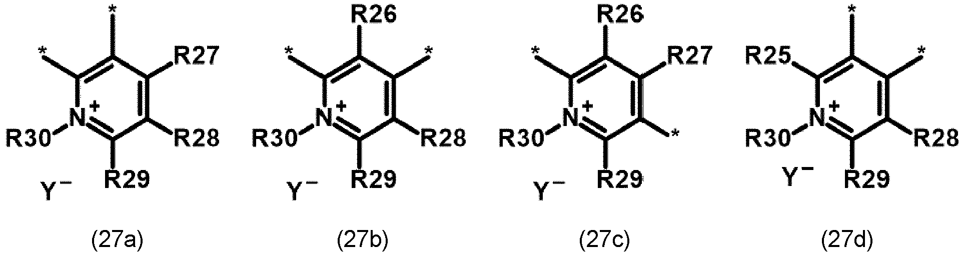 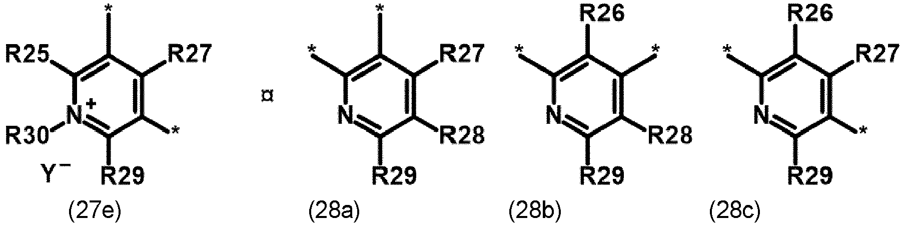 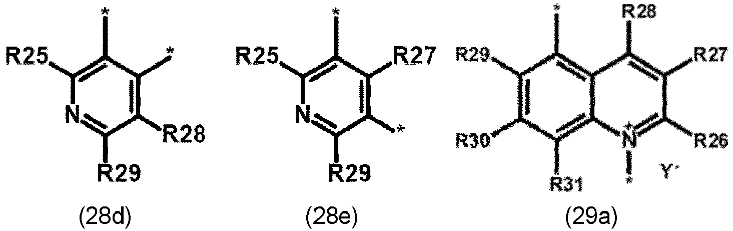 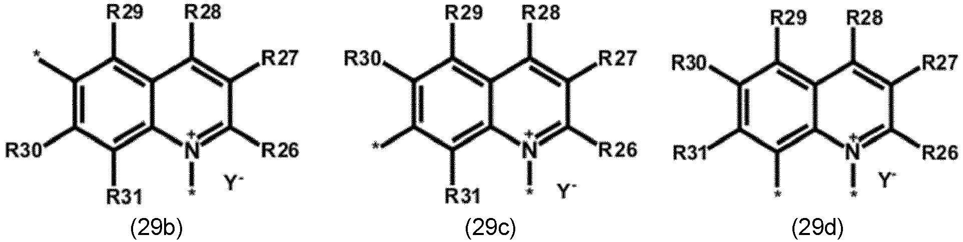 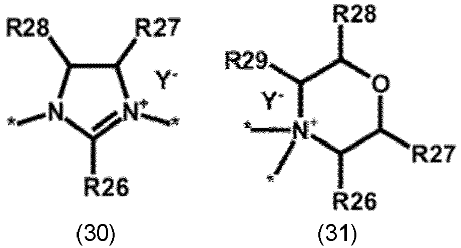
wobei die Reste R26, R27, R28, R29, R30, und R31 jeweils unabhängig voneinander Wasserstoff, Alkyl-Rest, der geradkettig oder verzweigt ist, mit 1 bis 5 Kohlenstoffatomen, vorzugsweise Methyl, Ethyl, n-Propyl, iso-Propyl, n-Butyl, sec-Butyl, iso-Butyl, oder n-Pentyl, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})ₚ, oder *- O - Si(OR^{(VIII)}) _{[3 - p]}(R^{(IX)})ₚ, bedeuten, substituiert ist, Phenyl oder Benzyl bedeuten, und wobei Phenyl und Benzyl, jeweils unabhängig voneinander, unsubstituiert oder mit einem oder mehrerer Reste, die aus der Gruppe, die aus Halogen, *- OH, *- C(=O)OH, *- S(=O)₂OH, *- B(OH)₂, *- Si(OR^{(VIII)}) _{[3 - p]}(R^{(IX)})ₚ, Alkyl-Rest, der gradkettig oder verzweigt ist, mit 1 bis 4 Kohlenstoffatomen, vorzugsweise Methyl, Ethyl, n-Propyl, oder iso-Propyl, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})ₚ, oder *- O - Si(OR^{(VIII)})_{[3-p]}(R^{(IX)})ₚ, bedeuten, substituiert ist, *- O - Alkyl-Rest, der gradkettig oder verzweigt ist, mit 1 bis 4 Kohlenstoffatomen, vorzugsweise Methoxy, Ethoxy, n-Propoxy, oder iso-Propoxy, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})ₚ, oder *- O - Si(OR(VIII))_{[3 - p]}(R^{(IX)})ₚ, bedeuten, substituiert ist, Carboxyalkyl-Rest, der gradkettig oder verzweigt ist, mit 2 bis 4 Kohlenstoffatomen, vorzugsweise Carboxymethyl, Carboxyethyl, Carboxy-n-propyl, oder Carboxy-iso-propyl, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})ₚ, oder *- O - Si(OR^{(VIII)})_{[3 - p]}(R^{(IX)})ₚ, bedeuten, substituiert ist, oder Alkenyl-Rest der gradkettig oder verzweigt ist, mit 2 bis 3 C-Atomen, vorzugasweise Vinyl oder Allyl, der unsubstituiert oder mit einem oder mehrerer Reste, die jeweils unabhängig voneinander Chlor, Brom, Fluor, *- OH, *- C(=O)OH, *- S(=O)₂OH, *- B(OH)₂, *- Si(OR^{(VIII)})_{[3 - p]}(R^{(IX)})_{p,} oder *- O - Si(OR^{(VIII)})_{[3 - p]}(R^{(IX)})ₚ, bedeuten, substituiert ist, und
wobei die Reste R^{(I)}, R^{(II)}, R^{(VIII)} und R^{(IX)}, jeweils unabhängig voneinander, Alkyl, das gradkettig oder verzweigt sein kann, mit 1 bis 4 Kohlenstoffatomen, oder Alkenyl, das gradkettig oder verzweigt sein kann, mit 2 bis 4 Kohlenstoffatomen,
und wobei Y- ein Anion ist, das jeweils unabhängig voneinander Fluorid, Chlorid, Bromid, lodid, Sulfat, Hydrogensulfat, Phosphat, Hydrogenphosphat, Dihydrogenphosphat, wenigstens ein Carboxylat-Anion einer Carbonsäure mit 1 bis 15 Kohlenstoffatomen, wenigstens ein Sulfonat-Anion einer Sulfonsäure mit 1 bis 12 C-Atomen oder eine Kombination davon bedeutet, und
wobei das substituierte Porphycen-Derivat der allgemeinen Formel (3) höchstens zwei neutrale protonierbare Stickstoffatome, oder zwei permanent positiv geladene Stickstoffatome oder zwei Säuregruppen aufweist.

9. Photokatalytisch-aktive Beschichtungs-Zusammensetzung nach einem der Ansprüche 1 bis 7, wobei der wenigstens eine organische Photosensibilisator ein substituiertes Porphycen-Derivat der allgemeinen Formel (3) gemäß Anspruch 8 umfasst.

10. Photokatalytisch-aktive Beschichtungs-Zusammensetzung nach einem der Ansprüche 1 bis 7 oder 9, wobei die Beschichtungs-Zusammensetzung einen Feststoffgehalt von höchstens 20 Gew.-%, bezogen jeweils auf das Gesamtgewicht der Beschichtungs-Zusammensetzung, aufweist.

11. Verfahren zur Herstellung einer photokatalytisch-aktiven Beschichtungs-Zusammensetzung nach einem der Ansprüche 1 bis 7, 9 oder 10, wobei das Verfahren folgende Schritte umfasst:
1.) Bereitstellen einer ersten Zusammensetzung umfassend
1a) wenigstens ein gradkettig oder verzweigtes Alkanol mit 1 bis 6 C-Atomen und wenigstens einer OH-Gruppe in einem Anteil von 0 Gew.-% bis 50 Gew.-%, vorzugsweise von 5 Gew.-% bis 45 Gew.-%, vorzugsweise von 10 Gew.-% bis 40 Gew.-%, weiter bevorzugt von 15 Gew.-% bis 37 Gew.-%, weiter bevorzugt von 20 Gew.-% bis 35 Gew.-%, jeweils bezogen auf das Gesamtgewicht der ersten Zusammensetzung,
1b) wenigstens ein Tetraalkoxysilan, das 4 unverzweigte oder verzweigte Alkoxy-Reste mit 1 bis 4 C-Atomen aufweist, vorzugsweise Tetramethoxysilan (TMOS), Tetraethoxysilan (TEOS) und Mischungen davon, und
1c) weiterhin wenigstens ein modifiziertes Silan, das 3 unverzweigte oder verzweigte Alkoxy-Reste mit jeweils unabhängig voneinander 1 bis 4 C-Atomen, vorzugsweise ausgewählt aus Methoxy, Ethoxy, Propoxy und Kombinationen davon, und einen (Zahl = 1) organischen Rest, der aus der Gruppe, die aus unverzweigten oder verzweigten Alkyl-Resten mit 1 bis 10 C-Atomen, vorzugsweise 1 bis 8 C-Atomen, die jeweils unsubstituiert oder mit wenigstens einer OH-Gruppe, wenigstens einer Alkoxy-Gruppe mit 1 - 8 C-Atomen, vorzugsweise ausgewählt aus Methoxy, Ethoxy, Propoxy und Kombinationen davon, wenigstens einer Epoxyalkoxy-Gruppe mit 2 - 8 C-Atomen, vorzugsweise 3 - 6 C-Atomen, und wenigstens einer Epoxygruppe, vorzugsweise Epoxypropoxy-Gruppe, wenigstens einer Carbonsäureester-Gruppe mit 1 - 8 C-Atomen, wenigstens einer Carbonsäureanhydrid-Gruppe mit 4 - 8 C-Atomen, die offenkettig oder cyclisch sein können, wenigstens einer Fluoridgruppe, wenigstens einer Phenylgruppe, wenigstens einer Aryloxygruppe mit 6 - 8 C-Atomen, vorzugsweise Benzyloxy-Gruppe, wenigstens einer Amino-Gruppe, oder Kombinationen davon substituiert sind, unverzweigten oder verzweigten Alkenyl-Resten mit 2 bis 10 C-Atomen, vorzugsweise 2 bis 8 C-Atomen, die jeweils unsubstituiert oder mit wenigstens einer OH-Gruppe, wenigstens einer Alkoxy-Gruppe mit 1 - 8 C-Atomen, vorzugsweise ausgewählt aus Methoxy, Ethoxy, Propoxy und Kombinationen davon, wenigstens einer Epoxyalkoxy-Gruppe mit 2 - 8 C-Atomen, vorzugsweise 3 - 6 C-Atomen, und wenigstens einer Epoxygruppe, vorzugsweise Epoxypropoxy-Gruppe, wenigstens einer Carbonsäureester-Gruppe mit 1 - 8 C-Atomen, wenigstens einer Carbonsäureanhydrid-Gruppe mit 4 - 8 C-Atomen, die offenkettig oder cyclisch sein können, wenigstens einer Fluoridgruppe, wenigstens einer Phenylgruppe, wenigstens einer Aryloxygruppe mit 6 - 8 C-Atomen, vorzugsweise Benzyloxy-Gruppe, wenigstens einer Amino-Gruppe, oder Kombinationen davon substituiert sind, und Aryl-Resten mit 6 bis 13 C-Atomen, vorzugsweise 6 bis 10 C-Atomen, vorzugsweise 6 C-Atomen, die jeweils unsubstituiert oder mit wenigstens einer OH-Gruppe, wenigstens einer Alkoxy-Gruppe mit 1 - 8 C-Atomen, vorzugsweise ausgewählt aus Methoxy, Ethoxy, Propoxy und Kombinationen davon, wenigstens einer Epoxyalkoxy-Gruppe mit 2 - 8 C-Atomen, vorzugsweise 3 - 6 C-Atomen, und wenigstens einer Epoxygruppe, vorzugsweise Epoxypropoxy-Gruppe, wenigstens einer Carbonsäureester-Gruppe mit 1 - 8 C-Atomen, wenigstens einer Carbonsäureanhydrid-Gruppe mit 4 - 8 C-Atomen, die offenkettig oder cyclisch sein können, wenigstens einer Fluoridgruppe, wenigstens einer Phenylgruppe, wenigstens einer Aryloxygruppe mit 6 - 8 C-Atomen, vorzugsweise Benzyloxy-Gruppe, wenigstens einer Amino-Gruppe, oder Kombinationen davon substituiert sind, besteht, ausgewählt ist, und
2.) Kontaktieren der in Schritt 1) bereitgestellten ersten Zusammensetzung mit einer zweiten Zusammensetzung mit einem pH-Wert von < 7.0, vorzugsweise pH 2 bis pH 6, umfassend
2a) Wasser, und
2b) wenigstens eine Säure,
unter Erhalt einer dritten Zusammensetzung umfassend wenigstens ein nichtmetallisches, anorganisches Sol und/oder wenigstens ein hybridpolymeres Sol, vorzugsweise wenigstens ein hybridpolymeres Sol, und
3.) Zugeben wenigstens eines organisches Photosensensibiliators, der aus der Gruppe, die aus substituierten Phenalen-1-on-Derivaten, substituierten Curcumin-Derivaten, substituierten Porphycen-Derivaten und Mischungen davon besteht, ausgewählt wird, zu der in Schritt 2) erhaltenen dritten Zusammensetzung.

12. Verfahren zur Herstellung einer photokatalytisch-aktiven Beschichtung auf wenigstens einem Teilbereich wenigstens einer Oberfläche eines Gegenstandes oder eines Raumes, wobei das Verfahren folgende Schritte umfasst,
(A) Aufbringen einer Beschichtungs-Zusammensetzung nach einem der Ansprüche 1 bis 7, 9 oder 10 auf wenigstens einen Teilbereich einer zu behandelnden Oberfläche, und
(B) Trocknen der in Schritt (A) aufgebrachten Beschichtungs-Zusammensetzung , bevorzugt bei einer Temperatur aus einem Bereich von 5°C bis 150°C, unter Erhalt wenigstens einer ersten, Photosensibilisator-haltigen Beschichtung.

13. Verfahren nach Anspruch 12, wobei vor Schritt (A) auf den zumindest einen Teilbereich der zu behandelnden Oberfläche wenigstens ein Haftvermittler aufgebracht wird und, optional nachfolgend getrocknet wird.

14. Verfahren nach einem der Ansprüche 12 bis 13, wobei nach Schritt (B) auf zumindest einen Teilbereich der in Schritt (B) erhaltenen ersten, Photosensibilisator-haltigen Beschichtung eine zweite Beschichtung aufgebracht wird, die vorzugsweise wenigstens ein Hydrophobierungsmittel umfasst.

15. Beschichteter Gegenstand umfassend,
wenigstens eine, auf zumindest einem Teilbereich einer Oberfläche des Gegenstandes angeordnete photokatalytisch-aktive Beschichtung, die wenigstens ein nichtmetallisches, anorganisches Gel, vorzugsweise Xerogel, und/oder wenigstens ein hybridpolymeres Gel, vorzugsweise Xerogel, und wenigstens einen in, an oder auf dem Gel angeordneten wenigstens einen organischen Photosensibilisator aufweist, wobei der wenigstens eine organische Photosensibilisator aus der Gruppe, die aus substituierten Phenalen-1-on-Derivaten, substituierten Curcumin-Derivaten, substituierten Porphycen-Derivaten und Mischungen davon, vorzugsweise substituierten Phenalen-1-on-Derivaten, substituierten Porphycen-Derivaten und/oder Mischungen davon, weiter bevorzugt Porphycen-Derivaten gemäß Anspruch 8 und/oder Mischungen davon mit substituierten Phenalen-1-on-Derivaten, weiter bevorzugt substituierten Phenalen-1-on-Derivaten, besteht, ausgewählt wird.

16. Verwendung einer photokatalytisch-aktiven Beschichtungs-Zusammensetzung nach einem der Ansprüche 1 bis 7, 9 oder 10 oder eines beschichteten Gegenstandes nach Anspruch 15 zur photodynamischen Inaktivierung von Mikroorganismen, die vorzugsweise aus der Gruppe, die aus Viren, Archäeen, Bakterien, Bakteriensporen, Pilzen, Pilzsporen, Protozoen, Algen und blutübertragbaren Parasiten besteht, ausgewählt werden und/oder zur photokatalytischen Inaktivierung oxidierbarer organischer oder anorganischer Moleküle.

17. Verwendung einer photokatalytisch-aktive Beschichtungs-Zusammensetzung nach einem der Ansprüche 1 bis 7, 10 oder 11 oder eines beschichteten Gegenstandes nach Anspruch 15 zur Oberflächenreinigung und/oder Oberflächenbeschichtung eines Gegenstandes oder eines Raumes.

18. Verwendung nach einem der Ansprüche 16 oder 17 zur Oberflächenbeschichtung von Medizinprodukten, Lebensmittelverpackungen, Getränkeverpackungen, Tastern, Griffen, Textilien, Baustoffen, elektronischen Geräten, Haushaltsgeräten, Möbeln, Fenstern, Böden, Wänden oder Hygieneartikeln.

19. Kit-of-Parts Zusammensetzung zur gleichzeitigen, getrennten oder zeitlich abgestuften Beschichtung wenigstens eines Teilbereichs einer Oberfläche eines Gegenstandes oder eines Raumes, umfassend
(I.) Komponente (A) umfassend wenigstens ein nichtmetallisches, anorganisches Sol und/oder wenigstens ein hybridpolymeres Sol jeweils hergestellt aus der Umsetzung mindestens zweier Alkoxysilane und wenigstens einer Säure als Hydrolysekatalysator und/oder jeweils wenigstens eine Vorläuferverbindung davon, und wenigstens ein gradkettig oder verzweigtes Alkanol mit 1 bis 6 C-Atomen und wenigstens einer OH-Gruppe in einem Anteil von wenigstens 50 Gew.-%, jeweils bezogen auf das Gesamtgewicht der Komponente (A),
(II.) Komponente (B) umfassend wenigstens einen organischen Photosensensibiliator, der aus der Gruppe, die aus substituierten Phenalen-1-on-Derivaten, substituierten Curcumin-Derivaten, substituierten Porphycen-Derivaten und Mischungen davon, vorzugsweise substituierten Phenalen-1-on-Derivaten, substituierten Porphycen-Derivaten und Mischungen davon, weiter bevorzugt Porphycen-Derivaten gemäß Anspruch 8 und Mischungen davon mit substituierten Phenalen-1-on-Derivaten, weiter bevorzugt substituierten Phenalen-1-on-Derivaten, besteht, ausgewählt wird, und
(III) optional, Komponente (C) umfassend wenigstens einen Haftvermittler.

20. Verfahren zur photodynamischen Inaktivierung von Mikroorganismen, die vorzugsweise Viren, Archäeen, Bakterien, Bakteriensporen, Pilzen, Pilzsporen, Protozoen, Algen, blutübertragbaren Parasiten oder Kombinationen davon umfassen, auf wenigstens einem Teilbereich wenigstens einer Oberfläche eines Gegenstandes oder eines Raumes, wobei das Verfahren folgende Schritte umfasst,
(A) Aufbringen einer Beschichtungs-Zusammensetzung nach einem der Ansprüche 1 bis 7, 9 oder 10 auf wenigstens einen Teilbereich einer zu behandelnden Oberfläche, und
(B) Trocknen der in Schritt (A) aufgebrachten Beschichtungs-Zusammensetzung, bevorzugt bei einer Temperatur aus einem Bereich von 5°C bis 150°C, unter Erhalt wenigstens einer ersten, Photosensibilisator-haltigen Beschichtung, und
(C) Bestrahlen der in Schritt (B) erhaltenen ersten, Photosensibilisator-haltigen Beschichtung mit elektromagnetischer Strahlung geeigneter Wellenlänge, vorzugsweise 300 nm bis 600 nm, und Energiedichte, vorzugsweise von 0,1 J / cm² bis 1 kJ/cm², vorzugsweise von 0,5 J / cm² bis 500 J/cm², weiter bevorzugt 1 J/cm² bis 100 J/cm², vorzugsweise in Gegenwart von Sauerstoff und/oder wenigstens einer Sauerstoff-abgebenden Verbindung.
